# EUROPEAN PATENT SPECIFICATION

(11) **EP 4 485 568 B1**
(45) Date of publication and mention of the grant of the patent: **28.10.2026**
(21) Application number: 24204304.0
(22) Date of filing: 13.09.2023
(51) Int. Cl.: H01M 4/04, H01M 4/139

(54) **SYSTEM FOR CORRECTING A ROLL MAP, AND APPARATUS FOR REMOVING A DEFECT OF AN ELECTRODE IN A SECONDARY BATTERY MANUFACTURING PROCESS INCLUDING THE SYSTEM**
SYSTEM ZUR KORREKTUR EINES ROLLPLANS UND VORRICHTUNG ZUR BESEITIGUNG EINES DEFEKTS EINER ELEKTRODE IN EINEM SEKUNDÄRBATTERIEHERSTELLUNGSVERFAHREN MIT DEM SYSTEM
SYSTÈME DE CORRECTION D'UNE CARTE DE ROULEAU ET APPAREIL POUR ÉLIMINER UN DÉFAUT D'UNE ÉLECTRODE DANS UN PROCESSUS DE FABRICATION DE BATTERIE SECONDAIRE COMPRENANT LE SYSTÈME

(30) Priority: 15.09.2022 KR 20220116302; 31.01.2023 KR 20230013307; 09.06.2023 KR 20230074503; 09.06.2023 KR 20230074504
(43) Date of publication of application: 01.01.2025
(62) Document number(s) of the earlier application(s) in accordance with Art. 76 EPC: 23197111.0 / 4 340 054
(73) Proprietor: LG Energy Solution, Ltd., Seoul 07335 (KR)
(72) Inventor: SIM, Min Kyu, Daejeon 34122 (KR); PARK, Jong Seok, Daejeon 34122 (KR); KIM, Min Su, Daejeon 34122 (KR); LEE, Jae Hwan, Daejeon 34122 (KR); HAN, Ki Deok, Daejeon 34122 (KR); JO, Eun Ji, Daejeon 34122 (KR); PARK, Su Wan, Daejeon 34122 (KR); JEON, Gi Yeong, Daejeon 34122 (KR); KIM, June Hee, Daejeon 34122 (KR); PARK, Wi Dae, Daejeon 34122 (KR); SEO, Dong Min, Daejeon 34122 (KR); KIM, Seol Hee, Daejeon 34122 (KR); LEE, Dong Yeop, Daejeon 34122 (KR); SU, Jun Hyo, Daejeon 34122 (KR); HAN, Byoung Eun, Daejeon 34122 (KR); HUH, Seung, Daejeon 34122 (KR)
(74) Representative: BCKIP Part mbB

(56) References cited:
- WO-A1-2021/241960
- WO-A1-2022/145905
- KR-A- 20180 061 439

## Description

### BACKGROUND

### 1. Field of the Invention

The present invention is directed to a system for correcting a roll map and to an apparatus for removing a defect of an electrode in a secondary battery manufacturing process.

### 2. Discussion of Related Art

With the technological development of mobile devices and an increase in demand for mobile devices, the demand for secondary batteries is also rapidly increasing. Among secondary batteries, a lithium secondary battery is widely used as an energy source for various electronic products as well as various mobile devices because the lithium secondary battery has a high energy density and a high operating voltage and excellent storage and lifetime characteristics.

The so-called electrode manufacturing process that is a process of manufacturing an electrode of a lithium secondary battery includes a coating process of forming a positive electrode and a negative electrode by coating the surface of a metal electrode plate, which is a current collector, with an active material and a certain insulating material, a roll press process of rolling the coated electrode, and/or a slitting process of cutting the rolled electrode according to the dimension.

To the electrode manufactured in the above electrode manufacturing process, an electrode tab is formed through a notching process, then, the form of a secondary battery is made through an assembly process of interposing a separator between the positive electrode and the negative electrode to form an electrode assembly, stacking or folding electrode assemblies to package it in a pouch, can, etc. and injecting an electrolyte. After that, the assembled secondary battery undergoes an activation process of imparting battery characteristics by charging and discharging the secondary battery and becomes a final secondary battery as a finished product.

When an inspection device detects a foreign material mixed in the active material layer or a poor coating part in the electrode manufacturing process, according to the related art, the electrode is marked or an operator attaches a defect tag to the electrode such that defective parts can be removed in a corresponding coating process or a following process (see JP 2015-002149 A).

However, in the case of marking directly on an electrode, it is difficult to mark on a coating part which is applied to the metal electrode plate, and thus there is no choice but to mark on a non-coating part of the electrode. Therefore, for example, when an exterior defect occurs in the coating part, a marking is made on the non-coating part rather than the coating part having the actual defect, and thus it is difficult to display the exact location of a fault or defect. In addition, JP 2015-002149 A employs a physical marking process of directly marking on an electrode with information related to quality, defects, or the like. Therefore, even if a defect occurs in a following process in a secondary battery manufactured with the electrodes due to a defect in the preceding electrode manufacturing process, it is difficult to find the section of the electrode manufacturing process in which the defect was actually caused. That is, after a physically marked electrode is used for assembly or disappears, it is very difficult to analyze the quality correlation between the electrode manufacturing process and the following process.

Meanwhile, a technology for marking whether there is a defect with ink directly on a corresponding secondary battery in a secondary battery assembly line after an electrode manufacturing process is completed so that a work history can be checked in units of secondary batteries has been proposed (see KR 101731983 B1).

Since the above related art relates to marking after assembly of a secondary battery, it is possible to check a secondary battery assembly process and a subsequent history. However, it is not possible to check history information about defects and the like in the preceding electrode manufacturing process. That is, KR 101731983 B1 relates to a technology for physically marking on a secondary battery during or after secondary battery assembly and thus is unrelated to the product history of quality and defects in an electrode manufacturing process. Therefore, it is likewise not possible to analyze the quality correlation between an electrode manufacturing process and an assembly process.

In addition, neither of the above patent documents provides non-defect information, for example, information on the amount of loading, dimensions, a width, or the like in the electrode manufacturing process. Therefore, for example, there may be no defect at the time of manufacturing an electrode, but a defect such as a fire or the like may occur in a following process or a process of using the secondary battery. In this case, it is necessary to find the cause of the defect by retracing the product history of the battery up to the electrode manufacturing process, but with the technologies proposed in the above-described patent documents, it is not possible to find the cause.

Consequently, to find the cause of a defect subsequently occurring in a following process or a secondary battery, it is required to develop a technology for displaying or storing history information on quality or defects in an electrode manufacturing process which allows quality correlation analysis in a correlation with the following process.

WO 2021/241960 A1 discloses a secondary battery manufacturing method comprising an electrode supply step of supplying an electrode through an electrode supply unit, a first inspection step of detecting and discriminating a normal electrode portion and an abnormal electrode portion in the supplied electrode by a first inspection unit, and a notching step of notching, in a notching unit, the electrode that has undergone the first inspection step, wherein, in the notching step, the notching is performed using laser to distinguish between the normal electrode portion and the abnormal electrode portion which have been detected in the first inspection step.

WO 2022/145905 A1 relates to an electrode sheet inspection system and an electrode sheet inspection method using same, the system comprising: an inspection unit for inspecting the external state of an electrode sheet; and an ink display unit for displaying, on the electrode sheet, a portion to be removed, wherein the range of ink marking in the ink display unit is adjustable so that marking of a defective portion of an electrode can be prevented from being removed even after notching of the electrode sheet.

### SUMMARY OF THE INVENTION

The present invention is directed to an apparatus for correcting a roll map.

In addition, the present invention is directed to a system for removing a defect of an electrode in a secondary battery manufacturing process, including the apparatus for correcting a roll map.

The objects of the invention disclosed in this document are not limited to the above-described objects, and other objects that are not mentioned will be able to be clearly understood by those skilled in the art from the following description.

The above objects of the present invention are achieved by the features defined in independent claims 1 and 5. Further preferred features are set forth in dependent claims.

An aspect of the present disclosure, not covered by the claimed invention, provides an apparatus for making up a roll map for supervising a secondary battery manufacturing process. The apparatus comprises: an inspection and/or measurement device provided for at least one of the respective sub-processes of the secondary battery manufacturing process, being configured to inspect and/or measure an electrode subject to one of the respective sub-processes and acquire inspected and/or measured data specific to the respective sub-process; a data recording unit configured to collect process data including the inspected and/or measured data specific to the respective sub-process and to acquire corresponding coordinate value(s) of the position of the inspection and/or measurement on the electrode; and a roll map make-up unit configured to, based on the collected process data, make up a roll map including a visual imitation of the electrode subject to the respective sub-process, reflecting at least part of the process data acquired in the respective sub-process and the corresponding coordinate value(s) of the position of the inspection and/or measurement.

The secondary battery manufacturing process may include a series of roll-to-roll sub-processes in which an electrode is moved between an unwinder and a rewinder.

The apparatus may further comprise a position measurement device configured to acquire coordinate values of a position of the electrode subject to one of the respective sub-processes.

The position measurement device may be a rotary encoder configured to measure the position on the electrode according to an amount of rotation of the unwinder and/or the rewinder.

The data recording unit may be configured to further store correlation information between a position on the electrode being subject to one of the sub-processes and a position corresponding thereto on the electrode being subject to another one of the sub-processes.

The inspected and/or measured data may be one of the following items: i) data on at least one of a dimension and a width of the electrode; ii) data on mismatch between an electrode coating part and an electrode non-coating part; iii) data on an amount of slurry loading on the electrode; iv) data on an exterior of the electrode; v) data on a position of an electrode disconnection section or a connection position between electrodes; vi) data on a position of a sample inspection unit; vii) data on a position of an electrode discard section; viii) data on insulation quality or a defect in an insulating material coating process performed after electrode slurry coating; ix) other pieces of defect data; x) data on reference points marked on the electrode at predetermined intervals; and xi) data on a thickness of the electrode after a roll press is performed.

The inspection and/or measurement device may be at least one of: a reference point measurement device configured to measure reference points marked on the electrode at predetermined intervals; a joint measurement device configured to detect a joint attached to the electrode; a loading amount measurement device configured to measure an amount of slurry loading on the electrode; a dimension and width measurement device; an electrode exterior inspection device; and an electrode thickness measurement device.

The inspection and/or measurement device may be directly associated to the position measurement device so as to acquire coordinate value(s) of an electrode part for which the inspected and/or measured data has been acquired. The inspection and/or measurement device may be configured to transmit the inspected and/or measured data and the corresponding coordinate value(s) of the inspection and/or measurement to the roll map make-up unit.

The apparatus may further comprise a controller configured to control electrode movement between the unwinder and the rewinder. The controller may be configured to match the inspected and/or measured data with coordinate value(s) of an electrode part for which the inspected and/or measured data has been acquired. The controller may be further configured to transmit the inspected and/or measured data and the matched coordinate value(s) of the inspection and/or measurement to the roll map make-up unit.

The coordinate value of the electrode part in a longitudinal direction of the electrode, for which the inspected and/or measured data has been acquired may be obtained by adding a coordinate value according to an amount of rotation of the rewinder at a time point of the corresponding inspection and/or measurement and an offset distance between the inspection and/or measurement device and the rewinder.

The inspection and/or measurement device may be configured to detect reference points marked on the electrode at predetermined intervals. The roll map make-up unit may be configured to mark the detected reference points on the visual imitation of the roll map at positions corresponding to coordinate values of the reference points on the electrode.

The roll map make-up unit may be a manufacturing execution system (MES) or a statistical process control (SPC) unit.

The roll map make-up unit may include a visualization device configured to define a visualization region for presenting the visual imitation of the roll map. Furthermore, the roll map make-up unit may display the coordinate value(s) and visualize and display the inspected and/or measured data on the defined region.

The roll map make-up unit may further include a central processing unit configured to compare the inspected and/or measured data with normal data, and visualize and display data determined abnormal on the defined region.

The apparatus may further comprise a manual input device configured to receive manually inspected and/or measured data of the electrode. The manual input device may be configured to transmit the received manually inspected and/or measured data to the roll map make-up unit either directly or indirectly.

The coordinate value(s) acquired by the position measurement device may include at least value(s) representing a position on the electrode in a longitudinal direction.

The coordinate value(s) may further include values representing a position on the electrode in a width direction.

The inspection and/or measurement device may be adapted to acquire the coordinate values of the position in the width direction.

The roll map make-up unit may be configured to make up at least one of: an absolute coordinate roll map representing coordinate values of the entire electrode that has been subject to one of the respective sub-processes, including an electrode part that has been removed during/after the respective sub-process and a remaining electrode part; and a relative coordinate roll map representing coordinate values of only the remaining electrode part.

The roll map make-up unit may be further adapted to make up a roll map representing both a top and a bottom surface of the electrode.

The position measurement device may be configured to derive coordinate value(s) of the detected reference points on the electrode in one of the respective sub-processes. The apparatus may further comprise a calculator configured to calculate a loss amount of the electrode by comparing the derived reference point coordinate values with reference point coordinate values set prior to the respective sub-process.

The apparatus may further comprise a roll map matching unit configured to match the visual imitation of the electrode of the respective sub-processes to the visual imitation of the electrode of the final sub-process, such that the visual imitations show identical electrode surface and parts, with common coordinate values.

The apparatus may further comprise: a first roll map make-up unit configured to make up a first roll map corresponding to at least one of the sub-processes, wherein the first roll map includes a visual imitation of the electrode subject to one of the respective sub-processes, reflecting sample process data, which is a subset of the process data including the inspected and/or measured data acquired in the respective sub-process, and the corresponding coordinate values of the position of the inspection and/or measurement; and a second roll map make-up unit configured to make up a second roll map corresponding to the respective sub-process, wherein the second roll map includes a visual imitation of the electrode subject to the respective sub-process, reflecting the sample process data of the first roll map and further reflecting additional data associated with the sample process data and the coordinate values of the position of the inspection and/or measurement.

The apparatus may further comprise a roll map matching unit configured to perform at least one of the following operations of: i) matching coordinate values of the first roll map in a first sub-process with coordinate values of the first roll map in a second sub-process carried out directly following to the first sub-process so that a visual imitation of the electrode included in the first roll map of the first sub-process corresponds to a visual imitation of the electrode included in the first roll map of the second sub-process; ii) matching coordinate values of the first roll map in each of the sub-process with coordinate values of the first roll map of a final sub-process among the plural sub-processes so that a visual imitation of the electrode included in the first roll map of the final sub-process corresponds to a visual imitation of the electrode included in the first roll map of each sub-process carried out preceding the final sub-process; iii) matching coordinate values of the second roll map of the first sub-process with coordinate values of the second roll map of the second sub-process carried out directly following to the first sub-process so that a visual imitation of the electrode included in the second roll map of the first sub-process corresponds to a visual representation of the electrode included in the second roll map of the second sub-process; and iv) matching coordinate values of the second roll map in each sub-process with coordinate values of the second roll map in a final sub-process among the plural sub-processes so that a visual imitation of the electrode included in the second roll map in the final sub-process corresponds to a visual imitation of the electrode included in the second roll map in each sub-process carried out preceding the final sub-process.

A further aspect of the present disclosure provides a system for supervising a secondary battery manufacturing process including the apparatus for making up a roll map. The system may comprise: a notching controller configured to acquire coordinate information of a position on an electrode moving in a roll-to-roll state in a notching process and a cell ID provided on a respective one of notched unit electrodes; a calculation unit configured to calculate, based on the cell ID acquired by the notching controller and a pitch information representing a width of the notched unit electrodes, a coordinate value of the acquired cell ID on the electrode, representing a position of the corresponding notched unit electrode; the roll map make-up unit, being configured to generate roll maps of respective sub-processes of the electrode manufacturing process by reflecting electrode length changes during the preceding electrode manufacturing process on the coordinate information of a position on the electrode in the notching process transmitted from the notching controller; and a mapping unit configured to derive a position of the electrode in the electrode manufacturing process from which the respective notched unit electrode originates, by comparing coordinate values of the generated roll map and the calculated coordinate value of the cell ID.

A still further aspect of the disclosure provides a system for supervising a manufacturing process of a battery, comprising: an apparatus for making up a roll map, a coordinate value data server configured to store coordinate values indicating a position of an electrode moving in one of the sub-processes, wherein the coordinate values are coordinate values that are reflected in a roll map generated by the roll map make-up unit, an identification mark providing device configured to provide an identification mark on the electrode at predetermined intervals, and a data manager configured to match coordinate values stored by the coordinate data value server corresponding to the identification mark and the identification mark.

Another aspect of the present disclosure provides a computer-implemented method of making up a roll map for supervising a secondary battery manufacturing process. The method comprises: acquiring process data by inspecting and/or measuring an electrode subject to one of the respective sub-processes and acquiring inspected and/or measured data specific to the respective sub-process; acquiring corresponding coordinate value(s) of a position of the inspection and/or measurement on the electrode; and making up a roll map corresponding to at least one of the sub-processes based on the process data, wherein the roll map includes a visual imitation of the electrode subject to the respective sub-process, reflecting at least part of the process data acquired in the respective sub-process and the corresponding coordinate value(s) of the position of the inspection and/or measurement.

The secondary battery manufacturing process may include a series of roll-to-roll sub-processes in which an electrode is moved between an unwinder and a rewinder.

The method may further comprise registering specifications of an electrode roll installed on the unwinder to be subject to one of the respective sub-processes. The registering may be preferably performed before the acquiring of the inspected and/or measured data and the coordinate value(s).

The roll map may further include correlation information between a position on the electrode being subject to one of the sub-processes and a position corresponding thereto on the electrode being subject to another one of the sub-processes.

The method may comprise detecting reference points on the electrode marked at predetermined intervals. In addition, the computer-implemented method may further comprise marking the detected reference points on the roll map at positions corresponding to coordinate values of the corresponding reference points on the electrode.

The method may further comprise comparing the inspected and/or measured data with normal data, and marking data determined abnormal on the roll map to be visually distinct from the normal data.

The method may further comprise inspecting and/or measuring a status of material input to at least one of the respective sub-processes to acquire data on the input material status. In addition, the computer-implemented method may comprise incorporating the data on the input material status into said process data, in connection with the at least one of the respective sub-processes.

The method may further comprise incorporating into the process data further data concerning conditions of the respective sub-process while the electrode is subject to the respective sub-process, in connection with coordinate values or data display parts of the roll map.

The method may further comprise deriving coordinate values of the detected reference points. In addition, the computer-implemented method may further comprise calculating a loss amount of the electrode by comparing the derived reference point coordinate values with reference point coordinate values set prior to the respective sub-process.

The method may further comprise matching the visual imitation of the electrode of the respective sub-processes to the visual imitation of the electrode of the final sub-process, such that the visual imitations show identical electrode surface and parts, with common coordinate values.

The method may include making up a first roll map corresponding to at least one of the sub-processes, wherein the first roll map includes a visual imitation of the electrode subject to one of the respective sub-processes, reflecting sample process data, which is a subset of the process data including the inspected and/or measured data acquired in the respective sub-process, and the coordinate value(s) of the position of the inspection and/or measurement, storing additional data associated with the sample process data of the respective sub-process, and making up a second roll map corresponding to the respective sub-process, wherein the second roll map includes a visual imitation of the electrode subject to the respective sub-process, reflecting the sample process data of the first roll map and further reflecting additional data associated with the sample process data and the coordinate values of the position of the inspection and/or measurement.

The method may further comprise at least one of the following steps: i) matching coordinate values of the first roll map in a first sub-process with coordinate values of the first roll map in a second sub-process carried out directly following to the first sub-process so that a visual imitation of the electrode included in the first roll map of the first sub-process corresponds to a visual imitation of the electrode included in the first roll map of the second sub-process; ii) matching coordinate values of the first roll map in each of the sub-process with coordinate values of the first roll map of a final sub-process among the plural sub-processes so that a visual imitation of the electrode included in the first roll map of the final sub-process corresponds to a visual imitation of the electrode included in the first roll map of each sub-process carried out preceding the final sub-process; iii) matching coordinate values of the second roll map of the first sub-process with coordinate values of the second roll map of the second sub-process carried out directly following to the first sub-process so that a visual imitation of the electrode included in the second roll map of the first sub-process corresponds to a visual representation of the electrode included in the second roll map of the second sub-process; and iv) matching coordinate values of the second roll map in each sub-process with coordinate values of the second roll map in a final sub-process among the plural sub-processes so that a visual imitation of the electrode included in the second roll map in the final sub-process corresponds to a visual imitation of the electrode included in the second roll map in each sub-process carried out preceding the final sub-process.

A further aspect of the present disclosure provides a computer-implemented method for supervising a secondary battery manufacturing process including a method of making up a roll map. The method may comprise: acquiring coordinate information of a position on an electrode moving in a notching process and a cell ID provided on a respective one of notched unit electrodes; calculating, based on the acquired cell ID and a pitch information representing a width of the notched unit electrodes, a coordinate value of the acquired cell ID on the electrode, representing a position of the corresponding notched unit electrode; generating roll maps of respective sub-processes of the electrode manufacturing process by reflecting electrode length changes during the preceding electrode manufacturing process on the acquired coordinate information of a position on the electrode in the notching process; and deriving a position of the electrode in the electrode manufacturing process from which the respective notched unit electrode originates, by comparing coordinate values of the generated roll map and the calculated coordinate value of the cell ID.

Another aspect of the present disclosure provides a computer-implemented method for supervising a secondary battery manufacturing process including a method of making up a roll map. The method further comprises acquiring data of coordinate values indicating a position of an electrode being subject to one of the respective sub-processes, wherein the coordinate values are coordinate values that are reflected in the roll map made-up for the respective sub-process, providing an identification mark on the electrode at predetermined intervals, and matching coordinate values corresponding to the identification mark and the identification mark.

A further aspect of the present disclosure provides a storage medium storing software executable by a computer, the software including commands configured to, when being executed by the computer, cause the computer to carry out a method as described above.

A further aspect of the present disclosure provides a roll map for supervising a secondary battery manufacturing process. The roll map comprises at least one roll map bar as a visual imitation of the electrode subject to one of the respective sub-processes. The roll map bar reflects thereon at least part of process data acquired in the respective sub-process, including inspected and/or measured data acquired in the respective sub-process by inspecting and/or measuring the moving electrode, at coordinate value(s) corresponding to the position of the inspection and/or measurement.

The secondary battery manufacturing process may include a series of roll-to-roll sub-processes in which an electrode is moved between an unwinder and a rewinder.

The roll map may further include correlation information between a position on the electrode subject to one of the sub-processes and a position corresponding thereto on the electrode subject to another one of the sub-processes.

The roll map may further comprise information on at least one of: specifications of the electrode subject to the respective sub-process; the respective sub-process; and an equipment employed in the respective sub-process.

The inspected and/or measured data may be one or more of the following items: i) data on at least one of a dimension and a width of the electrode; ii) data on mismatch between an electrode coating part and an electrode non-coating part; iii) data on an amount of slurry loading on the electrode; iv) data on an exterior of the electrode; v) data on a position of an electrode disconnection section or a connection position between electrodes; vi) data on a position of a sample inspection unit; vii) data on a position of an electrode discard section; viii) data on insulation quality or a defect in an insulating material coating process performed after electrode slurry coating; ix) other pieces of defect data; x) data on reference points marked on the electrode at predetermined intervals; and xi) data on a thickness of the electrode after a roll press is performed.

The roll map bar may include multiple portions respectively corresponding to each electrode lane and/or each of a top surface and a bottom surface of the electrode. The roll map bar may further include at least part of the inspected and/or measured data is displayed on at least one of the multiple portions of the roll map bar.

The roll map may further comprise data on a status of material input to at least one of the respective sub-processes.

Each of the roll map bars may include reference points marked thereon at positions corresponding to coordinate values of corresponding reference points marked on the electrode.

The roll map may comprise at least one of: an absolute coordinate roll map representing coordinate values of the entire electrode that has been subject to one of the respective sub-processes, including an electrode part that has been removed during/after the respective sub-process and a remaining electrode part; and a relative coordinate roll map representing coordinate values of only the remaining electrode part.

The at least one roll map bar of the respective sub-processes may be matched to a roll map bar of the final sub-process, such that the roll map bars show identical electrode surface and parts, with common coordinate values.

A further aspect of the present disclosure provides a storage medium storing the roll map as described above.

The present invention provides an apparatus for removing a defective portion of an electrode in a secondary battery manufacturing process including a series of roll-to-roll sub-processes in which an electrode is moved between an unwinder and a rewinder. The apparatus may comprise a roll map make-up unit configured to make up a roll map including a visual imitation of the electrode subject to one of the respective sub-processes, reflecting at least part of process data including inspected and/or measured data specific to the respective sub-process and corresponding coordinate value(s) of the position of the inspection and/or measurement, wherein the inspected and/or measured data includes a defect on the electrode. The apparatus comprises a defect removal port for removing an electrode portion with the defect, provided in at least one of the series of roll-to-roll sub-processes. The apparatus further comprises a process controller for controlling movement of the electrode between the unwinder and the rewinder, wherein the process controller is configured to calculate a time point at which the electrode portion with the defect reaches the defect removal port based on coordinate value(s) corresponding to the position of the inspection and/or measurement of the defect in a preceding sub-process.

The process controller is further configured to stop movement of the electrode when the electrode portion with the defect reaches the defect removal port.

A system for correcting the roll map comprises a roll map corrector configured to reverse coordinate values of the roll map made up by the roll map make-up unit in the preceding sub-process, so that the coordinate values of the roll map match coordinate values of the electrode subject to the subsequent sub-process.

The roll map corrector may be configured to, if a part of the electrode is removed after the preceding sub-process and prior to the subsequent sub-process, remove coordinate values corresponding to the removed part of the electrode from the roll map of the preceding process before reversing the coordinate values of the roll map.

The process controller may be further configured to slow down the movement of the electrode for a predetermined time period before the time point the electrode portion with the defect reaches the defect removal port.

The apparatus may further comprise a warning unit configured to output an alarm in case i) the electrode portion with the defect reaches the defect removal port, ii) the electrode movement stops, and/or iii) a predetermined time has elapsed since the electrode movement stop.

The preceding process is an electrode coating process of applying an electrode active material to a current collector to form a coated electrode, and the subsequent process is a roll press process of rolling the coated electrode with a press roll.

A further aspect of the present disclosure provides a computer-implemented method for removing a defective portion of an electrode in a secondary battery manufacturing process including a series of roll-to-roll sub-processes in which an electrode is moved between an unwinder and a rewinder. The computer-implemented method may comprise making up a roll map including a visual imitation of the electrode subject to one of the respective sub-processes, reflecting at least part of process data including inspected and/or measured data specific to the respective sub-process and corresponding coordinate value(s) of the position of the inspection and/or measurement, wherein the inspected and/or measured data includes a defect on the electrode. The computer-implemented method may further comprise removing an electrode portion with the defect at a defect removal port provided in at least one of the series of roll-to-roll sub-processes. The computer-implemented method may further comprise calculating a time point at which the electrode portion with the defect reaches the defect removal port based on coordinate value(s) corresponding to the position of the inspection and/or measurement of the defect in a preceding sub-process.

The computer-implemented method may further comprise stopping movement of the electrode when the electrode portion with the defect reaches the defect removal port.

The computer-implemented method may further comprise reversing coordinate values of the roll map made up by the roll map make-up unit in the preceding sub-process, so that the coordinate values of the roll map match coordinate values of the electrode subject to the subsequent sub-process.

The computer-implemented method may further comprise, if a part of the electrode is removed after the preceding sub-process and prior to the subsequent sub-process, removing coordinate values corresponding to the removed part of the electrode from the roll map of the preceding process before reversing the coordinate values of the roll map.

The computer-implemented method may further comprise slowing down the movement of the electrode for a predetermined time period before the time point the electrode portion with the defect reaches the defect removal port.

The computer-implemented method may further comprise outputting an alarm in case i) the electrode portion with the defect reaches the defect removal port, ii) the electrode movement stops, and/or iii) a predetermined time has elapsed since the electrode movement stop.

The preceding process is an electrode coating process of applying an electrode active material to a current collector to form a coated electrode, and the subsequent process is a roll press process of rolling the coated electrode with a press roll.

Yet another aspect of the present disclosure provides an apparatus for making up a roll map for supervising a secondary battery manufacturing process including a series of roll-to-roll sub-processes in which an electrode is moved between an unwinder and a rewinder. The apparatus may comprise a roll map make-up unit configured to make up a roll map including a visual imitation of the electrode subject to one of the respective sub-processes, reflecting at least part of process data including inspected and/or measured data specific to the respective sub-process and corresponding coordinate value(s) of the position of the inspection and/or measurement. The apparatus may further comprise a roll map matching unit configured to match the visual imitation of the electrode of the respective sub-processes to the visual imitation of the electrode of the final sub-process, such that the visual imitations show identical electrode surface and parts, sharing common coordinate values.

The apparatus may further include: an inspection and/or measurement device provided for at least one of the respective sub-processes, being configured to inspect and/or measure the electrode subject to one of the respective sub-processes and acquire the inspected and/or measured data specific to the respective sub-process; and a position measurement device configured to acquire a coordinate value in a longitudinal direction of the electrode subject to one of the respective sub-processes, based on an amount of rotation of the unwinder and/or the rewinder.

The inspected and/or measured data may include one or more of the following items: i) data on at least one of a dimension and a width of the electrode; ii) data on mismatch between an electrode coating part and an electrode non-coating part; iii) data on an amount of slurry loading on the electrode; iv) data on an exterior of the electrode; v) data on a position of an electrode disconnection section, a connection position between electrodes, or a joint on the electrode; vi) data on a position of a sample inspection unit; vii) data on a position of an electrode discard section; viii) data on insulation quality or a defect in an insulating material coating process performed after electrode slurry coating; ix) other pieces of defect data; x) data on reference points marked on the electrode at predetermined intervals; and xi) data on a thickness of the electrode after a roll press is performed.

The coordinate value in the longitudinal direction of an electrode part for which the inspected and/or measured data has been acquired may be obtained by adding a longitudinal coordinate value according to an amount of rotation of the rewinder at a time point of the corresponding inspection and/or measurement and an offset distance between the inspection and/or measurement device and the rewinder.

The inspection and/or measurement device may be adapted to acquire a coordinate value in a width direction of an electrode part for which the inspected and/or measured data has been acquired.

The apparatus may further comprise a controller configured to control electrode movement between the unwinder and the rewinder, wherein the controller is configured to match the inspected and/or measured data with the coordinate value(s) of an electrode part for which the inspected and/or measured data has been acquired, and transmit the inspected and/or measured data and the matched coordinate value(s) of the inspection and/or measurement to the roll map make-up unit.

The roll map make-up unit may be configured to make up at least one of: an absolute coordinate roll map representing coordinate values of the entire electrode that has been subject to one of the respective sub-processes, including an electrode part that has been removed during/after the respective sub-process and a remaining electrode part; and a relative coordinate roll map representing coordinate values of only the remaining electrode part.

The roll map matching unit may be configured to match the coordinate values of the relative coordinate roll map of the respective sub-processes to the coordinate values of the relative coordinate roll map of the final sub-process.

The roll map make-up unit may be further adapted to make up the roll map representing both a top and a bottom surface of the electrode.

The roll map make-up unit may be adapted to make up, for a notching process as one of the sub-processes, the roll map representing only a single - either top or bottom - planar surface of the electrode.

The roll map matching unit may be further configured to: remove from the roll maps of the respective sub-processes all coordinate values corresponding to electrode parts removed throughout the series of roll-to-roll sub-processes; and correct coordinate values of the remaining electrode parts, so that a length and coordinate values of the visual imitation representing the electrode in each sub-process are consistent with those in the final sub-process.

The roll map matching unit may be further configured to, based on the relation between an electrode winding direction in the preceding sub-process and an electrode unwinding direction in the subsequent sub-process, reverse a start direction of the coordinate values of the roll map of a respective sub-process to match a start direction of the coordinate values of the roll map of the final sub-process.

The roll map matching unit may be further configured to: store information on electrode surface overturn when a top/bottom surface of the electrode in one of the respective sub-processes is overturned in the subsequent sub-process: and, based on the electrode surface overturn information, match roll maps of the respective sub-process and the subsequent sub-process representing the same electrode surface.

The roll map matching unit may be further configured to: arrange the visual imitation of the electrode for each respective sub-process side by side, in a manner that all of the visual imitations show identical electrode surface and parts, sharing common coordinate values.

Yet further aspect of the present disclosure provides a computer-implemented method for making up a roll map for supervising a secondary battery manufacturing process including a series of roll-to-roll sub-processes in which an electrode is moved between an unwinder and a rewinder. The method may comprise making up a roll map including a visual imitation of the electrode subject to one of the respective sub-processes, reflecting at least part of process data including inspected and/or measured data specific to the respective sub-process and corresponding coordinate value(s) of the position of the inspection and/or measurement. The method may further comprise matching the visual imitation of the electrode of the respective sub-processes to the visual imitation of the electrode of the final sub-process, such that the visual imitations show identical electrode surface and parts, sharing common coordinate values.

The computer-implemented method may further include: inspecting and/or measuring the electrode subject to one of the respective sub-processes and acquiring the inspected and/or measured data specific to the respective sub-process; and acquiring a coordinate value in a longitudinal direction of the electrode subject to one of the respective sub-processes, based on an amount of rotation of the unwinder and/or the rewinder.

The inspected and/or measured data may include one or more of the following items: i) data on at least one of a dimension and a width of the electrode; ii) data on mismatch between an electrode coating part and an electrode non-coating part; iii) data on an amount of slurry loading on the electrode; iv) data on an exterior of the electrode; v) data on a position of an electrode disconnection section, a connection position between electrodes, or a joint on the electrode; vi) data on a position of a sample inspection unit; vii) data on a position of an electrode discard section; viii) data on insulation quality or a defect in an insulating material coating process performed after electrode slurry coating; ix) other pieces of defect data; x) data on reference points marked on the electrode at predetermined intervals; and xi) data on a thickness of the electrode after a roll press is performed.

The coordinate value in the longitudinal direction of an electrode part for which the inspected and/or measured data has been acquired may be obtained by adding a longitudinal coordinate value according to an amount of rotation of the rewinder at a time point of the corresponding inspection and/or measurement and an offset distance between the position of the inspection and/or measurement and the rewinder.

Said making up a roll map may make up at least one of: an absolute coordinate roll map representing coordinate values of the entire electrode that has been subject to one of the respective sub-processes, including an electrode part that has been removed during/after the respective sub-process and a remaining electrode part; and a relative coordinate roll map representing coordinate values of only the remaining electrode part.

The computer-implemented method may further comprise matching the coordinate values of the relative coordinate roll map of the respective sub-processes to the coordinate values of the relative coordinate roll map of the final sub-process.

Said making up a roll map may make up the roll map representing both a top and a bottom surface of the electrode.

Said making up a roll map may make up, for a notching process as one of the sub-processes, the roll map representing only a single - either top or bottom - planar surface of the electrode.

Said matching the visual imitations of the electrode may include: removing from the roll maps of the respective sub-processes all coordinate values corresponding to electrode parts removed throughout the series of roll-to-roll sub-processes; and correcting coordinate values of the remaining electrode parts, so that a length and coordinate values of the visual imitation representing the electrode in each sub-process are consistent with those in the final sub-process.

Said matching the visual imitations of the electrode may include: based on the relation between an electrode winding direction in the preceding sub-process and an electrode unwinding direction in the subsequent sub-process, reversing a start direction of the coordinate values of the roll map of a respective sub-process to match a start direction of the coordinate values of the roll map of the final sub-process.

Said matching the visual imitations of the electrode may include: storing information on electrode surface overturn when a top/bottom surface of the electrode in one of the respective sub-processes is overturned in the subsequent sub-process: and, based on the electrode surface overturn information, matching roll maps of the respective sub-process and the subsequent sub-process representing the same electrode surface.

Said matching the visual imitations of the electrode may include: arranging the visual imitation of the electrode for each respective sub-process side by side, in a manner that all of the visual imitations show identical electrode surface and parts, sharing common coordinate values.

According to another aspect of the disclosure a system for supervising a secondary battery manufacturing process including a series of roll-to-roll sub-processes in which an electrode is moved between an unwinder and a rewinder is provided. The system includes a first roll map make-up unit configured to make up a first roll map corresponding to at least one of the sub-processes, wherein the first roll map includes a visual imitation of the electrode subject to one of the respective sub-processes, reflecting sample process data, which is a subset of process data including inspected and/or measured data acquired in the respective sub-process, and corresponding coordinate values of indicating a position on the electrode, and a second roll map make-up unit configured to make up a second roll map corresponding to the respective sub-process, wherein the second roll map includes a visual imitation of the electrode subject to the respective sub-process, reflecting the sample process data of the first roll map and further reflecting additional data associated with the sample process data and the coordinate values.

According to some examples of this aspect of the disclosure, the process data, in addition to the inspected and/or measured data, includes at least one of: equipment data acquired from each piece of process equipment, and time series data acquired from each process.

According to some examples of this aspect of the disclosure, the sample process data is at least one of a representative value, an average value of the process data, and a determination value based on the process data.

According to some examples of this aspect of the disclosure, the additional data includes at least one of image data representing the electrode, raw data acquired in a specific section or all sections of the electrode, and processed data obtained by processing the process data or the raw data.

According to some examples of this aspect of the disclosure, the system further comprises a server unit configured to store the additional data.

According to some examples of this aspect of the disclosure, the system is configured to match at least one of data on specifications of an input material for manufacturing the electrode, a subset of the process data including data on a mixing process of the input material, and path data on a path of lines through which the mixed input material is supplied to an electrode coater with coordinate values of the first roll map and/or the second roll map.

According to examples of this aspect of the disclosure, the system further includes a roll map matching unit configured to perform at least one of the following operations of: i) matching coordinate values of the first roll map in a first sub-process with coordinate values of the first roll map in a second sub-process carried out directly following to the first sub-process so that a visual imitation of the electrode included in the first roll map of the first sub-process corresponds to a visual imitation of the electrode included in the first roll map of the second sub-process; ii) matching coordinate values of the first roll map in each of the sub-process with coordinate values of the first roll map of a final sub-process among the plural sub-processes so that a visual imitation of the electrode included in the first roll map of the final sub-process corresponds to a visual imitation of the electrode included in the first roll map of each sub-process carried out preceding the final sub-process; iii) matching coordinate values of the second roll map of the first sub-process with coordinate values of the second roll map of the second sub-process carried out directly following to the first sub-process so that a visual imitation of the electrode included in the second roll map of the first sub-process corresponds to a visual representation of the electrode included in the second roll map of the second sub-process; and iv) matching coordinate values of the second roll map in each sub-process with coordinate values of the second roll map in a final sub-process among the plural sub-processes so that a visual imitation of the electrode included in the second roll map in the final sub-process corresponds to a visual imitation of the electrode included in the second roll map in each sub-process carried out preceding the final sub-process.

Generally, the matching unit may be configured to match to match the visual imitation of the electrode of the respective sub-processes such that the visual imitations show identical electrode surfaces and/or parts, with common coordinate values.

According to some embodiments of this aspect of the invention, the roll map matching unit is configured to arrange the roll map of the second sub-process and the roll map of the first sub-process matching the roll map of the second sub-process side by side, and display the arranged roll maps as an overlay roll map, and/or arrange the roll map of the final sub-process and the roll map of each sub-process matching the roll map of the final process side by side, and display the arranged roll maps as an overlay roll map.

According to some examples of this aspect of the disclosure, the system is further configured to match at least one of data on specifications of an input material for manufacturing the electrode, a subset of the process including data on a mixing process of the input material, and path data on a path of lines through which the mixed input material is supplied to an electrode coater and each matched coordinate value of the overlay roll map and the process data in each process matching the coordinate values.

According to one aspect of the disclosure a method for supervising a secondary battery manufacturing process including a series of roll-to-roll sub-processes in which an electrode is moved between an unwinder and a rewinder is provided. The method includes making up a first roll map corresponding to at least one of the sub-processes, wherein the first roll map includes a visual imitation of the electrode subject to one of the respective sub-processes, reflecting sample process data, which is a subset of process data including inspected and/or measured data acquired in the respective sub-process, and coordinate value(s) indicating a position on the electrode, storing additional data associated with the sample process data of the respective sub-process, and making up a second roll map corresponding to the respective sub-process, wherein the second roll map includes a visual imitation of the electrode subject to the respective sub-process, reflecting the sample process data of the first roll map and further reflecting additional data associated with the sample process data and the coordinate values of the position of the inspection and/or measurement. The method of this aspect of the invention, for example, may be carried out using the system of the previous aspect of the invention.

According to another aspect of the disclosure, a system for supervising a secondary battery manufacturing process including a series of roll-to-roll sub-processes in which an electrode is moved between an unwinder and a rewinder is provided. The system includes a roll map make-up unit configured to make up a roll map, which includes data of coordinate values indicating a position on an electrode and process data matched with the coordinate values, the process data including inspected and/or measured data acquired in the respective sub-process, and a roll map matching unit configured to perform at least one of the following operations of: i) matching coordinate values of the roll map of a first or preceding sub-process with coordinate values of the roll map of a second or following sub-process performed on the electrode subsequent to the preceding sub-process, so that a visual imitation of the electrode included in the roll map of the preceding process corresponds to a visual imitation of the electrode included in the roll map of the following sub-process; and ii) matching coordinate values of the roll map of each sub-process with coordinate values of the roll map of a final sub-process so that a visual imitation of the electrode included in the roll map of the final process among corresponds to a visual imitation of the electrode included in the roll map of each sub-process preceding the final sub-process.

Generally, the matching unit may be configured to match the visual imitation of the electrode of the respective sub-processes such that the visual imitations show identical electrode surfaces and/or parts, with common coordinate values.

According to some examples of this aspect of the disclosure, the process data, in addition to the inspected and/or measured data, includes at least one of: equipment data acquired from each piece of process equipment, and time series data acquired from each process.

According to some examples of this aspect of the disclosure, the roll map make-up unit is configured to generate at least one of: an absolute coordinate roll map including coordinate values of an electrode part removed in one of the plural sub-processes, either between subsequent sub-processes, or after the final sub-process, and coordinate values of a remaining electrode part (survival electrode part) excluding the removed electrode part together on the roll map; and a relative coordinate roll map including only the coordinate values of the remaining electrode part excluding the removed electrode part on the roll map.

According to some examples of this aspect of the disclosure, the roll map matching unit is configured to perform at least one of the following operations of: i) matching coordinate values of the relative coordinate roll map of the preceding sub-process with coordinate values of the relative coordinate roll map of the following sub-process; and ii) matching coordinate values of the relative coordinate roll map of each sub-process performed on the electrode before the final sub-process among the plurality of sub-processes with coordinate values of the relative coordinate roll map of the final process.

According to some examples of this aspect of the disclosure, the roll map matching unit is configured to perform at least one of the following operations of: a) a roll map length matching operation of matching a length of the roll map of the preceding sub-process with a length of the roll map of the following sub-process; b) a coordinate axis matching operation of matching a start direction of coordinates of the roll map of the preceding process with a start direction of coordinates of the roll map of the following sub-process; and c) an electrode surface matching operation of matching a roll map of an electrode surface of the following process with a roll map of the electrode surface in the preceding process corresponding to the electrode surface in the following process. In particular, the visual imitations of the electrode included in the respective roll map generated for the respective sub-process may be matched as described.

According to some examples of this aspect of the disclosure, the roll map matching unit is configured to arrange the roll map of the following sub-process and the roll map of the preceding sub-process matching the roll map of the following sub-process side by side, and to display the arranged roll maps as an overlay roll map. That is, the visual imitations of the electrode included in the roll maps generated for the respective sub-processes may be arranged in a side by side manner, e.g., as parallel bars.

According to some examples of this aspect of the disclosure, the roll map matching unit is configured to perform at least one of the following operations of: a)' a roll map length matching operation of matching a length of the roll map of each sub-process with a length of the roll map of the final process; b)' a coordinate axis matching operation of matching a start direction of coordinates of the roll map of each sub-process with a start direction of coordinates of the roll map of the final sub-process; and c)' an electrode surface matching operation of matching a roll map of an electrode surface of the final sub-process with a roll map of the electrode surface of each sub-process corresponding to the electrode surface in the final sub-process. In particular, the visual imitations of the electrode included in the respective roll map generated for the respective sub-process may be matched as described.

According to some examples of this aspect of the disclosure, the roll map matching unit may be configured to arrange the roll map of the final sub-process and the roll map of each sub-process matching the roll map of the final sub-process side by side, and to displays the arranged roll maps as an overlay roll map. That is, the visual imitations of the electrode included in the roll maps generated for the respective sub-processes may be arranged in a side by side manner, e.g., as parallel bars.

According to some examples of this aspect of the disclosure, the roll map make-up unit is configured to generate a first roll map, which includes the data of the coordinate values indicating the position on the electrode and sample process data being a subset of the process data, wherein the sample process data is matched with coordinate values, wherein the roll map matching unit is configured to match coordinate values of the first roll map in the preceding sub-process with coordinate values of the first roll map of the following sub-process, and/or to match the coordinate values of the first roll map of each sub-process among the plurality of sub-processes with coordinate values of the first roll map of the final sub-process.

According to some examples of this aspect of the disclosure, the roll map make-up unit further includes a second roll map make-up unit configured to make up a second roll map, which includes the data of the first roll map and further includes additional data associated with the sample process data and matched with the coordinate values, wherein the roll map matching unit is configured to match coordinate values of the second roll map of the preceding sub-process with coordinate values of the second roll map of the following sub-process, and/or match the coordinate values of the second roll map of each sub-process among the plurality of sub-processes with coordinate values of the second roll map of the final sub-process.

According to some examples of this aspect of the disclosure, the system is configured to match following process data matching the coordinate values of the roll map of the following process and preceding process data matching the coordinate values of the preceding process matching the coordinate values of the roll map in the following process, and/or to match final process data matching the coordinate values of the roll map of the final process with the process data in each process matching the coordinate values in each sub-process matching the coordinate values of the roll map in the final sub-process.

According to examples of this aspect of the disclosure, the system is configured to match at least one of data on specifications of an input material for manufacturing the electrode, process data for a mixing process of the input material, and path data on a path of lines through which the mixed input material is supplied to an electrode coater and each matched coordinate value of the overlay roll map and the process data in each process matching the coordinate values.

According to one aspect of the disclosure, a method for supervising a secondary battery manufacturing process including a series of roll-to-roll sub-processes in which an electrode is moved between an unwinder and a rewinder is provided. The method of this aspect may be carried out, for example, using a system of the previous aspect of the invention. The method includes making up a roll map, which includes data of coordinate values indicating a position on the electrode and process data matched with the coordinate values, the process data including inspected and/or measured data acquired in the respective sub-process, and performing at least one of the following operations of: i) matching coordinate values of the roll map of a first or preceding sub-process with coordinate values of the roll map of a second or following sub-process performed on the electrode subsequent to the preceding sub-process, so that a visual imitation of the electrode included in the roll map of the preceding process corresponds to a visual imitation of the electrode included in the roll map of the following sub-process; and ii) matching coordinate values of the roll map of each sub-process with coordinate values of the roll map of a final sub-process so that a visual imitation of the electrode included in the roll map of the final process among corresponds to a visual imitation of the electrode included in the roll map of each sub-process preceding the final process.

In a further aspect of the disclosure, a storage medium is provided which stores at least one of first roll map corresponding to at least one of plural sub-processes performed on an electrode moving between an unwinder and a rewinder and/or a second roll map corresponding to the respective sub-process, wherein the first roll map includes a visual imitation of the electrode subject to the respective sub-process, reflecting sample process data, which is a subset of process data including inspected and/or measured data acquired in the respective sub-process, and coordinate value(s) indicating a position on the electrode, and wherein the second roll map includes a visual imitation of the electrode subject to the respective sub-process, reflecting the sample process data of the first roll map and further reflecting additional data associated with the sample process data and the coordinate values of the position of the inspection and/or measurement.

In a further aspect of the disclosure, a storage medium is provided which stores an overlay roll map including visual imitations of an electrode subject to plural roll-to-roll sub-processes arranged in a side by side manner, wherein, in the overlay roll map, the roll map of a following sub-process and the roll map of a preceding sub-process performed before the following sub-process are matched and arranged side by side, and/or the roll map of a final sub-process among the plural sub-processes and the roll map of each sub-process before the final sub-process are matched and arranged side by side.

According to another aspect of the disclosure, a system for supervising a manufacturing process of a battery is provided. The system includes a coordinate value data server configured to store coordinate values indicating a position of an electrode moving in a roll-to-roll process between an unwinder and a rewinder, an identification mark providing device configured to provide an identification mark on the electrode at predetermined intervals, and a data manager configured to match coordinate values stored by the coordinate value data server corresponding to the identification mark and the identification mark.

According to some examples of this aspect of the disclosure, the coordinate values are coordinate values that are reflected or included in a roll map which includes a visual imitation the electrode moving in the roll-to-roll process.

According to some examples of this aspect of the disclosure, the coordinate value data server stores coordinate values reflected or included in a roll map of a first sub-process matched with coordinate values reflected or included in a roll map of a second process carried out subsequently or following the first process, or stores coordinate values reflected in roll maps of each sub-process among a plurality of roll-to-roll processes matched with coordinate values reflected in a roll map of a final sub-process.

According to some examples of this aspect of the disclosure, the coordinate value data server stores process data matching the coordinate values of the roll map.

According to some examples of this aspect of the disclosure, the process data includes at least one of: equipment data acquired from process equipment used for the respective roll-to-roll process, process-related inspected and/or measured data acquired from each roll-to-roll process, and time series data acquire from each roll-to-roll process.

According to some examples of this aspect of the disclosure, the coordinate value data server stores one or more of: a) a first roll map including data of the coordinate values indicating the position of the electrode and sample process data which is a subset of process data generated in a respective roll-to-roll process performed on the electrode, wherein the sample process data, in the first roll map, is matched with the coordinate values; b) a second roll map including the data of the coordinate values and the sample process data of the first roll map and further including additional data associated with the sample process data matched with the coordinate values; c) an overlay roll map in which includes a visual presentation of roll maps of multiple roll-to-roll processes arranged side by side with the coordinate values of the roll maps being matched; d) an overlay roll map in which includes a visual presentation of roll maps of each of a plurality of roll-to-roll process arranged side by side with the coordinate values of the roll maps of each roll-to-roll process being matching with coordinate values of the roll map of a final roll-to-roll process.

According to some examples of this aspect of the disclosure, the coordinate value data server is configured to store at least one of coordinate values of a roll map indicating a position of the electrode moving in a roll-to-roll process of providing the identification mark, coordinate values of a roll map indicating a position of the electrode moving in one or a plurality of preceding roll-to-roll processes performed before the roll-to-roll process of providing the identification mark, and process data of each roll-to-roll process matching the coordinate values of the roll map.

According to some examples of this aspect of the disclosure, the identification mark is provided on an electrode tab after performing a notching process, in which the electrode tab is formed, in particular, physically formed, on the electrode.

According to some examples of this aspect of the disclosure, the identification mark is a physical electrode ID physically marked on the electrode or a virtual electrode ID virtually provided every predetermined interval.

According to some examples of this aspect of the disclosure, the identification mark providing device is an ID marker configured to mark the electrode ID on the electrode every predetermined interval.

According to some examples of this aspect of the disclosure, first position coordinate values corresponding to the position of the electrode ID are acquired from coordinate values received from a position measurement sensor when the electrode ID is marked or when the marked ID is recognized by a reader.

According to some examples of this aspect of the disclosure, the data manager is configured to match the first position coordinate values with the coordinate values of the coordinate value data server corresponding to the first position coordinate values and/or with process data matching the coordinate values.

According to some examples of this aspect of the disclosure, the identification mark providing device is an equipment control device configured to receive specification information of the electrode from a first sensor, receive position coordinate values of at least one electrode from a second sensor, which is a position measurement sensor, and generate a virtual electrode ID of the electrode based on the specification information and the position coordinate values, wherein the specification information includes information on a length or pitch of an electrode tab of the electrode.

According to some examples of this aspect of the disclosure, the equipment control device is configured to receive a quantity count value of the electrode according to the length of at least one electrode tab from the first sensor, wherein the quantity count value of the electrode includes a binary coded decimal (BCD) code.

According to some examples of this aspect of the disclosure, the data manager is configured to match the position coordinate values corresponding to the position of the virtual electrode ID with the coordinate values of the coordinate value data server corresponding to the position coordinate values and/or process data matching the coordinate values.

According to some examples of this aspect of the disclosure, the data manager is configured to match at least a subset of assembly process data including the identification mark and being matched with the identification mark with the coordinate values of the coordinate value data server and/or process data matching the coordinate values, wherein the assembly process data is generated in plural assembly sub-processes performed on the electrode after the roll-to-roll processes.

According to some examples of this aspect of the disclosure, the system further includes an assembly process data matching unit configured to match the identification mark with at least the subset of the assembly process data.

According to some examples of this aspect of the disclosure, the assembly process data matching unit is configured to provide an upper level identification mark matching the identification mark of the electrode to an upper level assembly including the electrode on which the identification mark is provided.

According to some examples of this aspect of the disclosure, the upper level assembly is at least one of an electrode assembly including the electrode on which the identification mark is provided, a battery cell semi-finished product including the electrode assembly, a battery cell including the electrode assembly, a battery cell stack including the battery cell or a battery module including the battery cell stack, and a battery pack including the battery cell stack or the battery module.

According to some examples of this aspect of the disclosure, the data manager is configured to match at least one of data on specifications of an input material for manufacturing the electrode, process data on a mixing process of the input material, and path data on a path of lines through which the mixed input material is supplied to an electrode coater with the identification mark and the coordinate values of the coordinate value data server.

According to another aspect of the disclosure, a method for supervising a manufacturing process of a battery includes acquiring data of coordinate values indicating a position of an electrode moving in a roll-to-roll process between an unwinder and a rewinder, providing an identification mark on the electrode at predetermined intervals, and matching coordinate values corresponding to the identification mark and the identification mark. The method of this aspect of the invention, for example, may be carried out using the system of the previous aspect of the invention.

According to some examples of this aspect of the disclosure, the method further includes matching process data matched with the coordinate values and assembly process data matched with the identification mark based on the coordinate values and the identification mark.

According to another aspect of the disclosure, an electrode including an electrode identification mark is provided. As described in the previous aspect of the invention, the identification mark may be physically formed to an electrode tab of the electrode.

According to a further aspect of the disclosure, an upper level assembly includes the electrode of the previous aspect of the invention is provided.

According to some examples of this aspect of the disclosure, the upper level assembly is at least one of an electrode assembly including the electrode on which the electrode identification mark is provided, a battery cell semi-finished product including the electrode assembly, a battery cell including the electrode assembly, a battery cell stack including the battery cell or a battery module including the battery cell stack, and a battery pack including the battery cell stack or the battery module.

According to some examples of this aspect of the disclosure, the upper level assembly further comprises an upper level identification mark matching the electrode identification mark.

According to a further aspect of the disclosure, an electrode includes an electrode identification mark matching at least one of coordinate values of a roll map indicating a position on the electrode and process data matching the coordinate values of the roll map.

According to some examples of this aspect of the disclosure, the process data matching the coordinate values of the roll map and following process data are matched by the electrode identification mark matching the following process data based on the electrode identification mark and the coordinate values of the roll map.

According to a further aspect of the disclosure, an upper level assembly includes the electrode of the previous aspect of the invention is provided.

According to some embodiments of this aspect of the invention, the upper level assembly is at least one of an electrode assembly including the electrode on which the electrode identification mark is provided, a battery cell semi-finished product including the electrode assembly, a battery cell including the electrode assembly, a battery cell stack including the battery cell or a battery module including the battery cell stack, and a battery pack including the battery cell stack or the battery module.

According to some embodiments of this aspect of the invention, the upper level assembly further comprises an upper level identification mark matching the electrode identification mark.

### BRIEF DESCRIPTION OF THE DRAWINGS

The above and other objects, features, and advantages of the present invention will become more apparent to those of ordinary skill in the art by describing exemplary embodiments thereof in detail with reference to the accompanying drawings, in which:
FIG. 1 is a schematic diagram showing a change in risk range according to quality correlation analysis between an electrode manufacturing process and a final product;
FIG. 2 is a schematic diagram of an apparatus for making up a roll map according to one embodiment not covered by the claimed invention;
FIG. 3 is a schematic diagram showing a principle in which inspected and/or measured data and coordinate values of the corresponding data are acquired by an inspection and/or measurement device;
FIG. 4 is a schematic diagram of a data visualization device provided in the apparatus for making up the roll map;
FIG. 5 is a schematic diagram showing an example of a roll map made up by the apparatus for making up the roll map not covered by the claimed invention;
FIG. 6 is a flowchart showing one embodiment of a method of making up a roll map not covered by the claimed invention;
FIG. 7 is a schematic diagram of the roll map according to one example;
FIG. 8 is a schematic diagram of a roll map according to another example;
FIG. 9 is a schematic diagram showing distortion of position coordinates occuring due to occurrence of a loss of an electrode part in a state no reference points are provided;
FIG. 10 is a view showing the concept of the present invention that prevents the distortion of the position coordinates by introducing the reference points;
FIG. 11 is a schematic diagram of an electrode loss amount measurement device according to one embodiment not covered by the claimed invention;
FIG. 12 is a schematic diagram showing one example of electrode loss amount measurement;
FIG. 13 is a schematic diagram showing another example of electrode loss amount measurement;
FIG. 14 is a schematic diagram showing still another example of the electrode loss amount measurement;
FIG. 15 is a schematic diagram showing the reference points being changed by a roll press process;
FIG. 16 is a schematic diagram showing an electrode loss amount measurement device according to another embodiment not covered by the claimed invention;
FIG. 17 is a schematic diagram showing an example of a roll map of the electrode manufacturing process according to an example not covered by the claimed invention;
FIG. 18 is a schematic diagram of an apparatus for making up a roll map;
FIG. 19 is a schematic diagram showing a system for correcting a roll map according to another embodiment of the present invention;
FIG. 20 is a schematic diagram showing one example of a change in coordinates of the roll map by a roll map corrector for correcting the roll map according to the present invention;
FIG. 21 is a schematic diagram showing another example of the change in coordinates of the roll map by the roll map corrector for correcting the roll map according to the present invention;
FIG. 22 is a schematic diagram showing a defect in an electrode coating process being removed in a subsequent roll press process;
FIG. 23 is a schematic diagram showing the concept of a system for removing a defective portion of an electrode according to still another embodiment of the present invention;
FIG. 24 is a schematic diagram showing the system for removing a defective portion of an electrode according to the present invention;
FIG. 25 is a schematic diagram showing a state of an electrode according to an electrode manufacturing process;
FIG. 26 is a schematic diagram of a system for making up a roll map according to one embodiment not covered by the claimed invention;
FIG. 27 is a schematic diagram showing one example of the apparatus for making up the roll map in the electrode coating process and the roll map of the electrode coating process;
FIG. 28 is a schematic diagram showing a principle in which inspected data and coordinate values of the corresponding inspected data by an inspection device;
FIG. 29 is a schematic diagram showing one example of a roll map make-up unit;
FIG. 30 is a schematic diagram showing a roll map of top and bottom surfaces of the electrode;
FIG. 31 is a schematic diagram showing scenarios of electrode surface overturn based on a winding direction in the preceding sub-process and an unwinding direction in the subsequent process;
FIG. 32 is a schematic diagram showing coordinate axes of the roll maps of the preceding process and the subsequent process that are reversed;
FIG. 33 is a schematic diagram showing one example of the apparatus for making up the roll map in the roll press process and the roll map of the roll press process;
FIG. 34 is a schematic diagram showing a roll map when the electrode is removed after the roll press process is completed;
FIG. 35 is a schematic diagram showing one example of the apparatus for making up the roll map in a notching process and the roll map of the notching process;
FIGS. 36 to 38 are schematic diagrams showing a roll map matching process not covered by the claimed invention;
FIG. 39 to 41 are schematic diagrams showing a series of roll-to-roll processes according to one embodiment and overlay roll maps of the corresponding processes;
FIG. 42 and 43 are schematic diagrams showing a series of roll-to-roll processes according to another embodiment and overlay roll maps in the corresponding processes;
FIG. 44 is a view showing a roll map in an electrode manufacturing process;
FIG. 45 is a block diagram showing a system for supervising a secondary battery manufacturing process not covered by the claimed invention;
FIG. 46 is a schematic diagram for describing a notching process controlled by a notching controller according to the system for supervising a secondary battery manufacturing process not covered by the claimed invention;
FIG. 47 is a schematic diagram for describing a process of deriving a removed length when an electrode is removed during the notching process;
FIG. 48 is a schematic diagram showing a process of tracking a position of the electrode of the system for supervising a secondary battery manufacturing process according to one embodiment not covered by the claimed invention;
FIG. 49 is a schematic diagram showing elongation of the electrode in a roll press process performed after the electrode is coated;
FIG. 50 is a schematic diagram showing a process of tracking a position of an electrode of a system for supervising a secondary battery manufacturing process according to another embodiment not covered by the claimed invention;
FIG. 51 is a schematic diagram showing slurry transfer between a plurality of tanks installed between a mixer and a coater;
FIG. 52 is a schematic diagram showing a difference between electrode slurry lot information tracking and management mechanism of the related art and the present disclosure;
FIG. 53 is a block diagram showing a system for monitoring and/or supervising a manufacturing process of a battery according to one embodiment not covered by the claimed invention;
FIG. 54 is a schematic diagram showing a process of allocating and recording lot information of the electrode slurry not covered by the present invention;
FIG. 55 is a schematic diagram showing a system for monitoring and/or supervising a manufacturing process of a battery according to another embodiment not covered by the claimed invention;
FIGs. 56 to 68 are omitted;
FIG. 69 is a configuration diagram of a system for monitoring and/or supervising a manufacturing process of a battery according to one embodiment not covered by the claimed invention;
FIG. 70 is a schematic diagram showing making up a first roll map in an electrode manufacturing process and a notching process;
FIG. 71 is a schematic diagram of a visualization device included in a first roll map make-up unit;
FIG. 72 is a data flowchart of a system for manufacturing a battery according to one embodiment not covered by the claimed invention;
FIG. 73 is a schematic diagram showing one example of the first roll map and a second roll map;
FIG. 74 is a schematic diagram showing another example of the first roll map and the second roll map;
FIG. 75 is a flowchart of a method for monitoring and/or supervising a manufacturing process of a battery according to one embodiment not covered by the claimed invention;
FIG. 76 is a schematic diagram of a roll map matching unit included in the system for monitoring and/or supervising a manufacturing process of a battery;
FIG. 77 is a schematic diagram showing a roll map length and coordinate axis matching process by the roll map matching unit;
FIG. 78 is a schematic diagram showing surfaces of an electrode that are reversed between preceding and following processes;
FIG. 79 is a schematic diagram showing one example of an overlay roll map;
FIG. 80 is a flowchart of a method for monitoring and/or supervising a manufacturing process of a battery according to one embodiment not covered by the claimed invention;
FIG. 81 is a schematic diagram showing one example of data matching by the system for monitoring and/or supervising a manufacturing process of a battery not covered by the present invention;
FIG. 82 is a configuration diagram of a system for monitoring and/or supervising a manufacturing process of a battery according to another embodiment not covered by the claimed invention;
FIG. 83 is a schematic diagram showing a process of providing an identification mark to an electrode;
FIGS. 84 and 85 are schematic diagrams showing a process of providing a virtual identification mark to the electrode;
FIG. 86 is a data flowchart according to a system for monitoring and/or supervising a manufacturing process of a battery according to another embodiment not covered by the claimed invention;
FIG. 87 is a schematic diagram of a following process data matching unit;
FIG. 88 is a flowchart of a method for monitoring and/or supervising a manufacturing process of a battery according to another embodiment not covered by the claimed invention;
FIG. 89 is a schematic diagram showing one example of data matching by the system for monitoring and/or supervising a manufacturing process of a battery not covered by the present invention;
FIG. 90 is a schematic diagram showing an electrode tracking process by the system for monitoring and/or supervising a manufacturing process of a battery according to the present invention;
FIG. 91 is a schematic diagram of an electrode and an electrode assembly provided with an electrode identification mark;
FIG. 92 is a schematic diagram of a folding cell and a stacked cell provided with the electrode identification mark;
FIG. 93 is a schematic diagram of a packaging cell provided with the electrode identification mark;
FIG. 94 is a schematic diagram of a battery cell provided with the electrode identification mark;
FIG. 95 is a schematic diagram of another type of battery cell with an electrode identification mark; and
FIG. 96 is a schematic diagram of a battery module and a battery pack.

### DETAILED DESCRIPTION OF EXEMPLARY EMBODIMENTS

Hereinafter, a detailed configuration of the present invention will be described in detail with reference to the accompanying drawings and several embodiments. The following embodiments are exemplary and set forth herein to facilitate understanding of the present invention. **In** addition, the accompanying drawings are not drawn to actual scale, and dimensions of some components may be exaggerated to facilitate understanding of the present invention.

Since the present invention can be variously modified and have a variety of forms, specific embodiments will be shown in drawings and described in detail. However, it should be understood that the embodiments are not intended to limit the present invention to a specific form and encompass all changes, equivalents, and substitutions within the scope of the present invention.

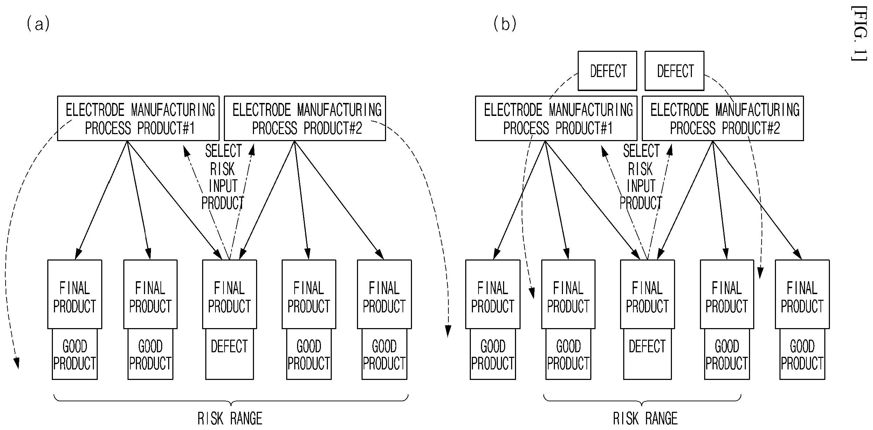

FIG. 1 is a schematic diagram showing a change in risk range according to quality correlation analysis between an electrode manufacturing process and a final product.

As shown in FIG. 1A, a final product (secondary battery) is manufactured using a product (electrode) manufactured in an electrode manufacturing process. In this case, when a defect occurs in the final product, it is necessary to identify manufacturing history in some cases in order to identify which cause has caused such a defect. However, when there is no information or insufficient information on the manufacturing history of the product in the electrode manufacturing process, it is difficult to identify products from which process have become the corresponding final defect product. Therefore, in order to prevent reoccurrence of the same defect, it is necessary to include other final products, which are good products, as well as the corresponding defect product in a risk range in which there is a risk of a defect exists and discard all the products in the risk range in some cases.

On the other hand, when there is sufficient information on the manufacturing history of the product in the electrode manufacturing process, it is possible to reduce the risk range based on the information as shown in FIG. 1B, thereby reducing the number of good products being discarded. In particular, since an electrode is manufactured through various processes, such as a coating process, a roll press process, and a slitting process, unless the product history information of each process is clearly recorded or stored, it may be difficult to specify the cause of a defect in correlation with a following process.

Therefore, it is necessary to develop a technology capable of recording information on product quality or defects in an electrode manufacturing process and tracking and analyzing the quality correlation with the following process or a final product.

In addition, as described above, there is a limit to directly displaying an electrode coated with electrode slurry with all defect information due to physical limitations of an electrode space. In addition, in some cases, information on the quality of a non-defective electrode in each process may also be required for finding the cause of a fault unexpectedly occurring in a following process or in the process of using a secondary battery which is a finished product.

Therefore, the present inventors have developed a roll map that represents information related to an electrode during its manufacturing process. The roll map may be displayed in a space in the form of a bar imitating the electrode, instead of directly marking on the electrode data or information on quality, as well as information on defects in the electrode manufacturing process. Such a roll map, by displaying various pieces of data or information, may be used for analysis and control of quality at the time of manufacturing an electrode. In addition, in order to track the quality, the roll map may be used for quality correlation analysis between processes, overcoming the limitations of the related art.

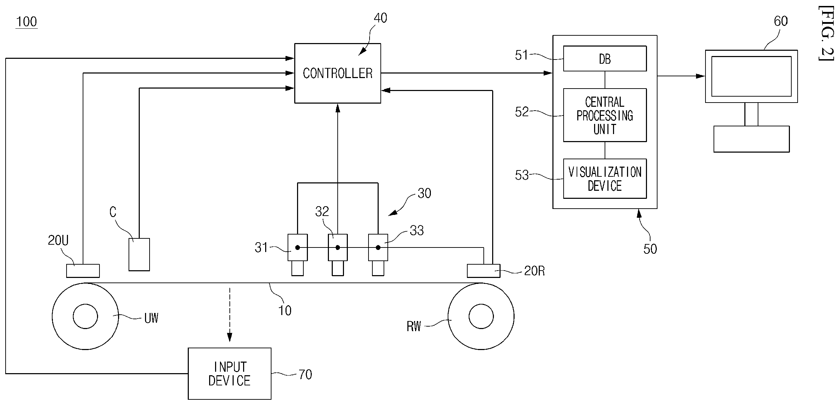

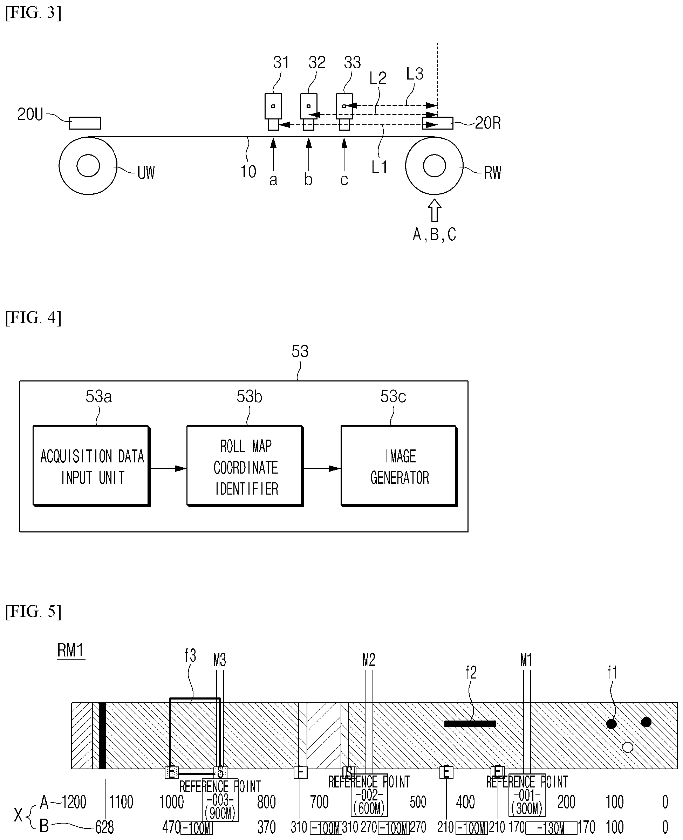

FIG. 2 is a schematic diagram of an apparatus for making up a roll map according to one embodiment of the present disclosure, and FIG. 3 is a schematic diagram showing a principle in which inspected and/or measured data and coordinate values of the corresponding data are acquired by an inspection and/or measurement device.

An apparatus 100 for making up a roll map according to the present disclosure includes an inspection and/or measurement device 30 for inspecting and/or measuring an electrode 10 moving between an unwinder UW and a rewinder RW and acquiring inspected and/or measured data, and a roll map make-up unit 50 for making up a roll map expressed in a planar shape on which the moving electrode is imitated and displaying at least some of the inspected and/or measured data.

The inspection and/or measurement device 30 may inspect the electrode 10 moving between the unwinder and the rewinder and acquire the inspected and/or measured data.

In an electrode manufacturing process, the predetermined inspection and/or measurement device 30 is disposed adjacent to an upper portion, a lower portion, or the like of an electrode line moving in a roll-to-roll state, in order to measure quality or defects of the electrode 10 subject to respective processes.

The inspection and/or measurement device 30 may inspect and/or measure the electrode 10 and acquire the inspected and/or measured data. The inspection and/or measurement device 30 may be connected to a position measurement device 20 (to be described below) by wire or wirelessly to acquire, in addition to the inspected and/or measured data, coordinate values (coordinate data) of the electrode 10 for which the inspected and/or measured data has been acquired. Alternatively, the coordinate values of the electrode 10 transmitted to a controller 40 (to be described below) may match the inspected and/or measured data.

The "inspection and/or measurement device" refers to any one or all of an inspection device, a measurement device, and an inspection and measurement device according to the purpose of measurement. The "inspected and/or measured data" refers to any one or all of inspected data, measured data, and inspected and measured data. As a result, the inspected and/or measured data is any data that can be obtained through inspection or measurement performed on the electrode. In addition, the inspection and/or measurement device is any device for inspecting or measuring the electrode in order to obtain specific inspected and/or measured data.

The inspected and/or measured data of the electrode 10 described in the present disclosure may include data on quality or defects of the electrode 10. For example, measured data on a slurry loading amount may be acquired by a loading amount measurement device 31 when electrode slurry is coated in a coating process. When the loading amount is out of a set range, it is determined to be defect, and the defect may be distinct from other parts and visually displayed by a visualization device to be described below. Alternatively, a range of the loading amount in a normal range rather than the defect may also be set according to the amount range, and the loading amount range may be visually displayed in different colors. In this sense, the inspected and/or measured data according to the present disclosure is not limited to a defect but includes data on quality.

In addition, a dimension and width measurement device for measuring a dimension and a width may be provided. The dimension and width measurement device may determine that the dimension and the width out of set ranges are defect data or distinguish the dimension and the width in normal ranges according to the ranges of the dimension and the width to display the distinguished dimensions and widths in different colors. Data on mismatch between a coating part and a non-coating part on the electrode or the like may also be acquired by the dimension and width measurement device.

When the electrode is disconnected during the process and then connected using a joint connection member (connection tape), a joint measurement device for detecting the joint may also be provided.

In addition, there is a case in which reference points are marked on the electrode 10 at predetermined intervals and used for calculating a length of a broken electrode or the like. A reference point measurement device 220 for detecting positions of the reference points may also be provided as one of the inspection and/or measurement devices.

Alternatively, a thickness measurement device (web gauge) for measuring a thickness of the coated electrode, for example, in a pre-process and a post-process of the roll press process may also be provided.

In addition, in the electrode manufacturing process, inspected and/or measured data on quality or defects of the electrode may be obtained by various inspection and/or measurement devices 30. An electrode exterior inspection device 33 may be provided to detect exterior defects of the electrode, such as a pinhole defect and a line defect. The inspection and/or measurement device 30 is not limited to the devices described above, and predetermined other inspection and/or measurement devices 30 capable of inspecting other measurement parameters may also be applied to the apparatus 100 for making up the roll map according to the present disclosure as long as the other measurement parameters capable of being obtained from the electrode 10 are present.

In addition, each of the inspection and/or measurement devices 30 is not necessarily provided separately, and a plurality of inspected data or measured data may be obtained by one inspection device or measurement device. In this case, the number of inspection and/or measurement devices 30 required can be reduced. Alternatively, a plurality of inspection and/or measurement devices 30 having the same name may also be provided according to the purpose thereof. That is, since a color sensor as the joint measurement device inspects an exterior, the color sensor may also be regarded as an exterior inspection device 33. In addition, the vision measurement device may be regarded as the dimension and width measurement device because it may measure mismatch but may also be regarded as the reference point measurement device because it may also detect the reference points by the vision sensor included in the corresponding measurement device.

In summary, detailed examples of the inspected and/or measured data that may be acquired in the electrode manufacturing process may be provided as follows:
i) data on at least one of a dimension and a width of an electrode;
ii) data on mismatch between an electrode coating part and an electrode non-coating part;
iii) data on slurry loading amount on the electrode;
iv) data on an exterior of the electrode;
v) data on a position of an electrode disconnection section or a connection position between the electrodes;
vi) data on a position of a sample inspection unit;
vii) data on a position of an electrode discard section;
viii) data on insulation quality or defects in an insulating material coating process performed after electrode slurry coating;
ix) other defect data;
x) data on reference points marked on the electrode at predetermined intervals; and
xi) data on a thickness of the electrode after a roll press.

Meanwhile, in the electrode manufacturing process, the electrode 10 is mounted between an unwinder UW and a rewinder RW. After the electrode 10 is unwound from the unwinder UW and finishes a predetermined process, the electrode 10 is wound on the rewinder RW to become an electrode roll. In addition, the electrode roll that has finished one process (preceding process) is re-mounted between the unwinder UW and the rewinder RW in a following process and becomes subject to the following process while moving in a roll-to-roll state. That is, in the electrode manufacturing process, an electrode moving process in which the electrode 10 moves in the roll-to-roll state is repeated. Therefore, when a position of the electrode upon moving can be expressed in coordinates, the position of the electrode 10 in each process may be specified. In addition, when data on quality or defects is acquired, in a case in which an event, such as breakage of the electrode, occurs and thus the electrode is connected by the joint connection member, history information on the quality, defects, and various events of the electrode in the corresponding process may be displayed when a position of a data acquisition unit or a joint may be expressed as coordinates. Since the electrode 10 is moved by the rotation of the unwinder UW and the rewinder RW, a position of the electrode 10 in a longitudinal direction may be specified according to an amount of rotation of the unwinder UW and/or the rewinder RW. The apparatus for making up the roll map according to the present disclosure may further include the position measurement device 20 for acquiring the position of the electrode according to the amount of rotation of the unwinder and/or the rewinder as coordinate values. The position measurement device 20 according to the present disclosure may acquire the position of the electrode 10 in the longitudinal direction as coordinate values (coordinate data). For example, a start portion of the electrode 10 may be specified when coordinates acquired by the position measurement device 20 are zero, and an end portion of the electrode 10 may be specified when a coordinate value of 1200 meters is acquired from the electrode 10 having a length of 1200 meters.

The coordinate data of the position of the electrode 10 in the longitudinal direction may be detected by rotary encoders 20U and 20R respectively installed on the unwinder UW and the rewinder RW. Generally, the rotary encoders 20U and 20R are installed on a motor driving unit for driving the unwinder UW and the rewinder RW to detect an electrode movement distance according to the number of rotations (amount of the rotation) of a motor. Therefore, when the electrode 10 moves between the unwinder UW and the rewinder RW, the movement distance may be detected by the rotary encoders 20U and 20R. Although FIG. 2 shows that an unwinder encoder and a rewinder encoder are respectively disposed outside the unwinder UW and the rewinder RW for convenience of description, the encoders may be respectively embedded in the unwinder UW and the rewinder RW.

The inspection and/or measurement devices 30 may be connected to the position measurement device 20 by wire or wirelessly to acquire together coordinate values of an electrode part for which the inspected and/or measured data has been acquired. In this case, the inspection and/or measurement devices 30 may transmit the inspected and/or measured data and the coordinate values to the roll map make-up unit 50.

The apparatus 100 for making up the roll map according to the present disclosure may include the controller 40 (programmable logic controller (PLC)) for controlling the electrode movement between the unwinder UW and the rewinder RW. In this case, the controller 40 may be connected to the position measurement device 20 and the inspection and/measurement device 30 to receive the coordinate values from the position measurement device and the inspected and/or measured data from the inspection and/or measurement device. The controller 40 may match the inspected and/or measured data with the coordinate values of the electrode part for which the data has been acquired and transmit the matched data (data of the coordinate values and inspected and/or measured data) to the roll map make-up unit 50.

Alternatively, the controller 40 may process the inspected and/or measured data and the data of the coordinate values in the form capable of being easily processed by the roll map make-up unit 50. Since the PLC 40 is connected to the inspection and/or measurement device 30, the encoder 20, or the like to control the roll-to-roll transfer of the electrode, the inspection and/or measurement device 30, the encoder 20, or the like may more efficiently transmit the data to a data processing system such as an electrode manufacturing execution system (MES) through the controller 40 than directly transmitting the data to the MES in terms of data processing and management.

Meanwhile, depending on the type of inspection and/or measurement device, some inspection and/or measurement devices may be directly connected to the position measurement device to acquire the inspected and/or measured data and the data of the coordinate values together. In addition, some inspection and/or measurement devices may acquire only the inspected and/or measured data, and the data of the corresponding coordinate values may be acquired by the position measurement device and matched in the controller 40. That is, an object (location) for performing the matching with the data of the coordinate values may vary depending on the type, a configuration of a device, a processing capacity, or the like of the inspection and/or measurement device.

Meanwhile, the coordinate values of the electrode part for which the inspected and/or measured data has been acquired may be values acquired by adding coordinate values according to the amount of rotation of the rewinder RW at a time point at which the corresponding inspected and/or measured data has been acquired and an offset distance, which is a distance between the corresponding inspection and/or measurement device 30 and the rewinder.

In FIGS. 2 and 3, when the inspection and/or measurement device 30 inspects the electrode 10 and acquires the inspected data, the position of the electrode part of the electrode 10 is detected by the position measurement device 20 of the rewinder RW. However, the electrode part of the electrode 10 is not in a state of having arrived at the rewinder RW at the time point at which the inspected data has been acquired. In the embodiment, since the coordinates of the roll map are based on the rewinder RW, coordinates in the longitudinal direction detected when the electrode part actually arrives at the rewinder RW become coordinates of the corresponding electrode part in the longitudinal direction. Therefore, the coordinate values of the electrode part in the longitudinal direction for which the inspected and/or measured data has been acquired are obtained only when the distance (offset distance) from each of the inspection and/or measurement devices to the rewinder RW is added to the encoder values (coordinate values in the longitudinal direction) of the rewinder RW at the time point at which the data has been acquired. For example, a coordinate value of an electrode part a whose loading amount has been detected by the loading amount measurement device 31 on a longitudinal axis is a value obtained by adding an encoder value (coordinate value) A of the rewinder RW at the detected time point and an offset distance L1 between the loading amount measurement device 31 and the rewinder RW. According to the same principle, a coordinate value of an electrode part b whose reference points have been detected by the reference point measurement device 32 in the longitudinal direction is a value obtained by adding an encoder value B of the rewinder RW at the detected time point and an offset distance L2 between the reference point measurement device 32 and the rewinder RW. In addition, a coordinate value of an electrode part c in the longitudinal direction is a value obtained by adding an encoder value C of the rewinder RW at the detected time point and an offset distance L3 between the exterior inspection device 33 and the rewinder RW.

Meanwhile, a coordinate value of the electrode part for which the inspected and/or measured data has been acquired in a width direction may be acquired by the inspection and/or measurement device 30.

For example, the inspection and/or measurement device 30 such as the exterior inspection device shown in FIG. 3 may be provided with a program capable of scanning and inspecting the exterior of the entire electrode 10 in the width direction. Alternatively, the inspection and/or measurement device itself may be movably installed in the width direction of the electrode. Alternatively, a plurality of inspection and/or measurement devices may be installed in the width direction of the electrode. Therefore, the inspection and/or measurement devices 30 may acquire data on quality or defects (e.g., loading amount data or exterior defect data) for each point of the electrode in the width direction, and the position data (coordinate values) in the width direction for which the data has been acquired may also be acquired by the inspection and/or measurement device 30. Therefore, each inspection and/or measurement device 30 may acquire all of the inspected and/or measured data (e.g., the data on quality or defects), the coordinate values of the electrode 10 in the longitudinal and width directions for which the inspected and/or measured data has been acquired and transmit all data to the roll map make-up unit 50, to be described below.

FIG. 4 is a schematic diagram of a data visualization device provided in the apparatus for making up the roll map.

The apparatus 100 for making up the roll map according to the present disclosure includes the roll map make-up unit 50 for making up the roll map expressed in a planar shape on which a moving electrode is imitated and displaying at least some of the inspected and/or measured data.

The roll map make-up unit 50 may display the coordinate values and the at least some of the inspected and/or measured data on the roll map. In addition, the roll map make-up unit50 may display reference points marked on the electrode at predetermined intervals at positions on the roll map corresponding to coordinate values of the corresponding reference points. That is, reference point data may also be displayed on the roll map.

To this end, the roll map make-up unit 50 may be connected to the position measurement device 20 and the inspection and/or measurement device 30 to receive the data of the coordinate values and the inspected and/or measured data. Alternatively, the roll map make-up unit 50 may be connected to the controller 40 to receive the data of the coordinate values and the inspected and/or measured data through the controller.

Referring to FIG. 2, the roll map make-up unit 50 may include a database 51 for storing the data acquired from the inspection and/or measurement device 30 and the position measurement device 20 or storing data on quality, dimensions, and the like of a normal electrode. In addition, the roll map make-up unit 50 may include a central processing unit 52 for processing the acquired data and instructing the visualization device 53 provided in the roll map make-up unit 50 to visualize the data.

The roll map make-up unit 50 includes the visualization device 53 for defining a visualization region to form the roll map on which the electrode 10 is to be imitated and for displaying coordinate values on the defined region. The visualization device 53 may match the data of the coordinate values with the inspected and/or measured data and display a matching result. The visualization device 53 may be connected to the central processing unit 52 and may visualize and display the inspected and/or measured data and the data of the coordinate values according to instructions from the central processing unit.

As shown in FIG. 4, the visualization device 53 includes an acquisition data input unit 53a, a roll map coordinate identifier 53b, and an image generator 53c.

First, the acquisition data input unit 53a receives data from the central processing unit 52.

The roll map coordinate identifier 53b may define the visualization region to form the roll map and define coordinate values of pixels within the visualization region for each data element of the acquired source data. In this case, when data on specifications such as a lot number, a length, and a width of the electrode roll is input to the controller 40, the DB, a server (not shown), or the like by registering information on the electrode roll, the roll map coordinate identifier 53b may calculate and determine the visualization region of the roll map according to a predetermined conversion scale from data on a size of the electrode 10. Alternatively, the roll map coordinate identifier 53b may also calculate and determine the visualization region of the roll map according to the predetermined conversion scale from the above-described data of the coordinate values of the electrode 10 in the longitudinal and width directions.

The roll map coordinate identifier 53b may map the acquired inspected and/or measured data with the data of the coordinate values of the electrode 10 (in the width and longitudinal directions) and allocate the mapped data on the visualization region (roll map) according to the coordinates of the pixels.

The image generator 53c may express the mapped data elements allocated to the coordinates of each pixel in the visualization region as at least one legend. The legend may be various shapes such as a circle, a quadrangle, and a triangle displayed in the visualization region, those shapes with colors provided, or the like. Therefore, the roll map according to the present disclosure may be made up by visually displaying the inspected and/or measured data at the coordinates of the pixels (coordinates on the roll map) corresponding to each position data of the actual electrode 10 in designated shapes, forms, colors, or the like for each data in the visualization region called the roll map and implementing the inspected and/or measured data on the roll map by the image generator 53c.

In addition, based on the data stored in a storage such as the database 51 or a separate server, data corresponding to a specific range may be loaded from the storage in conjunction with the specific range of the roll map and displayed (generated as images) on a screen. At this time, the central processing unit 52 may instruct the visualization device 53 to visualize and display inspected data to be distinct from other data, if determined to be abnormal compared to normal data stored in the database 51.

Setting the size of the visualization region or identifying the coordinates of the visualization region to generate images may be performed by various conventional user interfaces or various programs or processing tools related to data allocation-processing-analysis and visualization. Therefore, the roll map make-up unit 50 is only one example and is not limited to the above-described embodiment.

The roll map make-up unit 50 may be, for example, a data processing system such as an MES or one component of the system. Alternatively, the roll map make-up unit 50 may be software having operating logic of the data processing system, hardware including the corresponding software, a mechanical device, or the like.

The data processing system is a system (including hardware or software) for performing input, processing, output, communication, and the like in order to perform a series of operations on data. In the electrode manufacturing process, an electrode MES for managing a series of electrode manufacturing processes such as coating, press, and slitting is provided. Therefore, when the above-described coordinate data, inspected data, and the like are transmitted to the electrode MES, the above-described roll map may be made up by the electrode MES. In this case, the above-described roll map may be made up for each of the coating process, the press process, and the slitting process.

The electrode undergoing the electrode manufacturing process is installed between an unwinder and a rewinder of a notching process. In the notching process, the electrode installed between the unwinder and the rewinder is punched, and an electrode tab is formed on the electrode. Even in the notching process, the above-described inspection and/or measurement unit, roll map make-up unit, position measurement device, and the like are installed to make up the roll map of the notching process. In this case, the roll map make-up unit of the notching process may be a notching MES.

Alternatively, the roll map make-up unit may be a so-called statistical process control (SPC) device. Here, the SPC is a management method of efficiently operating a process in a statistical method to achieve the quality or productivity target required for the process.

Alternatively, for example, the data processing system such as the MES may make up a basic roll map in which at least some of the inspected and/or measured data matches the coordinate values, and an upper level system such as the SPC device may make up an intermediate roll map additionally displaying the entire data, detailed data, and the like of the inspected and/or measured data to the coordinate values. In this case, as the amount of data increases, an additional server capable of storing the entire data or the detailed data may be required.

When a large amount of data may be systematically processed, the basic roll map and the intermediate roll map may also be processed by one data processing system.

Meanwhile, furthermore, the data processing systems such as the MES and the SPC may be connected to an upper level system (e.g., a data warehouse (DW)). In this case, process data additionally acquired from other processes may be used in connection with the data (coordinate values and inspected and/or measured data) acquired from the electrode manufacturing process or the notching process. That is, if a battery cell semi-finished product or a battery cell is manufactured in the electrode manufacturing process or the process following the notching process using the electrode whose coordinate values are specified, the process data obtained from the following process may be matched to the inspected and/or measured data. Therefore, it is possible to identify manufacturing history of a specific electrode part from the following process to the preceding process. Therefore, it is possible to more easily perform quality control and analysis. In addition, when a problem occurs in the battery cell semi-finished product, the battery cell, or a battery module or battery pack including the same, it is possible to easily perform quality tracking and an analysis of a cause of a problem through the matched data.

As described above, various data or information necessary for various data processing system related to the electrode manufacturing, in a broad sense, throughout a battery manufacturing process of manufacturing a finished battery, module, or pack, including the electrode manufacturing, may be linked to the roll map. Therefore, when the roll map is used, it is possible to easily perform quality control/analysis/tracking related to the battery manufacturing.

In addition, as shown in FIG. 2, the apparatus 100 for making up the roll map according to the present disclosure may include a manual input device 70 to which the inspected and/or measured data of the electrode, which has been manually inspected and/or measured, is input. The manual input device 70 may directly transmit the manually inspected and/or measured inspected and/or measured data to the roll map make-up unit 50. In this case, the manual input device may acquire the coordinate values of the electrode part for which the inspected and/or measured data has been acquired in conjunction with the position measurement device. Alternatively, the manual input device may be connected to the controller to transmit the manually acquired inspected and/or measured data together with the data of the coordinate values to the roll map make-up unit through the controller.

For example, information on defects, disconnection, or the like of the electrode 10 may be automatically acquired through the inspection and/or measurement device 30 but may be directly input by an operator in an electrode production line. In this case, the operator may input a length and a position of the visually checked defect and attach a tag to the defect part. Alternatively, when the electrode is broken, the operator may connect the electrode using the joint connection member and input information on the connected part, a length of the broken electrode, and the like to the manual input device.

The roll map make-up unit 50 may display the made-up roll map on the display unit 60 so that data on quality or defects may be visually and easily identified at a glance.

The manual input device 70 and the display unit 60 may be predetermined input/output interfaces (I/F). For example, an input device (not shown), such as a keyboard, a mouse, or a touch panel, may be used as the manual input device.

In addition, the roll map make-up device according to the present disclosure may be provided with an interface for connecting the roll map make-up unit, the controller, the position measurement device, the inspection and/or measurement unit, and the like to the display unit to transmit or receive data.

Meanwhile, the roll map make-up unit 50 may make up at least one of an absolute coordinate roll map displaying coordinate values of an removed electrode part and a survival electrode part left after removal together and a relative coordinate roll map displaying only the coordinate values of the survival electrode part.

FIG. 5 is a schematic diagram showing one example of the roll map made up by the apparatus for making up the roll map according to the present disclosure.

On a roll map RM1, a dimension of the electrode in the longitudinal direction is expressed as coordinates at predetermined intervals. As described above, since the information on defects, quality, electrode breakage, and the like occurring in the electrode manufacturing process is displayed on the roll map together with the coordinate values, the data on quality or defects in the electrode manufacturing process may be visually and easily identified at a glance.

Referring to FIG. 5, exterior defect information such as a pinhole defect f1 and a line defect f2 is visually displayed at the coordinate values at which the defect has occurred. In addition, a mismatched part f3 of the coating part and the non-coating part is also displayed. A loading amount defect and the like are also displayed, and a portion in which the electrode is discarded at the outermost portion is also displayed.

In addition, reference points M1, M2, and M3 marked on the electrode are displayed at points of 300, 600, and 900 meters.

Meanwhile, when the electrode is broken and the operator connects the electrode using the joint connection member, the length of the electrode is reduced by the length of the broken electrode. In addition, as described above, a point at which the exterior defect has occurred is also removed and the operator may connect the remaining electrode pieces. The coordinate values on the roll map may be corrected by imitating even such a situation in the roll map RM1. Referring to FIG. 5, a roll map of absolute coordinates A displaying the coordinate values of the removed electrode part and the survival electrode part left after removal and a roll map of relative coordinates B displaying only the coordinate values of the survival electrode part are shown together. As shown in FIG. 5, the relative coordinates B and the absolute coordinates A may be displayed together on one roll map RM1 but may also be displayed separately. The roll map displayed with the relative coordinates displays an actual state of the electrode.

Meanwhile, the electrode may be classified as a single-sided electrode in which the electrode is coated only on one surface (top or bottom surface) of a current collector and a double-sided electrode in which the electrode is coated on both top and bottom surfaces thereof. In this case, the roll map make-up unit may make up the roll map on one surface of the electrode (current collector) or any one surface or both surfaces.

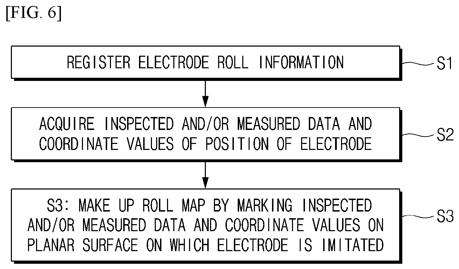

FIG. 6 is a flowchart showing one embodiment of a method of making up a roll map according to the present disclosure.

As shown in FIG. 6, the method of making up the roll map according to one embodiment of the present disclosure includes acquiring inspected and/or measured data by inspecting and/or measuring an electrode moving between an unwinder and a rewinder and acquiring a position of the moving electrode as coordinate values (S2), and making up a roll map by marking at least some of the inspected and/or measured data and the coordinate values on a (virtual) planar surface on which the moving electrode is imitated (S3).

An electrode roll information registering operation of registering specifications of the electrode roll installed on the unwinder (S1) may be performed before the acquiring of the inspected and/or measured data and acquiring of the position of the electrode as the coordinate values (S2).

The specifications of the electrode roll are specifications of the corresponding electrode roll, such as the type of the electrode determined according to a lot number, a length of an electrode, a width of the electrode, an input material, composition, and the like of the corresponding electrode roll. In order to register the electrode roll information, when the electrode roll is introduced into the unwinder, information on the electrode roll may be input to a server or the like that does not display some or all pieces of the specification information including the lot number of the electrode roll. Such a data input may also be manually performed by the operator. Alternatively, an identification mark for identifying the specifications or detailed data of the electrode, such as a barcode attached to the electrode roll, may be automatically identified by an identification mark recognition device, such as a barcode reader, by scanning the identification mark, thereby the corresponding information being input to the server or the like.

When the information on the electrode roll is registered in the server, the specifications or detailed data of the electrode (roll), such as a lot number, a process, and equipment, may be loaded on the roll map to be made up in the future from the server and displayed together with the roll map. In addition, since the specifications related to the length and width of the electrode roll may be identified from these data, a shape and a size of the roll map may be determined at a predetermined scale proportional to the length and width of the electrode when the roll map is made up by the roll map make-up unit. That is, according to the conversion scale stored in the roll map make-up unit or the like, a shape and a size of a roll map bar corresponding to the length and width of the corresponding electrode may be displayed on an output device such as a display. In this case, information on at least some of the specifications of the electrode roll may be displayed on the roll map together.

In order to make up the roll map, the inspected and/or measured data is acquired by inspecting and/or measuring the electrode moving between the unwinder and the rewinder. In addition, at this time, the position of the corresponding electrode needs to be acquired as coordinate values (S2). As described above, the inspected and/or measured data may be acquired automatically by a predetermined inspection and/or measurement device or manually by the operator. In this case, the operator may input the inspected and/or measured data and the coordinate values of the corresponding electrode to the manual input device.

For example, when there are foreign substances or faults on the electrode before the current collector is coated with the electrode, this part is cut and discarded to a defect removal port, and the electrode may be directly connected or the electrode may be connected by the connection member such as polyethylene terephthalate (PET). Alternatively, the electrode may be connected even when a fault occurs on the electrode even after coating or when the electrode is broken due to excessive tension. In addition, since outermost portions of start and end points of the electrode may have non-uniform quality, the outermost portions are cut and discarded. Such an electrode connection section or discard section may be automatically or manually measured. For example, when connecting a disconnection section, the operator may either directly input a position of the section to the server or the data processing system or input the position of the section to a separate input device installed in the electrode production line, which may communicate with the server or the like. Alternatively, the operator may also directly attach an indication tag to the disconnection section or the connection section on the electrode.

The electrode 1 is inspected by the predetermined inspection and/or measurement device 10 installed in the electrode production line. For example, measurement devices, such as an electrode slurry loading amount measurement device, a dimension and width measurement device, a reference point measurement device, and an exterior inspection device, may be installed in the line. As the electrode slurry loading amount measurement device, a non-contact type thickness measurement sensor, such as an ultrasonic sensor, a displacement sensor, a laser sensor, and a confocal thickness sensor, may be employed. Since a thickness of an electrode foil is known, for example, the confocal thickness sensor may measure the slurry loading amount by analyzing a wavelength of the light emitted from the sensor and reflected by the electrode and calculating a distance (thickness) between the sensor and the electrode.

The dimension and width measurement device may employ a kind of vision measurement device capable of measuring a width of the electrode, widths of the coating part and the non-coating part, and the like by capturing or scanning the exterior of the electrode. When the widths of the coating part and the non-coating part are identified, it is also possible to determine whether the coating part and the non-coating part are mismatched.

The exterior inspection device may acquire an exterior image by capturing the exterior of the electrode. Therefore, it is possible to obtain data on exterior defects such as a pinhole, a line, and a crater shape and also acquire data on insulating exterior or insulating defect. The exterior inspection device may also include an inspection device having a sensor, for example, a color sensor capable of determining a color of the electrode. A part having a different color from the electrode, for example, a PET connection member, may be detected by the color sensor.

The inspection and/or measurement device is illustrative for description, and the type of inspection and/or measurement device is not limited as long as the data on quality or defects in the electrode manufacturing process or the notching process may be acquired.

Meanwhile, a frontmost end of the electrode at which the electrode coating starts is coated by an electrode slurry coater or the like while coating conditions such as a loading amount are still being adjusted. A loading amount of this part may be changed. Therefore, data on such a condition adjustment section may also be acquired by the inspection and/or measurement device, and these data may be displayed on the roll map bar.

In addition, it is necessary to acquire the position of the electrode moving in the roll-to-roll state as coordinate values together with the inspected and/or measured data. That is, position data of the electrode for which the data has been acquired needs to be specified. That is, assuming that the roll map bar or the roll map has a coordinate system composed of two coordinate axes in the longitudinal and width directions, the position data of the electrode that is the basis for extracting the position (coordinates) needs to be identified to display specific data at a specific position (coordinates) of the coordinate system.

As one embodiment, the position data (coordinate values) of the electrode in the longitudinal direction may be detected by the encoder installed on the unwinder UW or the rewinder RW. The coordinate values match the inspected and/or measured data. The matching of the coordinate values and the data may be performed by the corresponding inspection and/or measurement device or the PLC.

Meanwhile, coordinate values of the electrode in the width direction may be acquired by the inspection and/or measurement device. The coordinate values in the width direction may also match the inspected and/or measured data and be displayed on the roll map.

In addition, as shown in FIG. 5, the reference points marked on the electrode at predetermined intervals may be displayed at the positions on the roll map corresponding to the coordinate values of the corresponding reference points.

The so-called roll map is made up by displaying the acquired inspected and/or measured data, coordinate values, and the like on the planar surface on which the electrode is imitated. The roll map make-up unit is a data processing system capable of data processing and may be, for example, an electrode MES, an assembly MES, or an SPC or a DW which is an upper level system. Alternatively, the roll map make-up unit may be one component constituting the system.

The roll map make-up unit makes up the roll map by marking at least some of the inspected and/or measured data at the coordinate values indicating the positions on the electrode for which the corresponding data has been acquired. In addition, all data of the inspected and/or measured data or detailed data on one or more of the inspected and/or measured data may be additionally displayed on the roll map. The detailed data is data associated with the inspected and/or measured data and may be, for example, an exterior image at a specific position of the electrode.

In addition, process data for each detailed process (e.g., coating, roll press, slitting, and notching processes) while the electrode is manufactured may be displayed in connection with specific coordinate values of the roll maps or a specific data display unit. For example, discharge conditions, such as electrode drying temperature in the coating process and a slurry discharge pressure of the coater, may become process data of the coating process. Alternatively, a press pressure or the like in the roll press process may also become the process data.

At least one server may be provided to store the entire data, the detailed data, or the process data. The roll map make-up unit may receive necessary data from the server and display the data together on the roll map.

In addition, the inspected and/or measured data may be compared with normal data, and data determined to be abnormal may be displayed on the roll map to be visually distinct from other data. To this end, the roll map make-up unit may be provided with a predetermined visualization device.

In addition, data on an input status of an input material input to the electrode manufacturing process may be displayed together with the roll map. Therefore, it is possible to more easily perform the quality control by comparing the material input status and the data on the roll map.

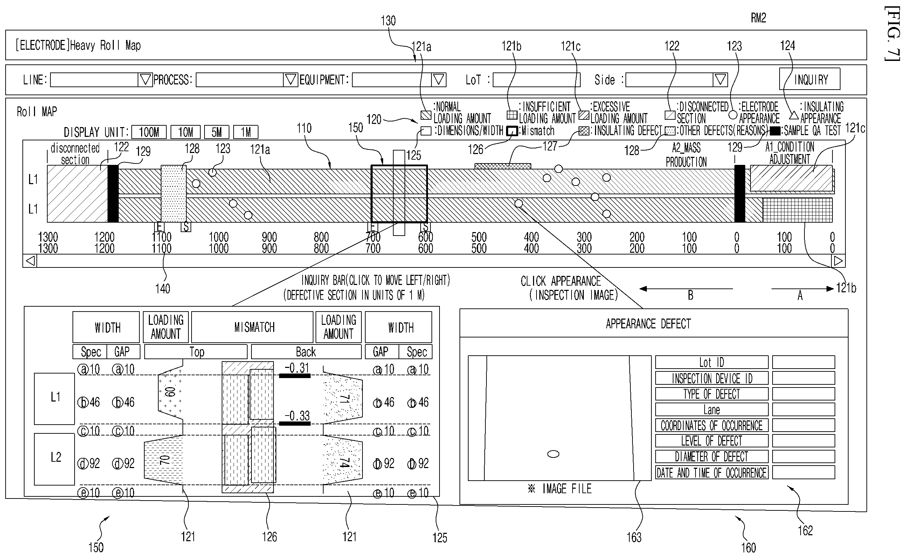

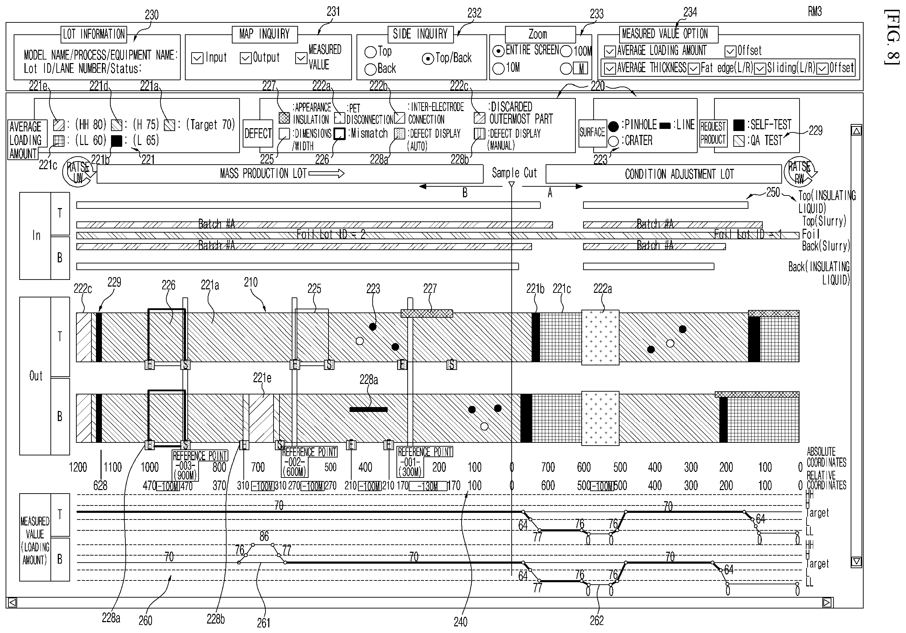

FIG. 7 is a schematic diagram of the roll map according to one embodiment of the present disclosure, and FIG. 8 is a schematic diagram of a roll map according to another embodiment of the present disclosure.

A roll map RM2 in FIG. 7 includes a roll map bar 110 displayed in a bar shape imitating an electrode in a roll-to-roll state. The roll maps in FIGS. 7 and 8 show roll maps of the electrode coating process.

On the roll map, at least some of the inspected and/or measured data acquired by inspecting and/or measuring the moving electrode is displayed at predetermined positions on the roll map bar corresponding to the position of the electrode for which the data has been acquired.

The roll map bar 110 imitates an actual electrode installed in the roll-to-roll state and moving between the unwinder and the rewinder and may be displayed in a long rectangular planar shape.

Start and end points of the roll map bar 110 and a portion of the roll map bar 110 between the start and end points may be displayed in synchronization with a path of the electrode moving between the unwinder and the rewinder. For example, when a length of the electrode roll to be coated is 3000 meters, the roll map bar 110 imitating such an electrode is also reduced at a predetermined scale (ratio) on 3000 meters and displayed on a screen. In addition, since detailed information such as a lot number and a width of the electrode roll may also be identified when a specific electrode roll is installed between the unwinder and the rewinder, the width in addition to the length of the electrode (roll) may be reduced at a predetermined scale. The roll map bar 110 reduced to a length and a width according to the predetermined ratio(s) may be displayed on the screen. Therefore, the length and width of the roll map bar 110 correspond to the length and width of the moving actual electrode at the predetermined ratio(s). In addition, when the specific position of the electrode is, for example, expressed as coordinate values expressed in units of dimensions of the length and width of the electrode, the corresponding coordinates may also be reduced at the predetermined ratio(s) and displayed on the roll map bar 110. FIGS. 7 and 8 show coordinate values 140 indicating positions of the electrode in the longitudinal direction at predetermined intervals of the roll map bar 110 in the longitudinal direction.

In addition, since the roll map bar 110 is synchronized with the moving actual electrode (path) or the electrode movement while being coated between the unwinder and the rewinder, a coating status of the corresponding portion may be displayed on the roll map bar 110 even when coating for adjusting the coating conditions is performed before an actual coating. Therefore, the roll map bar 110 may be displayed by being divided into a condition adjustment part A for coating condition adjustment and a mass production part B on which the actual coating is performed under the adjusted conditions.

In addition, even when a section (disconnection section 122) in which the electrode is broken in the coating process and re-connected is generated, this may be displayed on the roll map bar 110.

When the roll map bar 110 displays the electrode path in synchronization with the actual electrode movement, a portion of the data displayed on the roll map bar 110 is a portion in which data on quality or defects in the actual electrode coating process is displayed. In the specification, the "data on quality or defects" includes not only data in a normal range, such as loading amount data and dimension/width data, but also data on the position of the electrode acquired for sample inspection in addition to data on actual defects, such as an exterior defect, an insulating defect, and the mismatch between the electrode coating part and the electrode non-coating part. That is, theoretically, as long as there is an inspection and/or measurement device capable of measuring specific quality in the electrode manufacturing process, all data measured by such an inspection and/or measurement device may be displayed on the roll map. Therefore, in the specification, the "data on quality or defects in the electrode coating process" includes normal data as well as data on defects and indicates all other data on quality that may be quantified or visualized and displayed on the roll map.

In addition, in the specification, the "visually display" data or "visualization" of data may be defined as visually recognizing and displaying data on the roll map on which the electrode is imitated using at least one of those recognizable by a shape, a color, a size, a pattern, a contrast, a transparency, various symbols, numbers, letters, or other sight. In addition, the "portion visually displayed" may be defined as a display portion, including not only a portion displayed in the shape, the color, or the like at the specific position on the roll map bar, but also a portion visually displayed in the shape, the color, or the like in a specific range or the entire range of the roll map bar. For example, when data on the electrode slurry loading amount is displayed in color or the like throughout the roll map bar, at this time, the data display portion may correspond to the entire portion rather than a part of the roll map bar. In the drawings of the specification, each data display portion is displayed separately by hatching, but it goes without saying that the corresponding data display portion may be displayed in color to be distinct from each other.

Since the roll map bar 110 according to the present disclosure imitates an actual electrode to be coated, it is preferable to display detailed information on the actual electrode (roll) installed between the unwinder and the rewinder together with the roll map bar 110.

In addition to the lot number of the electrode roll, detailed information 130 on manufacturing lines, manufacturing processes, and manufacturing equipment of the electrode roll, a side of the electrode, and the like is displayed in an upper drawing of FIG. 7. Not only history information of the preceding process of the electrode roll provided to the coating process, but also coating-related additional information on which line or equipment has been used to perform coating in the coating process and whether one surface or both surfaces have been coated with the electrode or information on specifications of the electrode roll may be identified from the detailed information 130. In addition, by clicking an inquiry button displayed on an upper right end of the screen and input keywords on lines, processes, manufacturing equipment, a surface of the electrode, the roll map RM2 or the roll map bar 110 corresponding to the corresponding menu may be loaded and displayed on the screen.

At least one of data on quality or defects 120 displayed on the roll map bar 110 may be acquired manually or automatically.

The data on quality or defects that may be displayed on the roll map bar 110 or identified from the roll map according to one embodiment of the present disclosure are specifically identified with reference to FIGS. 7 and 8 as follows:
i) data on at least one of a dimension and a width of the electrode 125;
ii) data on mismatch between an electrode coating part and an electrode non-coating part 126;
iii) data 121 on a slurry loading amount on the electrode;
iv) data 123 on an exterior of the electrode;
v) data 122 on a position of an electrode disconnection section or a connection position between the electrodes;
vi) data 129 on a position of a sample inspection unit;
vii) data on a position of an electrode discard section;
viii) data 124 and 127 on insulation quality or defects in an insulating material coating process performed after electrode slurry coating; and
ix) other defect data 128.

In addition,
x) data on reference points marked on the electrode at predetermined intervals, and
xi) data on a thickness of the electrode after roll press may be displayed on the roll map bar.

In order to display the inspected and/or measured data 120, the name of data displayed in a specific color, shape, form, or the like may be briefly displayed at the upper end of the screen, and actual data displayed in such a color, shape, or form may be displayed at a specific position or in a specific range on the roll map bar 110.

Specifically, when the dimension or the width of the electrode is out of the normal range, the data 125 thereon may be displayed on the roll map.

In addition, the data on the mismatch in which the widths of the coating part and the non-coating part are out of the set range 126 may be displayed on the roll map.

In addition, cases in which the data on the electrode slurry loading amount 121 is normal 121a, insufficient 121b, and excessive 121c may be displayed in a specific range on the roll map bar with hatching.

In addition, the electrode exterior defect 123 is displayed in circle at a specific place of the roll map bar.

In addition, the disconnection section 122 in which the electrode is cut and connected by the connection member such as PET is displayed at a left end of the roll map bar 110. A case in which the electrodes are directly connected without the connection member may also be displayed on the roll map. When performing such an electrode connection, the operator may directly display data or position information on such a section on the roll map RM2.

In addition, the data on the electrode part provided for sample inspection 129 may also be displayed on the roll map RM2.

In addition, data on the section in which the electrode is discarded may also be displayed on the roll map. For example, an outermost section of the coated electrode is cut and discarded, and the roll map RM2 according to the present disclosure may also display information on such a discard section.

In the electrode coating process, since the insulating material coating is also performed on a boundary between the coating part and the non-coating part in addition to the coating of the electrode slurry, matters on the insulation defect 127 or the insulation exterior defect 124 may also be displayed on the roll map bar 110. In this sense, it is clear that the "electrode coating process" in the specification includes "coating of the insulating material" in addition to "coating of the electrode slurry."

In addition, the data on other defects 128 in addition to the exterior defect or the insulation defect may also be displayed on the roll map bar 110. The data on other defects 128 are other defects when displayed in the electrode coating process, but when the data is determined to be specific defects at the time of completing the coating or in the following process, the data may be changed to such a specific defect later and displayed on the roll map RM2. Displaying the other defect data may be an important material for identifying the cause of the defect when any defect occurs in the following process.

As described above, by displaying the data on quality or defects 120 in a specific shape, color, or the like on the roll map bar 110 synchronized with the electrode path, for example, quality-related history information in the electrode coating process or other roll-to-roll processes may be identified at a glance.

In addition, as shown in FIG. 7, when a specific range of the roll map bar 110 is designated (clicked), inspected and/or measured data in an electrode range corresponding to the specific range or process data for each detailed process at the time of manufacturing an electrode may be displayed. For example, when the mismatch section 126 of the roll map bar in FIG. 7 is clicked, detailed information 150 on the mismatch 126 in addition to the loading amount in the mismatch section 121 and the information on the width 125 may be identified at a lower left end of the roll map bar together. The designation of such a range may be selected by clicking while moving the inquiry bar in a left-right direction, and detailed data in the range may be checked by designating the defect section in units of a set length (e.g., in units of 1 meters). On an upper portion of the roll map bar 110, only the loading amount of one surface of the electrode is displayed, but in the detailed information 150, the roll map may be formed so that the loading amounts of upper and lower surfaces of the electrode may also be checked.

Meanwhile, when the electrode exterior defect data 123 on the roll map bar 110 is clicked, an exterior image 163 of the electrode captured by the exterior inspection device may be displayed separately from the roll map bar. The exterior defect image 163 displayed by clicking the exterior defect data 123 is displayed to be enlarged at a lower right end of the roll map bar in FIG. 7. In addition, when the exterior image is displayed, detailed information 162 including position coordinates of the exterior defect captured by the exterior inspection device may also be displayed on the screen together with the exterior image 163. The detailed information 162 may include information on a lot ID of the electrode, an ID of the exterior inspection device, the type of exterior defect, a lane of the electrode, and position coordinates, a grade, a diameter, and a date and time of the occurrence of the exterior defect. Since these pieces of information are stored in the server, these pieces of information may be loaded from the server and displayed separately on the screen by clicking the exterior defect image of the roll map bar.

In addition, the roll map RM2 according to the embodiment shown in FIG. 7 is displayed on the screen separately for each lane L1 and L2 on the electrode to which the electrode slurry is applied. Since the electrode may have the coating part to which the electrode slurry is applied formed on an electrode foil at predetermined intervals or in predetermined patterns, the roll map RM2 may be made up for each lane L1 and L2 to which the electrode slurry is applied. FIG. 7 shows a roll map of the two lanes L1 and L2.

A roll map RM3 in FIG. 8 is the roll map RM3 of a double-sided electrode in which both a top surface T and a back surface B of the electrode are coated with the electrode slurry. Since a roll map 200 displays the top surface T and the back surface B of the double-sided electrode respectively on upper and lower portions of the same screen, the data 220 on quality or defects related to the electrode slurry applied to both surfaces of the electrode or the coating of the insulating material may be compared and clearly identified.

In addition, the roll map RM3 according to the embodiment displays data 250 on input statuses of the electrode foil, the electrode slurry, and the insulating material input to the electrode coating process and data 260 on the loading amount of the electrode slurry input to the electrode coating process together with the roll map 200 in the longitudinal direction of the roll map.

The electrode foil, the electrode slurry, and the insulating material input to the electrode coating process are displayed at the upper end of the screen. A long bar indicating the electrode foil, the electrode slurry, and the insulating material extends from left to right on the screen together with the roll map in the longitudinal direction of the roll map RM3. Therefore, a portion in which the bar does not extend means that the corresponding material (the electrode foil, the electrode slurry, or the insulating material) has not been input to the electrode coating process. Therefore, it is possible to identify which section the specific material has been input in the electrode coating process from the data on the status of the input material at a glance.

In the embodiment, data 221 on the loading amount of the electrode slurry input to the electrode coating process is displayed on the roll map in the longitudinal direction of the roll map, but displayed together with the roll map in the longitudinal direction of the roll map at the lower portion of the roll map separately from the roll map. Since the data 260 displays the distribution of the loading amount along the length of the electrode like a graph, information on excessive or insufficient loading amount may be more easily identified, and a numerical value of the loading amount may also be displayed, as necessary. Therefore, there is an advantage in that the information on the loading amount may be identified more intuitively.

Detailed data 230 on a model, a process, manufacturing equipment, and a lane number of the electrode roll, the side surface of the electrode, and the like in addition to the lot number of the electrode roll are also displayed at the upper end of the screen in FIG. 8. In the embodiment, a menu related to the input status (Input), an electrode (roll map) calculated by the input material (Output), a menu 231 related to the measured value, a menu 232 related to the selection of the surface of the electrode, a menu 233 related to a zoom-in and zoom-out (Zoom) of the screen, and a menu 234 related to other measured value options are additionally displayed at the upper end of the screen. By selecting such a menu, various types of roll maps RM3 corresponding to the corresponding menu may be displayed on the screen.

The roll map may be stored in a storage medium.

The roll map may be stored in a database of the roll map make-up unit shown in FIG. 2 or a separate storage medium. The database may be, for example, a memory. A plurality of memories may also be provided, as necessary. The memory may be a volatile memory or a non-volatile memory. As the memory of the volatile memory, a random access memory (RAM), a dynamic RAM (DRAM), a static RAM (SRAM), or the like may be used. As the memory of the non-volatile memory, a read only memory (ROM), a programmable ROM (PROM), an electrical alterable ROM (EAROM), an erasable programmable ROM (EPROM), an electrically erasable programmable ROM (EEPROM), a flash memory, or the like may be used. Examples of the listed memories 2200 are merely illustrative and are not limited to these examples. Alternatively, the storage medium may be a hard disk, a CD-ROM, a USB memory, a solid state drive (SSD), or the like.

The roll map and related data stored in the storage medium may be freely used for battery manufacturing, quality control, analysis, and problem tracking.

When breakage or defects occur in the electrode in the electrode manufacturing process, there is a case in which the broken or defective portion is removed and the broken electrodes are connected with a connection tape. Alternatively, there is a case in which a start portion or an end portion of the electrode, which has non-uniform quality, is removed to maintain the quality of the electrode. In this case, after removing and connecting the electrode pieces, an operator inputs a length (loss amount of the electrode) of the cut electrode to a controller or the like. However, since the operator manually measures the loss amount of the electrode with the naked eye or a measuring tool such as a ruler and inputs the loss amount of the electrode, in practice, the inputted loss amount of the electrode is not accurate. In addition, the loss amounts of the electrode, which are inputted by respective operators, can vary.

In this case, in the following process, the fact that the electrode was cut and reconnected may be confirmed by detecting the connection tape, but the loss amount of the electrode may not be accurately identified because the loss amount of the electrode depends on the operator's input. When the loss amount of the cut electrode is not accurate, since position coordinates of the electrode in the following process are changed, it may be difficult to accurately perform the following process at a desired position of the electrode. In addition, since a criterion for comparing and analyzing changes in quality between sub-processes of the electrode manufacturing process is changed depending on the loss amount of the electrode, quality comparison according to the position of the electrode may not be reliably performed.

In addition, recently, a roll map is being used which is a roll map bar displayed on a screen imitating an electrode in a roll-to-roll state indicating data on quality or defects. Such a roll map is made up in each sub electrode manufacturing process, such as a coating process, a roll press process, and a slitting process. The roll map information is downloaded, and information on the quality, defect or the electrode breakage in the preceding process is checked in the following process to remove the defects or take necessary follow-up measures. However, when the loss amount of the electrode is not accurately identified as described above, data on the position of the electrode displayed on the roll map is changed, and thus, the data on quality or defect may not be displayed in an accurate position. Accordingly, when the roll map is referred to in the following process, there is a risk of performing the following process based on incorrect position coordinates.

Therefore, in the electrode manufacturing process, it is necessary to develop a technology capable of accurately measuring the loss amount of the electrode.

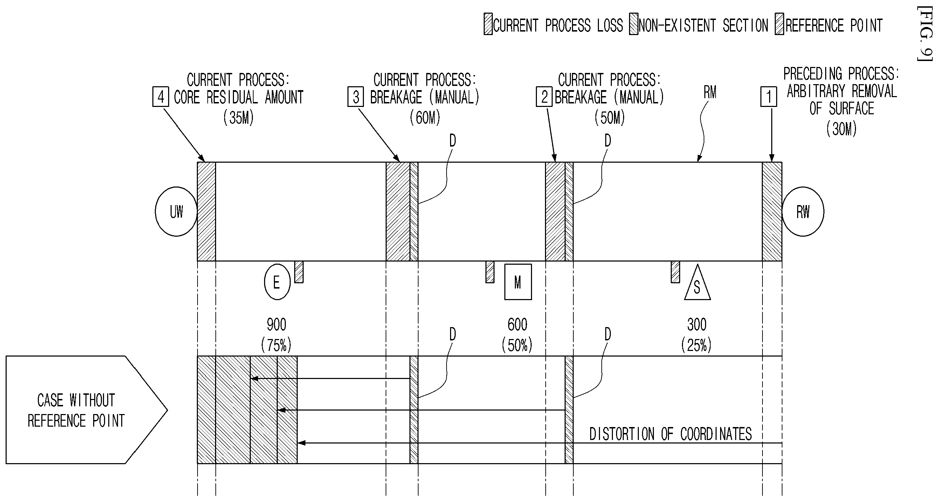

FIG. 9 is a schematic diagram showing a case in which distortion occurs in position coordinates when a loss occurs in an electrode in a state of having no reference points.

An upper drawing of FIG. 9 shows a roll map RM imitating the movement of an electrode moving in a roll-to-roll state between an unwinder UW and a rewinder RW. A plurality of pieces of detailed data on quality or defects are visually displayed together on the actual roll map RM, but for convenience of description, FIG. 9 shows only electrode breakage and a connection tape D.

The roll map RM in the upper drawing of FIG. 9 imitates an actual electrode, and several types of breakage occur in the actual electrode. When one of sub-processes of an electrode manufacturing process is performed, electrode breakage occurs in a process, and breakages of 50 meters and 60 meters are displayed on the roll map RM. In addition, 30 meters of a start portion of the electrode was removed in a preceding process before entering the process and 35 meters of an end portion of the electrode was removed in the process.

In this case, the broken parts or the non-uniform quality parts at the start and end portions of the electrode having been removed, only the connection tape D for connecting the broken parts is left as shown in a lower drawing of FIG. 9. That is, a form of an actual electrode is shown in the lower drawing of FIG. 9. In the lower drawing of FIG. 9, for example, a position of the connection tape D may be detected by, for example, a joint detection sensor. However, since the broken electrode part or the removed electrode part is not left in the actual electrode, it is not possible to identify a loss amount of the electrode, which is a length of the removed electrode part (loss part). As described above, since the operator manually inputs information on the removed electrode part, it is difficult to know the exact loss amount of the electrode.

In addition, if the loss amount of the electrode is not known, the roll map RM of the corresponding electrode manufacturing process, having the form as shown in the lower drawing of FIG. 9, will also have distortions in the position coordinates on the roll map. In the upper drawing of FIG. 9, the connection tape is shown together for convenience of description, assuming that the broken/removed lengths of the electrode are known. However, when an electrode loss actually occurs, the roll map has the form as shown in the lower drawing of FIG. 9.

That is, in the roll map RM, the movement of the electrode is imitated and a longitudinal dimension corresponding to a dimension of the electrode in a longitudinal direction, that is, position coordinates are displayed, and when the loss amount of the electrode is not identified, the loss amount of the electrode may not be reflected in the longitudinal dimension. Therefore, when the electrode is transferred to the following process of the electrode manufacturing process or other processes of the electrode manufacturing process, it is difficult to use the roll map in which the loss amount of the electrode is not reflected. That is, it is necessary to correct the position coordinates by displaying or reflecting the loss amount of the electrode in the roll map RM and also by reflecting the loss amount of the electrode in the longitudinal dimension (position coordinates) of the roll map.

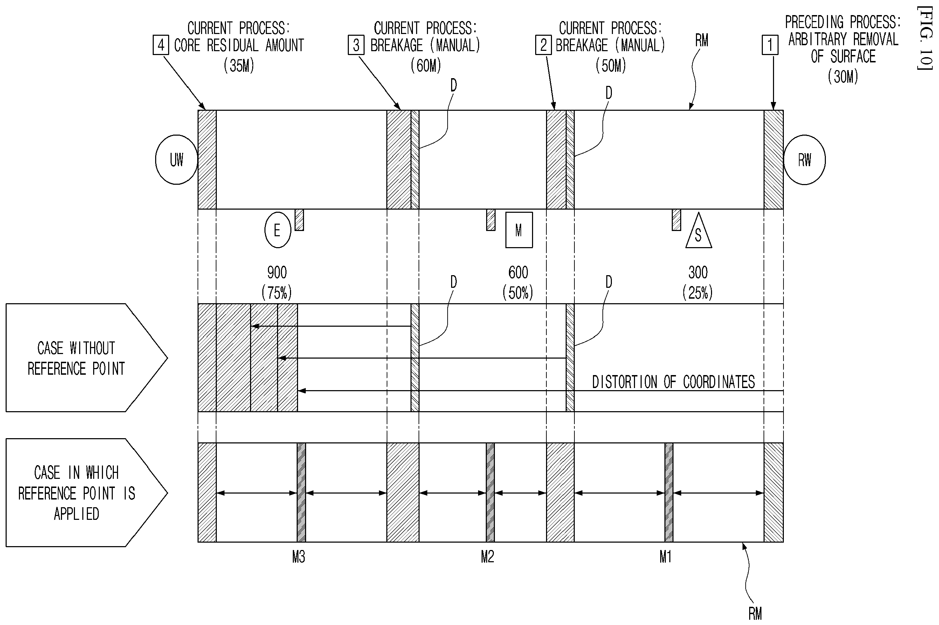

FIG. 10 is a view showing the concept of the present disclosure of preventing distortion of position coordinates by introducing reference points.

In a roll map RM in a lowermost portion of FIG. 10, reference points M1, M2, and M3 are introduced at predetermined intervals, and an electrode loss part is displayed. The number and intervals of reference points M1, M2, and M3 may be differently applied depending on the length or specifications of an electrode. In FIG. 10, an electrode having a length of 1200 meters is assumed, and the reference points M1, M2, and M3 are respectively displayed at points of 300, 600, and 900 meters. When the reference points M1, M2, and M3 are marked on an actual electrode and actually measured when an electrode loss occurs, an interval between the reference points is changed, and thus, it is possible to easily identify the electrode loss based on the changed value. As described above, when the electrode loss is identified, the reference points M1, M2, and M3 and a length of the electrode loss may be displayed together, as in the roll map RM in the lowermost portion of FIG. 10. As will be described below, a longitudinal dimension (absolute coordinates) of the electrode in which the loss length is reflected and a longitudinal dimension (relative coordinates) of the electrode in which the loss length is not reflected may be displayed together on one roll map.

As described above, by introducing the reference points to the electrode, the loss amount of the electrode may be identified based on the change in the intervals between the reference points, by comparing positions of the reference points before the change (positions of set reference points) and positions of the measured reference points; and then this can be reflected on the roll map. The electrode loss amount measurement using the reference points will be described in detail.

### < Apparatus and method for measuring loss amount of electrode>

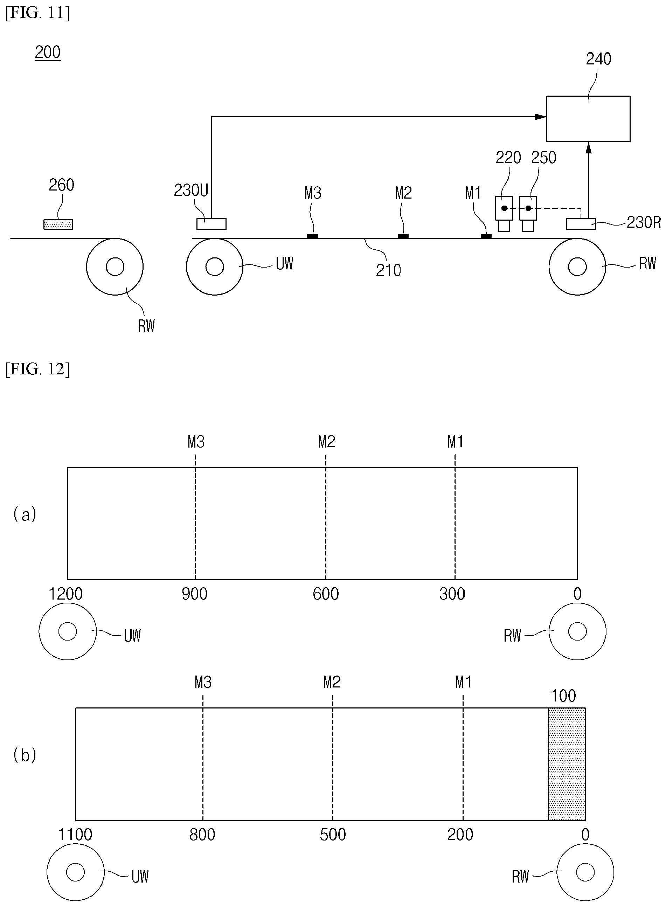

FIG. 11 is a schematic diagram of an apparatus for measuring a loss amount of an electrode according to one embodiment of the present disclosure.

An apparatus 200 for measuring the loss amount of the electrode according to the present disclosure includes an electrode 210 which is transferred between an unwinder UW and a rewinder RW in a roll-to-roll state and on which a plurality of reference points M1, M2, and M3 are marked at predetermined intervals between start and end portions of the electrode 210, a reference point measurement device 220 for detecting the reference points marked on the electrode, a position measurement device 230 for deriving coordinate values of the electrode according to an amount of rotation of the unwinder UW or the rewinder RW and deriving a coordinate value of the corresponding reference point in conjunction with the reference point measurement device when the reference point measurement device detects the reference point, and a calculator 240 for calculating a loss amount of the electrode by comparing the derived coordinate value of the reference point with a coordinate value of a set reference point when, between the start and end portions of the electrode, an interval between reference points is changed from a set interval due to a loss of a part of the electrode.

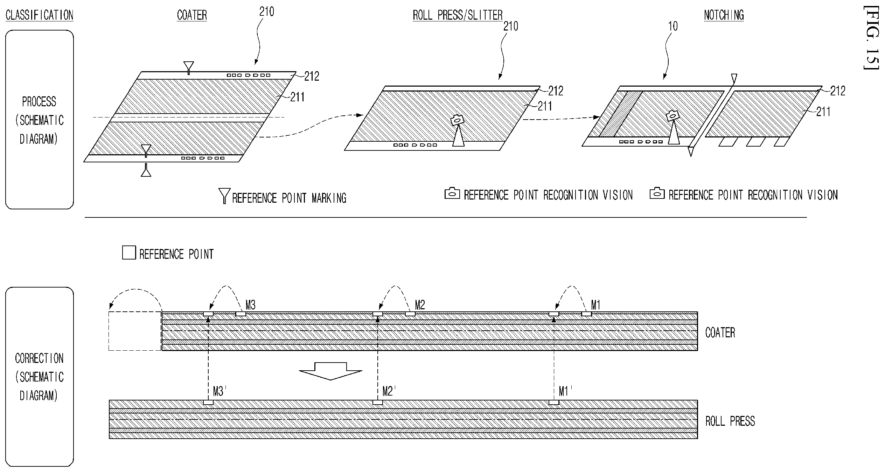

In the apparatus 200 for measuring the loss amount of the electrode according to the present disclosure, the plurality of reference points M1, M2, and M3 are marked on the electrode 210 at predetermined intervals between the start and end portions of the electrode. As described above, the number and intervals of reference points may be differently applied according to the length or specifications of the electrode. The reference points may be marked by a predetermined reference point marker 260. For example, an inkjet-type ink marking printer may be used as the reference point marker. Since an electrode manufacturing process includes a plurality of processes including a coating process, a roll press process, and a slitting process, etc., the marking needs to be first performed on the electrode before measuring the loss amount of the electrode. To this end, the reference point marker 260 may be installed before the unwinder UW in which the corresponding process is performed, and may mark the plurality of reference points M1, M2, and M3 on the electrode at predetermined intervals. For visibility, the marking of the reference points may not be performed on a coating part 211 to which an active material of the electrode 210 is applied but may be performed on a non-coating part 212 to which the active material is not applied The marking may be performed on an upper or lower surface or both the upper and lower surfaces of the non-coating part (see FIG. 15).

In addition, according to the present disclosure, the reference point measurement device 220 for detecting the reference points on the electrode is provided. The reference point measurement device 220 may be an optical character recognition (OCR) reader capable of reading printed characters by OCR. Alternatively, a vision camera capable of detecting the reference points by including a vision sensor may be employed as the reference point measurement device. As shown in FIG. 11, the reference point measurement device may be installed above the electrode 210 line transferred in the roll-to-roll state.

The position measurement device 230 may derive the coordinate values of the electrode according to the amount of rotation of the unwinder UW or the rewinder RW. For example, rotary encoders 230R and 230U for extracting the coordinate values of the electrode from amounts of rotation of motors for respectively driving the unwinder UW and the rewinder RW may be used as the position measurement device. Since the electrode unwound from the unwinder UW is wound around the rewinder RW, the coordinate values of the electrodes derived from the rotary encoders 230R and 230U respectively installed in the unwinder UW and the rewinder RW may be the same. No matter which rotary encoder is used, the position of the electrode may be changed into a digital signal according to the amount of rotation of the motor, and the coordinate values may be derived as numerical values. In the present disclosure, since the position measurement device 230 interworks with the reference point measurement device 220, when the reference point measurement device 220 detects the reference point, the position measurement device 230 may derive a position value of the corresponding reference point. FIG. 11 shows that the reference point measurement device 220 is connected to the position measurement device 230 and the position measurement device 230 automatically derives the coordinate values of the reference points when a detected signal of the reference point measurement device is transmitted to the position measurement device. The reference point measurement device may be connected to the position measurement device by a wire or wirelessly.

The present disclosure includes the calculator 240 for calculating the loss amount of the electrode by comparing the derived coordinate values of the reference points with the set reference point coordinate values when the interval between the reference points is changed from a set reference point interval due to a loss of a part of the electrode 210. The calculator 240 may be, for example, a controller (PLC) for controlling transferring of the electrode between the unwinder UW and the rewinder RW. Alternatively, the calculator may also be the roll map make-up unit to be described below. The calculator 240 may include a predetermined calculation program and calculate the loss amount of the electrode by comparing the coordinate values of the reference points obtained by the position measurement device 230 and the set reference point coordinate values. To this end, the calculator 240 may include a memory in which the set reference point coordinate values are stored or read data on the set reference point coordinate values from a database.

As shown in FIGS. 9 and 10, when the electrode loss due to breakage or removal of an electrode part occurs, the positions of the reference points are changed from the positions of the initially marked reference points (set reference point coordinate values). Therefore, the calculator 240 may calculate the loss amount of the electrode from the above fact. A detailed loss amount calculation process will be described in detail when a method of measuring a loss amount of an electrode according to the present disclosure is described.

The apparatus 200 for measuring the loss amount of the electrode according to the present disclosure may further include a joint detection sensor 250 for detecting a connection tape attached on the electrode. The connection tape is a tape for connecting broken electrodes when breakage occurs in the electrode. When only the joint detection sensor 250 is installed without having the reference points, the joint detection sensor may identify that breakage is present in the electrode by detecting the connection tape. However, it is not possible to identify to what extent the length of the electrode is broken. As described above, in the present disclosure, the reference point measurement device 220, the position measurement device 230, and the calculator 240 are provided so that the length of the broken electrode may be identified.

Like the reference point measurement device 220, the position measurement device 230 interworks with the joint detection sensor 250 and thus may derive a length of the connection tape when the connection tape is detected by the joint detection sensor 250. Specifically, the joint detection sensor 250 may detect each of start and end portions of the connection tape, and when the position measurement device 230 receives each detected signal, the position measurement device may detect a coordinate value at a time point of detecting the start portion and a coordinate value at a time point of detecting the end portion. Since a difference between the coordinate value at the time point of detecting the start portion and the coordinate value at the time point of detecting the end portion becomes the length of the connection tape, the length of the connection tape may be identified by the position detection by the position measurement device 230. The joint detection sensor 250 may be, for example, a color sensor. Since a color of the connection tape is typically different from that of an electrode, the connection tape, which is a part having a color different from that of the electrode, may be detected by the color sensor.

The connection tape may also include a polyethylene terephthalate (PET) film in addition to an adhesive tape that connects the electrode pieces. The PET film extends a relatively longer section than the adhesive tape and connects the electrode pieces.

When the connection tape is detected in addition to the reference point, the calculator 240 calculates a value obtained by adding the length of the connection tape to the loss amount calculated by comparing the coordinate values of the reference points with the set reference point coordinates as a total loss amount. A detailed description thereof will be provided below.

The method of calculating the loss amount of the electrode according to the present disclosure includes marking a plurality of reference points at predetermined intervals between a start portion and an end portion of an electrode transferred in a roll-to-roll state between an unwinder UW and a rewinder RW, deriving a coordinate value of the reference point by detecting the reference point on the electrode by a reference point measurement device, and calculating a loss amount of the electrode by comparing the derived coordinate values of the reference points with set reference point coordinate values when an interval between the reference points is changed from a set reference point interval due to a loss of a part of the electrode.

As described above, before detecting the reference points, the plurality of reference points are marked at predetermined intervals between the start and end portions of the electrode by the reference point marker 260 (see FIG. 11).

The reference point measurement device 220 such as a vision camera may detect the reference points on the electrode, and the coordinate values of the reference points may be derived by the position measurement device 230 interworking with, for example, the reference point measurement device. When there is no loss in the electrode, the derived coordinate values of the reference points may be the same as the set reference point coordinate values.

However, when a length of the electrode becomes less than a length of the electrode originally wound around the unwinder UW due to breakage or removal, the interval between the reference points is changed from the set reference point interval. With such a change, the loss amount of the electrode may be calculated by comparing the derived coordinate values of the reference points with the set reference point coordinate values.

Specifically, when at least one of the interval between the reference points, an interval between the reference point and the start portion of the electrode, and an interval between the reference point and the end portion of the electrode is changed, the loss amount of the electrode may be calculated by comparing the derived coordinate values of the reference points and the set reference point coordinate values.

FIG. 12 shows one example of measuring the loss amount of the electrode according to the present disclosure.

FIG. 12A shows that three reference points M1, M2, and M3 are marked at an interval of 300 meters on an electrode in which no loss occurs. A length of the electrode is 1200 meters, and the rewinder RW and the unwinder UW are installed at a start portion and an end portion of the electrode, respectively, and the electrode is transferred in a roll-to-roll state. For convenience of description, a side at which the electrode is wound around the rewinder RW is considered as the start portion of the electrode, the other side at which the electrode is unwound from the unwinder UW is considered as the end portion of the electrode, and the description will be made on the basis that the electrode proceeds from the unwinder UW to the rewinder RW.

FIG. 12B shows a state in which an operator has removed 100 meters of the electrode in the preceding process. In this case, a first reference point M1 of the electrode wound around the rewinder RW is pulled from 300 meters to 200 meters, which is detected by the reference point measurement device 220, and 200 meters, which is a coordinate value of the first reference point M1, is derived by the rotary encoder installed in the rewinder RW. Since the start portion of the electrode is reduced by 100 meters, positions of the subsequent second and third reference points M2 and M3 are also changed from 600 meters to 500 meters and from 900 meters to 800 meters, respectively. In FIG. 12, the numbers indicated in italics mean the changed coordinate values of the reference points. This is equally applied to the following description. In addition, the position of the end portion of the electrode detected by the unwinder UW is also changed from 1200 meters to 1100 meters.

The position measurement device 230 transmits pieces of data on the coordinate values of the reference points changed as described above to the calculator 240, and the calculator 240 calculates the loss amount of the electrode by comparing the set reference point coordinate values, which are 300, 600, and 900, with the derived coordinate values of the reference points, which are 200, 500, and 800. Specifically, in FIG. 12B, since the interval between the start portion of the electrode and the first reference point M1 is reduced from 300 meters to 200 meters, the loss amount of the electrode may be calculated to be 100 meters. In addition, a loss occurrence position may also be specified between the start portion of the electrode and the first reference point M1. However, since the connection tape is not detected between the start portion of the electrode and the first reference point M1, it may be estimated that the loss is not caused by electrode breakage. Of course, in order to detect the connection tape, the joint detection sensor 250 to be described below is required.

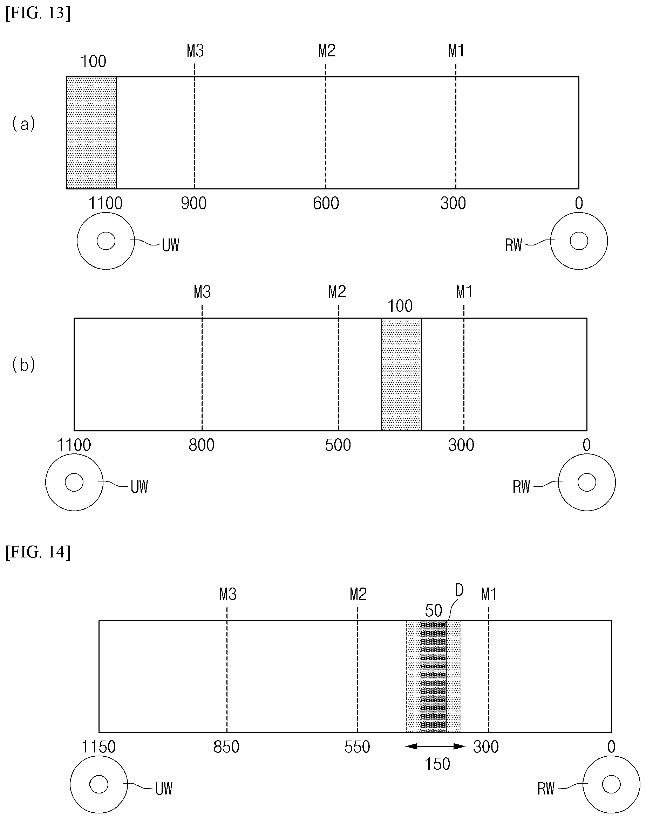

FIG. 13 shows another example of the electrode loss amount measurement according to the present disclosure.

FIG. 13A shows that an electrode loss of 100 meters has occurred at the end portion of the electrode, in contrast to FIG. 12B. In this case, a change in the reference point is not identified in the position measurement device 230R (rotary encoder) installed in the rewinder RW.

However, the fact that the position of the end portion is reduced by 100 meters may be identified by the rotary encoder 230U at the unwinder UW side, and thus, the calculator 240 may derive that an interval between the end portion of the electrode and the third reference point M3 is reduced to 200 meters. Therefore, since the position of the third reference point M3 is changed from the set reference point coordinate values based on the rotary encoder 230U of the unwinder UW, the calculator 240 may calculate that the end portion of the electrode has a 100-meter electrode loss.

FIG. 13B shows that an electrode loss has occurred in a middle portion rather than the start portion or the end portion of the electrode. When a 100-meter electrode loss occurs between the first reference point M1 and the second reference point M2 due to, for example, electrode breakage, the coordinate value of the first reference point M1 is not changed, but the positions of the second and third reference points M2 and M3 and the end portion of the electrode are changed. When the coordinate values of the reference points, which are changed due to such a change in the reference point, are derived by the reference point measurement device 220 and the position measurement device 230 interworking with the reference point measurement device 220, the calculator 240 may calculate that the loss amount of the electrode becomes 100 meters between the first reference point and the second reference point by comparing the changed coordinate values of the reference points and the set reference point coordinate values.

Therefore, according to the method of measuring the loss amount of the electrode according to the present disclosure, when at least one of the interval between the reference points, the interval between the reference point and the start portion of the electrode, and the interval between the reference point and the end portion of the electrode is changed, the loss amount of the electrode may be calculated by comparing the derived coordinate values of the reference points and the set reference point coordinate values.

FIG. 14 shows still another example of the electrode loss amount measurement according to the present disclosure.

The present example shows a case in which the connection tape D is present on the electrode due to electrode breakage. In this case, the second and third reference points M2 and M3 respectively changed from 600 meters to 550 meters and from 900 meters to 850 meters are detected by the reference point measurement device 220 and the position measurement device 230. Therefore, it is first assumed that there was a 50-meter electrode loss between the first reference point M1 and the second reference point M2.

In addition, the length of the connection tape D was detected to be 50 meters by the joint detection sensor 250 and the position measurement device 230. This means that the electrode broken due to electrode breakage was cut off and the broken electrodes were connected with the connection tape D having a length of 50 meters. Therefore, an actual breakage amount of the electrode is obtained by adding the 50 meter length of the connection tape D to the above 50 meters. That is, when calculating the coordinate values of the reference points with the set reference point coordinate values, the calculator 240obtains a total loss amount by adding the length of the connection tape D to the loss amount, which is calculated by comparing the coordinate values of the reference points with the set reference point coordinate values.

The calculating of the length of the connection tape may be performed before or after the deriving of the coordinate values of the reference points. For example, when the reference point measurement device 220 is installed before the joint detection sensor 250, the length of the connection tape may be calculated after deriving the coordinate values of the reference points, and when the joint detection sensor 250 is installed before the reference point measurement device 220, the calculating of the length of the connection tape may be performed first.

FIG. 15 is a schematic view showing a change of a reference point by a roll press process.

As described above, the electrode manufacturing process includes an electrode coating process of coating a current collector with electrode slurry, a roll press process of rolling the coated electrode by a press roll, and a slitting process of cutting the rolled electrode in a longitudinal direction.

For example, when undergoing the roll press process after the reference point is marked in the electrode coating process, the electrode is elongated at a predetermined rate. A lower drawing of FIG. 15 shows the elongation of an electrode 210. When the electrode 210 is elongated, the reference points M1, M2, and M2 are also elongated at a predetermined rate. When positions of the reference points are changed, in the processes after the rolling, a loss amount of the electrode needs to be calculated based on the changed reference points. That is, in the electrode coating process, the loss amount of the electrode is calculated based on original, first to third, reference points M1, M2, and M3, but after the rolling, the loss amount of the electrode must be calculated based on changed, first to third, reference points M1', M2', and M3'. In this case, coordinate values representing the reference points M1', M2', and M3' changed by the rolling may be stored in a database, a memory, or the like as data on set reference point coordinate values corresponding to the changed reference points. Therefore, when a loss occurs in the electrode after the roll press process, it is possible to determine the loss amount by making a comparison with the data on the set reference point coordinate values corresponding to the changed reference points. The set reference point coordinate values reflecting the result of the rolling process are preset according to a pressure of the roll press, a length of the elongated electrode, and the like, and stored in the database or the like.

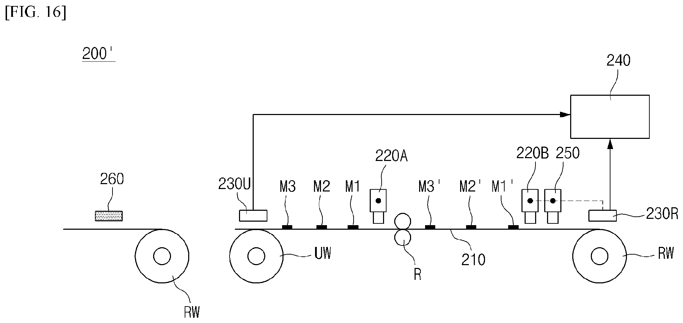

FIG. 16 is a schematic diagram of an apparatus 200' for measuring a loss amount of an electrode according to another embodiment of the present disclosure.

The embodiment describes a roll press operation in which an electrode 210 undergoing an electrode coating process is wound around an unwinder UW of a roll press process and transferred to a rewinder RW. In the embodiment, a press roll R for rolling is provided, being installed in the midway of the electrode transferred in a roll-to-roll state, on two opposite major surfaces thereof. Therefore, the electrode is elongated after being rolled by the press roll R, and thus reference points on the electrode are changed. In this case, since positions of the reference point before and after the press roll R may be different from each other, a first reference point measurement device 220A may be disposed before the press roll, and a second reference point measurement device 220B for detecting the reference point, which is changed by the rolling by the press roll R, may be disposed after the press roll.

Therefore, the calculator 240 may calculate a loss amount of the electrode before the press roll based on the coordinate values of the reference points detected by the first reference point measurement device 220A and calculate a loss amount of the electrode after the rolling by the press roll R based on the coordinate values of the changed reference points detected by the second reference point measurement device 220B. In the embodiment, since a process of comparing the derived coordinate values of the reference points with the set reference point coordinate values is the same as that of the above-described embodiment, except that the coordinate values of the reference points or intervals between the reference points are changed by rolling, a detailed description of the calculation of the loss amount of the electrode will be omitted in the embodiment.

The embodiment of FIG. 16 shows an example according to which the reference points are changed within one process. However, insofar as the electrode has been rolled by the press roll R and thus the positions of the reference points have been changed, the method of measuring the loss amount of the electrode based on the changed reference points is to be applied to processes subsequent to the rolling process. For example, even when the electrode roll is separated from the rewinder RW after the rolling process of FIG. 16 and the electrode roll is wound around the unwinder UW of the slitting process, which is a following process and the slitting process is performed as shown in FIG. 15, the loss amount of the electrode in the slitting process is to be calculated based on the changed reference points. Of course, in the electrode coating process before the process of FIG. 16, the loss amount of the electrode is calculated based on the reference points before the rolling.

As described above, according to the present disclosure, the loss amount of the electrode may be automatically and accurately calculated by the apparatus for measuring the loss amount of the electrode using the reference points. Therefore, it is possible to increase the reliability of the electrode loss data and effectively use such data information in the following process.

In addition, according to the present disclosure, as will be described below, by displaying the reference points on the roll map on which the electrode is imitated and which also displays the information on the loss amount of the electrode on the roll map, it is possible to visually and easily identify the data on quality or defects at a glance in relation to the reference points.

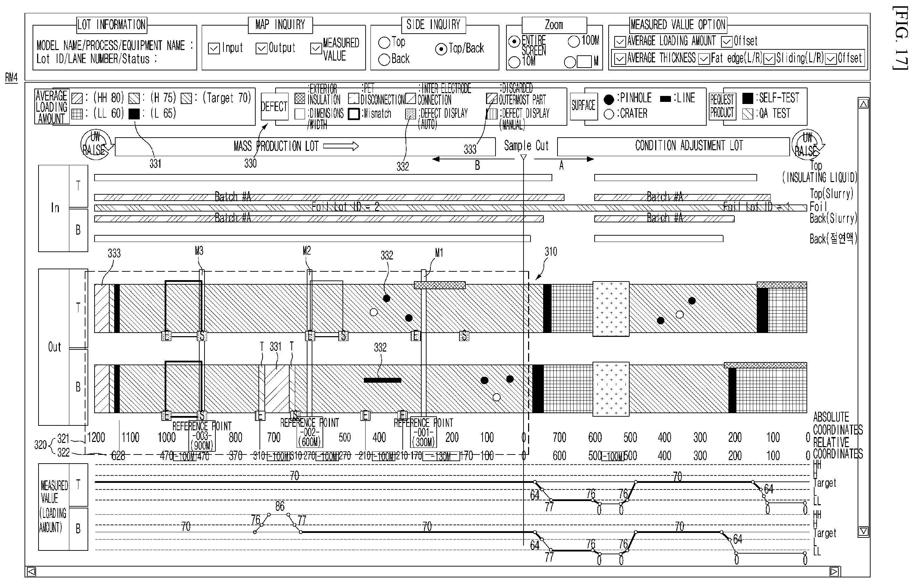

FIG. 17 shows one example of the roll map of the electrode manufacturing process according to the present disclosure.

A roll map RM4 according to the present disclosure includes a roll map bar 310 displayed on a screen in synchronization with the movement of an electrode moving in a roll-to-roll state between an unwinder UW and a rewinder RW and displayed in a bar shape imitating the electrode in the roll-to-roll state, and a plurality of reference points M1, M2, and M3 imitating a plurality of reference points marked on the electrode at predetermined intervals and displayed on the roll map bar at predetermined intervals.

The roll map according to the present disclosure includes the plurality of reference points M1, M2, and M3 imitating the plurality of reference points marked at predetermined intervals between the start and end portions of the electrode and displayed on the roll map bar at predetermined intervals. That is, as shown in FIG. 17, the reference points M1, M2, and M3 imitating the reference points, which are actually marked on the electrode, may be displayed on the roll map bar 310 at the predetermined scale ratio.

In this case, the reference points M1, M2, and M3 may also be expressed by the longitudinal dimension of the electrode.

The loss amount measured according to the apparatus and method for measuring the loss amount of the electrode using the reference points may also be displayed on the roll map RM4 according to the present disclosure. That is, position coordinates (position data) in which the loss amount is reflected and position coordinates in which the loss amount is not reflected may be displayed on one roll map. Referring to FIG. 17, position coordinates 320 (longitudinal dimension) in which the loss amount of the electrode is not reflected are displayed as absolute coordinates 321. In addition, the position coordinates 320 in which the loss amount of the electrode is reflected is displayed as relative coordinates 322. Therefore, referring to the roll map RM4 according to the present disclosure, the electrode loss in the preceding process or the subject process may be identified at a glance. In addition, since the coordinates in which the loss amount of the electrode is reflected and the coordinates in which the loss amount of the electrode is not reflected are simultaneously displayed, when the following process is performed with reference to the roll map of the preceding process, distortion does not occur in the coordinates, and thus the following process may be accurately performed at a desired position.

In addition, the roll map RM4 further includes a display unit 330 for displaying at least one of pieces of data on quality, defects, and an electrode loss measured in the electrode manufacturing process at a predetermined position on the roll map bar 310 corresponding to a position of the electrode on which the at least one of pieces of data has been measured. Referring to FIG. 17, data 331 on quality of the electrode (e.g., data on the loading amount of the electrode), data 332 on defects (e.g., defect data such as a pinhole, a line, or the like), and data 333 on an electrode loss (data on an outermost discard section) are all displayed on the roll map bar 310. Therefore, it is possible to identify information on the quality, defects, and electrode loss of the electrode in the process at a glance. In practice, in addition to the outermost discard section, the electrode portion in which the defect has occurred and the electrode portion that did not satisfy a quality standard are removed and the electrode portions left after removal were connected with the connection tape D or the like, and thus, an electrode loss also occurs due to these removed parts. In the roll map RM4, all of these electrode losses are reflected using the relative coordinates 322. Therefore, by comparing the relative coordinates 322 and the absolute coordinates 321 of the roll map RM4, a length of the electrode loss may be identified. In this case, referring to the reference points M1, M2, and M3 displayed on the roll map, the loss amount of the electrode may be more easily calculated.

For reference, on the screen on which the roll map RM4 of FIG. 17 is displayed, items related to the quality, the defect, and the electrode loss are displayed at a glance. Therefore, referring to these items and the roll map, visual data related to the items may be easily identified.

Meanwhile, the roll map RM4 of FIG. 17 is a roll map in the electrode coating process, but the roll map may also be made up respectively for the roll press process and the slitting process. In this case, it is possible to easily identify events or the like occurring in each process by comparing the roll maps of each process. In addition, the roll map of the preceding process may be referred and used when making up a roll map of the following process. In this case, in the roll map of the process after the rolling by the press roll, reference points imitating the positions of the reference points changed by the rolling need to be displayed on the roll map bar. That is, as shown in FIGS. 15 and 16, when the positions of the reference points are changed by the rolling process, in the roll map of the roll press process and the subsequent slitting process, distortion can be prevented from occurring in the position coordinates of the roll map by having the changed position of the reference point imitated and displayed on the roll map bar.

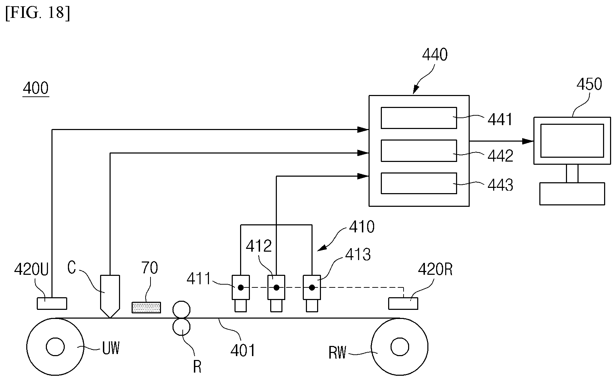

FIG. 18 is a schematic diagram showing an apparatus for making up a roll map according to the present disclosure.

An apparatus 400 for making up a roll map according to an embodiment of the present disclosure includes a reference point measurement device for inspecting an electrode 401 moving between an unwinder UW and a rewinder RW and detecting reference points marked on the electrode, a position measurement device for deriving coordinate values of the electrode according to an amount of rotation of the unwinder or the rewinder and deriving coordinate values of the reference points, and a roll map make-up unit for making up a roll map bar imitating the moving electrode and displaying a loss amount of the electrode calculated by comparing the derived coordinate values of the reference points and set reference point coordinate values on the roll map bar.

For convenience of description, in FIG. 18, a state in which a current collector is coated with an electrode active material by a coater C in an electrode coating process to manufacture the electrode and a state in which the electrode is rolled by a press roll R are displayed together on one electrode line between the unwinder UW and the rewinder RW.

However, as described above, in practice, the electrode coating is typically performed using its own unwinder UW and rewinder RW, and at this time, a dedicated reference point measurement device and joint detection sensor are installed and the roll map of the electrode coating process is made up in the corresponding process. When the electrode coating process is completed, an electrode roll moves from the rewinder RW of the electrode coating process to the unwinder UW of the roll press process.

However, since FIG. 18 is for comprehensively describing a process of making up the roll map of the electrode manufacturing process, unlike the actual process, the coater C of the electrode coating and the press roll R of the roll press process are shown on one and the same electrode only for convenience of description. That is, when the coater C is omitted from FIG. 18, it corresponds to a system for making up the roll map of the roll press process, and when the press roll R is omitted, it corresponds to a system for making up the roll map of the electrode coating process. It should be understood that in practice the electrode manufacturing process may not actually proceed as in FIG. 18.

When the electrode roll is installed in a roll-to-roll state between the unwinder UW and the rewinder RW in preparation for the electrode coating process, it is preferable that an electrode roll information registering operation of inputting data on specifications including a lot number of the electrode roll to a server or a roll map make-up unit 440 be performed. For example, when the electrode roll is introduced onto the unwinder UW or installed between the unwinder UW and the rewinder RW, the detailed data including the lot number of the electrode roll may be input to the server or the like. When the information on the electrode roll is registered, detailed data on the electrode (roll), such as the lot number, a process, and equipment may be loaded from the server and displayed on the screen together with the roll map bar. In addition, since specifications on a length and a width of the electrode roll may be identified from the detailed data on the electrode roll, a shape and a size of the roll map bar may be determined, preferably at a predetermined scale proportional to the length and width of the electrode, when the roll map bar is made up by the data processing system such as, for example, an MES. That is, according to a conversion scale stored in the MES or like, the shape and size of the roll map bar corresponding to the length and width of the electrode roll may be displayed on the screen.

Meanwhile, in order to make up the roll map according to the present disclosure, data on the electrode loss in the electrode manufacturing process and data on the reference points marked on the electrode should be acquired, and data on the position of the electrode from which the data is acquired should be present. In addition, as necessary, data on quality or defects may also be acquired.

Such data may be obtained by inspecting the electrode 10 moving in the electrode manufacturing process.

The electrode 401 is inspected by a predetermined inspection and/or measurement device 410 installed on an electrode transfer line after coating or after rolling. For example, inspection and/or measurement devices such as an electrode slurry loading amount measurement device 411, a dimension and width measurement device 412, and an exterior inspection device 413 may be installed on the line. As the electrode slurry loading amount measurement device 411, a non-contact type thickness measurement sensor such as an ultrasonic sensor, a displacement sensor, a laser sensor, or a confocal thickness sensor may be employed.

As described above, data on the reference points marked on the electrode may be acquired by the vision measurement device, and the coordinate values of the reference points may be detected by the position measurement device installed at the unwinder UW or the rewinder RW and transmitted to the roll map make-up unit 440. The calculator 240 related to measuring the loss amount of the electrode may be the roll map make-up unit, specifically, the data processing system 440 or one component of the system. That is, the loss amount of the electrode may also be measured by the apparatus 400 for making up the roll map of FIG. 18. The acquired data on electrode loss and data on reference points may be transmitted from the rotary encoders 420U and 420R, namely, position measurement devices, to the roll map make-up unit 440 either directly or via the inspection and/or measuring instrument 410. Alternatively, a PLC for controlling transferring of the electrode between the unwinder and the rewinder may be connected to the roll map make-up unit 440, and the PLC may transmit the data on the loss and the data on the reference points to the roll map make-up unit 440.

As described above, when data is acquired by various measurement devices, these data are transmitted to the roll map make-up unit 440. In this case, although not shown, a server may be applied for data storage. Alternatively, the roll map make-up unit 440 may have a predetermined storage device to store the data.

As shown in FIG. 18, the encoder of the rewinder RW is connected to the loading amount measurement device 411, the dimension and width measurement device 412, as well as the exterior inspection device, so that data may be exchanged to acquire information on the loading amount, the dimension/width, etc., together with the position data of the electrode portion in the longitudinal direction, for which a loading amount, dimension/width, etc. have been measured. As necessary, an encoder 420U of the unwinder UW may also be connected to various measurement devices 410.

Meanwhile, the data on the electrode loss and the data on the reference points marked on the electrode may be visualized by a data visualization device 443 installed in the roll map make-up unit 440 and displayed by the display unit 450 as part of the roll map, along with other data on quality or defects .

As described above, according to the present disclosure, by displaying the reference points on the roll map and displaying the information on the loss amount of the electrode, it is possible to visually and easily identify the data on quality or defects at a glance in relation to the reference points.

In addition, since the roll map displaying the reference points can be referred to, in order to perform quality, defect control, and following process in each sub-process of the electrode manufacturing process, it is possible to accurately perform the following process, defect removal, or the like.

When an inspection device catches the fact that foreign substances are mixed into an active material layer or a coating defect part is generated in the electrode manufacturing process, conventionally, the defect part on the electrode may be marked or an operator may attach a defect tag so that the defect part can be removed in the current coating process or in the following process.

However, conventionally, a physical marking process of directly marking information on quality, defects, or the like on the electrode is applied. Hence, if a defect occurs in the following process after the electrode is assembled and becomes the secondary battery, it is difficult to identify in which section in the electrode manufacturing process a defect has actually occurred which might have caused the defect in the following process. That is, after the physically marked electrode is assembled or lost, it is very difficult to analyze quality correlation between processes in the electrode manufacturing process and the following process.

Meanwhile, a technology has been proposed to identify operation history in units of secondary battery by directly marking the presence of the defect on the secondary battery with an ink in a secondary battery assembly line after the electrode manufacturing process is completed.

However, since the related art relates to marking after the secondary battery is assembled, histories of the secondary battery assembly process and the following processes may be identified, but there is a limit in that history information on defects or the like in the preceding electrode manufacturing process may not be identified.

Therefore, there is a need for providing a technology capable of displaying history information on quality or defects which may be made reference to, in performing quality correlation analysis, operation of the subsequent processes, and so forth, in the context of the relationship between sub-processes within the electrode manufacturing process and, furthermore, their relationship with the subsequent processes.

According to the present invention, a system 500 for correcting a roll map includes: a roll map make-up unit 510 for making up a roll map of a first process, the roll map being expressed in a planar shape, imitating thereon an electrode moving between a first unwinder UW1 and a first rewinder RW1 while a first process is performed, wherein the roll map displays inspected and/or measured data of the electrode acquired during the first process and coordinate values indicating a position on the electrode in which the inspection/measurement has been carried out; and a roll map corrector 520 for making up a roll map of a second process by converting coordinates of the roll map of the first process in a reverse order so that coordinate values of a start portion and an end portion of the roll map of the first process are reversed when the electrode moves between a second unwinder UW2 and a second rewinder RW2 while the second process is performed.

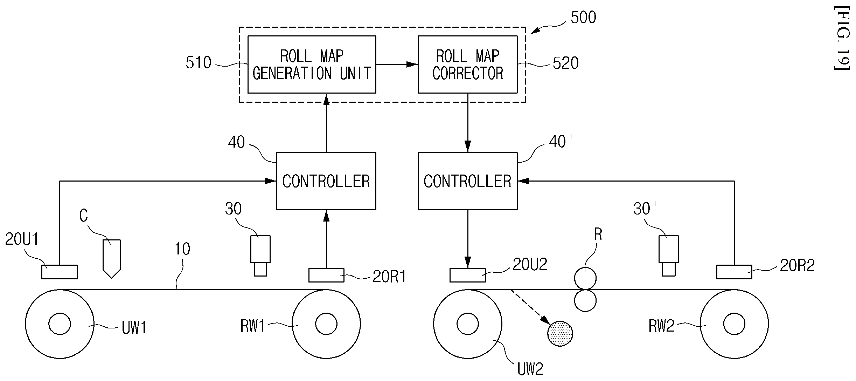

FIG. 19 is a schematic diagram showing a system for correcting a roll map according to another embodiment of the present invention.

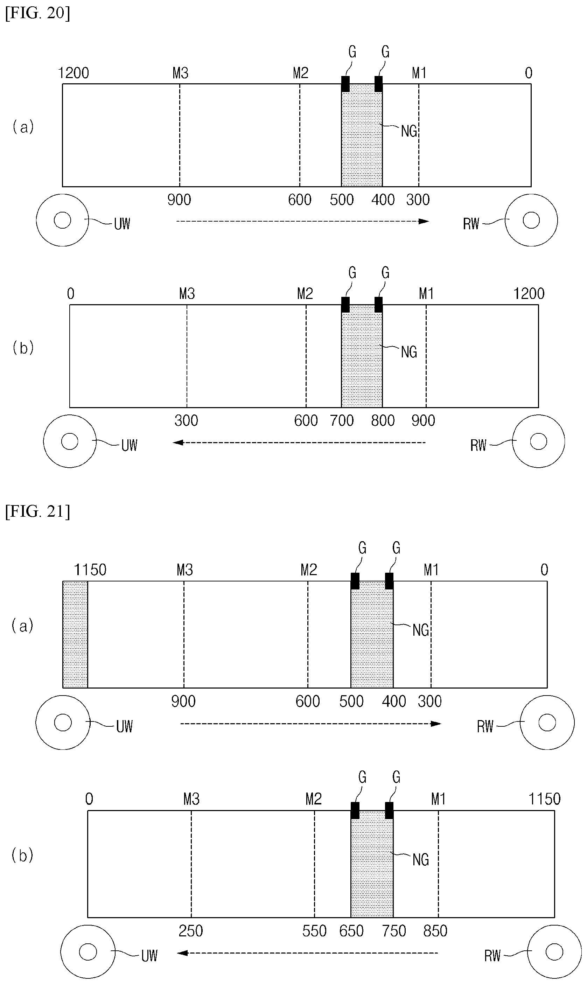

The longitudinal dimension of the electrode 10 may be expressed in coordinates at predetermined intervals on the roll map in a planar shape (roll map bar) which imitates the electrode 10. The electrode 10 moves between the first unwinder UW1 and the first rewinder RW1 in the roll-to-roll state while the first process is performed. The position, that is, the longitudinal dimension of the electrode may be acquired from a rotary encoder for extracting the position of the electrode (encoder value) from an amount of rotation of a motor for driving the unwinder UW1 or the rewinder RW1. Therefore, the roll map make-up unit 510 of the first process may display the longitudinal dimension of the electrodes 10 as coordinate values at predetermined intervals on the roll map (see FIG. 20). In addition, the roll map make-up unit 510 makes up the roll map displaying the inspected and/or measured data of the electrode 10 acquired in the first process at the coordinate value corresponding to the position of the electrode 10 for which the inspected and/or measured data has been acquired. For example, since the position measurement device 20 and the inspection and/or measurement device 30 may be interworked, the inspection and/or measurement device 30 acquires data of the coordinate values of the electrode for which the inspected and/or measured data has been acquired, together with the inspected and/or measured data. Alternatively, the controller may match the inspected and/or measured data with the data of the coordinate values. The roll map make-up unit 510 makes up the roll map by marking the data on the roll map.

The system 500 for correcting the roll map according to the present invention converts and corrects the coordinates of the roll map of the first process to apply the roll map made up in the first process to the second process.

That is, as shown in FIG. 19, the roll map is made up from the electrode moving between the unwinder UW1 and the rewinder RW1 of the first process in a roll-to-roll state. For example, the first process may be an electrode coating process as shown in FIG. 19. The electrode 10 is coated with electrode slurry by a coater C and inspected by the inspection and/or measurement device 30, and the electrode roll is wound around the rewinder RW 1 of the first process. In this case, encoder values of the unwinder UW1 and the rewinder RW1 may be specified as coordinate values and transmitted to the roll map make-up unit 510 through the controller 40. The inspected data acquired by the inspection and/or measurement device 30 may also be transmitted to the roll map make-up unit 510 through the controller 40 together with the data of the coordinate values.

According to the present invention, the roll map made up by the roll map make-up unit 510 of the first process is corrected or converted to a roll map that may be referred to in the second process. The roll map corrector 520 makes up the roll map of the second process by acquiring the roll map of the first process from the roll map make-up unit 510 and converting the roll map of the first process in a reverse order so that the coordinates of the start portion and the end portion of the roll map are reversed.

Such conversion and correction are well shown in FIG. 20.

FIG. 20 is a schematic diagram showing one example of a change in coordinates of the roll map by the system for correcting the roll map according to the present invention.

FIG. 20A is the roll map of the first process (electrode coating process). A length of the electrode 1 is 1200 meters, and reference points M1, M2, and M3 are respectively displayed at points of 300, 600, and 900 meters. In addition, an electrode defect section NG (e.g., exterior defects) is displayed at points of 400 to 500 meters. However, the roll map of the first process having these coordinate values may not be directly used in the second process. This is because a portion in which the coordinate value is displayed as zero on the roll map of the first process is the start portion of the first process, but it is first wound around the rewinder RW of the first process and positioned inside the electrode roll, and thus becomes the end portion of the electrode 1 when the electrode 1 is unwound from the unwinder UW of the second process. Conversely, the point at 1200 meters, which is the last portion wound around the rewinder RW of the first process, is the end portion in the first process, but becomes the start portion of the electrode 1 when the electrode 1 is unwound from the unwinder UW of the second process. When the roll map of the first process is applied to the second process as it is, the coordinate values of the reference points and the coordinate values of the defect section NG do not match the dimension of the actual electrode. Therefore, as shown in FIG. 20B, the conversion and correction are performed in a reverse order so that a coordinate value (0) of the start portion of the roll map of the first process becomes a coordinate value (1200) of the end portion thereof, and the coordinate value (1200) of the end portion becomes the coordinate value (0) of the start portion thereof. Therefore, the coordinate values of the reference points of the roll map of the first process are also changed from 900 meters to 300 meters for M3 and from 300 meters to 900 meters for M1. In addition, the coordinate values of the defect sections NG are also converted from 400 to 500 meters to 700 to 800 meters. The roll map of the second process may be made up by the correction in the reverse order as shown in FIG. 20B.

When a part of the end of the electrode is removed after the first process ends and before the second process starts, the coordinates of the roll map need to be corrected by reflecting this. Since the end of the electrode often has non-uniform quality, a part of the end of the electrode is removed after a specific (sub-)process is completed. This is referred to as "removal after completion" differently from a case in which the electrode is removed during the process.

FIG. 21 is a schematic diagram showing another example of the change in coordinates of the roll map by the system for correcting the roll map according to the present invention.

FIG. 21 is a schematic diagram showing another example of the change in coordinates of the roll map by the system 500 for correcting the roll map according to the present invention and shows the removal after completion. That is, the end of the electrode is removed by 50 meters after the first process, which is reflected in the roll map of the first process. The removal of the end of the electrode may be done by, for example, an operator. The operator may input a length and coordinate values of the electrode to a predetermined input device, and the input device may transmit the data to the roll map make-up unit 510, so that the roll map make-up unit 510 may make up the roll map of the first process as shown in FIG. 21A.

Alternatively, when the roll map of the first process is in a state shown in FIG. 21A despite the removal of a part of the end of the electrode, correction of the roll map as shown in FIG. 21B needs to be performed before the second process starts. In this case, the coordinate values of the end part of the electrode, which has been removed from the roll map of the first process, are also removed (i.e., coordinates of 1150 to 1200 meters are removed), and the coordinates are corrected in a reverse order so that coordinate value of the start portion (0 meters) of the roll map of the first process and the end portion (1150 meters) at which a part of the end of the electrode has been removed are reversed. In addition, the coordinate values of the reference points and the defect section NG are also corrected in the reverse order in the same manner, the result being as shown in FIG. 21B. That is, in the corrected roll map of the second process, a distance from the start portion to the reference point M3 is 250 meters, M2 has a coordinate value of 550 meters, and M1 has a coordinate value of 850 meters. The defect section NG also becomes 650 to 750 meters.

According to the present invention, the roll map of the second process may be made up by the roll map corrector as shown in FIG. 20B or FIG. 21B. Referring to FIG. 19, the roll map corrector 520 may transmit the roll map of the second process to a controller 30' of the second process to be used for performing the second process. For example, as will be described below, when the defect section NG of the first process is to be removed in the second process, the roll map of the second process may be used. In FIG. 19, the second process is a roll press process in which the electrode is rolled by a press roll R while the electrode 1 moves between the second unwinder UW2 and the second rewinder RW2 in a roll-to-roll state. Encoders 20U2 and 20R2 of the second unwinder UW2 and the rewinder RW2 are respectively shown. An inspection and/or measurement device 530' is also shown above the electrode 1. According to the present invention, the roll map of the first process is properly corrected between the first and second processes, so that there is no error when the second process is performed.

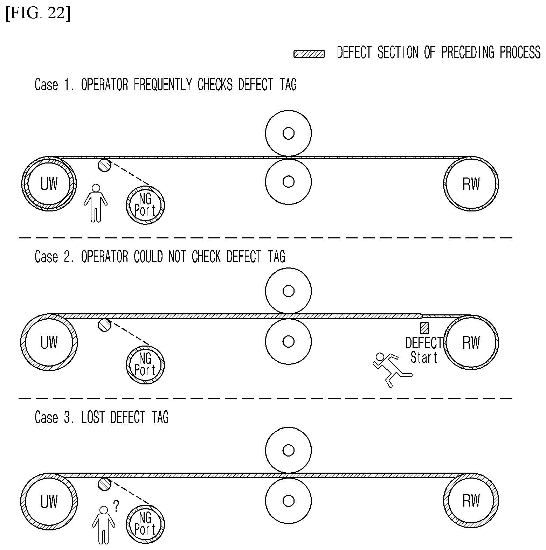

FIG. 22 is a schematic diagram showing that a defect in an electrode coating process is removed in the following process, i.e., a roll press process.

In the electrode manufacturing process, there is a case in which the defect occurring in the preceding process is removed in the following process. For example, as the electrode mounted between the unwinder and the rewinder of the roll press process proceeds in the roll-to-roll state, it is rolled by the press roll and wound around the rewinder. The operator removes and discards the electrode of the defect section that occurred in the preceding process, i.e., the coating process, at a defect removal port installed before the press roll. At this time, the operator removes the defect section after checking a defect section tag TAG attached on the electrode in the preceding process.

However, the defect removal operation is actually very inconvenient because the operator often has to check the tag in order to check the defect section and at the time slow down and stop roll press equipment (case 1 in FIG. 22).

In addition, if the operator were at a different position when the defect section of the electrode arrived at the defect removal port, the electrode with the defect tag would be rolled by the press roll (case 2 in FIG. 22).

In addition, if the defect tag in the preceding process were lost for some reason, the operator could not check and remove the defect section (case 3 in FIG. 22).

Therefore, it is necessary to develop a technology capable of easily checking history and information on the defect section and easily removing the defect section of the electrode in the electrode manufacturing process.

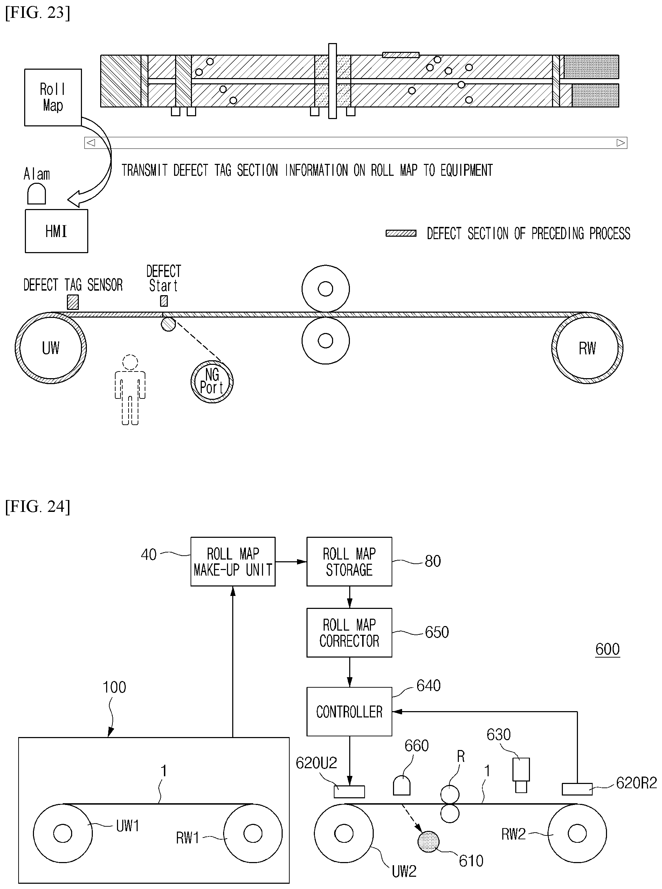

FIG. 23 is a schematic diagram showing the concept of an apparatus for removing a defect of an electrode according to still another embodiment of the present invention, and FIG. 24 is a schematic diagram showing the apparatus for removing a defect of an electrode according to the present invention.

As shown in FIG. 21, for example, assuming a case in which a tag G is attached to the defect section NG having occurred in the electrode coating process and the defect section NG of the electrode 1 is removed in the roll press process, as shown in FIG. 22, the operator needs to wait for the tag G of the defect section NG to arrive at the defect removal port. However, such waiting itself is a waste of manpower, and when the tag G is lost, it may happen that the operator cannot find the corresponding defect section NG. According to the present invention, in the second process using information on the roll map of the preceding process (e.g., the electrode coating process), the electrode 1 stops or slows down or an alarm is issued as the defect section NG arrives at the defect removal port, so that the operator does not miss the defect section NG. FIG. 23 is a conceptual diagram showing a situation in which such a roll map of the preceding process is used to remove defects.

FIG. 24 is a schematic diagram showing the apparatus for removing a defect of an electrode according to the present invention in more detail.

An apparatus 600 according to the present embodiment is an apparatus for removing, in the second process, a defect of an electrode, which has been subject to a first process while moving between a first unwinder UW1 and a first rewinder RW1. The apparatus 600 includes a defect removal port 610, positioned between a second unwinder UW2 and a second rewinder RW2, being configured to remove a defect section NG of the electrode having occurred in the first process. The apparatus further includes a second process controller 640 for controlling the electrode movement between the second unwinder UW2 and the second rewinder RW2. The second process controller 640 is configured to calculate a time point at which the electrode 1 having the defect section NG arrives at the defect removal port 610 from the second unwinder UW2 based on information on coordinates of the defect section NG displayed on the roll map of the first process and stop the movement of the electrode in the second process, so that the defect section NG of the electrode 1 may be removed at the defect removal port 610.

As shown in FIG. 24, the defect removal port 610 is positioned at a predetermined position between the unwinder UW2 and the rewinder RW2 of the second process (the second unwinder UW2 and the second rewinder RW2). In the roll press process shown in FIG. 24, the defect removal port 610 is usually provided at a position between the unwinder UW2 and the press roll R. The defect removal port 610 may be a kind of worktable on which an operator removes and discards the defect section NG of the electrode 1. Furthermore, a waste box to which the removed electrode part is discarded and/or a winder for winding the removed electrode part, or the like may be provided at the defect removal port 610.

In addition, the apparatus 600 for removing the defect of the electrode includes the second process controller 640 (e.g., a PLC) for controlling the movement of the electrode between the second unwinder UW2 and the second rewinder RW2. The second process controller 640 calculates a time point at which the electrode 1 having the defect section NG arrives at the defect removal port 610 based on the roll map of the first process. Since a longitudinal dimension of the electrode 1 and a position of the defect section NG are expressed as coordinate values on the roll map of the first process, the time point at which the electrode 1 having the defect section NG from the second unwinder UW2 arrives at the defect removal port 610 is calculated based on the information on the coordinates of the defect section NG displayed on the roll map of the first process. That is, the controller 640 may calculate the time point at which the defect section NG arrives at the defect removal port 610 because it knows a distance between a start portion of the electrode and the defect section NG and knows rotating speeds of the unwinder UW2 and the rewinder RW2 (i.e., a transfer speed of the electrode). Herein, the calculation being done based on the information on the coordinates of the defect section NG displayed on the roll map of the first process does not necessarily mean that the coordinates are used as they are. Rather, as will be described below, coordinates may be obtained and applied by performing a predetermined correction/conversion to the information on the coordinates of the defect section NG displayed on the roll map of the first process. That is, as described above with reference to FIGS. 20 and 21, the coordinate values of the roll maps being transferred in the roll-to-roll state have a reverse order relationship in the preceding process and the following process. Therefore, according to the present invention, in order to calculate the arrival time point of the defect section NG, the coordinate value of the roll map of the first process needs to be converted and corrected in a reverse order so that coordinate values of the start portion and the end portion of the roll map of the first process are reversed. To this end, the apparatus 600 for removing the defect of the electrode according to the present invention may further include a roll map corrector 650 for performing the correction. Besides, the second process controller 640 may stop the movement of the electrode based on the coordinates of the defect section NG displayed on the corrected roll map. As shown in FIG. 20, the roll map corrector 650 may specify the coordinate value of the defect section NG by correcting the coordinate value of the roll map of the first process in the reverse order based on the information on the coordinates of the defect section NG displayed on the roll map of the first process. Therefore, the second process controller 640 may calculate the time point at which the defect section NG displayed in the first process arrives at the defect removal port, based on the corrected coordinate value of the defect section NG and stop the movement of the electrode in the second process when the defect section NG arrives at the defect removal port 610. That is, the operations of the second unwinder UW2 and the second rewinder RW2 may be stopped.

Meanwhile, when a part of the end of the electrode is removed after the first process and before the second process, as shown in FIG. 21, the roll map corrector 650 may remove a coordinate value corresponding to the removed part of the end of the electrode from the roll map of the first process and convert and correct the coordinate values of the roll map of the first process in the reverse order so that the start portion and the end portion of the remaining roll map are reversed. The second process controller 640 may stop the movement of the electrode based on the coordinate value of the defect section NG displayed on the corrected roll map.

The first process is performed before the second process, while the electrode moves in the roll-to-roll state between the first unwinder UW1 and the first rewinder RW1. The data of the coordinate values is generated and reflected in a roll map by the roll map make-up unit 40. As described above, the roll map make-up unit 40 may be a data processing system, such as an MES or an SPC, or one component of the system. The roll map made up by the roll map make-up unit 40 may be stored in a roll map storage 80, such as a server or a database. When stored, identification information, such as a lot number of the corresponding electrode, may be stored together. Therefore, for example, when the identification information on the electrode 1 is scanned and acquired in the unwinder UW2 of the second process, the second process controller 640 may download the roll map of the electrode 1 corresponding to the identification information from the roll map storage 80. The roll map of the electrode corresponding to the identification information is corrected by the roll map corrector 650 and transmitted to the controller 640, and the controller 640 stops the electrode 1 having the defect section NG at the defect removal port 610. In the second process, the second unwinder UW2 and the second rewinder RW2 may be installed to perform the roll press process, and a predetermined inspection and/or measurement device 630 may also be installed above the electrode. The inspection and/or measurement device 630 may be, for example, an inspection device for measuring a thickness of an electrode or a vision inspection device for recognizing the generation of wrinkles.

In addition, the second process controller 640 may control the electrode of the second process to slowly move for a predetermined time section before the defect section NG arrives at the defect removal port 610 until it actually arrives. The second process controller 640 controls the electrode to slowly move to give the operator a time to remove a defect at the defect removal port 610. Alternatively, when the electrode 1 slowly moves in the second process, the operator may recognize that the defect section NG will soon arrive at the defect removal port 610 and move to the defect removal port. The predetermined time section or its starting time may be appropriately determined in consideration of the distance between the second unwinder UW2 and the defect removal port or the like.

In addition, the apparatus 600 for removing the defect of the electrode according to the present invention may further include an alarm unit 660 for issuing an alarm in at least one of a case in which the defect section NG arrives at the defect removal port 610, a case in which the electrode 1 stops in the second process, and a case in which a predetermined time has elapsed since the electrode stopped in the second process, or the like. As necessary, an alarm may be issued at a time point the electrode 1 starts to slowly move. If the alarm is issued as the defect section NG arrives at the defect removal port or the electrode stops, the operator may remove the defect section NG.

In this case, even if the defect tag G is lost, the operator may remove the defect section NG with reference to the roll map of the first process (accurately, the roll map of the first process whose coordinates have been corrected). Since a length of the defect section NG is expressed as a coordinate value on the roll map, the defect section NG may be removed with reference to the coordinate value. Alternatively, the alarm may be issued when the defect removal operation is not performed even after a predetermined time has elapsed after the movement of the electrode was stopped. In this case, the operator may hear the alarm and move to the defect removal port 610 to remove the defect section. An alarm operation of the alarm unit 660 may be controlled by the second process controller 640.

As described above, according to the present invention, by correcting the coordinates of the roll map of the preceding process, it is possible to use the roll map of the preceding process without any error in the following process. In addition, it is possible to reliably and easily remove in the following process the defect that has occurred in the preceding process by using the roll map information and the roll map coordinates correction.

When a tab is formed in a notching process, the form of a secondary battery is made through an assembly process of interposing a separator between a positive electrode and a negative electrode to form an electrode assembly, stacking or folding the electrode assembly to package the same in a pouch, a can, or the like and injecting an electrolyte. Thereafter, the assembled secondary battery undergoes an activation process of imparting battery characteristics by charging and discharging the secondary battery, thereby becoming a final product.

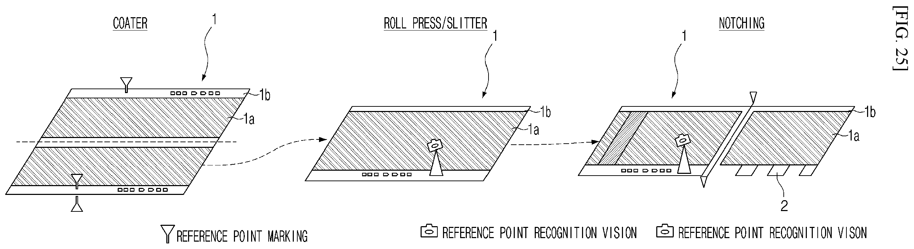

FIG. 25 shows a state of the electrode performing such an electrode manufacturing process.

A coated electrode 1 is manufactured by having the current collector coated with the active material in the coater C to form a coating part 1a. Reference points may be marked on a non-coating part 1b not coated with the active material. Both top and bottom surfaces of the electrode 1 are typically coated with the active material. The coated electrode 1 is pressed by a press roll in a roll press process and is cut in the longitudinal direction of the electrode 1 by a slitter in a slitting process.

Thereafter, in a notching process, an electrode tab 2 is formed by punching the electrode 1 by a press or the like. In the notching process, either the electrode is cut into unit electrodes for forming a battery cell or an electrode tab 2 is formed for each unit electrode to be cut in the following process. A width of the unit electrode corresponds to a pitch P processed by the press.

Such an electrode manufacturing process is performed through a series of roll-to-roll processes, according to which the electrode unwound from the unwinder moves and is wound around the rewinder, and such processes are sequentially repeated. That is, the electrode is coated while moving from the unwinder to the rewinder of the coating process, and an electrode roll of the coating process is completed by winding the electrode around the rewinder. Next, the electrode roll is mounted on the unwinder of the roll press process and moved to the rewinder of the roll press process. The electrode roll is wound around the rewinder of the roll press process and completed as the electrode roll of the roll press process. Thereafter, the electrode roll moves again in the roll-to-roll state, from the unwinder of the following process (e.g., a secondary roll press process, a slitting process, or a notching process) to be wound around the rewinder of the process, thereby being completed as an electrode roll of the following process. As described above, the electrode manufacturing process is configured as the series of roll-to-roll processes, according to which, the electrode unwound from the unwinder moves and is wound around the rewinder (roll-to-roll process), and such processes are sequentially and repeatedly performed.

The roll map may include a visual expression in the form of a bar imitating the progress of the electrode manufacture, and a longitudinal position and a transverse position of the electrode are expressed in coordinates on the roll map. Since the information on defects, quality, electrode breakage, and the like occurring in the electrode manufacturing process is displayed on the roll map together with the coordinate values, the data on quality or defects in the electrode manufacturing process may be visually and easily identified at a glance.

Referring to FIG. 5, the exterior defect information, such as the pinhole defect f1 and the line defect f2, is visually displayed at the coordinates at which the defect has been detected. In addition, the mismatched part f3 of the coating part and the non-coating part is also displayed. Other loading amount defect and the like are also displayed, and the discarded outermost portion of the electrode is also displayed.

In addition, the reference points M1, M2, and M3 marked on the electrode 1 may be displayed at predetermined intervals. When the electrode 1 is broken and the electrodes 1 are connected by the joint connection member, the length of the electrode is reduced by the length of the broken electrode. As described above, a point at which the exterior defect has occurred is also removed, and the operator may connect the cut electrode pieces. The coordinate values on the roll map may be corrected by reflecting such occurrences. FIG. 5 shows on one roll map bar both coordinates, namely, coordinates in which the removed electrode part is not reflected and coordinates in which the removed electrode part is reflected. The former is referred to as "absolute coordinates A," and the latter is referred to as "relative coordinates B." As shown in FIG. 5, the relative coordinates B and the absolute coordinates A may be displayed together on one roll bar but may also be displayed separately. A roll map bar displayed with the relative coordinates B represents a state of the actual electrode.

Such a roll map may be made up for respective processes described above. However, in the roll-to-roll process, since the electrode wound in the preceding process is to be unwound in the following process, the start portion and the end portion of the electrode are reversed by undergoing roll-to-roll processes. For example, the end portion of the roll map representing the electrode roll in the preceding process may become the start portion of the roll map representing the electrode roll in the subsequent process. In addition, in the case of a double-sided electrode with both surfaces of the electrode coated with an active material, the surfaces of the electrode may be reversed, such that a top surface of the electrode in the preceding process may become a bottom surface of the electrode in the following process. That is, the start/end reversal and the surface reversal of the electrode may occur according to the winding direction of the electrode in the preceding process and the unwinding direction of the electrode in the subsequent process. if a roll map in a respective process is made up based on the reversed electrode, the coordinates on the roll map made up in this respective process is also supposed to be reversed. Furthermore, the length of the electrode is subject to changes, e.g., due to cutting of the electrode in the longitudinal direction for removal of a defect or broken section and connecting of the cut electrode pieces, throughout a series of roll-to-roll processes. Since roll maps in respective processes reflect such a reversal and a change in length, each of the roll maps may have different coordinate values.

In the final process (e.g., the notching process) of the electrode manufacturing process, only the electrode parts that do not contain the electrode parts removed in the preceding processes (a survival electrode) are left. Since a battery is manufactured with the survival electrode, when a problem occurs in a finished or semi-finished battery, it is possible to track the cause of the problem with reference to the roll map of the final electrode. In addition, it is possible to track back the electrode part which has caused the problem, by making reference to the above-described roll maps of respective processes. As described above, the roll map is a useful tool for tracking quality as well as identifying quality and defects.

However, as described above, since the start and end portions and/or the surfaces of the electrode may be reversed and the length of the electrode may be changed throughout the series of roll-to-roll processes, the coordinates of the roll maps of respective processes may not match each other. Therefore, even if a roll map were made up for each process, it might be difficult to track the cause of the problem through a comparison with the roll map of the final survival electrode.

In order to solve the above problems, an aspect of the present invention is further directed to the system for making up the roll map capable of easily identifying the data on quality or defects of the survival electrodes left in the final process by matching the coordinate values of the roll maps of respective processes with the coordinate value of the final process in the series of roll-to-roll processes.

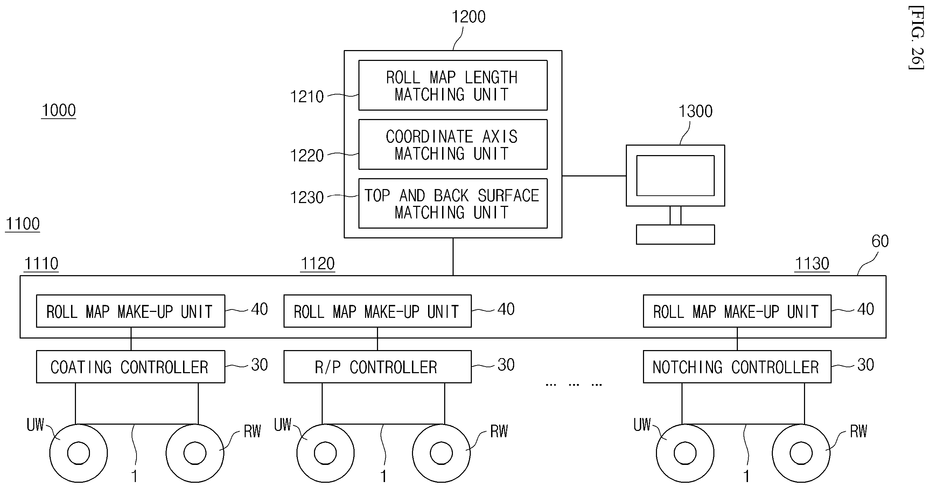

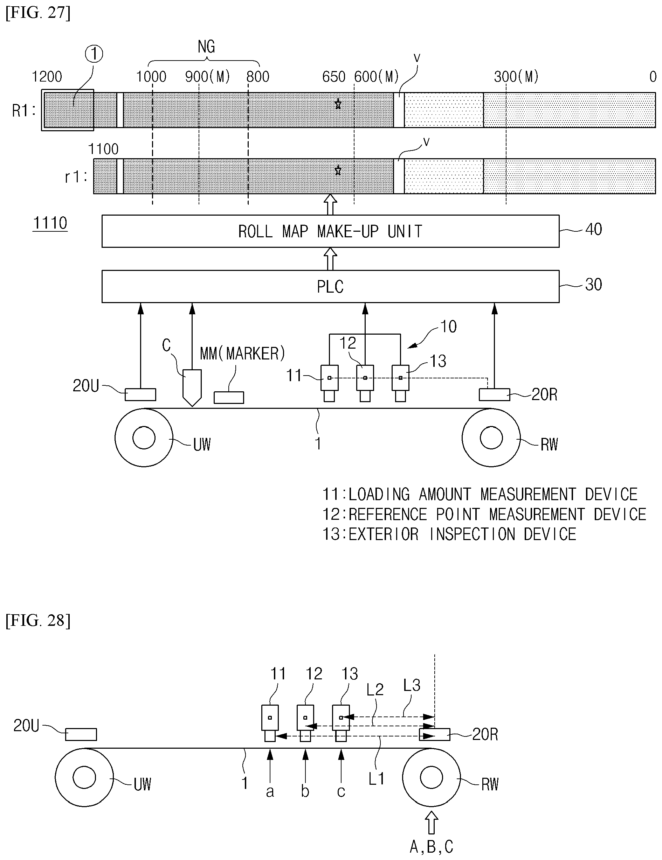

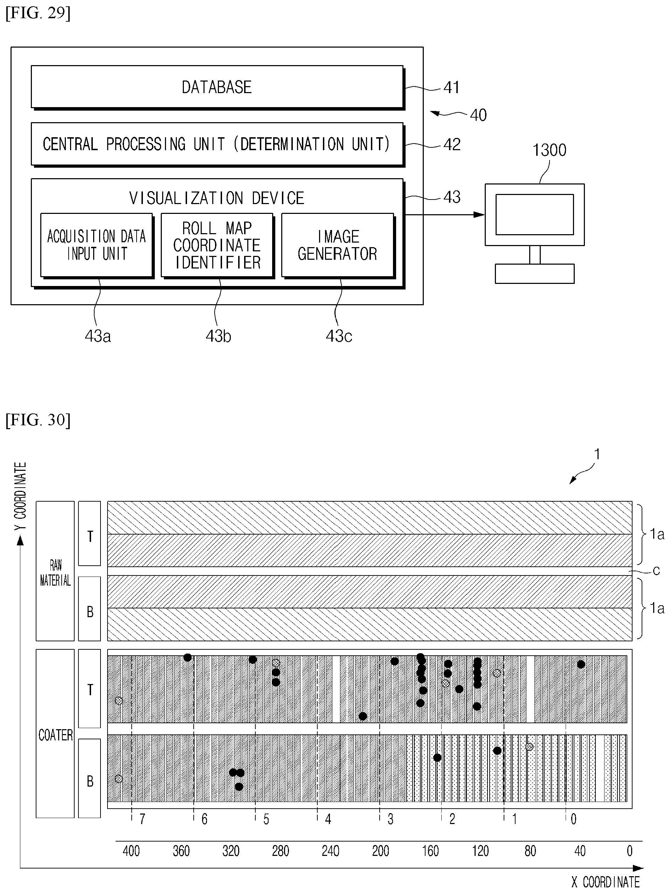

FIG. 26 is a schematic diagram of one embodiment of the system for making up the roll map according to the present disclosure, FIG. 27 is a schematic diagram showing one example of the apparatus for making up the roll map and the roll map in the electrode coating process, FIG. 28 is a schematic diagram showing a principle in which inspected data and coordinate values of the corresponding inspected data are acquired by the inspection device, and FIG. 29 is a schematic diagram showing one example of the roll map make-up unit.

As described above, a system 1000 for making up a roll map according to the present disclosure is a system for making up a roll map in the series of roll-to-roll processes, according to which the electrode 1 unwound from the unwinder UW moves and is wound around the rewinder RW, and such a process is sequentially and repeatedly performed. FIG. 26 shows an example of the coating process, the roll press (R/P) process, and the notching process as the series of roll-to-roll processes. The roll press process may be performed once or several times, as necessary. In addition, a slitting process of cutting the electrode 1 in the longitudinal direction may be intervened after the roll press process. Therefore, the series of roll-to-roll processes according to the present disclosure is not limited to the example of FIG. 26 and may include more or fewer roll-to-roll processes or other roll-to-roll processes depending on the type of the electrode 1 or manufacturing equipment therefor.

The system 1000 for making up the roll map according to the present disclosure includes: a roll map make-up unit 1100 for making a roll map for a respective process, capable of defining a coordinate planar surface having two coordinate axes including longitudinal and transversal axes of the electrode 1 and displaying positions of the electrodes 1 in each process by coordinate values of the coordinate planar surface; and a roll map matching unit 1200 for matching the coordinate values of the roll map of each process with a coordinate value of the roll map of the final process so that an actual electrode represented by the roll map of the final process can be matched with each actual electrode represented by the roll maps of other processes before the final process.

The roll map includes a visual expression displayed in a bar shape imitating the electrode 1 moving between the unwinder UW and the rewinder RW in the roll-to-roll state. Therefore, a length and a width of the roll map may correspond to a length and a width of the actual electrode by a predetermined ratio. That is, the roll map may be understood as a coordinate planar surface having two coordinate axes including the longitudinal and transversal axes of the electrode 1. In addition, the position of the electrode 1 may be expressed as coordinate value(s) of the coordinate planar surface. Therefore, for example, when a defect occurs at a specific position of the electrode 1, a position of the defect may be expressed as a specific coordinate value on the roll map as shown in FIG. 5. In FIG. 5, longitudinal coordinate values are displayed on the lower portion of the roll map. In FIG. 5, for simplicity of illustration, transversal coordinate values are not expressed on the roll map. However, exterior defects such as the pinhole defect f1 and the line defect f2 are visually displayed at the position of the corresponding defects in the longitudinal and transversal coordinates. As described above, the roll map may clearly display defects and the like at positions on the coordinate planar surface represented by two coordinate axes (longitudinal and axial coordinates).

Such a roll map may be made up for each sub-process in the roll-to-roll processes. FIG. 26 shows an apparatus 1100 for making up a roll map of a coating process, an apparatus 1120 for making up a roll map of a roll press process, and an apparatus 1130 for making up a roll map of a notching process. Hereinafter, the apparatus for making up the roll map according to the present disclosure, comprising the apparatuses 1110, 1120, and 1130 for making up the roll map of respective process may be referred to by the reference sign 1110 for simplicity reasons.

FIG. 27 shows one example of the apparatus 1110 for making up the roll map of the electrode coating process.

The apparatus 1110 for making up the roll map includes the position measurement device 20, the inspection and/or measurement device 10, and the roll map make-up unit 40.

In the roll-to-roll processes, the electrode 1 is mounted between the unwinder UW and the rewinder RW. In the roll-to-roll processes, the electrode 1 is unwound from the unwinder UW, and the active material is coated by the coater C. After coating, reference points are marked by a maker MM on the non-coating part 1b of the electrode 1 at predetermined intervals. When the length of the electrode is changed by breakage, defect removal, or the like, the changed length of the electrode may be identified by a change in the interval between the reference points M. Since the electrode 1 is moved by the rotations of the unwinder UW and the rewinder RW, the longitudinal position on the electrode 1 may be specified according to the amount of rotation of the unwinder UW or the rewinder RW. The position measurement device 20 may acquire the longitudinal position of the electrode 1 as a coordinate value of the longitudinal axis of the electrode. For example, in the electrode 1 with a length of 1200 meters, when a coordinate value acquired by the position measurement device 20 is zero, this indicates the start portion of the electrode 1, and when a coordinate value of 1200 meters is acquired, this means the end portion of the electrode 1. As the position measurement device 20, the rotary encoders 20U and 20R installed at the unwinder UW and the rewinder RW may be used. Generally, the rotary encoders 20U and 20R are installed at a motor driving unit for driving the unwinder UW and the rewinder RW to detect an electrode movement distance according to the number of rotations (amount of the rotation) of a motor. Therefore, when the electrode 1 moves between the unwinder UW and the rewinder RW, the movement distance may be detected by the rotary encoders 20U and 20R. Although FIG. 27 shows that the encoder 20U of the unwinder and the encoder 20R of the rewinder are respectively disposed outside the unwinder UW and the rewinder RW for convenience of description, the encoders are respectively embedded in the unwinder UW and the rewinder RW. However, the roll map may be made up after the electrode 1 is completely wound around the rewinder RW and an electrode winding roll is completed, that is, after all coordinate data along the length of the electrode and all inspected and/or measured data are acquired. Therefore, it is preferable to use the rotary encoder 20R installed at the rewinder RW as the position measurement device 20 for making up the roll map. In the present disclosure, making up the roll map and matching the roll map will be described according to the coordinate values acquired based on the rewinder.

The apparatus 1110 for making up the roll map also includes a predetermined inspection and/or measurement device 10 for measuring the quality or defects of the electrode 1, provided adjacent to an electrode movement line.

The inspection and/or measurement device 10 may acquire the inspected and/or measured data by inspecting the electrode 1 and may be connected to the position measurement device 20 by wire or wirelessly to acquire, together with the inspected and/or measured data, a coordinate value of the longitudinal axis of an electrode part for which inspected and/or measured data has been acquired. The inspected and/or measured data may include data on quality or defects of the electrode 1 and data on the positions of the above-described reference points.

The inspected and/or measured data may be one or more of the following items:
i) data on at least one of a dimension and a width of the electrode;
ii) data on mismatch between an electrode coating part and an electrode non-coating part;
iii) data on a slurry loading amount on the electrode;
iv) data on an exterior of the electrode;
v) data on a position of an electrode disconnection section, a connection position between the electrodes, or a joint on the electrode;
vi) data on a position of a sample inspection unit;
vii) data on a position of an electrode discard section;
viii) data on insulation quality or defects in an insulating material coating process performed after electrode slurry coating;
ix) other defect data;
x) data on reference points marked on the electrode at predetermined intervals; and
xi) data on a thickness of the electrode after a roll press.

The inspection and/or measurement devices 10 installed in each process may be different. Therefore, the inspected and/or measured data inspected in each process may be different depending on the processing performed in each process.

FIG. 27 shows the loading amount measurement device 11, the reference point measurement device 12, and the exterior inspection device 23 as the inspection and/or measurement device 10.

In the coating process, the coating amount at the time of slurry coating, that is, the loading amount is important. Therefore, in the coating process, the slurry loading amount is measured by the loading amount measurement device 11. When the loading amount is out of a set range, it is determined as a defect, and the defect may be visually displayed on the roll map to be distinct from other parts by a visualization device, to be described below. Alternatively, even when the loading amount is in a normal range that is not a defect, the range may be divided according to the amount and visually displayed in different colors. In this sense, the inspected and/or measured data according to the present disclosure is not limited to the defect but collectively includes data on quality. In FIG. 27, the loading amount is displayed on the roll map by varying a contrast from a dark color to a bright color. That is, the darkest color indicates an overloading amount, the next darker color indicates a normal loading amount, and the brightest color indicates an underloading amount. However, this is only one example of the visual expression of the loading amount, and the loading amount may be displayed by various methods, such as color, saturation, and contrast.

In addition, there is a case in which reference points are marked on the electrode 1 at predetermined intervals and used for calculating a length of a broken electrode or the like. The reference point measurement device 12 for detecting the positions of the reference points M may also be provided as the inspection and/or measurement device 10.

Meanwhile, when the electrode is broken during the process and connected by the joint connection member (connection tape), the joint measurement device for detecting the joint may also be provided as one of the inspection and/or measurement devices 10.

In addition, the dimension and width measurement device for measuring the dimensions and widths of the coating part and the non-coating part may also be provided as the inspection and/or measurement device 10. The dimension and width measurement device may also determine that the dimension and the width out of set ranges are defect data or divide the data in a normal range according to the ranges of the dimension and the width to display each of the divided data by a different visual image. Data on the mismatch between the coating part and the non-coating part on the electrode 1 or the like may also be acquired by the dimension and width measurement device.

In addition, the electrode exterior inspection device 13 may also be provided to obtain data on the exterior of the electrode including exterior defects of the electrode, such as a pinhole defect and a line defect.

The above-described inspection devices are illustrative of those mainly used in the electrode coating process, and when the process is different, for example, in the roll press process, an inspection device for obtaining data on the thickness of the electrode after rolled by the press roll may be employed instead of the above-described loading amount inspection device.

The inspection and/or measurement device 10 is not limited to the devices described above, and when there are other measurement parameters capable of being obtained from the electrode 1, other inspection and/or measurement devices 10 capable of inspecting such other measurement parameters may also be applied to the apparatus 1100 for making up the roll map according to the present disclosure. In addition, the inspection and/or measurement devices 10 are not necessarily provided separately, and a plurality of inspected and/or measured data may be acquired by one inspection and/or measurement device 10, and in this case, it is possible to reduce the number of necessary inspection and/or measurement devices 10. Alternatively, a same type of inspection and/or measurement device 10 may be provided in plurality, depending on the required purposes. That is, since a color sensor as the joint measurement device inspects an exterior, the color sensor may also be regarded as an exterior inspection device 13. In addition, the vision measurement device may be regarded as the dimension and width measurement device because it may measure mismatch but may also be regarded as the reference point measurement device because it may also detect the reference points using the vision sensor included in the corresponding measurement device.

The electrode inspection and/or measurement devices 10 may transmit the coordinate value (position data) of the electrode part for which the corresponding inspected and/or measured data has been acquired together with the inspected and/or measured data to the roll map make-up unit 40 to be described below through the controller 30 for controlling the current roll-to-roll transfer process or directly in conjunction with the position measurement device 20. The roll map make-up unit 40 may visually display the inspected and/or measured data and the coordinate values on the roll map of the coating process.

FIG. 28 is a schematic diagram showing a principle for acquiring inspected data by an inspection device and coordinate values of the corresponding inspected data.

In FIGS. 27 and 28, when the inspection and/or measurement device inspects the electrode 1 and acquires the inspected data, the position of the electrode part corresponding thereto is detected by the position measurement device 20 of the rewinder RW. At that time point, however, the electrode part from which the inspected data has been acquired has not yet arrived at the rewinder RW. In the embodiment, since the coordinates of the roll map are based on the rewinder RW - in other words, obtained by the encoder 20R provided at the rewinder RW, a longitudinal coordinate value of an electrode part is that of the electrode part that actually arrives at and is detected by the rewinder RW. Therefore, the longitudinal coordinate value of the electrode part for which the inspected data has been acquired is to be obtained by adding the encoder value (longitudinal coordinate value) of the rewinder RW at the time of acquiring the data and a distance (offset distance) from the rewinder RW to a corresponding inspection device. For example, a longitudinal coordinate value of an electrode part whose loading amount has been detected by the loading amount measurement device 11 is to be obtained by adding the encoder value (coordinate value) A of the rewinder RW at the time of detection and an offset distance L1 between the loading amount measurement device 11 and the rewinder RW. In the same way, a longitudinal coordinate value of an electrode part b which has been inspected by the reference point measurement device 12 is obtained by adding an encoder value B of the rewinder RW at the time of inspection and an offset distance L2 between the reference point measurement device 12 and the rewinder RW. In addition, a longitudinal coordinate value of an electrode part c is obtained by adding an encoder value C of the rewinder RW at the time of inspection by the exterior inspection device 13 and an offset distance L3 between the exterior inspection device 13 and the rewinder RW.

Meanwhile, a transversal coordinate value of the electrode part for which the inspected and/or measured data has been acquired may be acquired by the inspection and/or measurement device.

For example, the inspection and/or measurement device 10 such as the exterior inspection device shown in FIG. 27 may include a program capable of scanning and inspecting the exterior of the electrode 1 in the width direction of the entire electrode 1. Alternatively, the inspection device itself may be movably installed in the width direction of the electrode. Alternatively, a plurality of inspection devices may be installed in the width direction of the electrode. Therefore, the inspection and/or measurement device 10 may acquire data on quality or defects (e.g., loading amount data or exterior defect data) for multiple point of the electrode in the width direction, and the transversal position data (coordinate values) for which the data has been acquired may also be acquired by the inspection and/or measurement device 10. Therefore, each inspection and/or measurement device 10 may acquire all of the inspected and/or measured data (e.g., the data on quality or defects), the longitudinal and transversal coordinate values of the electrode 1 for which the inspected and/or measured data has been acquired and transmit all data to the roll map make-up unit 40 to be described below.

FIG. 29 is a schematic diagram showing one example of the roll map make-up unit 40.

The apparatus 1110 for making up the roll map includes the roll map make-up unit 40 for making up the roll map in conjunction with the position measurement device 20 and the inspection and/or measurement device 10. The roll map make-up unit 40 may include a database 41 for storing the data acquired from the inspection and/or measurement device 10 and the position measurement device 20 or storing data on the quality, dimensions, and the like of the normal electrode. In addition, the roll map make-up unit 40 may include a central processing unit 42 for processing the acquired data and instructing the visualization device 43 provided in the roll map make-up unit 40 to visualize the data.

The roll map make-up unit 40 includes the visualization device 43 capable of defining a visualization region in which the coordinate planar surface of the roll map imitating the electrode 1 is to be set and displaying on the defined region coordinate values of the longitudinal and the transversal axes of the electrode and the inspected data. The visualization device 43 may visualize and display the inspected and/or measured data on the corresponding coordinate values of the inspected and/or measured data. The visualization device 43 may be connected to the central processing unit 42 to visualize and display the inspected and/or measured data and the data of the coordinate values according to instructions from the central processing unit.

Referring to FIG. 29, the visualization device 43 includes the acquisition data input unit 43a, the roll map coordinate identifier 43b, and the image generator 43c.

The acquisition data input unit 43a receives data from the database 41 or the central processing unit connected to the database 41.

The roll map coordinate identifier 43b may define the visualization region in which the roll map is to be formed and coordinate values of pixels are to be defined for each data element of the acquired source data. In this case, when data on specifications, such as a lot number, a length, and a width of the electrode roll, is input to the controller 30, a server (not shown), or the like by registering information on the electrode roll, the roll map coordinate identifier 43b may calculate and determine the visualization region of the roll map using the data on the size of the electrode 1, according to a predetermined conversion scale. Alternatively, the roll map coordinate identifier 43b may also calculate and determine the visualization region of the roll map according to a predetermined conversion scale, using the above-described longitudinal and transversal data of the coordinate values of the electrode 1.

The roll map coordinate identifier 43b may map the acquired data on quality or defects with the (longitudinal and transversal) position data of the electrode 1 and allocate the mapped data on the visualization region (roll map) according to the coordinates of the pixels.

The image generator 43c may express the mapped data elements allocated to coordinates of respective pixels in the visualization region using one or more symbols that may form a legend. The symbol refers to various shapes, such as a circle, a quadrangle, and a triangle, displayed in the visualization region, the shapes to which colors are provided, or the like. Therefore, the roll map according to the present disclosure may be made up by the image generator 43c which visually displays and implements in the visualization region various data on quality or defects at the coordinates of the pixels (coordinates on the roll map) corresponding to respective position data of the actual electrode 1 by using designated shapes, forms, or colors for respective data.

In addition, based on the data stored in a storage such as the database 41, data corresponding to a specific range may be loaded from the storage in conjunction with the specific range of the roll map and displayed (generated as an image) on a screen. At this time, the central processing unit 42 may instruct the visualization device 43 to visualize and display inspected data to be distinct from other data, if determined abnormal in comparison to normal data stored in the database 41.

Setting the size of the visualization region or identifying the coordinates of the visualization region to generate images may be performed by various conventional user interfaces or various programs or processing tools related to data allocation-processing-analysis and visualization. Therefore, the roll map make-up unit 40 is only one example and is not limited to the above-described embodiment.

The roll map make-up unit 40 may be, for example, a data processing system, such as an MES, or one component of the corresponding data processing system. The data processing system is a system (including hardware or software) for performing input, processing, output, communication, and the like, in order to perform a series of operations on data. In the electrode 1 manufacturing process, an electrode MES, an assembly MES, and the like for managing a series of electrode manufacturing processes such as coating, pressing, and slitting is provided. Therefore, when the above-described data of the coordinate values, inspected data, and the like are transmitted to the MES, the above-described roll map may be made up by the MES.

The apparatus 1110 for making up the roll map may further include the controller (PLC) 30 for controlling the electrode movement between the unwinder UW and the rewinder RW.

The controller 30 may transmit the inspected and/or measured data and the coordinate values of the electrode part for which the inspected and/or measured data has been acquired to the roll map make-up unit 40 in conjunction with the position measurement device 20 and the inspection and/or measurement device 10. In this case, the controller 30 may match the coordinate values with the inspected and/or measured data or process the inspected data and the coordinate data such that they may be easily processed by the roll map make-up unit 40. Since the PLC 30 is connected to the inspection and/or measurement device 10, the encoder, or the like to control the roll-to-roll transfer of the electrode, the inspection and/or measurement device 10, the encoder, or the like may more efficiently transmit the data through the controller 30 than directly transmitting the data to the data processing system such as the MES in terms of data processing and management.

In addition, the controller 30 of each roll-to-roll process stores information on the winding direction of the electrode in the rewinder RW and the unwinding direction of the electrode in the unwinder UW. That is, information on whether the winding direction of the electrode is a forward direction (clockwise) or a reverse direction (counterclockwise) and whether the unwinding direction of the electrode is a forward direction or a reverse direction is automatically stored in the controller 30 for controlling the corresponding roll-to-roll process. As will be described below, in the preceding and following processes, the start and end portions of the electrode may be reversed, or the top and bottom surfaces of the electrode 1 be reversed according to the winding direction and the unwinding direction of the electrode. Therefore, by transmitting such information to the roll map matching unit 1200 to be described below, the roll map matching unit 1200 may match the roll maps of respective processes by reflecting the coordinate values thereof.

The roll map make-up unit 40 makes up the roll map with the above-described data. FIG. 27 shows an example of such a roll map.

An absolute coordinate roll map R1 of the coating process is shown at an uppermost end of FIG. 27, and a relative coordinate roll map r1 is shown thereunder. The absolute coordinate roll map R1 is a roll map that displays in a coordinate space coordinate values of survival electrode which do not include removed electrode parts, as well as coordinate values of electrode parts that have been removed in a respective process and/or in between processes, . The relative coordinate roll map r1 is a roll map that displays only the coordinate values of the survival electrode, excluding the removed electrode parts in the coordinate space.

Since the relative coordinate roll map r1 represents the survival electrodes that have survived after finishing the relevant process, the relative coordinate roll map r1 is a roll map representing the actual electrode after the corresponding process.

FIG. 27 shows a roll map of an electrode with a total length of 1200 meters. Reference points M are marked at points of 300, 600, and 900 meters, which are 25%, 50%, and 75% points of the electrode, and each of the reference points M is displayed on the roll map of the corresponding coordinate value based on the data detected by the reference point measurement device 12. In addition, the loading amount is also displayed by varying a contrast throughout the corresponding coordinate section. However, a section v displayed in white without contrast is a section not inspected by the loading amount measurement device 21. When the electrode moves in the roll-to-roll state, the section in which the inspection device may not acquire data may occur due to various causes, such as fluctuation of the electrode, sensitivity of the inspection device, problems in data communication, and the like.

Meanwhile, coordinates of right ends of the roll maps R1 and r1 have coordinate values of zero as start portions and coordinates of left ends thereof have coordinate values of 1200 meters as end portions. The winding of the rewinder RW starts at the start portion, and an encoder value (coordinate value) of the rewinder RW at this time is zero. When the winding is ended, the encoder value of the rewinder becomes 1200. However, when the electrode 1 was wound by 1100 meters, the end portion of the electrode was actually cut off by 100 meters. As described above, cutting off an electrode part after the electrode roll is completed is referred to as "removal after completion." Since the start and end portions of the electrode often have non-uniform quality, the electrode 1 is often cut off before the unwinding starts or at the time point at which the winding ends. In this regard, there is a case in which the defect section or the like is also cut off and the electrode pieces 1 are connected within the process being performed, which is referred to as "removal in the process." The roll map also displays information on a change in length of the electrode. Such a change in length of the electrode may be identified by detecting (inspecting) a change in interval between the reference points M. The absolute coordinate roll map R1 also displays the electrode with the length of 100 meters removed after completion, but the relative coordinate roll map r1 displays only the remaining electrode (survival electrode) excluding the removed electrode part. In the relative coordinate roll map, the end portion of the electrode is indicated by 1100 meters.

In addition, the defect section NG is also displayed on the roll map in FIG. 27. In the electrode coating process, a section between 800 meters and 1000 meters is determined as a defect section NG by the visual inspection device 13 or by a visual inspection by an operator, and a defect tag or the like may be attached to the defect section NG. The defect section NG may be detected by the inspection device detecting such a defect tag or the like and coordinates thereof may be displayed on the roll map.

In order to provide a reference for comparison when roll maps are matched and an overlay roll map is made up - to be described below, a specific position at 650 meters on the roll map is indicated by a star. The star may also be an exterior defect point and may be a reference point indicating a specific characteristic related to quality. The coordinate value of the longitudinal axis of the point indicated by the star is 650 meters. With the width of the electrode is 60 cm, the coordinate value of the transversal axis of the star point is set at 40 cm (0.4 m) from the lower end of the electrode. As described above, the coordinate value of the star point may be acquired by an inspection device capable of detecting the corresponding star point.

As shown in FIG. 29, the apparatus 1100 for making up the roll map displays the madeup roll map by the display unit 1300 so that data on quality or defects may be visually and easily identified at a glance.

In FIG. 27, the inspection and/or measurement device 10 may be positioned on the top surface of the electrode, and a roll map of the top surface of the electrode may be made up using the inspection and/or measurement device 10. However, a roll map of the bottom surface of the electrode may also be made up by installing the inspection and/or measurement devices on the bottom surface of the electrode. Alternatively, depending on the layout of the plant equipment, the respective roll maps of the top and bottom surfaces of the electrode may be separately made up by running the electrode under the inspection and/or measurement device with the top surface facing upward, and then running the electrode under the same inspection and/or measurement device again with the back surface facing upward, after reversing the electrode by a guide roll or the like.

FIG. 30 is a schematic diagram showing one example of a roll map showing the top and bottom surfaces of the electrode.

An upper part of FIG. 30 shows an input status of a raw material displayed in comparison with the roll map. That is, in the upper drawing, c indicates a current collector, and portion 1a indicates a coating part coated on top and bottom surfaces of the current collector. A lower part of FIG. 30 shows a roll map of the top surface T and the bottom surface B of the electrode. As shown, even for the same electrode, the top and bottom surfaces of the electrode have different loading amounts and exterior defects. Therefore, in the electrode coating process, the roll map needs to be made up for both the top and the bottom surfaces.

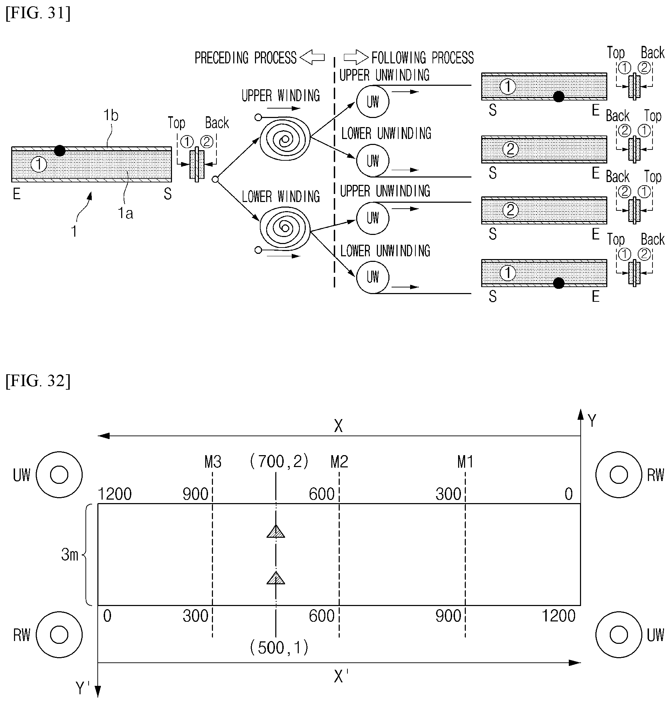

FIG. 31 is a schematic diagram showing an electrode reversal aspect according to a winding direction in the preceding process and an unwinding direction in the following process.

As shown in FIG. 31, the winding direction of the electrode in the rewinder RW of the preceding process is divided into an upper winding direction (forward direction: clockwise) and a lower winding direction (reverse direction: counterclockwise). As described above, the electrode winding rolls wound in two different directions may be respectively unwound in an upper unwinding direction (forward direction: clockwise) and a lower unwinding direction (reverse direction: counterclockwise).

According to the winding direction of the electrode in the rewinder RW of the preceding process and the unwinding direction of the electrode in the unwinder UW of the following process, an electrode path is divided into a total of four types.

First, when the winding direction of the rewinder in the preceding process is the upper winding direction and the unwinding direction of the unwinder in the following process is the upper unwinding direction, a start portion S and an end portion E of the electrode in the preceding process are reversed. When the start and end portions of the electrode are reversed, it means that the coordinate axes constituting the coordinate planar surface of the roll map move symmetrically.

FIG. 32 shows the reversal of the coordinate axes of the roll map between the preceding and following processes in one drawing. An upper part of the roll map in FIG. 32 displays the coordinate axes (X axis and Y axis) and coordinate values in the preceding process. In the preceding process, the electrode moves from the unwinder UW to the rewinder and is wound around the rewinder RW. In this case, coordinate values of triangular points were measured as having coordinates of the longitudinal axis (X axis) being 700 meters and coordinates of the transversal axis being 2 meters from the lower end of the electrode (assuming that the width of the electrode was 3 meters). When the electrode roll is completely wound around the rewinder RW of the preceding process and the electrode roll is mounted on the rewinder RW of the following process, a point of 1200 meters, i.e., the end portion of the electrode roll in the preceding process, becomes 0 meters, i.e., the start portion of the electrode roll in the following process. That is, due to the characteristics of the electrode roll, the start and the end portions of the electrode roll in the preceding process and the following process are reversed. Describing the reversal based on the coordinate planar surfaces of the preceding process and the following process, it can be seen that the longitudinal axis (X axis) of the preceding process moves symmetrically with respect to the transversal axis (Y axis) to become a longitudinal axis (X' axis) of the following process, and the transverse axis (Y axis) of the preceding process moves symmetrically with respect to the longitudinal axis (X axis) to become a transverse axis (Y' axis) of the following process. Therefore, the coordinate values (700 meters and 2 meters) of the triangular points in the preceding process are also reversed to (500 meters and 1 meter) in the following process.

The start/end reversal occurs in all of the four afore-mentioned types of the electrode paths.

In the first case in FIG. 31, the electrode path of the upper winding direction in the preceding process and the upper unwinding direction in the following process, a black point moves between the preceding and following processes, which means that the electrode in the preceding process has been reversed in the longitudinal and width directions in the following process. That is, the start/end reversal of the electrode occurred. In this case, the top and bottom surfaces of the electrode 1 are not reversed.

Second, when the winding direction of the rewinder in the preceding process is the upper winding direction (winding clockwise) and the unwinding direction of the unwinder UW in the following process is the lower unwinding direction (unwinding counterclockwise), the start/end reversal of the electrode 1 and the top/bottom reversal of the electrode 1 occur at the same time. For example, the electrode 1 moving in the state in which the top surface faces upward in the coating process is turned over and moves in a state in which the bottom surface faces upward in the roll press process. Therefore, these points should be considered when matching the roll map to be described below.

Third, when the winding direction of the rewinder in the preceding process is the lower winding direction (winding counterclockwise) and the unwinding direction of the unwinder in the following process is the upper unwinding direction (unwinding clockwise), the start/end reversal of the electrode 1 and the top/bottom reversal of the electrode 1 occur at the same time as in the second case.

Fourth, when the winding direction of the rewinder in the preceding process is the lower winding direction and the unwinding direction of the unwinder in the following process is the lower unwinding direction, only the start/end reversal of the electrode 1 occurs.

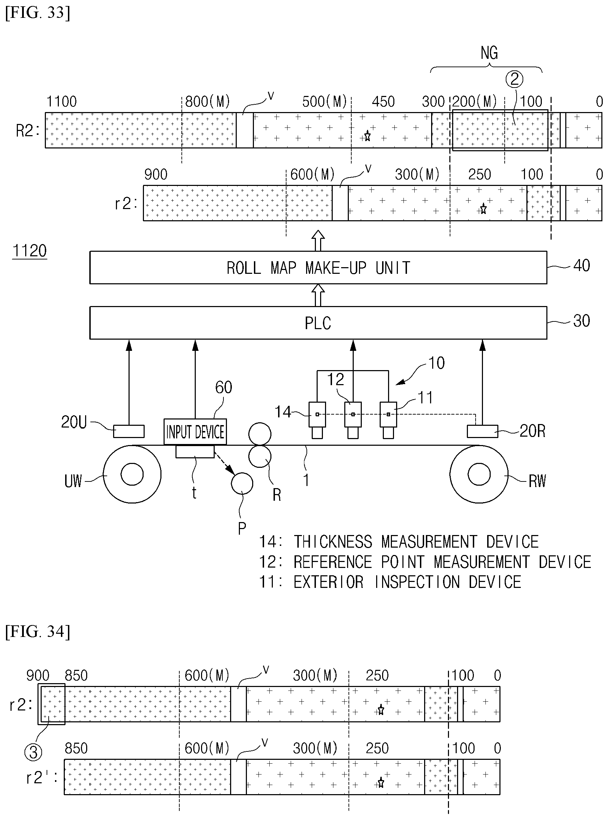

FIG. 33 is a schematic diagram showing one example of the apparatus 1120 for making up the roll map of the roll press process and the roll map thereof.

As in the above-described coating process, the position measurement device 20, the inspection and/or measurement device 10, and the roll map make-up unit 40 are also provided in the roll press process.

Since the roll press process is a process of rolling the coated electrode 1 in the coating process by the press roll R, a thickness of the electrode after rolling is important. Therefore, in the roll press process, the thickness measurement device 14 is provided instead of the loading amount measurement device. In addition, the roll press process is the same as the coating process in that the reference point measurement device 12 and the exterior inspection device 13 are provided. As the thickness measurement device 14, a predetermined displacement sensor, a confocal thickness sensor, or the like may be employed.

The roll map make-up unit 40 of the roll press process also forms the coordinate planar surface of the roll map in conjunction with the position measurement device 20 and the inspection and/or measurement device 10. An upper part of FIG. 33 shows a roll map including two roll map bars R2 and r2 of the roll press process. The roll map is visually displayed by varying hatching according to the thickness of the electrode. This roll map may also include portions v in which the inspected and/or measured data is not reflected.

The roll map bar at an uppermost end of FIG. 33 is the absolute coordinate roll map R2, and the roll map bar thereunder is the relative coordinate roll map r2.

Since the end portion of the electrode was removed by 100 meters at the end of the coating process or after the coating process was completed, the coordinate value of the end portion of the absolute coordinate roll map R2 of the roll press process is also 1100 meters. In addition, since the start and end portions of the electrode roll of the coating process and the roll press process are reversed, the coordinates of the roll map of the roll press process are also reversed. Therefore, the coordinate value of the reference point M of the coating process and the coordinate value of the reference point M of the roll press process are also changed. In addition, the coordinates of the star point are also changed from (650, 0.4) to (450, 0.2) according to the start/end reversal. In the roll press process, a section between 800 to 1000 meters marked as the defect section NG in the preceding coating process is reversed to become a section between 100 to 300 meters. The defect section is removed from a table t of a defect section processing port and discarded to the defect removal port P (scrap port).

The removal of the defect section NG may be reported to the controller 30 and the roll map make-up unit 40 by the input device 60. Since the section between 100 to 300 meters with defects is removed, the reference point in the defect section, the point M at 200 meters is also removed.

In the relative coordinate roll map r2 in FIG. 33, only coordinates of the survival electrode left after the defect section has been removed are displayed.

In the roll press process as well, a roll map may be made up respectively for the top and bottom surfaces of the electrode 1.

As described above, when the winding direction of the rewinder of the coating process is the upper winding direction and the unwinding direction of the unwinder of the roll press process is the lower unwinding direction, the top surface of the electrode in the coating process is reversed to the bottom surface of the electrode in the roll press process. In addition, when the winding direction of the rewinder of the coating process is the lower winding direction and the unwinding direction of the unwinder of the roll press process is the upper unwinding direction, the top surface of the electrode in the coating process is reversed to the bottom surface of the electrode in the roll press process. Such a reversal is to be stored in the controller 30 of the coating process and the controller 30 of the roll press process, and the roll map make-up unit 40 and the roll map matching unit 1200 may make up the roll maps of each process with reference to such information and match the roll maps of respective processes, as will be described below.

FIG. 34 is a schematic diagram showing a roll map, according to which an electrode part is removed after the roll press process is completed. To be specific, the end portion of the electrode is removed by 50 meters after the roll press process. Such a removal of the electrode part is well illustrated on the absolute coordinate roll map r2 and a relative coordinate roll map r2'.

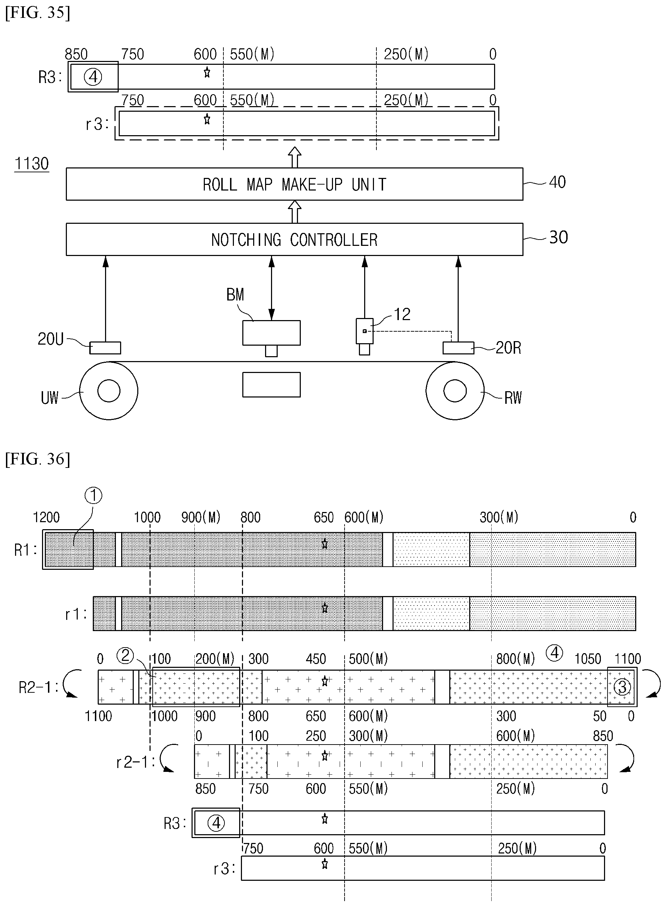

FIG. 35 is a schematic diagram showing one example of the apparatus 1130 for making up the roll map of the notching process and the roll map thereof.

In the notching process, an electrode tab is formed by punching the electrode moving in the roll-to-roll state using a punching tool BM. In addition, the reference point measurement device 12 may be provided to check a change in length of the electrode before and after the notching, or during the notching process.

An upper part of FIG. 35 shows one example of the roll map of the notching process. In the notching process after the roll press process, the start/end reversal of the electrode 1 occurs. Therefore, the coordinates of the star are reverted from (450, 0.2) to (600, 0.4). In addition, the end portion of the electrode is removed by 100 meters after notching. The coordinates of the removed electrode part are displayed on an absolute coordinate roll map R3 of the notching process, but only the coordinates of the roll map of the remaining survival electrode are displayed on a relative coordinate roll map r3. Through the coating process, the roll press process, and the notching process, a part of the electrode is removed a total of four times. Therefore, it can be seen that the electrode with a length of 1200 meters finally has a length of 750 meters.

Meanwhile, in the notching process, unlike the coating process or the roll press process, it is not necessary to separately make up the roll map of the top and bottom surfaces of the electrode. In the notching process, only punching is performed without performing a treatment on the top or bottom surface of the electrode. Therefore, only the reference point measurement device related to the change in length is installed without installing a complicated inspection and/or measurement device displaying the state of the electrode. That is, the properties of the top and bottom surfaces of the electrode may be sufficiently identified by the roll maps of the coating process and the roll press process, and in the notching process, the properties of the top and bottom surfaces are not particularly changed by notching. Therefore, in the notching process, it is sufficient to make up a roll map of a single planar surface displaying only the coordinate values on the coordinate planar surface, regardless of the top and bottom surfaces of the electrode.

As described above, the system 1000 for making the roll map according to the present disclosure includes the apparatus 1100 for making up the roll maps for respective processes. Referring back to FIG. 26, the coating process, the roll press process, and the notching process include the apparatuses 1110, 1120, and 1130 for making up the roll map, respectively. The apparatuses 1110, 1120, and 1130 for making up the roll map of the respective process are to be considered as constituting, in combination, the apparatus 1100 for making up the roll map according to the present disclosure. For convenience of description, FIG. 26 shows that the roll map make-up units 40 of respective processes are provided separately. However, as described above, the roll map make-up unit 40 may be the MES or one component of the MES, and one integrated system may make up all roll maps for all processes. In FIG. 26, an overall single roll map make-up unit 40 that may be an integration of the respective roll map make-up units is shown in a large quadrangle box.

As described above, between the roll press process and the notching process, there may be provided another roll-to-roll process, such as a second roll press process or a slitting process. Therefore, in the series of roll-to-roll processes, the start/end reversal and surface reversal of the electrode roll may occur more frequently. The roll map make-up unit 40 may make up roll maps for respective processes by reflecting all pieces of such reversal information.

The system 1000 for making up the roll map according to the present disclosure includes the roll map matching unit 1200 for matching the coordinate values of the roll maps of respective processes with the coordinate value of the roll map of the final process, so that the actual electrode represented by the roll map of the final process in the series of roll-to-roll processes can be matched with each actual electrode represented by the roll map of respective process prior to the final process.

As described above with reference to FIGS. 26 to 35, when the roll-to-roll process continues to be performed, the start/end reversal of the electrode roll between the preceding process and the following process necessarily occurs, and the surface reversal of the electrode roll may also occur according to the winding direction in the preceding process and in the following process. In addition, since the electrode part is removed in each process, the lengths of the roll maps and the coordinate values in respective processes are also to be changed. Therefore, since the coordinate values of the roll maps of respective processes are changed, it is difficult to compare these roll maps based on the same criterion. In any case, of importance is the electrode part that survives after the final process and is manufactured as an actual battery. When a problem occurs in the battery manufactured with the survival electrode, it is necessary to retroactively investigate with which electrode part in which sub-process of the electrode manufacturing process the battery has been manufactured. However, as described above, the roll maps of respective processes have different coordinate values, making it difficult to track the quality of a specific position within the electrode.

According to the present disclosure, the roll map matching unit 1200 is provided to compare the roll maps of respective processes based on the same criterion or with the same coordinate values. The roll map matching unit 1200 matches the roll maps of respective processes so that the actual electrode represented by the roll map of the final process among the series of roll-to-roll processes matches each actual electrode represented by the roll map of each process before the final process. That is, the roll maps are matched so that the actual electrode (survival electrode) of the final process corresponds to the actual electrode of each process before the final process. From this point of view, the roll map matching unit 1200 matches the actual electrodes of each process and the final process with the roll maps corresponding thereto. The matching of the roll maps is performed by matching the coordinate values of the roll maps of respective processes with the coordinate value of the roll map of the final process.

FIGS. 36 to 38 are schematic diagrams showing a roll map matching process according to the present disclosure.

FIG. 36 shows the absolute coordinate roll map R1 and the relative coordinate roll map r1 of the coating process, the absolute coordinate roll map R2 and the relative coordinate roll map r2 of the roll press process, and the absolute coordinate roll map R3 and the relative coordinate roll map r3 of the notching process sequentially from the top. The roll maps are made up by the respective roll map make-up units 1100 in FIGS. 27, 33, and 35.

As described above, the relative coordinate roll map represents the actual electrodes in each process not including the electrode parts removed during the corresponding process or in between processes. Therefore, the roll map matching operation of the roll map matching unit 1200 is to match the coordinate values of the relative coordinate roll maps of each process before the final process with the coordinate value of the relative coordinate roll map of the final process.

Referring to FIG. 26, the roll map matching unit 1200 may include a roll map length matching unit 1210, a coordinate axis matching unit 1220, and a top and bottom surface matching unit 1230.

In the series of roll-to-roll processes, parts of the actual electrodes may be removed before or after each process or during respective processes for reasons, such as defects or non-uniform quality. Therefore, the coordinate value of the roll map of the final process and the coordinate values of the roll maps of respective processes may not match. What's important is that the coordinate values of the roll maps of respective processes must match the coordinate value of the roll map of the final process, so that the actual electrode (survival electrode) represented by the roll map of the final process matches the actual electrodes represented by the roll maps of respective processes. When the length of the electrode is not changed between the start and final processes of the roll-to-roll processes, the roll map length matching is not required. However, due to the characteristics of the mass production process, the start and end portions of the electrode often have non-uniform quality, and a test production part or the like before mass production is often removed. Therefore, in practice, the length of the electrode is inevitably changed between the start and final processes for various reasons. In consideration of this, the roll map matching unit 1200 includes the roll map length matching unit 1210 according to the change in length of the electrode.

For the purpose of the roll map length matching, it is necessary to remove all coordinate sections corresponding to the actual electrode parts removed in the series of roll-to-roll processes from the roll map of the respective processes. In addition, by correcting the coordinate values of the remaining coordinate sections to correspond to the coordinate value of the roll map of the final process, the lengths of the roll maps of each process may get to match the length of the roll map of the final process.

In addition, considering the winding direction of the electrode in the rewinder RW of the preceding process and the unwinding direction of the electrode in the unwinder UW of the following process, if a start direction of a coordinate axis of a roll map of a specific process before the final process is opposite to a start direction of the coordinate axis of the roll map of the final process, the roll map matching unit 1200 matches the start direction of the coordinate axis of the roll map of the specific process with the start direction of the coordinate axis of the roll map of the final process. To this end, the roll map matching unit 200 may include the coordinate axis matching unit 1220 for matching coordinate axes.

As described above, due to the characteristics of the roll-to-roll processes, the start/end reversal in which the start and end portions are reversed inevitably occurs in the roll map of the preceding process and the roll map of the following process. Since the coordinate axis matching is to match the (start) direction of the coordinate axis of the roll map with that of the final process, it is sufficient to match only the start direction of the coordinate axis of the roll map of the specific process, which is opposite to the start direction of the coordinate axis of the roll map of the final process. The roll map of the process, whose direction of the coordinate axis of the roll map coincides with that of the final process does not need to be subject to such a coordinate axis matching operation.

Referring to FIG. 36, there are a total of four electrode part removal operations in the entire roll-to-roll process as follows:
① Removal of the end portion by 100 meters when the coating process is ended;
② Removal of the defect section by 200 meters during the roll press process;
③ Removal of the end portion by 50 meters after the roll press process; and
④ Removal of the end portion by 100 meters after the notching process is ended.

The relative coordinate roll map r3 of the notching process, which is the final process, has a total length of 750 meters due to the four-time removal of the electrode parts. In addition, the star point marked on the electrode for comparison purpose has a longitudinal coordinate value of 600 meter and a transversal coordinate value of 40 cm (0.4 m).

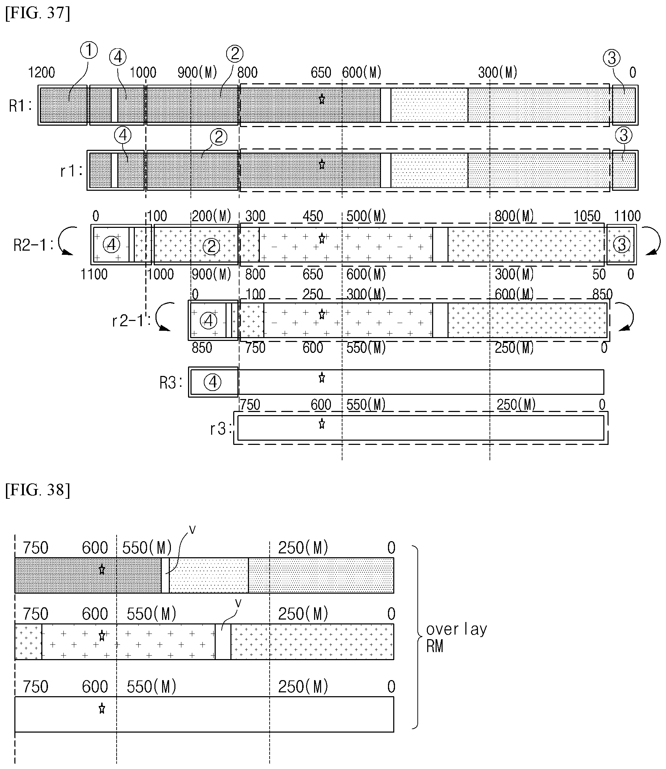

In order to match the length of the roll map of the final process, all coordinate sections of the electrode parts removed over four times throughout the entire roll-to-roll process are removed from the relative coordinate roll maps of respective processes, as shown in FIG. 37. In this case, portions indicated by dotted boxes in FIG. 37 become portions of the roll map represented by the finally surviving actual electrode.

In this case, since the start direction of the coordinate axis of the roll map of the coating process is the same as the start direction of the coordinate axis of the roll map of the notching process, the coordinate axis matching is not required. However, since the start direction of the coordinate axis of the roll map of the roll press process is reversed and different from the start directions of the coordinate axes of the roll maps of the coating process and the notching process, the coordinate axis matching operation is required.

In FIGS. 36 and 37, upper ends of the absolute coordinate roll map R2 and the relative coordinate roll map r2 of the roll press process displays coordinate values before the coordinate axis matching. These coordinate values coincide with the coordinate values of the roll maps shown in FIG. 33. When these coordinate values are reversed (corrected) like the values at the lower end of the same roll maps, the coordinate values become the same as the start direction of the coordinate axis of the roll map of the notching process. According to the matching of the coordinate axes of the roll maps, the coordinate values of the reference points, the coordinate value of the defect section, and the coordinate values of the star points of the absolute coordinate roll map and the relative coordinate roll map of the roll press process are all changed. Specifically, both the longitudinal axis and the transversal axis of the roll map of the roll press process get to match the directions of the coordinate axes of the notching process. In FIGS. 36 and 37, symbols indicated by R2-1 and r2-1 indicate that the coordinate axes of the absolute coordinate roll map R2 and the relative coordinate roll map r2 of the roll press process are reversed. That is, R2-1 indicates the absolute coordinate roll map of the roll press process in which the coordinate axes are reversed, and r2-1 indicates the relative coordinate roll map of the roll press process in which the coordinate axes are reversed.

In FIG. 37, the roll-to-roll processes consist of an odd number of processes (three times), and the directions of the coordinate axes of the roll maps of the first process (coating process) and the final process (notching process) correspond. Therefore, the coordinate axes of the roll map of the second (even numbered) process (roll press process), in which the directions of the coordinate axes have been reversed, are corrected/reversed to match the coordinate axes of the roll maps of the final process. However, when the entire roll-to-roll process consist of an even number of processes, coordinate axes of roll maps of an odd-numbered process, such as the first process, need to be corrected/reversed to match coordinate axes of the roll maps of the evennumbered, final process.

As described above, the coordinate axis matching is to be performed relatively based on the final process.

FIG. 38 shows a roll map finally matched by the roll map matching operation. From the roll maps of the coating process and the roll press process, the coordinate sections corresponding to the removed electrode section are removed, and the directions of the coordinate axes of the roll map are also corrected/reversed to match the direction of the coordinate axis of the roll map of the notching process. Therefore, the coordinate values of the roll map of the final, notching process exactly matches with the coordinate values of the roll maps of the preceding, coating and roll press processes. The coordinate values of the longitudinal and transversal axes of the star points are also matched in all the three roll maps as 600 meters and 0.4 meters.

As described above, the roll map in which the coordinate values of the roll maps of respective processes are matched to that of the survival electrode of the final process and then so-matched respective roll maps are arranged side by side to be viewed at once is referred to as an "overlay roll map." The roll map matching unit 1200 according to the present disclosure enables making up of the overlay roll map. When the overlay roll map is displayed by the display unit 1300, the quality history or manufacturing history of the final survival electrode may be identified at a glance.

Referring to FIG. 38, it can be seen from the (overlay) roll map of the roll press process that the battery manufactured with the unit electrode positioned at the star point is derived from the unit electrode having the rolled thickness indicated by a specific hatching in the roll press process (e.g., the rolled thickness in a normal range). In addition, it can be seen from the roll map of the coating process that the battery manufactured with the unit electrode positioned at the star point is derived from the unit electrode having an excessive loading amount coated more than the normal range in the coating process. For example, if ignition occurs in a battery manufactured with the unit electrode positioned at the star point, it may be determined that there is a problem with the corresponding unit electrode from the manufacturing history of the coating process. Alternatively, the star point may also relate to any exterior or other defect. That is, if a problem occurs in the electrode part positioned at the star point due to an exterior defect, to the effect that this part is removed, it is possible to identify in a simple way by referring to the overlay roll map from which electrode part in the electrode manufacturing process the portion corresponding to the exterior defect has been derived.

As described above, according to the present disclosure, by making up the roll maps of respective processes and matching them by the roll map matching unit 1200, it is possible to easily identify data on quality or defects of the survival electrode surviving in the final process.

In addition, it is possible to easily identify the inspection history in the electrode manufacturing process using the matched roll map (overlay roll map).

In addition, according to the present disclosure, even if the start and end portions of the electrode roll are reversed or the length of the electrode is changed during the series of roll-to-roll processes, by making up the overlay roll map through the above-described roll map length matching and coordinate axis matching, it is possible to intuitively and quickly track a problem with the quality of the electrode.

Meanwhile, when the top surface of the electrode in the preceding process is reversed to the bottom surface of the electrode in the following process according to the winding direction of the electrode in the rewinder RW of the preceding process and the unwinding direction of the electrode in the unwinder UW of the following process, the matching unit 1200 may match the roll maps by reflecting such a surface reversal.

As shown in FIG. 31, the top and the bottom surfaces of the electrode may be reversed between the preceding and following processes according to the winding and unwinding directions of the electrode in the preceding and following processes.

In this case, information on the electrode surface reversal is stored in the roll map matching unit 1200. For example, the controller 30 of each process retains information on the winding and unwinding directions of the electrode because it controls the electrode movement and the winding and unwinding of the electrode. The roll map matching unit 1200 may receive the information on the surface reversal from the controllers and store the information in the top and bottom surface matching unit 1230.

The top and bottom surface matching unit 1230 of the roll map matching unit 1200 matches the roll map of the top surface of the electrode in the preceding process with the roll map of the bottom surface of the electrode in the following process according to the information.

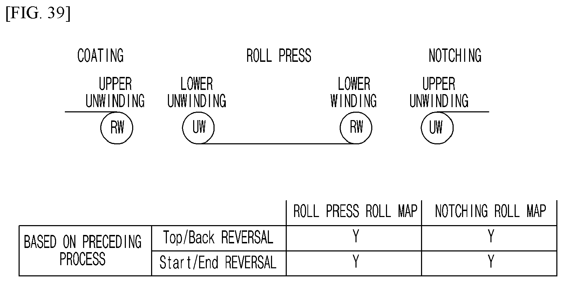

FIGS. 39 to 41 show an example of making up an overlay roll map by the surface matching.

Referring to FIG. 39, the electrode is wound around the rewinder RW of the coating process in the upper winding direction and unwound in the lower unwinding direction in the roll press process. That is, the top surface of the electrode in the coating process is reversed to the bottom surface of the electrode in the roll press process. The top and bottom surface matching unit 1230 receives and records the information on the surface reversal from the controllers 30. For example, a control logic value when the surface reversal (top/bottom reversal) does not occur between the preceding and following processes may be set to zero, and a control logic value when the surface reversal occurs may be set to 1.

In addition, the electrode is wound around the rewinder RW of the roll press process in the lower winding direction, and unwound from the unwinder W of the notching process in the upper unwinding direction. In this case, the surface reversal of the electrode occurs again, and in this case, the control logic value is set again to 1 by the top and bottom surface matching unit 1230. However, since the roll map of the notching process is made up as only a roll map of a single planar surface regardless of the surface of the electrode, there is not a big problem even when the reversal information is not reflected at the time of making up the overlay roll map when there occurs the surface reversal between the roll press process and the notching process. Referring to FIG. 39, it can be seen that the start/end reversal has also occurred between the coating process and the roll press process and between the roll press process and the notching process.

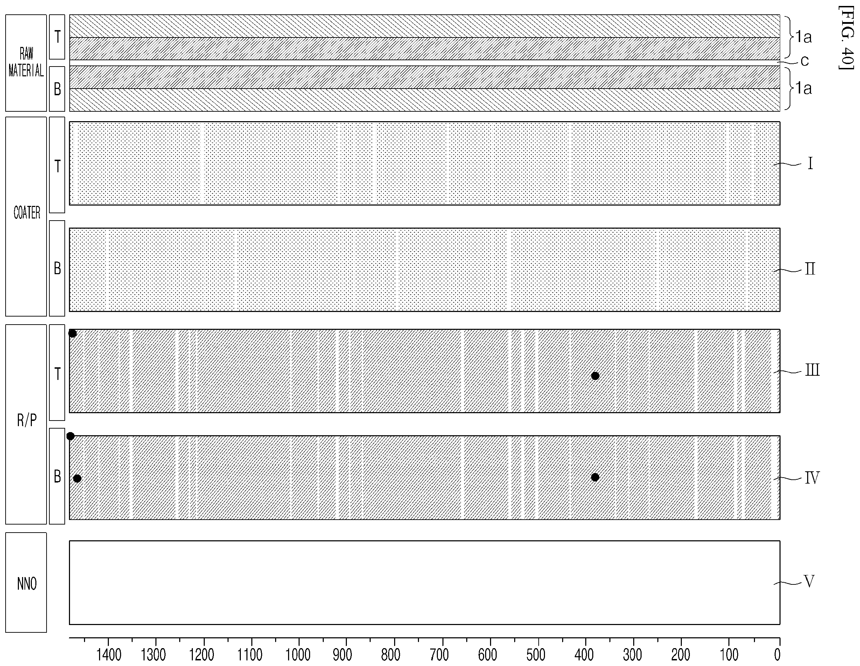

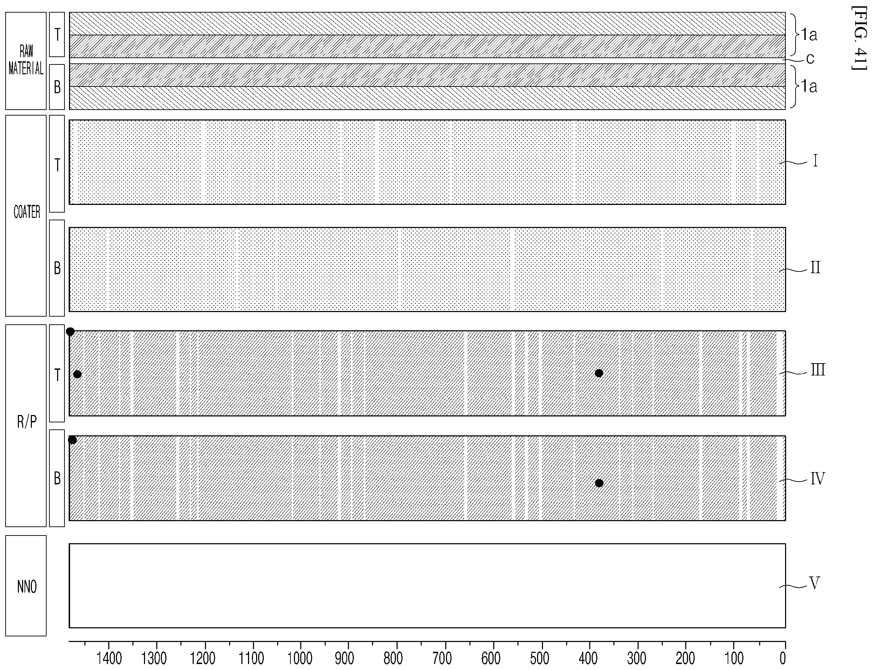

FIGS. 40 and 41 show one example of the above-described overlay roll map in which the roll map length matching and the coordinate axis matching are performed by reflecting the change in length of the electrode and the change in coordinate axes.

FIG. 40 shows an overlay roll map when the surface reversal does not occur between the coating process and the roll press process, and FIG. 41 shows an overlay roll map when the surface reversal occurs.

Referring to FIG. 40, since no surface reversal has occurred, a roll map I of the top surface T of the electrode in the coating process corresponds to a roll map III of the top surface T of the electrode in the roll press process.

In this case, a control logic value is set to 0 in the top and bottom surface matching unit 1230. That is, the roll map I of the top surface of the electrode, which is indicated by T, in the coating process corresponds to the roll map III of the top surface of the electrode, which is indicated by T, in the roll press process. In this case, since the overlay roll map of the top surfaces of the electrodes from the coating process to the notching process consists of I, III, and V, it is possible to identify quality and product histories between the processes. Likewise, the overlay roll map of the bottom surfaces B of the electrodes consists of II, IV, and V.

Referring to FIG. 41, since surface reversals have occurred, the roll map I of the top surface T of the electrode in the coating process corresponds to the roll map IV of the bottom surface B of the electrode in the roll press process. In this case, a control logic value is set to 1 in the top and bottom surface matching unit 1230. That is, the roll map I of the top surface of the electrode, which is indicated by T, in the coating process corresponds to the roll map IV of the bottom surface of the electrode, which is indicated by B, in the roll press process. In this case, since the overlay roll map of the top surfaces of the electrodes from the coating process to the notching process consists of I, IV, and V, it is possible to identify quality and product histories between the processes. Likewise, by also reflecting the surface reversal information to the bottom surface of the electrode, the roll map II of the bottom surface of the electrode in the coating process corresponds to the roll map III of the top surface T of the electrode in the roll press process. Therefore, the overlay roll map of the bottom surface of the electrode consists of II, III, and V.

As described above, if the top and bottom surface matching unit 1230 is not provided with the information on the surface reversal and does not match the surface reversal between the roll maps, there occurs a problem that roll maps representing opposite surfaces of the actual electrodes may be compared, e.g., in the coating process and the roll press process. In this case, since the consistency of quality tracking using the overlay roll map is damaged, the quality tracking may not be performed accurately.

The roll map matching unit 1200 according to the present disclosure may perform top and bottom surface matching, in addition to the above-described roll map length matching and coordinate axis matching. Therefore, by making up the overlay roll map by the roll map matching of a predetermined logic even when the top and bottom surfaces of the electrode are reversed in a series of roll-to-roll processes, it is possible to quickly and intuitively track a problem with the quality of the electrode.

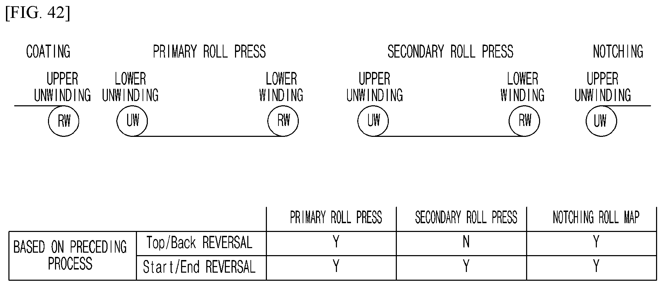

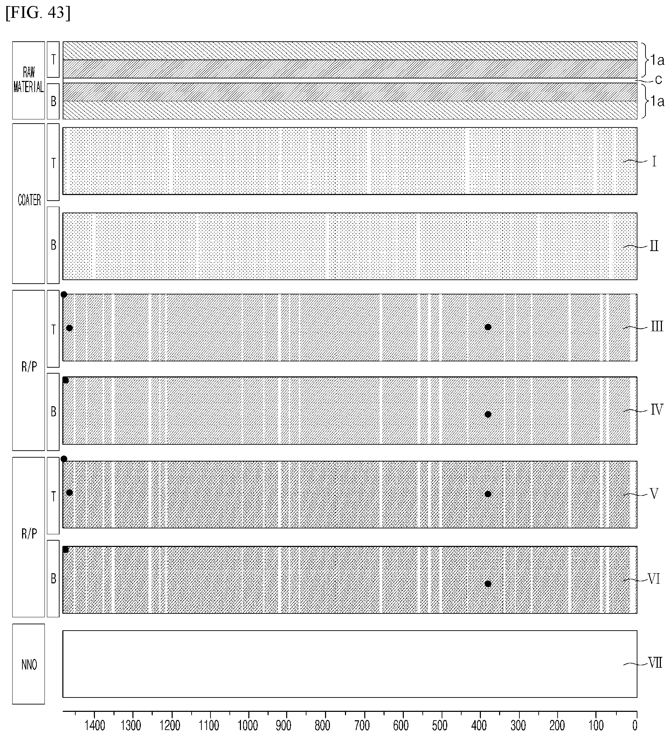

FIGS. 42 and 43 are schematic diagrams showing a series of roll-to-roll processes according to another embodiment and overlay roll map in the corresponding processes. The embodiment shows a case in which the roll press process is performed twice.

Referring to FIG. 42, the electrode surface reversal occurs between the coating process and a primary roll press process. However, since the electrode is wound around the rewinder RW of the primary roll press process in the lower winding direction and the electrode is unwound from the unwinder UW of a secondary roll press process in the lower unwinding direction, the electrode surface reversal does not occur between the primary and secondary roll press processes. Therefore, the top and bottom surface matching unit 1230 sets a control logic value to 1 between the coating process and the primary roll press process and sets a control logic value to 0 between the primary roll press process and the secondary roll press process.

FIG. 43 shows an overlay roll map of the series of roll-to-roll processes of FIG. 42.

In the overlay roll map in FIG. 43, the roll map length matching and the coordinate axis matching have been performed by reflecting the change in length of the electrode and the change in coordinate axis occurring from the coating process to the notching process.

In this case, the roll map I of the top surface of the electrode, which is indicated by T, in the coating process corresponds to the roll map IV of the bottom surface of the electrode, which is indicated by B, in the roll press process due to the surface reversal in the primary roll press process. On the other hand, the roll map IV of the bottom surface of the electrode, which is indicated by B, in the primary roll press process corresponds to the roll map VI of the bottom surface of the electrode, which is indicated by B, without surface reversal in the secondary roll press process. Therefore, since the overlay roll map of the top surface T of the electrode from the coating process to the notching process consists of I, IV, VI, and VII, it is possible to identify quality and product histories between the respective processes.

Meanwhile, since the overlay roll map of the bottom surface B of the electrode consists of **II, III,** V, and VII by reflecting the surface reversal information, it is possible to identify the quality and product histories between the respective processes.

The roll map matching unit 1200 may be the MES or one component of the MES. In this case, the roll map make-up unit 40 may constitute the MES together with the roll map matching unit 1200. Alternatively, the roll map matching unit 1200 may be an SPC or a DW, which is a system that is separate from or an upper level of the MES, or one component included in the SPC or the DW. For example, the roll map matching unit 1200 may be a SPC device/system. Here, the SPC is a management device/system for efficiently operating a process in a statistical method to achieve the quality or productivity target required in a process. Alternatively, the roll map matching unit 1200 may be a data warehouse DW for converting data accumulated in a database into a common format and managing the data. The data warehouse enables data-based decision-making and analysis by integrating data from multiple sources.

Therefore, the coordinate values of the roll maps of respective processes made up by the respective roll map make-up units 40 may match the coordinate values of the roll map of the final process through the matching operation. In other words, survival electrodes of respective processes are matched to the survival electrode in the notching process.

The roll map length matching unit 1210, the coordinate axis matching unit 1220, and the top and bottom surface matching unit 1230 may be software capable of performing predetermined calculation and matching operations or a computing system in which the software is embedded. For example, each matching unit may be a real-time system, such as an embedded computer system (ECS), and among them, a microcomputer may be employed as each matching unit. The roll map length matching unit 1210, the coordinate axis matching unit 1220, and the top and bottom surface matching unit 1230 may mutually perform wired and wireless communication. In FIG. 26, the matching units are separately shown to clarify their functional distinction. However, for efficient computing processing, one or more of the matching units may be integrated. For example, since both the roll map length matching and the coordinate axis matching are related to the conversion of the coordinate values, the roll map length matching and the coordinate axis matching may be integrally operated by one matching unit. Therefore, a detailed configuration of the roll map matching unit is not limited to the example of FIG. 26.

The roll map and the overlay roll map may be, for example, stored in a storage medium, such as a memory. A plurality of memories may also be provided, as necessary. The memory may be a volatile memory or a non-volatile memory. Alternatively, the storage medium may be a hard disk, a CD-ROM, a USB memory, a solid state drive (SSD), or the like. The listed storage media are merely illustrative and are not limited to these examples.

The roll map, the overlay roll map, and related data stored in the storage medium may be freely used in battery manufacturing, quality control, analysis, and problem tracking.

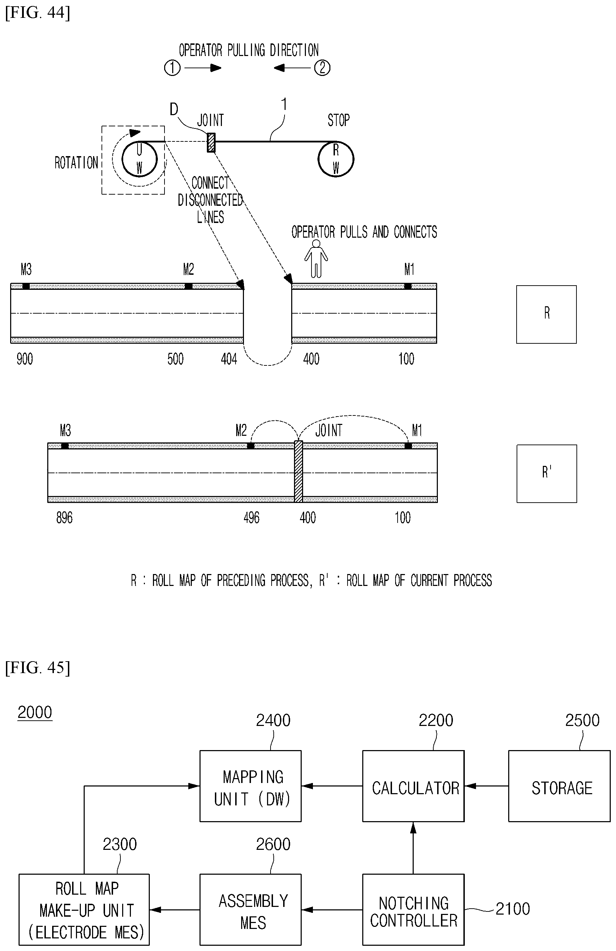

FIG. 44 shows one example of the roll map in the electrode manufacturing process.

In the coating process, the roll press process, and the slitting process, the electrode proceeds in a roll-to-roll state. The roll map is displayed in a bar shape imitating the movement of the electrode, and a longitudinal dimension of the electrode is displayed in coordinates on the roll map. Since the information on defects, quality, electrode breakage, and the like occurring in the electrode manufacturing process is displayed on the roll map together with the coordinate values, the data on quality or defects in the electrode manufacturing process may be visually and easily identified at a glance. For example, as shown in FIG. 44, when breakage occurs in the electrode 1 in the first process and thus an operator connects the broken electrode pieces with the joint connection member D, a length of the electrode is reduced by as much as a broken length. Since the roll map is supposed to reflect such a situation, the coordinates on the roll map may be corrected. As shown in FIG. 44, the roll map R of the first process has been corrected, and as a result, in the roll map R' of the second process the length of the bar and positions of reference points M1, M2, and M3 marked on the electrode are corrected. As described above, the roll map includes information on electrode loss such as electrode breakage. In addition, the coordinates of the roll map may be displayed as relative coordinates in which a change in length of the electrode is reflected (see R' of FIG. 44) and/or as absolute coordinates in which the change in length of the electrode is not reflected. The relative coordinates and the absolute coordinates may be displayed together on a single roll map. The roll map displayed in the absolute coordinates may visually display on the roll map bar the length of the electrode lost due to electrode breakage, or the like.

According to the conventional electrode manufacturing process, including the notching process, if defects are identified in a battery as a semi-finished or finished product, it is possible to analyze a cause of the defects up to the notching process. For example, by printing a cell ID on an electrode tab, if a problem is identified in a semi-finished or finished battery, it is possible to analyze at which stage prior to the manufacturing of the semi-finished or finished battery the problem was caused, by checking the cell ID. Therefore, in the battery manufacturing process from the notching process, it is possible to track the cell ID to determine at which stage and at which position of the electrode the semi-finished or finished product including the cell ID has been manufactured, enabling quality tracking per unit battery cell.

However, the quality tracking per unit battery cell is only possible up to the notching process and cannot be extended to the electrode manufacturing process, prior to the notching process. Prior to the notching process, only a lot number of an electrode roll from which a corresponding battery cell is manufactured may be identified. Therefore, when a defective battery cell is detected, the entire electrode roll in the electrode manufacturing process line from which the corresponding battery cell has been produced might have to be discarded.

Therefore, it is necessary to develop a technology capable of tracking quality per unit battery cell in the electrode manufacturing process prior to the notching process.

FIG. 45 is a block diagram showing a system 2000 for supervising a secondary battery manufacturing process, according to an aspect of the present disclosure.

The system 2000 for supervising a secondary battery manufacturing process, according to the present aspect of the disclosure may include: a notching controller 2100 for acquiring electrode coordinate information of an electrode line moving in a roll-to-roll state in a notching process, as well as a cell ID provided on a respective one of notched unit electrodes; a calculator 2200 for calculating, based on the cell ID acquired by the notching controller and a pitch information (which is a width of the notched unit electrodes), a coordinate value of the acquired cell ID on the electrode as a position of the corresponding notched unit electrode; a roll map make-up unit for making up a roll map, being configured to generate roll maps of respective sub-processes of the electrode manufacturing process by reflecting electrode length changes during the preceding electrode manufacturing process on the electrode coordinate information transmitted from the notching controller 2100; and a mapping unit 2400 for deriving a position of the electrode in the electrode manufacturing process from which the respective notched unit electrode originates, by comparing coordinate values of the generated roll map and the calculated coordinate value of the cell ID.

The present aspect of the disclosure further aims to track the electrode manufacturing process before the notching process per unit cell. Therefore, in order to track the position on the electrode roll, a position of a target unit electrode in the notching process must be first specified. In the notching process, since a continuous electrode sheet is processed at intervals of the unit electrode, a description will be provided as for one of the unit electrodes as the target electrode.

The system 2000 for manufacturing the battery according to the present disclosure includes a notching controller 2100, a calculator 2200, a roll map make-up unit 2300, and a mapping unit 2400.

The notching controller 2100 is a controller for controlling the transfer of the electrode line in a roll-to-roll state in the notching process. For example, the controller 2100 is a PLC. The controller 2100 stores pitch information, which corresponds to information on the width of the unit electrode, for notching the electrode line at a predetermined interval. In addition, the controller 2100 may acquire electrode coordinate information on the electrode line being transferred in the roll-to-roll state between an unwinder and a rewinder. When the electrode is transferred in the roll-to-roll state between the unwinder and the rewinder in the notching process, the electrode coordinate information may be acquired from the encoder value information indicating the position of the electrode according to the amount of rotation of the unwinder and the rewinder. In order to describe a function of the notching controller 2100, a typical notching process will be described.

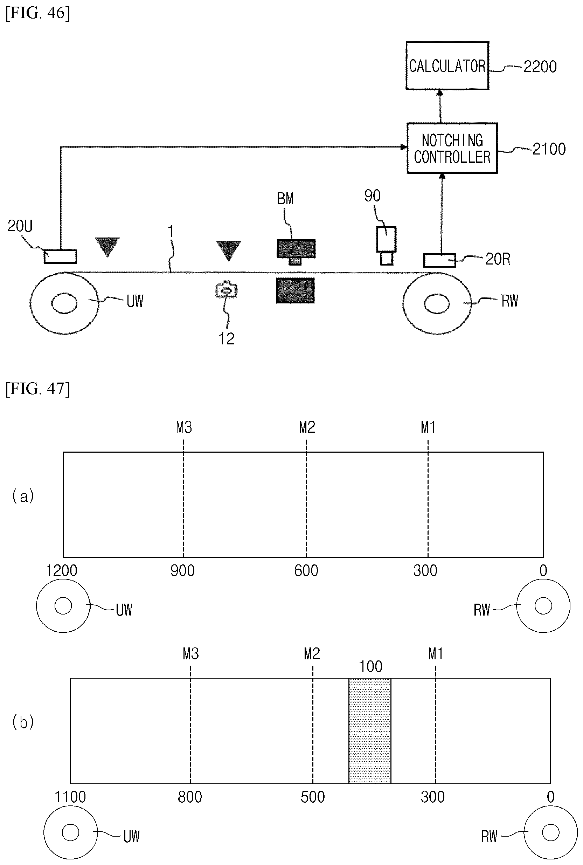

FIG. 46 is a schematic diagram for describing the notching process controlled by the notching controller 2100 according to the system 2000 for manufacturing the battery according to the present disclosure.

The electrode, after undergoing the roll press process or the slitting process, is loaded onto an unwinder UW as shown in FIG. 46. The electrode released from the unwinder UW is notched while moving toward a rewinder RW. Since the electrode 1 is unwound from the unwinder UW and wound around the rewinder RW, a movement amount of the electrode line or a position on the electrode may be calculated from the amount of rotation of the unwinder UW and the rewinder RW. A (rotary) encoder 20 is installed at each of the unwinder UW and the rewinder RW. The encoder may extract an encoder value, which is a displacement or a coordinate value of the electrode, from an amount of rotation of a motor. That is, the encoder 20 is connected to a motor driving unit installed at the unwinder UW and the rewinder RW to express an encoder value indicating the position of the electrode according to the amount of rotation of the unwinder UW and the rewinder RW. Electrode coordinate information (that is, electrode position information) of the electrode line in the notching process may be acquired from information on the encoder value. As shown in FIG. 46, an unwinder encoder 20U and a rewinder encoder 20R are connected to the notching controller 2100 and transmit encoder values according to the movement of the electrode to the notching controller 2100. Therefore, the notching controller 2100 may acquire, based on the encoder values, the electrode coordinate information of the electrode line transferred in the roll-to-roll state.

Meanwhile, the controller 2100 may also acquire a cell ID of each notched unit electrode. Referring to FIG. 46, in the notching process, the electrode is punched using a punching device BM to form an electrode tab for each unit electrode. After the punching, a predetermined identification mark is provided on the electrode tab of the unit electrode. For example, a barcode is printed or a laser making is provided on the electrode tab. The unit electrode or a semi-finished or finished battery cell manufactured with the unit electrode may be distinguished from other semi-finished or finished products by the identification mark, such as the barcode or the laser marking. In this sense, the identification mark is referred to as a cell ID indicating an identity of the battery cell to be produced. A device for printing the cell ID is not shown in FIG. 46. However, the cell ID of the unit electrode, which is punch-processed by the punching device BM and is printed with the identification mark, is scanned by an identification mark scanner 90 and transmitted to the notching controller 2100. The notching controller 2100 transmits the cell ID and the pitch information to the calculator 2200. Using the pitch information and the cell ID, the calculator 2200 may calculate the cell ID coordinates, which represent a position of a specific unit electrode in the notching process.

Specifically, the calculator 2200 may obtain a sequence number of a specific unit electrode from the Identification mark (cell ID) and multiply the sequence number by the pitch to obtain cell ID coordinates. For example, when barcodes are sequentially printed as Identification marks on the electrode in the notching process, the barcodes may indicate sequence numbers of the unit electrodes. Generally, a relationship between the barcode (identification mark) and the sequence numbers of the unit electrodes is stored in a storage 2500 such as a server, and when the barcode is recognized, an order of the unit electrode may be identified. When a unit electrode of a certain barcode is omitted, this may mean that the unit electrode is missing from the notching line. Therefore, the calculator 2200 can obtain a sequence number of a specific unit electrode by comparing the sequence number stored in the storage 2500 with the Identification mark acquired by the Identification mark scanner.

For example, when a pitch of the notching process is 0.1 meters and a sequence number of a specific unit electrode is 5000, cell ID coordinates of the specific unit electrode are 500 meters by multiplying the sequence number by the pitch. In this case, when an electrode length of a notching line is determined to be 760 meters from the electrode coordinate information acquired from the encoder values of the unwinder UW and the rewinder RW, the specific unit electrode may be specified as a unit electrode positioned at a position of 500 meters on a 760 meter-long electrode.

The calculator 2200 may be, for example, a real-time system such as an ECS, and a microcomputer may be employed as the calculator 2200. As described below, the calculator 2200 calculates the cell ID coordinates and transmits the cell ID coordinates to the mapping unit 2400.

In addition, according to the present disclosure, the roll map make-up unit 2300 for making up a roll map from the electrode coordinate information transmitted from the notching controller 2100 is included. Since the present aspect of the disclosure aims at tracking the position of the electrode in the electrode manufacturing process prior to the notching process, the roll map is also made up for each sub-process of the electrode manufacturing process. Specifically, the electrode manufacturing process prior to the notching process may include at least a coating process of coating a current collector with an electrode active material to form a coated electrode, and a roll press process of rolling the coated electrode using a press roll. In addition, the electrode manufacturing process prior to the notching process may further include a slitting process of cutting the rolled electrode after the roll press process in the longitudinal direction.

As described above, the roll map imitates an electrode moving in a roll-to-roll state, and a longitudinal dimension of the electrode is represented in coordinates. Therefore, the changed length of the electrodes between respective processes may be identified from the roll maps representing the respective processes.

Since the electrode in the notching process is manufactured from the electrode having been subject to the previous processes, such as the slitting process, the roll press process, and the electrode coating process, a roll map including information on the change of the electrode length in such previous processes is required, in order to track the exact electrode position. The roll map may be made up in each of the electrode coating process, the roll press process, and the slitting process. The roll map may reflect information on the electrode part broken and removed during the respective processes. Since the longitudinal dimension of the electrode is displayed in coordinates on the roll map, if an electrode length change occurs during the respective process due to breakage or connection of the broken electrode pieces, etc., the change may be reflected in the roll map. In addition, since a plurality of reference points are marked at predetermined intervals on the roll map, a removed length of the electrode may be calculated using the reference points. Such reference points are marked on the roll map by imitating the reference points printed on the electrode.

Meanwhile, a portion of the electrode may be cut off after the respective process is completed. Usually, because the quality of the electrode at the beginning and the end of the roll-to-roll process is often not uniform, an electrode part corresponding to the beginning or end of the corresponding process is typically cut off. The above removed electrode part is referred to as "removed electrode part after completion." As described above with reference to FIG. 44, the coordinates displayed on the roll map include relative coordinates in which the change in the length of the electrode is reflected and absolute coordinates in which the change in the length of the electrode is not reflected. Therefore, since the removed electrode part may be displayed on the roll map displayed in the absolute coordinates, information on defects or breakage may be visually displayed on the roll map. However, in the present disclosure, for convenience of description, visual information other than the length and coordinates of the electrode will be omitted and not displayed on the roll map. In the case of the electrode manufacturing process including a plurality of sub-processes, a roll map of the preceding process may be referred to when making up a roll map for the following process. For example, when an electrode is manufactured through the electrode coating process, the roll press process, and the slitting process, the roll map of the electrode coating process may be referred to in the following roll press process. When an electrode part is removed during the electrode coating process or thereafter, this electrode removal should be reflected in making up the roll map of the roll press process. That is, while the roll map of the roll press process displays a reference point and coordinates by making reference to the roll map displaying the absolute coordinates of the electrode coating process, the coordinates must be corrected by reflecting the change in length of the electrode. In this sense, the roll map including the absolute coordinates of the roll press process may correspond to a roll map including the relative coordinates in the preceding electrode coating process. Likewise, when an electrode length change occurs during or after the roll press process, the change needs to be reflected in the roll map of the following slitting process. The roll map of the slitting process reflecting the change may be a roll map of absolute coordinates in the slitting process and may correspond to a roll map of relative coordinates in the roll press process.

As described above, whether a roll map is displayed in absolute coordinates or relative coordinates is a relative concept with respect to the relevant processes. In the present disclosure, such different coordinates may be appropriately utilized to track the position of the electrode.

The roll map make-up unit 2300 may make up a roll map of each sub-process of the electrode manufacturing process, for example, the coating process, the roll press process, and the slitting process by reflecting data stored therein regarding the electrode length change during the electrode manufacturing process on the electrode coordinate information transmitted from the notching controller 2100. For example, the roll map make-up unit 2300 may be an MES for managing the electrode manufacturing process or one component of the MES. Similar to FIG. 46, since the electrode is transferred in a roll-to-roll state between the unwinder UW and the rewinder RW in the coating process, the roll press process, and the slitting process, the electrode coordinate information of the electrode line may be obtained from the encoder value or the like. In addition, when the electrode part is removed during the subject process (removal during the process) or after the process is completed (removal after completion), a removal length may also be determined with a change in interval between reference points marked on the electrode. As shown in FIG. 46, since the reference point measurement device 12 is disposed on the electrode line in the electrode manufacturing process, the electrode removal length may be measured using the reference point measurement device. All the pieces of information are stored in an electrode MES. Therefore, when the electrode coordinate information transmitted from the notching controller 2100 is specified, the data on the electrode length change stored in the MES during the electrode manufacturing process may be added to or subtracted from the electrode coordinate information, and based thereon, the roll maps of the slitting process, the roll press process, and the electrode coating process from which the current notched electrode originates may be made up through reverse calculation. The MES is provided as a data processing system and provided with a central processing unit, the calculator, a determination unit, and the like, thereby being able to easily make up a roll map using the above-mentioned information. In addition, the MES may also be provided with a predetermined data visualization device to visualize and display the roll map on a screen. Since a process of visualizing a source data as a diagram or graph is known in the art, a detailed description thereof will be omitted herein.

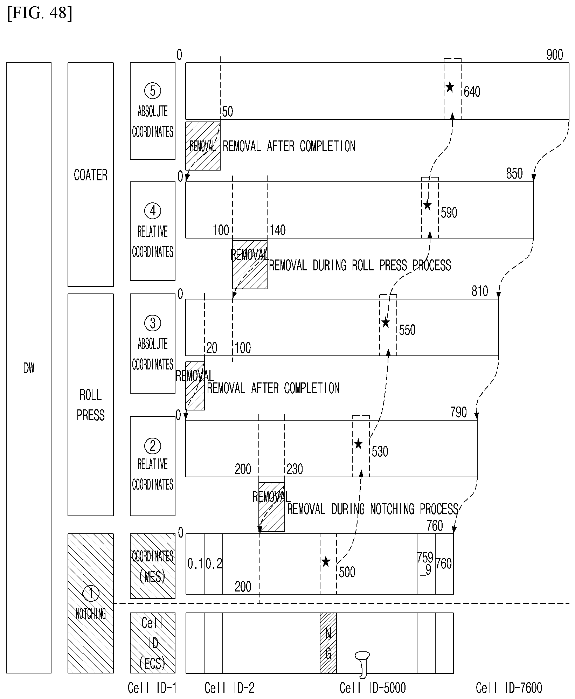

Referring back to FIG. 45, the notching controller 2100 may transmit coordinate information on the electrode line of the notching process to the MES 2600 of the assembly process, and the MES 2600 of the assembly process may transmit the coordinate information to the roll map make-up unit 2300. Since the process after the notching process belongs to an assembly process, not any longer the electrode manufacturing process, the notching controller 2100 may be connected to the MES 2600 of the assembly process. In addition, even without making up a roll map in the notching process, it is possible to track the position of the electrode in the electrode manufacturing process using the coordinate information and the cell ID. However, in order to check the continuity and correlation between the notching process and the preceding processes (e.g., the slitting process or the roll press process), a roll map of the notching process may be made up by the MES 2600 of the assembly process. In this case, the encoder value, the cell ID, and the pitch information, which are acquired by the notching controller 2100 in the above-described notching process, may be used. Since the notching controller 2100 actually acquires the electrode coordinate information of the notched electrode line, a roll map of the notching process can be obtained by simply expressing the electrode coordinate information in coordinates (see FIG. 48 which will be described below).

The mapping unit 2400 compares the generated coordinates of the roll map with the cell ID coordinates to derive the position of the electrode in the electrode manufacturing process from which a specific unit electrode originates. The mapping unit 2400 may be a data warehouse (DW) for converting and managing data accumulated in a database into data in a common format. Since the DW is able to make a data-based decision and integrate and analyze data from multiple sources, it can derive the position of the electrode in the electrode manufacturing process from which the specific unit electrode of the notching process originates, through a mapping operation of comparing and matching the cell ID coordinates from the calculator 2200 and the roll map coordinates from the roll map make-up unit 2300.

A process of calculating the position of the electrode by the mapping unit 2400 will be described in detail with reference to examples and drawings as follows.

FIG. 48 is a schematic diagram showing an electrode position tracking process of the system 2000 for supervising a secondary battery manufacturing process, according to one embodiment of the present disclosure.

In an example shown in FIG. 48, it may be confirmed from the notching controller 2100 that the stored pitch information is 0.1 meters, and it may be also confirmed from the electrode coordinate information of the electrode line transferred in a roll-to-roll state in the notching process, the length (coordinates) of the notched electrode line is 760 meters.

In addition, the ECS calculator 2200 compares the barcode (cell ID) printed on a specific unit electrode of the notching process with the sequence information stored in the storage 2500 and identifies that a sequence number of the specific unit electrode is 5000. Then, by way of multiplying the pitch information (0.1 meters) by the sequence number, the cell ID coordinate is known as 500 meters.

In addition, the encoder values stored in the notching controller 2100 are transmitted to the electrode MES, which is the roll map make-up unit 2300. The electrode MES makes up the roll map of the roll press process and the roll map of the electrode coating process in absolute coordinates and relative coordinates. The cell ID coordinates calculated by the calculator 2200 and the roll map information generated by the electrode MES are transmitted to the mapping unit, and through the following comparison process, the mapping unit 2400 traces from which position of the electrode in the roll press process or in the electrode coating process the specific unit electrode having the cell number 5000 in the notching process is originated.

The mapping unit 2400 adds the reduced electrode length that is known by the roll map in each sub-process of the electrode manufacturing process (e.g., the roll map of the roll press process and the roll map of the coating process) to the cell ID coordinates (500 meters) of the specific unit electrode. Usually, the reduction in length of the electrode in the electrode manufacturing process results from at least one of the electrode removal during each sub-process (removal during the process) or the electrode removal after the sub-process (removal after completion).

As described above, the cell ID coordinate of the specific unit electrode of the notched electrode line is 500 meters. Therefore, when a problem, such as defects or the like, occurs in the semi-finished or finished battery cell comprising the unit electrode produced at the point of 500 meters, the electrode position in the electrode manufacturing process may be tracked by disassembling the battery cell and checking the cell ID. Hence, it is possible to analyze the cause of the defect per unit cell, or in other words, it is possible to identify from which electrode position the defect originates.

As described above, when the cell ID coordinate of the specific unit electrode of the notching line is specified, the electrode coordinates in the electrode manufacturing process from which the specific unit electrode originates are calculated by adding the reduced electrode length known by the roll map of each sub-process of the electrode manufacturing process.

In the embodiment, it is assumed that the sub-processes performed were the electrode coating process and the roll press process; and hence, the roll map of the coating process and the roll map of the roll press process are used. However, a slitting process may also be performed after the roll press process, a corresponding roll map being made up. Since the principle of electrode position tracking process is the same, in the present embodiment, the process of tracking an electrode position will be described excluding the electrode length change in the slitting process. In addition, slitting is simply cutting the roll-pressed electrode in the longitudinal direction, and thus, such a substantive electrode length change as in the electrode coating process or the roll press process rarely occurs. Therefore, the process of tracking an electrode position will be described excluding the roll map of the slitting process. However, when a roll map of the slitting process is made up and available, it is possible to track the electrode position by comparing coordinates of the roll map using the same principle as in the present embodiment.

FIG. 48 shows, for the purpose of comparison with the roll press process, a roll map of the notching line, which is made up in the assembly MES using the electrode coordinate information and the cell ID coordinate of the notched electrode line. However, as described above, the roll map of the notching process shown in FIG. 48 is shown for convenience of description and is not necessarily essential in tracking the electrode position. That is, even when only the cell ID coordinates of the notching process are available, the electrode position may be tracked using the roll map of the electrode manufacturing process. However, as will be described below, in case an electrode part is removed in the notching process, a roll map of the notching process reflecting the electrode removal may be prepared (just like in the electrode manufacturing process), which is advantageous by making it easier to specify the electrode position in connection with the roll map of the preceding roll press process.

In the notching process, if there is no history of change of the cell ID coordinate of the specific unit electrode, based on the cell ID coordinate, the electrode position is tracked.

However, in the notching process, for example, if a removal during the process has occurred (i.e., an electrode part has been removed by a certain length during the notching process), the removed electrode length needs to be be added to enable tracking of an accurate electrode position. In the embodiment, it is assumed that the electrode was removed during the notching process. If intervals between the plurality of reference points marked on the electrode are changed due to the electrode removal, the removed electrode length during the notching process may be obtained by comparing with set intervals of the reference points. This will be described below.

Referring to FIG. 48, when a coordinate of a cell ID-5000 of the notching line is 500 meters and 30 meters of the electrode are removed from the notching line (removal during the notching process), the coordinate of the unit electrode in the coordinates of the roll press process - prior to the notching process - is 530 meters. As described above, the roll map shown in relative coordinates in the roll press process may be a roll map in absolute coordinates in the notching process. In addition, taking into account the removal of 30 meters of the electrode during the notching process, an electrode length (coordinates) of the roll map in the roll press process represented in relative coordinates is 790 meters.

Next, the roll map represented in absolute coordinates of the roll map of the roll press process is referred to. Since 20 meters of the electrode were removed after the roll press process (removal after completion), the removed length is added. Then, the coordinate of the electrode having a cell ID-5000 of the notching line is 550 meters in the roll press process, and the electrode length (coordinates) becomes 810 meters. Therefore, it can be seen that the specific unit electrode (with the cell ID-5000) having the coordinates of 500 meters in the notching line originated from an electrode having coordinates of 550 meters in the roll map of the roll press process. From the above description, at least the electrode position in the roll press process may be tracked per unit cell.

Furthermore, the process of tracking an electrode position in the electrode coating process will be described. Once the electrode position of 550 meters based on the absolute coordinates of the roll map of the roll press process is obtained, it can be seen from the roll map displayed in the relative coordinates of the coating process that 40 meters of the electrode were removed during the roll press process. Therefore, the electrode coordinate of the specific unit electrode (with the cell ID-5000) having the coordinate of 500 meters in the notching line is changed from 550 meters to 590 meters, and the electrode length (coordinates) becomes 850 meters. Finally, the roll maps of the electrode coating process, respectively displayed in the absolute coordinates and in the relative coordinates, are compared, thereby confirming that 50 meters of the electrode are removed after the electrode coating process, and accordingly correcting the electrode coordinates. Therefore, the electrode coordinate of the specific unit electrode (with the cell ID-5000) having the coordinate of 500 meters in the notching line is changed from 590 meters to 640 meters, and the electrode length (coordinates) becomes 900 meters. That is, it can be seen that the electrode of 760 meters in the notching line originally had a length of 900 meters, and it can be understood that the unit electrode with the cell ID-5000 has been manufactured from the electrode part at a position of 640 meters in the electrode coating process.

As described above, by comparing the coordinates of the specific unit electrode in the notching line with the coordinates of the roll map, the electrode position in the roll press process or in the electrode coating process, from which the specific unit electrode originates, can be tracked.

FIG. 47 is a schematic diagram for describing a process of deriving a removal length when an electrode part is removed during the notching process.

A plurality of reference points are printed on the electrode in the notching process at predetermined intervals. The reference point measurement device 12 for detecting the reference points is shown in FIG. 46. When an electrode loss of 100 meters occurs due to, for example, electrode breakage between a first reference point M1 and a second reference point M2, a coordinate value of the first reference point M1 is not changed, but positions of the second and third reference points M2 and M3 and an end portion of the electrode are changed. When the reference point measurement device 12 and the encoder 20 linked thereto derive the changed reference point coordinate values according to the reference point change, the notching controller 2100 may calculate, by comparing with set reference point coordinate values, that a loss amount of the broken electrode is 100 meters between the first reference point and the second reference point.

Therefore, when an interval between the reference points is changed due to the removal of the electrode resulting from breakage or the like during the notching process, a derived reference point coordinate value is compared with the set reference point coordinate value so that a loss amount of the electrode (the removed length of the electrode) may be calculated.

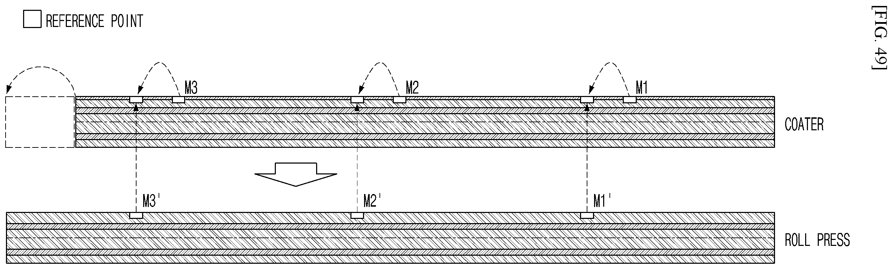

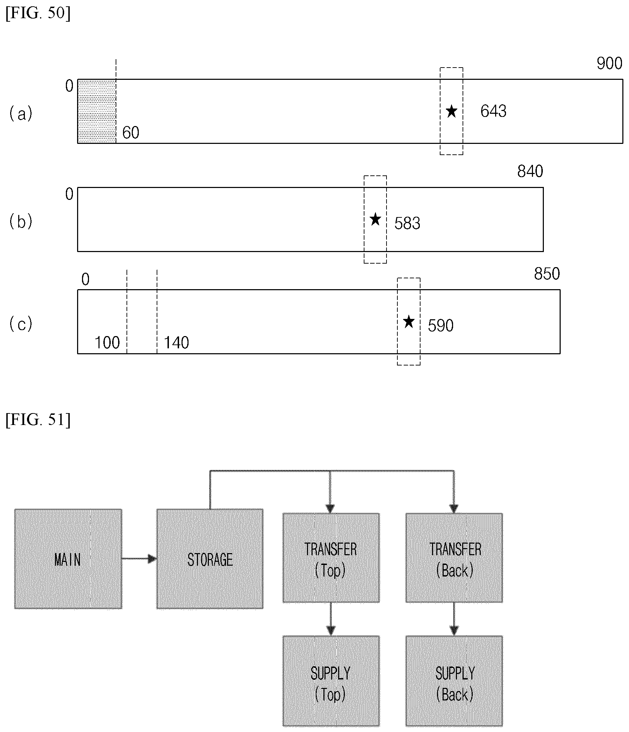

FIG. 49 is a schematic diagram showing the electrode having been elongated in a roll press process, and FIG. 50 is a schematic diagram showing a method of tracking an electrode position according to another embodiment of the present disclosure.

As shown in FIG. 49, the electrode coated in the electrode coating process is rolled by a press roll (not shown) in the roll press process and elongated at a predetermined ratio. Therefore, when the electrode position is tracked in the preceding processes based on the cell ID coordinates of the unit electrode in the notching process, it is necessary to reflect a coordinate change due to the elongation of the electrode. That is, the mapping unit 2400 may reflect an increment of the electrode whose length is increased by the electrode elongation, in order to accurately derive the electrode position in the electrode coating process, from which the specific unit electrode originates.

FIG. 50 shows an embodiment in which the electrode position is tracked in consideration of the electrode elongation by the roll press. FIG. 50C shows that the unit electrode with the cell ID of 5000 originates from 590 meters in the roll press process by reflecting the electrode removal during the roll press process in FIG. 48, and the electrode length at this time was 850 meters. In FIG. 48, the electrode elongation by the roll press is not considered, but in FIG. 50, the electrode position in the electrode coating process is tracked in consideration of the electrode elongation.

FIG. 50(a) is a roll map displayed in absolute coordinates in the coating process, which shows that 60 meters of the electrode are removed from the electrode of 900 meters after the electrode coating process is completed. FIG. 50(b) is a roll map displayed in relative coordinates in the coating process by reflecting the removal portion of 60 meters after completion. In the roll map of FIG. 50(b), the electrode length (coordinates) is 840 meters. When the electrode elongation occurs by the roll press, the roll map of the roll press process is not consistent with the roll map of the electrode coating process. Therefore, it is necessary to correct the roll map by as much as the electrode elongation or to calculate electrode coordinates in consideration of an increase in length of the electrode due to the electrode elongation.

Referring back to FIG. 50(c), the coordinate of 590 meters in the electrode having a length of 850 meters in the roll press process is a position of a roll press electrode from which a specific unit electrode in the notching process originates.

The coordinate of 590 meters of the roll press electrode is divided by a elongation ratio of 850/840, which results in 583 meters. That is, 583 meters is the electrode position in the electrode coating process from which the unit electrode of the notching process originates. However, in this case, since an electrode part of 60 meters was removed after the coating process, the actual electrode coordinates of the coating process needs to be calculated by adding the removed electrode length after the coating process. When 60 meters of the removed portion is added, the electrode length of the coating process becomes 900 meters, and the electrode coordinates in the electrode coating process from which the unit electrode originates is 643 meters. After all, the tracking of the electrode position is completed.

A lithium secondary battery includes a positive electrode and a negative electrode that are a pair of electrodes, a separator that insulates the positive electrode and the negative electrode from each other, and an electrolyte. Each of the positive electrode and the negative electrode, which are electrodes of the secondary battery, is manufactured by forming a tab on an electrode substrate, which is obtained by applying electrode slurry on a surface of a current collector manufactured as a thin aluminum or copper plate and drying a resultant structure, and cutting the resultant electrode substrate in an appropriate size. The electrode slurry is a mixture of a solvent, an active material, a conductive material, a binder, etc. and is applied on the surface of the current collector to form the electrode substrate. For example, the electrode slurry (paste) is prepared by mixing an active material with other solid particles and milling an obtained mixed particulate material with a dispersion medium such as NMP or water.

The electrode slurry is prepared by introducing and mixing components in a mixer and is transferred to a main tank using, e.g., a slurry batch container. Thereafter, the electrode slurry is sequentially transferred to a storage tank, a transfer tank, and a supply tank and is finally supplied to a coater (coating die) for coating the current collector with the electrode slurry. FIG. 51 is a schematic diagram showing the transfer of slurry between a plurality of tanks.

However, lot information, i.e., a slurry batch ID, of electrode slurry introduced into the plurality of tanks from a current mixer is managed per storage tank, not per supply tank supplying the electrode slurry to a coater. That is, while the slurry (logistics) is actually transferred through a main tank, a storage tank, a transfer tank, and a supply tank, according to the conventional logistics controller or management system, lot information is managed midway, in the storage tank; and thus, the lot information cannot be tracked at the final supply tank stage from which the electrode slurry is introduced into the coater.

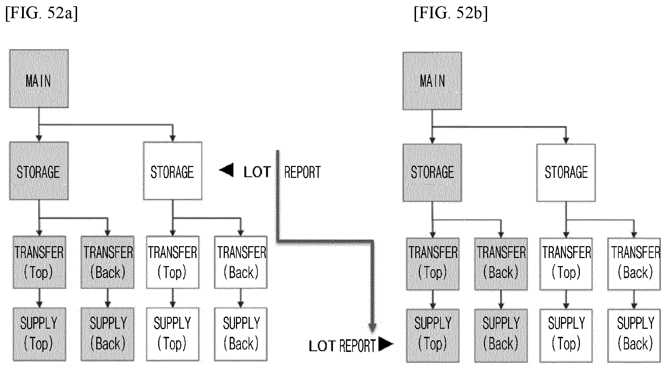

For example, in a process in which the main tank, the storage tank, the transfer tank, and the supply tank are connected to form a single slurry flow, lot information can be tracked at the supply tank, even if the lot information is managed in the storage tank. However, in a process in which the slurry flow splits into multiple tanks as shown in FIG. 52, data (lot information) cannot be identified at the final supply tank.

Therefore, in order to solve this problem, it is necessary to develop a technology for tracking lot information of electrode slurry transferred from a main tank to a supply tank and finally managing the lot information by checking the lot information at the stage of the supply tank.

FIG. 52 is a schematic diagram showing the difference between the related art and an electrode slurry lot information tracking management mechanism of the present disclosure.

Referring to FIG. 52(a), according to the related art, lot information of electrode slurry is managed with respect to a storage tank rather than a supply tank from which the electrode slurry is actually supplied to a coater. That is, at the storage tank stage, the lot information of the electrode slurry is checked and reported to an MES of a factory. Therefore, according to the related art, lot information cannot be tracked at the final supply tank stage.

Referring to FIG. 52(b), according to the present disclosure, lot information of electrode slurry is managed at the final supply tank. To this end, according to the present disclosure, lot information of electrode slurry is allocated and recorded for individual tanks, as will be described below. In addition, the lot information of the final supply tank that supplies the electrode slurry to a coater may be detected by referring to a history of the lot information recorded for each of the tanks. Therefore, according to the present disclosure, lot information can be tracked at the final supply tank stage, and lot information detected at the supply tank stage can be transmitted to an MES of a factory to be used in tracking/controlling the quality of electrode slurry used and in managing the quality or a defect of an electrode or a battery manufactured using the electrode slurry.

The lot information is an identification information for identifying data such as the type, composition, etc. of the electrode slurry supplied from a mixer to a main tank. For example, the lot information may include a lot number, lot ID, batch ID, etc. of the electrode slurry. Generally, the lot information such as the batch ID is provided on a batch container of the electrode slurry supplied from the mixer to the main tank. The lot information may be recognized by scanning an identification tag (e.g., barcode) on the batch container or recognized by a sensor installed between the mixer and the main tank. The recognized lot information may be transmitted to a controller (a PLC) for controlling the transfer of the electrode slurry, and the controller of the present disclosure may identify the lot information and use it in lot information tracking management.

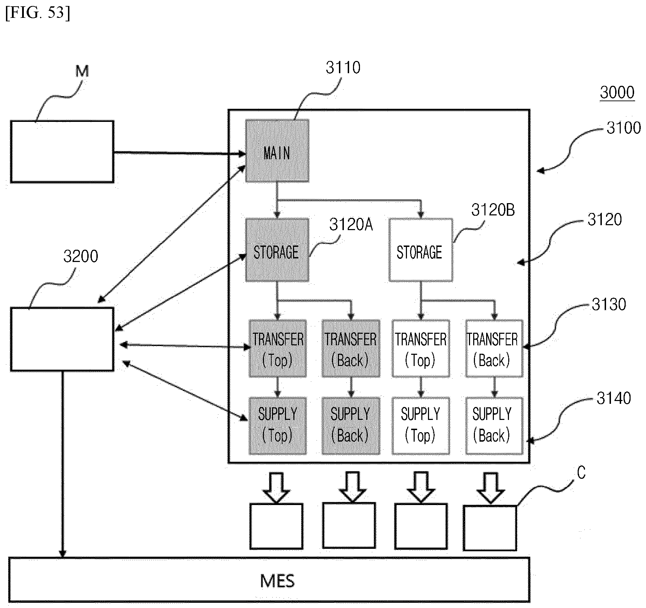

FIG. 53 is a block diagram showing a system 3000 for supervising a secondary battery manufacturing process according to one embodiment of the present disclosure.

The system 3000 for supervising a secondary battery manufacturing process according to the present disclosure is intended to manage lot information of electrode slurry when the electrode slurry is transferred to a coater from a mixer M that mixes materials to produce the electrode slurry.

The type of electrode slurry to be applied and the surface of a current collector to be coated with the electrode slurry may vary. Furthermore, the amount of the electrode slurry to be coated by a coater may vary depending on the electrode type, coating rate or coating timing. Therefore, the electrode slurry may not be directly transferred to the coater from the mixer M, and a plurality of tanks 3100 are to be arranged between the mixer M and the coater. That is, the plurality of tanks 3100 are connected between the mixer M and the coater through pipes, being configured to sequentially transfer the electrode slurry supplied from the mixer M to the coater.

As shown in FIG. 53, the plurality of tanks 3100 are arranged such that the electrode slurry supplied from a higher, upstream, tank may be split and transferred to a plurality of lower, downstream, tanks. As described above, lot information is easy to detect at the stage of supply tanks 3140 if a single flow is formed from the main tank 3110 to the supply tank 3140. However, lot information is not easy to track at the stage of the final supply tanks 3140 if electrode slurry is transferred in a bifurcated manner, sequentially to lower tanks as shown in FIG. 52. To solve this problem, according to the present disclosure, lot information of the supplied electrode slurry is allocated and recorded for each tank, and lot information is detected at the final supply tank stage by referring to a history of the lot information, as will be described below.

There are cases in which the electrode slurry is applied on only a side surface of a current collector, but in most cases, the electrode slurry is applied on top and bottom surfaces of the current collector to increase a capacity and manufacture a stacked cell. FIG. 53 shows that electrode slurry is split into top slurry to be applied on the top surface of the current collector and bottom slurry to be applied on the bottom surface of the current collector. The top slurry and the bottom slurry are transferred to a plurality of sub tanks. Slurry may be split directly when the slurry is transferred from the highest-level tank to the next-highest-level tank or may be split when the slurry is transferred to a middle- or lower-level tank after the next-highest tank. There may be a large number of cases of the split of the electrode slurry and an arrangement and design of the plurality of tanks based thereon, in conjunction with the number, arrangement, type, etc. of the coaters. That is, in addition to that shown in FIG. 53, split lines of the electrode slurry and tank lines or arrangement based thereon may be designed in various ways.

FIG. 53 shows a main tank 3110, storage tanks 3120, transfer tanks 3130, and supply tanks 3140 to describe a typical example of the transfer of the electrode slurry from the mixer M to the coater C. The main tank 3110 is a start point of the transfer of the electrode slurry, and the lot information of the electrode slurry introduced into the main tank 3110 may be easily identified. Therefore, according to the present disclosure, the lot information of the electrode slurry generally from the storage tank 3120 to the supply tank 3140 may be tracked and managed. The plurality of tanks 3100, which are targets of lot information tracking management, may include the storage tank 3120 to which the electrode slurry is supplied from the main tank 3110, the transfer tank 3130 to which the electrode slurry is supplied from the storage tank 3120, and the supply tank 3140 to which the electrode slurry is supplied from the transfer tank 3130 and which supplies the electrode slurry to the coater C. **In** FIG. 53, the electrode slurry from the main tank 3110 is supplied to two storage tanks 3120A and 3120B and is split into top slurry and bottom slurry, respectively in the storage tanks 3120A and 3120B. The top slurry and the bottom slurry are supplied to a top slurry supply tank and a bottom slurry supply tank. The top slurry and the bottom slurry are transferred from the transfer tanks 3130 to the supply tanks 3140 in 1:1 correspondence and are supplied to the coaters C. However, this is only an example of an arrangement of a main tank, a storage tank, a transfer tank, and a supply tank, and an arrangement of tank lines for supplying slurry is variable. According to the present disclosure, lot information of the electrode slurry at the supply tank stage may be detected in response to various arrangements of tank lines.

In the present disclosure, a controller 3200 identifies lot information of the electrode slurry and allocates and records, per tank, lot information of the electrode slurry supplied to individual tanks. Further, lot information of the final supply tank, which supplies the electrode slurry to the coater, is detected by referring to a history of the lot information recorded per tank.

The controller 3200 may be, for example, the controller 3200 (PLC) for controlling the transfer of the electrode slurry. The controller 3200 for controlling the transfer of the electrode slurry may control the transfer of the electrode slurry by controlling an opening and closing valve (not shown) installed at a pipe connecting tanks. Alternatively, when a cover is attached to each tank, the controller 3200 may also control the cover to be opened or closed. A PLC is a typical example of the controller 3200.

When the mixer M and the main tank 3110 are connected through a pipe, the controller 3200 transfers the electrode slurry by opening the opening/closing valve at the pipe and controlling a cover to be opened when the cover is installed at the main tank 3110. Alternatively, when slurry from the mixer M is transferred to the main tank 3110 through a slurry batch container (not shown), the controller 3200 may control the transfer of the slurry batch container through a conveyor. Alternatively, the controller 3200 may control opening/closing of the pipes installed between the main tank 3110, the storage tanks 3120, the transfer tanks 3130, the supply tanks 3140, and the coater C, to supply the electrode slurry to the coater C. The transfer of slurry through the pipe using the opening/closing valve is well known and thus detailed description thereof is omitted here.

Because the controller 3200 controls the transfer of the electrode slurry, lot information of the electrode slurry introduced into a corresponding tank may be obtained when the electrode slurry is transferred from the mixer M to the main tank 3110 and when the electrode slurry is transferred between tanks.

There may be a case in which it is difficult to transfer the electrode slurry directly to the main tank 3110 from the mixer M due to the difference in capacity between the mixer M and the main tank 3110 or the like. Thus, the electrode slurry from the mixer M may be transferred to the main tank 3110 using a slurry batch container. In this case, an identification tag (e.g., barcode) (not shown) storing information (lot information or the like) about corresponding electrode slurry may be provided on the slurry batch container, and the main tank 3110 may scan the identification tag to obtain the lot information of the electrode slurry. To this end, the main tank 3110 may include an identification tag scanner (e.g., a barcode scanner) (not shown). Alternatively, the identification tag scanner may be installed in a place adjacent to the main tank 3110. The identification tag scanner may transmit identified lot information of the electrode slurry to the controller 3200 so that the controller 3200 may identify the lot information of the electrode slurry.

Identification of lot information of the electrode slurry and allocation of lot information to individual tanks by the controller 3200 may be performed by detecting a signal of the opening/closing valve applied to the transfer of the electrode slurry by the controller 3200. For example, an electronic opening/closing valve such as a solenoid valve is installed at a connection pipe between the plurality of tanks 3100. The controller 3200 may detect the transfer of electrode slurry corresponding to certain lot information between tanks when the solenoid valve is opened. Therefore, the controller 3200 may allocate and record the lot information of the detected electrode slurry per individual tank.

As described above, the controller 3200 for controlling the transfer of electrode slurry may identify certain lot information of electrode slurry from the identification tag scanner or based on an "open" signal from the solenoid valve, and allocate and record the identified lot information per individual tank. As shown in FIG. 53, such lot information is allocated and recorded for each tank in accordance with the flow of the electrode slurry through a plurality of tank lines. Such lot information is sequentially recorded up to the final supply tanks 3140 in accordance with the slurry transfer. Therefore, the controller 3200 according to the present disclosure is capable of identifying and detecting lot information of electrode slurry at the final supply tank stage from which electrode slurry is supplied to the coater, by referring to a history of the lot information recorded for each individual tank.

A process of allocating and recording lot information of electrode slurry for each tank will be described in detail below.

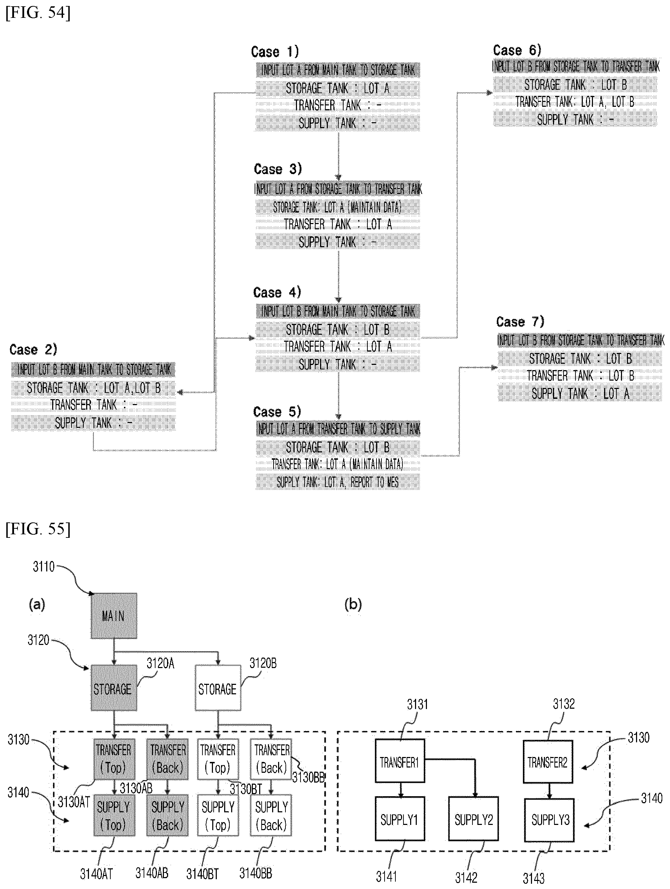

FIG. 54 is a schematic diagram showing a process of allocating and recording lot information of electrode slurry according to the present disclosure.

In the present disclosure, the controller 3200 allocates and records lot information of the electrode slurry for each tank according to a unique algorithm.

Although FIG. 53 shows that electrode slurry is split and transferred to plural tanks, basically, the algorithm of the controller 3200 is subjected to the transfer of slurry with respect to one vertical tank transfer line. That is, lot information of electrode slurry is allocated and recorded based on an assumption that each of the main tank 3110, the storage tanks 3120, the transfer tanks 3130, and the supply tanks 3140 is connected in series. Lot information of the electrode slurry of the final supply tanks 3140 may be known by understanding the flow of the electrode slurry in tank transfer lines connected in series.

Such a lot information allocation algorithm applied to a serial tank transfer line may also apply to split electrode slurry lines. That is, in case the highest-level tank, namely, the main tank 3110 is split into two storage tanks 3120A and 3120B, the serial tank transfer line is split into two tank transfer lines, i.e., i) an "A tank transfer line" consisting of the storage tank 3120A of a main tank 3110-A, its lower-level transfer tank and supply tank, and ii) a "B tank transfer line" consisting of the storage tank 3120B of a main tank 3110-B, its lower-level transfer tank and supply tank. In this case, the lot information allocation algorithm is applied to the A tank transfer line and the B tank transfer line. If the electrode slurry is split again within the A tank transfer line and the B tank transfer line, at a certain mid-level tank (e.g., the transfer tanks 3130), the number of serial tank transfer lines may be increased according to the split of the electrode slurry. The lot information allocation algorithm may also be applied to the increased number of serial tank transfer lines to thereby detect lot information at the final supply tank stage. Generally, electrode slurry is split and connected to tanks in 1:1correspondence, and thus, the lot information allocation algorithm of the present disclosure is also applied based on an assumption that the electrode slurry is split in 1:1correspondence.

Referring to FIG. 54, if lot information is allocated and recorded on a tank by the controller 3200, the lot information allocated to the tank is maintained without being updated when there is no history of introducing the electrode slurry into a subsequent tank, and if electrode slurry is additionally introduced from a higher-level tank in a state there is no history of introducing the electrode slurry into the subsequent tank, lot information of the additionally introduced electrode slurry is additionally allocated to the tank, in addition to the lot information allocated to the tank.

Specifically, lot information allocated to a tank is maintained without being updated when there is no history of introducing electrode slurry into the next tank (allocation principle 1).

It is assumed that electrode slurry of lot A is introduced into the main tank 3110 at a stage before Case 1 of FIG. 54. Information of lot A is transmitted to the controller 3200 by the identification tag scanner, and the controller 3200 allocates the information of lot A to the main tank 3110. Case 1 of FIG. 54 indicates that the electrode slurry of lot A is introduced from the main tank 3110 to the storage tank 3120 and there is no history of introducing electrode slurry into subsequent tanks (a transfer tank and a supply tank). In this case, the information of lot A allocated to the storage tank 3120 is maintained according to allocation principle 1.

If electrode slurry from a higher-level tank is introduced in a state there is no history of injecting electrode slurry into a subsequent tank, lot information of the additionally introduced electrode slurry is additionally allocated to the tank, in addition to the lot information allocated to the tank (allocation principle 2).

In Case 2 of FIG. 54, when electrode slurry of lot B is introduced into the storage tank 3120 in a state the electrode slurry of lot A has been introduced into the storage tank 3120, information of lot B is allocated to the storage tank 3120 in addition to the information of lot A, because slurry is not introduced from the storage tank 3120 into a subsequent tank (allocation principle 2).

The lot information allocation algorithm according to the present disclosure further includes the following allocation principles. The lot information allocated to a tank is maintained without being updated if, although there is a history of introducing electrode slurry into a subsequent tank, electrode slurry is not introduced from a higher-level tank (allocation principle 3).

If there is a history of introducing electrode slurry into a subsequent tank and electrode slurry is introduced from a higher-level tank, the lot information allocated to the tank is updated with lot information of the electrode slurry introduced from the higher-level tank (allocation principle 4).

In Case 3 of FIG. 54, the electrode slurry of lot A is transferred to the transfer tank 3130 from the storage tank 3120 to which the information of lot A has been allocated. However, in this case, the information of lot A allocated to the storage tank 3120 is not directly deleted and is maintained according to allocation principle 3 because no slurry is introduced into the storage tank 3120 from the higher-level, main tank 3110.

In Case 4, if the electrode slurry of lot B is introduced from the main tank 3110 into the storage tank 3120, the lot information of the storage tank 3120 is updated (allocation principle 4). In this case, since there is a history of introducing slurry into the transfer tank 3130 in Case 3 and electrode slurry is introduced into the storage tank 3120 from the higher-level, main tank 3110 in Case 4, allocation principle 4 applies and thus the lot information of the storage tank 3120 is updated from lot A to lot B.

Meanwhile, if the lot information of the additionally introduced electrode slurry is additionally allocated in addition to the lot information allocated to a tank, the lot information allocated to the tank is deleted and only the lot information of the additionally introduced electrode slurry is maintained for the tank according to the first-in-first-out principle (allocation principle 5).

This should be understood to mean that the electrode slurry is transferred from Case 2 to Case 4.

If the information of lot A and the information of lot B are allocated for the storage tank 3120 in Case 2, the electrode slurry of lot A is transferred to the transfer tank 3130 according to the first-in-first-out principle and thus the information of lot A is deleted and only the information of lot B is maintained, if the electrode slurry is transferred from the storage tank 3120 to the transfer tank 3130 as in Case 4.

The transfer of slurry between the storage tank 3120, the transfer tank 3130, and the supply tank 3140 that are located between the main tank 3110 and the coater C may be described using allocation principles 1 to 5. Therefore, these allocation principles may be implemented as an algorithm or a program, so that lot information may be allocated and recorded on each tank and lot information of the final supply tank 3140 may be known by referring to a history of the recorded lot information. To this end, a program or software related to allocation principles 1 to 5 may be installed in the controller 3200 or the controller 3200 may be connected to a storage device storing the software.

Referring to Case 5, slurry of lot A of Case 4 is supplied from the transfer tank 3130 to the supply tank 3140. In this case, the information of lot A allocated to the transfer tank 3130 is maintained according to allocation principle 3. Because lot information of the final supply tank 3140 is identified (detected) as lot A, the controller 3200 detects the lot information. The controller 3200 reports the detected lot information to an MES.

While slurry is transferred from Case 4 to Case 6, the electrode slurry of lot B is additionally introduced into the transfer tank 3130 from the storage tank 3120. In this case, the information of lot B is allocated to the transfer tank 3130 in addition to the information of lot A according to allocation principle 2.

When it is assumed that slurry is being transferred from Case 5 to Case 7, the electrode slurry of lot B is introduced into the transfer tank 3130 from the storage tank 3120. This corresponds to allocation principle 4 and thus lot information allocated to the transfer tank 3130 is updated with lot B.

As described above, according to the present disclosure, electrode slurry may be transferred, variable lot information of each tank may be recorded, and lot information of a final supply tank may be detected by referring to a history of the lot information according to a unique lot information allocation algorithm.

FIG. 55 is a schematic diagram showing a system for supervising a secondary battery manufacturing process according to another embodiment of the present disclosure.

The controller 3200 of the system 3000 for supervising a secondary battery manufacturing process according to the present disclosure may record and manage identification information of a higher-level tank, which introduces electrode slurry into a final supply tank 3140, in association with lot information of the electrode slurry transferred to the final supply tank 3140.

According to the present disclosure, lot information may be allocated and recorded for each tank that transfers electrode slurry, and lot information of the supply tank 3140 may be identified/detected using an algorithm of allocation principles 1 to 5 described above. Details of the arrangement and design of a tank transfer line including the storage tanks 3120, the transfer tanks 3130, and the supply tanks 3140 between the main tank 3110 and the coater C are stored in the controller 3200 and identification information (tank ID) of each tank of the tank transfer line is also stored in the controller 3200.

The controller 3200 may allocate lot information to each tank and record data of the lot information and the identification information of each tank is input to the controller 3200, and thus the identification information of each tank may match the lot information input to each tank. In particular, identification information of higher-level tanks for introducing electrode slurry into the final supply tanks 3140 may also be recorded and managed. Specifically, referring to FIG. 55(a), in a part indicated with a box of broken lines, lot information of electrode slurry introduced into each supply tank 3140 may be identified using the allocation algorithm, and identification information of transfer tanks, disposed at a higher-level than the supply tanks 3140 may be recorded and managed by matching the identification information with the lot information.

For example, in FIG. 55(a), at the stage of supply tanks, if electrode slurry of lot A and electrode slurry of lot B diverge to storage tanks 3120A and 3120B, a supply tank 3130AT that supplies top slurry of the electrode slurry of lot A, a supply tank 3130AB that supplies bottom slurry of the electrode slurry of lot A, a supply tank 3130BT that supplies top slurry of the electrode slurry of lot B, and a supply tank 3130BB that supplies bottom slurry of the electrode slurry of lot B can be identified. In addition, tank IDs of transfer tanks 3130AT, 3130AB, 3130BT, and 3130BB, which introduce electrode slurry into the supply tanks 3140AT, 3140AB, 3140BT, and 3140BB, may be recorded by the controller 3200 to correspond to the supply tanks. Specifically, an ID of a transfer tank may be recorded in association with an ID and slurry lot information of a supply tank.

Alternatively, if lines of transfer tanks and supply tanks are configured as shown in FIG. 55(b), a first transfer tank 3131 may be connected to a first supply tank 3141 to introduce electrode slurry (a combination of a first supply tank and a first transfer tank), and the first transfer tank 3131 may be further connected to a second supply tank 3142 to introduce electrode slurry (a combination of a second supply tank and the first transfer tank). In addition, the second transfer tank 3132 may be connected to a third supply tank 3143 to introduce electrode slurry (a combination of a third supply tank and the second transfer tank). According to the present disclosure, information about an arrangement of each tank may be identified from information about a tank transfer line stored in the controller 3200, and lot information allocated to each tank may be linked with the information about the arrangement of each tank. Therefore, the controller 3200 may record and manage identification information of a higher-level tank for introducing electrode slurry into the final supply tanks in connection with lot information of the electrode slurry of the final supply tank.

In addition, the present disclosure provides an electrode slurry lot information tracking management method which is a method of managing electrode slurry lot information when electrode slurry is transferred from a mixer M to a coater through a plurality of tanks connected through pipes.

First, the lot information of the electrode slurry supplied from the mixer M is identified and recorded. In this case, an identification tag on an electrode slurry transfer container (batch container) may be scanned at the main tank 3110 to identify the lot information of the electrode slurry. To this end, an identification tag scanner may be provided at a side of the main tank 3110, and lot information identified by the scanner may be transmitted to and recorded by the controller 3200.

Next, when the electrode slurry is transferred sequentially through the tanks 3100, lot information of the electrode slurry supplied to each of the tanks 3100 is allocated and recorded for each of the tanks 3100. The allocation and recording of the lot information may be performed by the controller 3200 for transferring the electrode slurry between tanks.

The allocation of the lot information may be performed according to allocation principles 1 to 5 described above.

Lastly, lot information of the final supply tank 3140 that supplies electrode slurry to the coater is detected by referring to a history of the lot information recorded for each tank. The controller 3200 may identify/detect the lot information of the final supply tank 3140 by referring to the lot information recorded for each tank according to allocation principles 1 to 5. The detected lot information may be transmitted to an MES of a factory to be used to control the quality of the electrode slurry, manage electrodes and final products, and analyze causes of defects.

According to the present disclosure, the controller 3200 may identify the type of electrode slurry introduced for each coater by detecting electrode slurry lot information at the final supply tank stage. In addition, the electrode slurry lot information may be transmitted to an MES of a server or factory to be used for quality control of electrodes and batteries. Specifically, if a defect such as a defective exterior occurs in an electrode coated with electrode slurry by a certain coater, the quality of the electrode slurry may be tracked by identifying lot information of the electrode slurry used for the electrode. When a defect occurs in a battery as a final product, a cause of the defect may be found by tracking lot information of an electrode and electrode slurry. As already discussed in detail above, a roll map is a useful tool capable of displaying a position of a moving electrode as coordinate values in an electrode manufacturing process and an assembly process. Process data for individual processes of various processes performed on the moving electrode may be matched with the coordinate values, and a matching result may be displayed on the roll map. Therefore, in a plurality of roll-to-roll processes, such as a notching process of forming a tab on the electrode as well as the electrode manufacturing process, such as a coating process, a roll press process, or a slitting process, it is possible to intuitively and easily analyze and manage the quality of the electrode. In addition, since the electrode may be displayed by being specified in units of coordinate values, when the coordinate value is connected to an identification mark (e.g., an electrode ID) indicating a specific unit electrode, it is possible to easily analyze and track quality change histories of the electrode and an upper level assembly (e.g., an electrode assembly or a battery cell, module, and pack including the electrode assembly) including the electrode from the assembly process, that is carried out after the electrode manufacturing process, to an activation process and following processes of module/pack processes. In addition, when a problem subsequently occurs in the upper level assembly, it is possible to identify a manufacturing history of a specific electrode included in the upper level assembly using the identification mark and the data of the coordinate values corresponding thereto. Therefore, it is possible to subsequently track quality. As a result, according to the roll map, it is possible to easily analyze and manage the quality of the manufacture target in all manufacturing processes from the time of manufacturing an electrode to a final manufacturing process of the battery pack.

In the roll map, coordinate values indicating a position of an electrode are basically displayed on a planar surface (roll map bar) imitating the electrode, and the coordinate values match process data of the electrode manufacturing process or the notching process, and a matching result is displayed. The process data is data acquired according to the progress of a process performed on the electrode in the electrode manufacturing process or the notching process.

However, when the process data is actually matched with the coordinate values of the roll map, there is a case in which all of these data may not be displayed on limited coordinates, e.g., when the number or amount of data is too large. Furthermore, depending on the use or purpose of a system for making up a roll map, there may be a case in which it is impossible to apply all process data to the roll map. For example, a manufacturing execution system (MES) of a factory is designed mainly for the purpose of managing the production of manufacturing targets. Therefore, the MES includes software, a server, a control device, and the like necessary for production management. However, there is a limit to allocating the server or the like of the MES to processing or storing data for making up the roll map in addition to the production management. When the MES uses more data processing capacity than necessary in order to acquire and store process data necessary for making up the roll map in addition to the production management, which is the main purpose of the MES, operation performance of the MES itself may be reduce. Alternatively, an operation speed of the roll map may be reduced due to an excessive data processing load.

To this end, one object of the disclosure is to solve such a problem. It is one of the ideas of the disclosure to solve this problem by dividing the roll map into a first roll map and a second roll map.

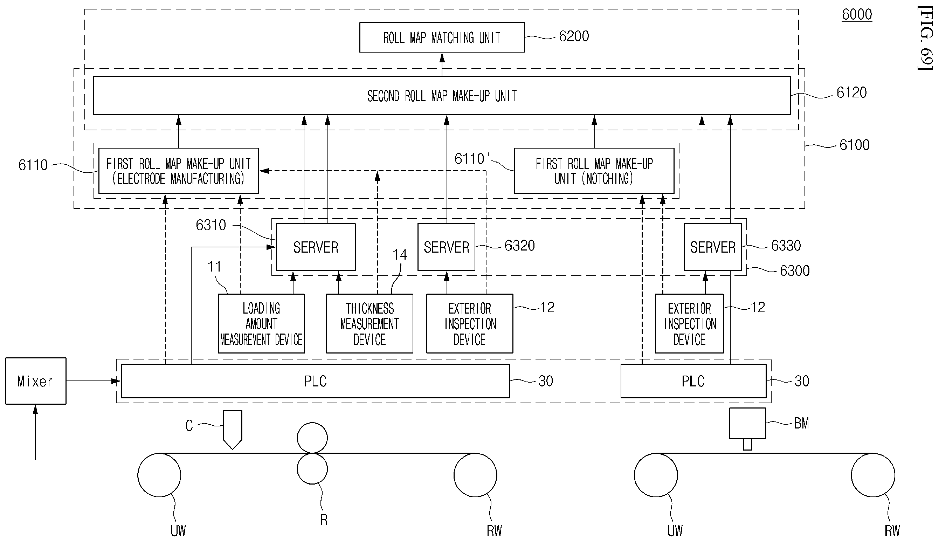

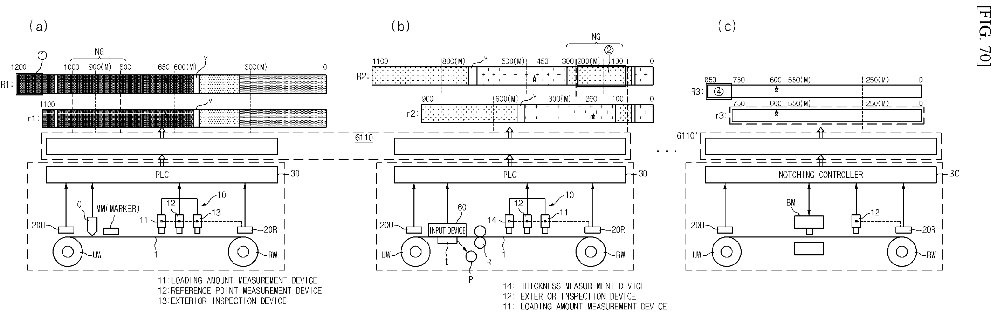

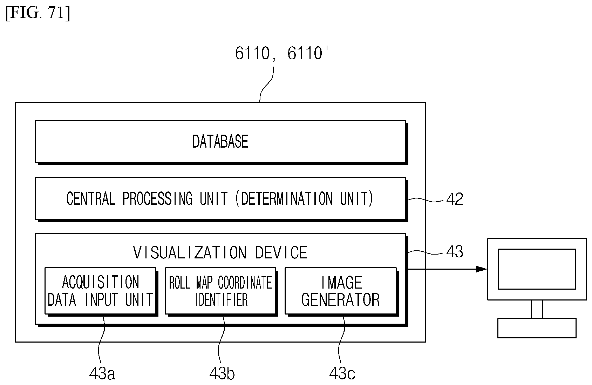

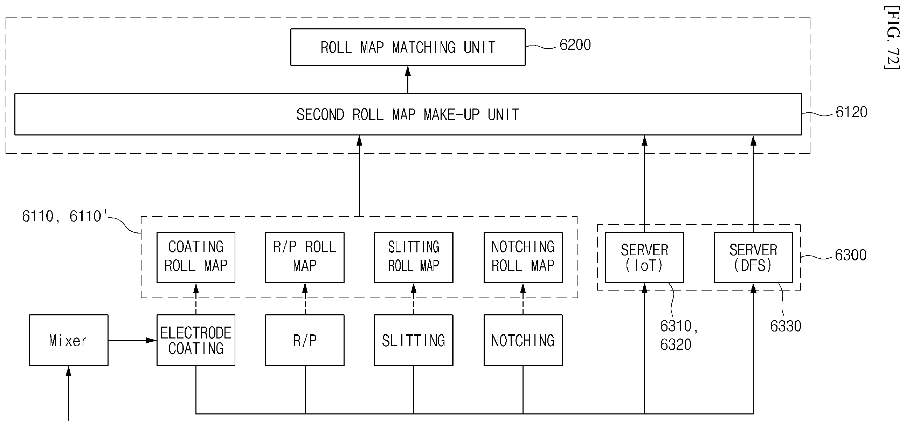

FIG. 69 is a configuration diagram of a system for monitoring and/or supervising a manufacturing process of a battery, FIG. 70 is a schematic diagram showing contents of making up a first roll map of an electrode manufacturing process and a notching process, FIG. 71 is a schematic diagram of a visualization device included in a first roll map make-up unit, and FIG. 72 is a data flowchart of a further system of manufacturing a battery.

The system for monitoring and/or supervising a manufacturing process of a battery will also be referred to as system for manufacturing a battery or simply as system, in the following.

The system for manufacturing a battery includes a first roll map make-up unit 6110 for making up a first roll map RI, which includes data of coordinate values indicating a position of an electrode and sample process data, which is a subset of process data generated according to the progress of plural processes (sub-processes) performed on the electrode, and matching coordinate values, with respect to at least one of the plural processes. The system further includes a second roll map make-up unit 6120 for making up a second roll map RII, which includes the data of the coordinate values and the sample process data of the first roll map and further includes additional data associated with the sample process data and matching the coordinate values, with respect to at least one process.

Referring to FIG. 69, the first roll map make-up unit 6110 makes up the first roll map RI including the data of the coordinate values indicating the position of the electrode and only some data of the process data generated according to the progress of the processed performed on the electrode and matching the coordinate values.

That is, the first roll map RI includes only some data, i.e., a predefined subset, of the process data acquired while the sub-processes are performed. The included subset of data is referred to as sample process data.

The process data includes at least one of equipment data acquired in each piece of process equipment, process-related inspected and/or measured data acquired in each process, and time-series data acquired in each process.

The equipment data is data acquired from the PLC 30 (equipment control device, for example, a PLC unit) for performing each process. The PLC is a control device configured for maintaining, managing, automatically controlling, and monitoring a process system in each process, such as an electrode manufacturing process, an assembly process, an activation process, and module/pack processes. The PLC, for example, may be configured to control the driving of a motor required for moving the electrode, the adjustment of a rotating speed of the motor, and the like. Additionally or alternatively, the PLC may be configured to control parameters required for each process. For example, the PLC may be configured to control an electrode drying temperature and/or an electrode temperature in the electrode coating process and may adjust a roll press pressure and the like in the roll press process. Therefore, the equipment data may include all parameters controlled or managed by the PLC 30 in each process.

In addition, the process data may include the process-related inspected and/or measured data acquired in each process. For example, in the electrode coating process, an electrode slurry loading amount may be measured, or reference points marked on the electrode may be measured. In the roll press process, a thickness of the electrode after pressing may be measured. In addition, the exterior inspection device 12 (vision inspection device) or the like may be commonly adopted in the coating process, the roll press process, the slitting process, the notching process, and the like. As described above, the inspected and/or measured data includes all data inspected or measured by a predetermined inspection device, measurement device, or inspection and measurement device in each process. That is, the inspected and/or measured data includes operation results and/or test results performed in each process. Generally, as already discussed above, inspection and/or measurement devices are provided for the respective sub-processes and are configured to inspect and/or measure an electrode moving between an unwinder UW and a rewinder RW and acquire inspected and/or measured data specific to the respective sub-process to which the moving electrode is subject. The inspected and/or measured data and, if applicable, the equipment data, may be stored in a database as process data.

The process data may also include the time-series data acquired in each process. For example, the PLC may control the sequence of each process and the overall flow of the process. Therefore, it is possible to acquire events that occur according to the temporal flow of the process or a data generation time point (acquisition point). That is, the data (time-series data) on the data generation time point may be obtained for all data acquired in each process.

The process data is generated according to the progress of the process performed on the electrode, and the process data is acquired for each individual sub-process.

In the roll map, the process data is matched with the data of the coordinate values indicating the position of the electrode, and the roll map includes a visual imitation of the electrode subject to the respective sub-process, reflecting at least part of the acquired process data. Hence, the roll map visualizes and displays a matching result.

FIG. 70 shows a process of making up a first roll map of the coating process, the roll press process, and the notching process.

Such series of sub-processes may be performed by a so-called roll-to-roll process in which an electrode moves between an unwinder UW and a rewinder RW.

Each process may be controlled by the PLC 30, and the PLC 30 may control the driving of the unwinder UW and the rewinder RW. The PLCs in each process may be collectively referred to as an integrated PLC 30.

In the unwinder UW and/or the rewinder RW, a position measurement device 20 configured to acquiring coordinate values of a position of an electrode in a longitudinal direction may be provided. The position measurement device may be configured to acquire the coordinate values according to amounts of rotation of the unwinder UW and the rewinder RW. For example, the position measurement device may include rotary encoders 20U and 20R. The rotary encoders 20U and 20R are installed in a motor driving unit for driving the unwinder UW and the rewinder RW to detect an electrode movement distance according to the number of rotations (amount of the rotation) of a motor. Therefore, the positions of each electrode in the longitudinal direction according to the electrode movement distance may be acquired as coordinate values. The rotary encoder may directly transmit the acquired data of the coordinate values to the first roll map make-up unit 6110 or transmit the acquired data of the coordinate values to the first roll map make-up unit 6110 through the PLC 30. Generally, the system is configured, in particular, its position measurement device, to acquire the data of the coordinate values indicating the position of the electrode in each sub-process.

In addition, in each roll-to-roll process, an inspection and/or measurement device 10 for inspecting and/or measuring the electrode moving between the unwinder and the rewinder is provided. The type or number of inspection and/or measurement devices may be the same or different as shown in FIG. 69. For example, in the coating process, the electrode loading amount data may be acquired by a loading amount measurement device 11. In the roll press process, thickness data of the electrode may be acquired by a thickness measurement device 14. In all processes shown in FIG. 69, an exterior inspection device 12 may provided to acquire exterior data of the electrode. As already indicated above, the inspected and/or measured data acquired by the inspection and/or measurement device may be stored in a database as process data for each sub-process.

In addition, as described above, the PLC 30 collects the equipment data and the time-series data generated or acquired in each process.

The above-described process data may be connected to the data of the coordinate values in advance or matched in the first roll map make-up unit 6110.

For example, all process data acquired in each sub-process may be transmitted to the PLC 30, and the PLC may connect or map a subset of the process data with the data of the coordinate values. Alternatively, depending on the type of inspection and/or measurement device 10, there is a case in which the inspection and/or measurement device 10 itself connects or maps the data of the coordinate values with the inspected and/or measured data in conjunction with the position measurement device 20.

Meanwhile, coordinate values of the moving electrode in a width direction may be acquired by the inspection and/or measurement device 10.

Coordinate values of an electrode part for which the inspected and/or measured data has been acquired in the width direction may be acquired by the inspection and/or measurement device 10. For example, the inspection and/or measurement device 10, such as the exterior inspection device 12 shown in FIG. 69, may include a program configured for scanning and inspecting the exterior of the electrode in the width direction of the entire electrode. Alternatively, the inspection and/or measurement device 12 itself may be movably installed in the width direction of the electrode. Alternatively, a plurality of inspection and/or measurement devices may be installed in the width direction of the electrode. Therefore, the inspection and/or measurement devices 10 may acquire the process data (e.g., the loading amount data or the exterior defect data) on each point of the electrode in the width direction and also acquire position data (coordinate values) in the width direction for which the current data has been acquired. Therefore, each inspection and/or measurement device 10 may acquire both the coordinate values in the longitudinal direction and the coordinate values in the width direction of the electrode 1 for which the inspected and/or measured data has been acquired and transmit the coordinate values to the first roll map make-up unit 6110 to be described below.

The process data acquired in each sub-process may be matched with the data of the coordinate values indicating the position of the electrode in the first roll map make-up unit 6110.

The first roll map make-up unit 6110 may store the acquired process data or include a database 41 in which data on quality, dimensions, or the like of the electrode are stored (see FIG. 71). In addition, the roll map make-up unit 6110 may include a central processing unit 42 for processing the acquired data and instructing the visualization device 43 provided in the first roll map make-up unit 6110 to visualize the data. Generally, the roll map make-up unit 6110 may have the same configuration as the roll map make-up unit described above referring to Fig. 2.

The roll map make-up unit 6110 may include the visualization device 43 for defining a visualization region to form the first roll map as a visual imitation of the electrode 1 displaying coordinate values on the defined region. The visualization device 43 may match the data of the coordinate values with the process data and display a matching result. The visualization device 43 may be connected to the central processing unit 42 to visualize and display the process data and the data of the coordinate values according to instructions from the central processing unit.

As shown in FIG. 71, the visualization device 43 may include an acquisition data input unit 43a, a roll map coordinate identifier 43b, and an image generator 43c.

First, the acquisition data input unit 43a may receive data from the central processing unit 42.

The roll map coordinate identifier 43b may define the visualization region to form the roll map and define coordinate values of pixels within the visualization region for each data element of the acquired source data, i.e., the process data. In this case, when data on specifications, such as a lot number, a length, and a width of the electrode roll, is input to the controller 30, the database, a server (not shown), or the like by registering information on the electrode roll, the roll map coordinate identifier 43b may calculate and determine the visualization region of the roll map according to a predetermined conversion scale from data on a size of the electrode 1. Alternatively, the roll map coordinate identifier 43b may also calculate and determine the visualization region of the roll map according to the predetermined conversion scale from the above-described data of the coordinate values of the electrode 1 in the longitudinal direction and the width direction.

The roll map coordinate identifier 43b may map the acquired inspected and/or measured data, or generally the process data, with the data of the coordinate values of the electrode 1 (in the width direction and the longitudinal direction) and allocate the mapped data on the visualization region (roll map) according to the coordinates of the pixels.

The image generator 43c may express the mapped data elements allocated to the coordinates of each pixel in the visualization region as at least one legend. Therefore, the first roll map RI according to the present disclosure may be generated by implementing the process data to be visually displayed at coordinates of pixels (coordinates on the first roll map) corresponding to each position data (data of the coordinate values) of the actual electrode 1 in a shape, form, or color designated for each data in the visualization region called the roll map by the image generator 43c.

The first roll map make-up unit 6110 may be, for example, a data processing system, such as an MES, or one component of the system. Alternatively, the first roll map make-up unit 6110 may be software having operating logic of the data processing system, hardware including the corresponding software, a mechanical device, or the like.

In the electrode 1 manufacturing process, an electrode MES for managing a series of electrode manufacturing processes, such as coating, roll press, and slitting, may be provided, and the electrode MES or one component of the electrode MES may become the first roll map make-up unit 6110 in the electrode manufacturing process.

In addition, in the assembly process, an assembly MES may be provided, and the assembly MES or one component of the assembly MES may become, for example, a first roll map make-up unit 6110' in the notching process.

The first roll map RI of each process may be made up by the MES.

For example, under the MES environment, it is difficult to use all of the process data to make up the first roll map RI for the original operation of the MES. When the amount or number of process data is large, it may affect the operation of the MES itself or may consume a lot of time to match data for making up the roll map, thereby reducing an operation speed of the roll map.

In order to solve this problem, the roll map includes only some of the process data. That is, a first roll map RI is made up using sample process data being a subset of data of the process data. The sample data may be, for example, at least one of a representative value of specific process data, an average value, and a determination value based on the process data.

For example, when the electrode moves in each sub-process, a temperature of the electrode may vary depending on the position of the electrode. Alternatively, the electrode loading data in the coating process and the electrode thickness data in the roll press process may be acquired over a specific section or entire section of the electrode. When the entire data (raw data) is sent directly to the first roll map make-up unit 6110 or 6110', the making-up of the roll-map is delayed as a huge quantity of data is to be processed, and the operation of the first roll map make-up unit 6110 or 6110' or the system including the same may be overloaded. Tn order to avoid this, when the roll map is initially made up, the first roll map RI is made up by matching only the subset of the process data forming the sample process data with the data of the coordinate values of the electrode. That is, when only important or small-sized data among the process data is selected and matched with the data of the coordinate values, the first roll map RI may be quickly made up without applying a large load to the system. Thus, computational resources can be saved.

For example, thousands of raw data sets may be generated just by scanning the above-described loading amount data and thickness data once by a predetermined measurement device. When scanning the loading amount data and the thickness data thousands of times, the number of data increases exponentially. Therefore, when an average value of specific data is obtained and the average value is displayed on the first roll map RI, the amount of data to be processed can be greatly reduced. Alternatively, it is possible to obtain the same effect by displaying only representative values capable of representing a plurality of loading amount data or thickness data. For example, at least one of a maximum value, a minimum value, a median value, and the like of the specific data may be determined as the representative values for the respective sub-process. Statistically or according to the quality characteristics of the electrode, a value well indicating the attribute of the specific data may be determined as the representative value.

In addition, after determining the quality of a plurality of pieces of data, only a determination value determined to be outside a predefined range, i.e., defect, or to be within a predefined range, i.e., good, may be displayed on the first roll map RI. One or more of the representative value, the average value, and the determination value may match the coordinate values, and a matching result may be displayed on the roll map. In this case, some data may be displayed over the entire section of the roll map bar imitating the electrode or may also be displayed only in some sections.

The sample process data may be a specific type of data among the process data. For example, only the inspected and/or measured data among the time-series data, the equipment data, and the inspected and/or measured data may be selected as the sample process data to be displayed on the roll map, and the remaining data may not be selected for being displayed. Alternatively, only exterior data of the electrode among the inspected and/or measured data may be selected as the sample process data to be displayed, and the remaining data may not be selected for being displayed. That is, the sample process data displayed on the first roll map RI may be include a subset of one or more types of data among the process data or may be a subset of data extracted from the specific data, such as a representative value of selected specific data.

Referring to FIG. 72, the flow of the sample process data is indicated by a dotted line. In FIG. 72, the first roll map make-up unit 6110 (e.g., the electrode MES) of the electrode manufacturing process (coating, roll press, or slitting process) is positioned to be connected to the PLCs 30 of each process, and the first roll map make-up unit 6110' (e.g., the assembly MES) is positioned to be connected to the PLC 30 of the notching process. The electrode MES and the assembly MES are combined to form the first roll map make-up units 6110 and 6110' as described above. Among the process data, a subset of data of the time series data and the equipment data are each transmitted to the first roll map make-up units 6110 and 6110' as sample process data. **In** addition, a subset of data of the inspected and/or measured data acquired from various inspection and/or measurement devices 10 are transmitted to the first roll map make-up units 6110 and 6110'.

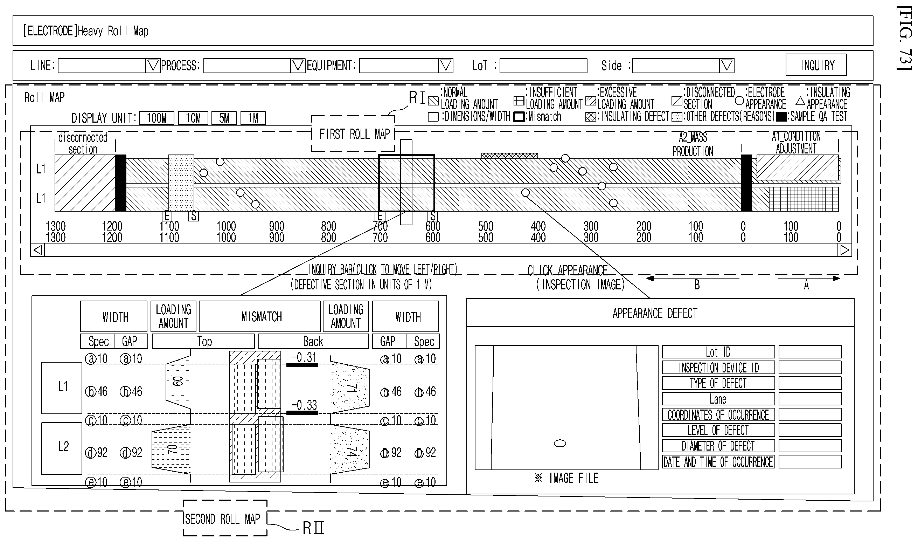

FIG. 73 shows the first roll map RI. That is, a state displayed by varying a color, a contrast, a hatching, or the like in a specific section of the first roll map RI indicates an average value, a representative value, a determination value, or the like in the specific electrode section or the entire electrode section. Therefore, it is possible to intuitively and easily identify the state of the electrode in the corresponding process.

As shown in FIG. 73, the system for manufacturing a battery includes the data of the coordinate values and sample process data of the first roll map RI and includes the second roll map make-up unit 6120 for making up the second roll map RII further including the additional data.

The additional data may include at least one of image data of an electrode, raw data acquired for a specific section or the entire section of the electrode, processed data of the process data, and processed data of the raw data. That is, the second roll map RII may be made up by adding mainly large-size data to the first roll map RI.

Since the image data generally has a large size, the image data may be stored in a separate server 6330 as additional data, loaded from the server 6330, as necessary, and displayed on the first roll map RI. **In** addition, by also loading all raw data of a specific parameter (e.g., a thickness of an electrode), for example, by comparing the all raw data with average value data of the parameter, it is possible to identify a change trend of the corresponding parameter.

**In** addition, the processed data of the process data or the processed data of the raw data may also be used as the additional data. For example, the loading amount may also be simply displayed in color or contrast, but may be displayed graphically or by being processed as a graph so that loading amounts for each electrode lane and each electrode surface may be clearly displayed at a glance. Alternatively, as necessary, the loading amount may be displayed together with a loading amount according to a width of the electrode or displayed in connection with another parameter, such as mismatch. As described above, data obtained by visually and statistically processing data or processing data to another form for quality analysis and control may be determined as additional data and displayed on the second roll map RII. **In** this case, a predetermined program for processing data may be provided in the second roll map make-up unit 6120. Alternatively, the program is provided in the servers 6310 and 6320 for storing the raw data and the like, and the server may process the additional data and also match the data processed by the second roll map make-up unit 6120 with the data of the coordinate values and display a matching result.

Alternatively, the second roll map RII may be made up by adding other types of data (e.g., the time series data or the equipment data) to the first roll map RI as the additional data in addition to the sample process data including some types of data (e.g., the inspected and/or measured data) among the process data.

The added data may be associated with the sample process data and matched with the coordinate values. For example, when the average value of the loading amount data is displayed on the first roll map RI, the second roll map RII may be made up by displaying the entire raw data of the loading amount data in the electrode section of the corresponding coordinate values. Alternatively, when exterior defects are displayed on the first roll map RI, the second roll map RII may be made up by loading an exterior image corresponding to a coordinate value or a coordinate range of the exterior defect.

Alternatively, the time-series data indicating a time point at which the corresponding data has been acquired may be loaded at the coordinate value for which inspected and/or measured data has been acquired and displayed on the second roll map RII.

Alternatively, among the equipment data, parameters related to the loading amount or the thickness of the electrode, for example, electrode temperature data may be loaded and displayed on the second roll map RII in connection with the corresponding data.

As described above, the second roll map RII may be made up by displaying a small-sized subset of the process data on the first roll map RI as sample process data and a large-sized set of additional data associated with the sample process data in relation to the first roll map RI.

The second roll map make-up unit 6120 may be another component of the above-described MES system. For example, the additional data may be processed and displayed by adding a large-capacity server in the MES. Alternatively, the second roll map make-up unit 6120 may be a system separate from the first roll map make-up unit 6110 or an upper level control system. For example, the SPC or one component of the SPC may be used as the second roll map make-up unit 6120. Here, the SPC is a management method or system of efficiently operating a process in a statistical method to achieve the quality or productivity target required in the process. In this case, the first roll map RI may be made up by matching the data of the coordinate values with the sample process data in the first roll map make-up unit 6110, and the second roll map RII may be made up by matching the additional data with the coordinate values of the first roll map RI in the second roll map make-up unit 6120, which is the SPC. The first roll map make-up unit 6110 may transmit or receive data to and from the second map make-up unit 6120, and thus data (the coordinate values, some data, or the first roll map itself) of the first roll map RI is sent to the second roll map make-up unit 6120. The second roll map RII includes the data of the first roll map RI and additional data. Similar to the first roll map RI make-up unit, the second roll map make-up unit 6120 may also include a database, a central processing unit, and a visualization device.

In FIGS. 69 and 72, the sample process data sent to the first roll map make-up unit 6110 is indicated by dotted lines, and the additional data sent to the second roll map make-up unit 6120 is indicated by solid lines.

In order to schematically illustrate the electrode manufacturing process, FIG. 69 shows that the electrode moves between one unwinder UW and one rewinder RW. However, actually, a plurality of sub-processes in which a plurality of unwinders and rewinders are provided may be performed. FIG. 72 shows the simplified flow of corresponding data when the plurality of sub-processes are performed in time-series.

A separate server 6300 may be provided to store additional large-size data. For example, a first server 6310 may be provided to store the additional data of the electrode manufacturing process excluding image data. Alternatively, a second server 6320 dedicated for storing the image data may be provided. In addition, a third server 6330 may be provided to store the additional data in the notching process. As shown in FIG. 72, in order to store all additional data other than the image data, the first server and the third server 6310 and 6320 may also be integrated.

The servers may be connected to the controllers (PLCs) 30 and inspection and/or measurement devices 10 controlling the respective sub-process to store the additional data. In addition, the servers may transmit the data received from the controllers 30 and the inspection and/or measurement devices 10 to the second roll map make-up unit 6120. As described above, the flow of the additional data is indicated by solid lines in FIGS. 69 and 72.

The second roll map make-up unit 6120 makes up the second roll map RII by displaying the additional data on the first roll map RI. The first roll map RI and the second roll map RII are made up for at least one of the sub-processes. When plural sub-processes are performed, it is necessary to perform quality control and tracking according to the position of the electrode by matching the data of the coordinate values of the roll map between the preceding and following sub-processes. To this end, as will be described below, the system 6000 for manufacturing the battery may include a roll map matching unit 6200.

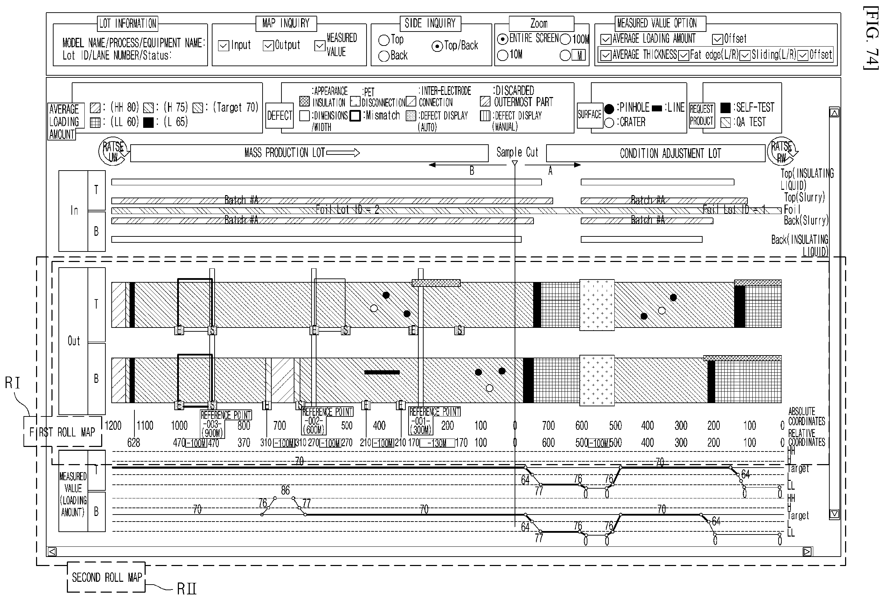

FIGS. 73 and 74 show examples of the first roll map RI and the second roll map RII.

FIG. 73 shows the first roll map RI imitating two electrode lanes L1 and L2. The data of the coordinate values is displayed at a lower end of the first roll map RI and matches each coordinate value to display exterior and loading amount data of the electrode by varying a contrast or a hatching.

The additional data on the specific section of the first roll map RI is displayed at a lower left end of the first roll map RI. Detailed data on loading amount-mismatch-electrode width is displayed for two electrode lanes at the lower left end of the first roll map RI. In addition, detailed images of the exterior defect at a specific place of the first roll map RI are displayed at a lower right end of the first roll map RI. The first roll map RI is made up by the first roll map make-up unit 6110. Including the first roll map RI shown in the upper part of FIG. 73, the additional data shown in the lower part thereof is added by the second roll map make-up unit 6120, and to this end, the second roll map make-up unit 6120 may be connected to the first server 6310 and the second server 6330 to make up comprehensive information (i.e., the second roll map RII) in which required additional data is connected to the coordinate value and some data of the first roll map RI.

The upper part of FIG. 74 shows the first roll map RI displaying the loading amount data by varying a hatching with respect to the top and back surface of the electrode. The coordinate values are displayed at the lower end of the first roll map RI. The processed data on the loading amounts for the top and back surfaces processed as a graph is displayed under the first roll map RI. Therefore, a change in the loading amount according to the length of the electrode can be identified easier.

Meanwhile, FIGS. 69 and 72 show an electrode material that is input into the electrode coating process from a mixer. That is, the material is input into a coater from the mixer in the coating process for manufacturing the electrode. In this case, at least one of the following data may be sent to the PLC in the coating process:
1) Data on specifications of the input material for manufacturing the electrode;
2) Process data for a mixing process of the input material; and
3) Path data on a moving path through which the mixed input material is moved to the electrode coater.

Referring to FIG. 53, a plurality of tanks 3100 are disposed between the mixer M and the coater.

Specifically, the specifications of the input material for manufacturing the electrode may be lot information of an electrode slurry produced in the mixer, a batch ID of a batch container, or the like. The data on the specifications of the input material for manufacturing the electrode may be displayed in a barcode or other expression format on a conveying tool introduced into the mixer or a slurry batch container moving from the mixer to the tank (main tank).

In addition, the process data for the mixing process of the input material may include equipment data acquired by a mixing controller in the mixing process and inspected and/or measured data of the mixing process.

In addition, as shown in FIG. 53, the moving path from the mixer to the coater may be a plurality of tank moving paths disposed between the mixer and the coater. Data on the path may be acquired by a controller for detecting electrode slurry lot information shown in and described with reference to FIG. 53.

The system 6000 for manufacturing the battery may be connected to the mixer controller and a slurry lot information detection controller to display the above-described data on the input material on the first roll map RI or the second roll map RII.

Therefore, the data on the input material for manufacturing the electrode may be matched with the coordinate values of the first roll map RI and the second roll map RII by the first roll map make-up unit 6110 or the second roll map make-up unit 6120.

Meanwhile, specifications, such as a lot number, a length, and a width of a current collector roll (coating process) or an electrode roll (roll press, slitting, or notching process) coated with the electrode slurry may also be sent to the first and second roll map make-up units 6110 and 6120 and matched with the coordinate values of the roll map and other process data.

As a result, data on all sub-processes from the electrode manufacturing (coating, roll pressing, or slitting) process by the mixing of the input material for manufacturing the electrode, the movement of the input material, such as slurry, and the input material to the notching process may be displayed on the first roll map RI and the second roll map RII. Therefore, it is possible to easily perform quality control and tracking of all processes from the mixing to the notching.

Meanwhile, the system 6000 may include the roll map matching unit 6200 for matching the coordinate values of the first roll map RI or the second roll map RII between consecutive ones of the plurality of sub-processes.

Specifically, the system includes the roll map matching unit 6200 for performing at least one of the following operations:
i) Matching the coordinate values of the first roll map RI of a first sub-process with the coordinate values of the first roll map RI of a second sub-process that is performed directly following to the first sub-process so that an actual electrode represented by the first roll map RI of the first sub-process corresponds to an actual electrode represented by the first roll map RI of the second sub-process; and
ii) Matching the coordinate values of the first roll maps RI of each sub-process with the coordinate values of the first roll map RI of a final sub-process so that an actual electrode represented by the first roll map RI of the final sub-process among the plurality of sub-processes corresponds to an actual electrode represented by the first roll maps RI of each sub-process performed before the final sub-process.

Additionally or alternatively, the system includes the roll map matching unit 6200 for performing at least one of the following operations:
i) Matching the coordinate values of the second roll map RII of the first sub-process with the coordinate values of the second roll map RII of the following second sub-process so that an actual electrode represented by the second roll map RII of the first sub-process corresponds to an actual electrode represented by the second roll map RII of the second sub-process; and
ii) Matching coordinate values of the roll maps of each sub-process with the coordinate values of the second roll map RII of a final sub-process so that an actual electrode represented by the second roll map RII of the final sub-process among the plurality of sub-processes corresponds to an actual electrode represented by the second roll map RII of each sub-process performed before the final process.

As described above, the roll map matching unit 6200 may match the coordinate values of the first roll map RI or the coordinate values of the second roll map RII of the preceding and following sub-processes, the final process, or each process and compare pieces of information on each process based on the same actual electrode. This will be described below.

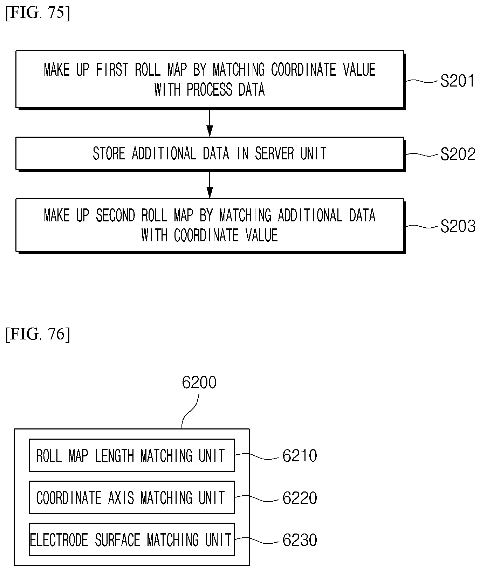

Referring to FIG. 75, a method for monitoring and/or supervising of a manufacturing process of a battery includes making up a first roll map RI, which includes data of the coordinate values indicating a position of an electrode and sample process data being a subset of the process data matched with the coordinate values and generated according to a proceeding one of the sub-processes performed on the electrode, for at least one sub-process (S201), storing additional data associated with sample process data (S202), and making up a second roll map RII, which includes the additional data in addition to the data of the coordinate values and the sample data of the first roll map RI, for at least one sub-process by matching the additional data with the coordinate values (S203). The method for monitoring and/or supervising of a manufacturing process of a battery may also be referred to as method for manufacturing a battery or simply as method.

As described above, in each process, the data of the coordinate values and the process data are acquired by a position measurement device, such as a rotary encoder, a PLC, or an inspection and/or measurement device. The position measurement device, the PLC, and inspection and/or measurement device may, for example, form part of a data recording unit which, generally, is configured to acquire process data of the sub-processes of the manufacturing process of the battery. The data of the coordinate values and the process data are made up as the first roll map RI by a predetermined coordinate conversion and visualization tool in the first roll map make-up units 6110 and 6110', which is the MES or one component of the MES. In this case, in order to reduce a data processing capacity of the first roll map make-up unit, only the subset of the process data included in the sample process data, such as a representative value, an average value, and a determination value, are matched with the coordinate values of the respective sub-process.

The additional data associated with the sample process data is stored by the server 6300 by the PLC or the inspection and/or measurement device. The server may be provided within the first roll map make-up units 6110 and 6110' or provided separately from the first roll map make-up unit 6110. A plurality of servers may be provided according to the type of data to be added.

The additional data stored in the server may be matched with the coordinate values of the first roll map RI and displayed on the first roll map RI or separately from the first roll map RI. A roll map including the data of the coordinate values and the sample process data of the first roll map RI and the additional data is referred to as the second roll map RII. The second roll map make-up unit 6120 may be an upper level control system separately from the first roll map make-up unit 6110 or one component of the system. The second roll map make-up unit 6120 may be connected to the server in which the additional data is stored to receive the additional data from the corresponding server and make up the second roll map RII.

A first roll map and, optionally, also a second roll map may be made up for each sub-process. However, in the roll-to-roll process, since the electrode wound in the preceding process is unwound in the following process, the start and end portions of the electrode are reversed by going through the roll-to-roll processes. Thus, in the visual representation of the electrode included in the roll map, the end portion of the representation of the electrode roll for the preceding process becomes the start portion of the representation of the electrode roll for the following process. In addition, in the case of a double-sided electrode in which an electrode active material is coated on both side surfaces of the electrode, the surfaces of the electrode may be reversed such as the top electrode of the preceding process becoming the back electrode in the following process. That is, the start/end reversal and the surface reversal of the electrode may occur according to the winding direction of the electrode in the preceding process and the unwinding direction of the electrode in the following process. Since the roll maps of each process are made up based on the reversed electrodes, the coordinates of the roll maps of each process are also reversed. Furthermore, the length of the electrode may be changed through the series of roll-to-roll processes, e.g., when the electrode is cut in the longitudinal direction to remove a defect section or a broken section and connected several times through the series of roll-to-roll processes. Since the roll maps of each sub-process reflect such reversal and a change in length, coordinate values are different in each roll map.

In the final process (e.g., the notching process) of the electrode manufacturing process, only the remaining electrodes (survival electrodes) excluding the electrode parts removed in the previous process are left. Since a battery is manufactured with the survival electrodes, when a problem occurs in a finished or semi-finished battery, it is possible to track the cause of the problem with reference to the roll map of the final electrode. In addition, it is possible to reversely track the electrode part, which has caused the problem, with reference to the above-described roll maps of each process.

However, as described above, since the start and end portions and/or the surfaces of the electrode are reversed and the length is changed in the series of roll-to-roll processes, the coordinates of the roll maps of each sub-process do not match each other. Therefore, even when the roll maps are made up for each sub-process, it is difficult to track the cause of the occurrence of the problem compared to a roll map of a final survival electrode.

In order to solve the above problems, there is provided the system for monitoring and/or supervising a manufacturing process of a battery capable of easily identifying the data on quality or defects of the survival electrode left in the final process by matching the coordinate values of the roll maps of the preceding and following processes or matching the coordinate values of the roll maps of each process with the coordinate values of the final process in the series of roll-to-roll processes. The system for monitoring and/or supervising a manufacturing process of a battery will also be referred to as system for manufacturing a battery or simply as system, in the following.

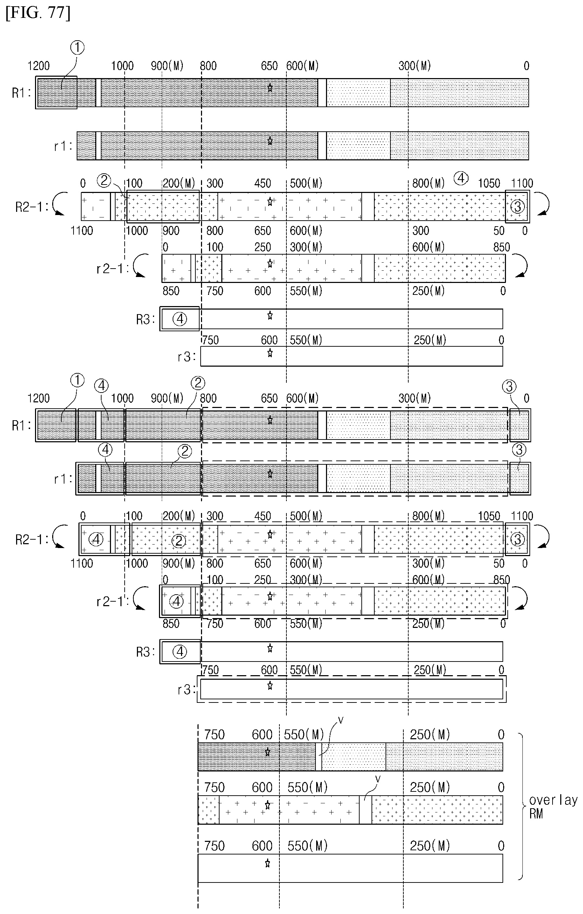

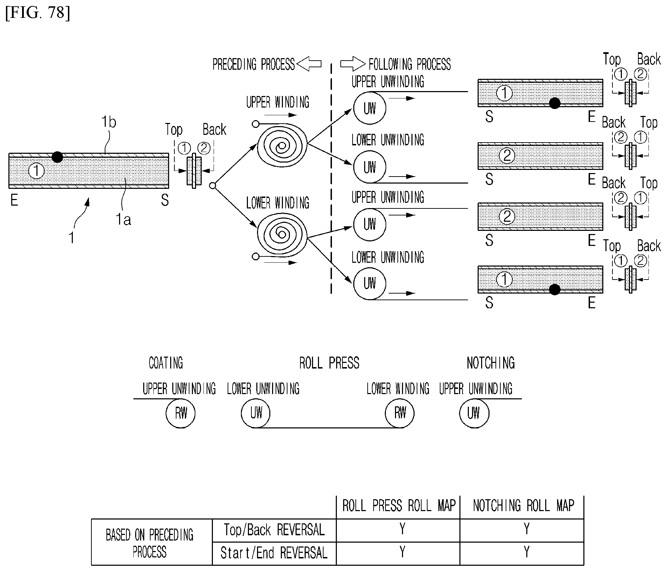

FIG. 76 is a schematic diagram of a roll map matching unit included in a system for manufacturing a battery, FIG. 77 is a schematic diagram showing a roll map length and coordinate axis matching process by the roll map matching unit, and FIG. 78 is a schematic diagram showing surfaces of an electrode that are reversed between the preceding and following processes.

The system 6000 includes a roll map make-up unit 6100 for making up a roll map, which includes data of the coordinate values indicating a position of an electrode and process data generated according to a first or proceeding sub-process of a plurality of sub-processes performed on the electrode and matching the coordinate value, for each sub-process, and a roll map matching unit 6200 for performing at least one of the following operations:
i) Matching the coordinate values of the roll map of the first or preceding sub-process with the coordinate values of the roll map of the following or second sub-process following directly to the first process so that the visual imitation of the electrode included in the roll map of the first or preceding process corresponds to the visual imitation of the electrode included in the roll map of the following or second sub-process; and
ii) Matching the coordinate values of the roll maps of each sub-process with the coordinate values of the roll map of the final sub-process so that the visual imitation of the electrode included in the roll map of the final sub-process among the plurality of sub-processes corresponds to the visual imitation of the electrode included in the roll maps of each sub-process carried out before the final sub-process.

As described above, the data of the coordinate values may be acquired by the position measurement device 20, such as a rotary encoder. **In** addition, the process data may be acquired by the PLCs 30 and the inspection and/or measurement devices 10 of each sub-process. The roll map make-up unit 6100 makes up the roll map, generally, by matching the process data to the data of the coordinate values (see FIG. 70). To this end, the roll map make-up unit 6100 may include a database, a central processing unit, and a visualization device (see FIG. 71).

As described above, the process data may include at least one of equipment data acquired in each piece of process equipment, process-related inspected and/or measured data acquired in each sub-process, and time-series data acquired in each sub-process.

Meanwhile, the roll map make-up unit 6100 may include the first roll map make-up unit 6110, the second roll map make-up unit 6120, or both the first roll map make-up unit 6110 and the second roll map make-up unit 6120 as shown in FIG. 69 and described in detail above. That is, the roll map make-up unit 6100 may include the first roll map make-up unit 6110 for making up the first roll map RI including the data of the coordinate values indicating the position of the electrode and the sample process data being a subset of the process data generated in the respective sub-processes performed on the electrode and matched with the coordinate values.

In addition, the roll map make-up unit 6100 may further include the second roll map make-up unit 6120 for making up the second roll map RII including the data of the first roll map RI and further including the additional data associated with the sample process data and matched with the coordinate values (see FIGS. 69 and 72).

Since the first roll map make-up unit 6110 and the second roll map make-up unit 6120 have been described above, detailed descriptions thereof will be omitted.

The roll map make-up unit 6100 may make up at least one of an absolute coordinate roll map displaying coordinate values of an electrode part removed during the respective sub-processes, between the sub-processes, and after a final sub-process together with a survival electrode part excluding the removed electrode part in one roll map, and a relative coordinate roll map displaying only the coordinate values of the survival electrode part excluding the removed electrode part in the roll map.

The absolute coordinate roll map is shown at the uppermost end in each of Figs. 70A, 70B, 70C, and the relative coordinate roll map is shown directly below. That is, an absolute coordinate roll map R1 of the coating process is shown on the upper end of FIG. 70A, and a relative coordinate roll map r1 is shown thereunder.

An absolute coordinate roll map R2 of the roll press process is shown on the upper end of FIG. 70B, and a relative coordinate roll map r2 is shown thereunder. An absolute coordinate roll map R3 of the notching process is shown on the upper end of FIG. 70C, and a relative coordinate roll map r3 is shown thereunder.

Since the relative coordinate roll maps r1, r2, and r3 represent or include a visual imitation of the survival electrodes that have survived after the corresponding sub-process has ended, the relative coordinate roll maps r1, r2, and r3 become roll maps representing actual electrodes.

In the coating process of FIG. 70A, a roll map of an electrode with a total length of 1200 m is shown. Reference points M are marked at points of 300, 600, and 900 meters, which are 25%, 50%, and 75% points of the electrode, and each of the reference points M is displayed in the roll map at the corresponding coordinate values based on data detected by a reference point measurement device 12. The reference point measurement device 12 is configured to detect positions of the reference points and may, for example, be provided as one of the inspection and/or measurement devices of a recording unit of a roll map make-up apparatus as explained above, for example, by reference to Figs. 2 to 4. In addition, the loading amount is also displayed in the roll map by varying a contrast over the corresponding coordinate section. However, a section v displayed in white without contrast means a section not inspected by the loading amount measurement device 11. When the electrode moves in the roll-to-roll process, a section in which the inspection device may not acquire data may occur due to various causes, such as fluctuation of the electrode, sensitivity of the inspection device, problems in data communication, or similar.

Meanwhile, coordinates of right ends of the roll maps R1 and r1 have coordinate values of zero as start portions and coordinates of left ends thereof have coordinate values of 1200 meters as end portions. The winding of the rewinder RW starts at the start portion, and an encoder value (coordinate value) of the rewinder RW at this time is zero. When the winding is ended, the encoder value of the rewinder becomes 1200. However, when the electrode 1 was wound by 1100 meters, the end of the electrode was actually cut by 100 meters. As described above, cutting the electrode after rolling the electrode is completed is referred to as "removal after completion." Meanwhile, cutting the defect section or the like and connecting the electrode 1 during the corresponding process is referred to as "current process removal." The roll map also displays information on a change in length of the electrode. Such a change in length of the electrode may be identified by detecting (inspecting) a change in distance between the reference points M. The absolute coordinate roll map R1 also displays the electrode with the length of 100 meters removed after completion, but the relative coordinate roll map r1 displays only the remaining electrodes (survival electrodes) excluding the removed electrode. In the relative coordinate roll map, the end portion of the electrode is expressed as 1100 meters.

Since the end portion of the electrode was removed by 100 meters at the end of the coating process or after the coating process was completed, the coordinate value of the end portion of the absolute coordinate roll map R2 of the roll press process was also 1100 meters. In addition, since the start and end portions of the electrode roll of the coating process and the roll press process were reversed, the coordinates of the roll map of the roll press process were also reversed. Therefore, the coordinate value of the reference point M of the coating process and the coordinate value of the reference point M of the roll press process were also changed. In addition, the coordinates of the star point were also changed from (650, 0.4) to (450, 0.2) according to the start/end reversal. In the roll press process, a section between 800 to 1000 meters marked as the defect section NG in the coating process, which is the sub-process carried out on the electrode preceding to the roll press process, was reversed to become a section between 100 to 300 meters. The defect section is removed from a table t of a defect section processing port and discarded to the defect removal port P (scrap port).

The matters on the removal of the defect section NG may be reported to the PLC 30 and the roll map make-up unit 6100 via input device 60, e.g., by manually entering respective data of the electrode into the input device 60. Since the defects in the section between 100 to 300 meters were removed, the point M at 200 meters, which was the reference point in the defect section, was also removed.

Only coordinates of the survival electrode left after the defect sections have been removed are displayed on the relative coordinate roll map r2 in FIG. 70B.

In the notching process, an electrode tab is formed by punching the electrode moving in the roll-to-roll state using a punching tool BM. In addition, the reference point measurement device 12 may be provided to check a change in length of the electrode before and after the notching process or during the notching process.

In the notching process, to which the electrode is subject after the roll press process, a start/end reversal of the electrode 1 occurs again. Therefore, the coordinates of the star were re-changed from (450, 0.2) to (600, 0.4). In addition, the end portion of the electrode was removed by 100 meters after notching. The coordinates of the removed electrode part are displayed on an absolute coordinate roll map R3 of the notching process together, but only the coordinates of the roll map of the remaining survival electrodes are displayed on a relative coordinate roll map r3. Through the coating process, the roll press process, and the notching process, a part of the electrode was removed a total of four times. Therefore, as can be seen, a length of the electrode changed from 1200 meters in the beginning to a final length of 750 meters.

Meanwhile, in the notching process, unlike the coating process or the roll press process, it is not necessary to separately make up the roll maps of the top and back surfaces of the electrode. In the notching process, only punching is performed without performing any special treatment on the top and back surfaces of the electrode. Therefore, as in the preceding sub-process, only the reference point measurement device 12 to detect the change in length is installed, while other inspection and/or measurement devices displaying the state of the electrode need not necessarily be installed. That is, the properties of the top and back surfaces of the electrode may be sufficiently identified by the roll maps of the coating process and the roll press process, and in the notching process, the properties of the top and back surfaces are not particularly changed by notching. Therefore, in the notching process, it is sufficient to make up a roll map of a single planar surface displaying only the coordinate values on the coordinate planar surface regardless of the top and back surfaces of the electrode.

The roll map matching unit 6200 may be configured to compare the roll maps of each sub-process with the same criterion or the same coordinate values. The roll map matching unit 6200 matches the coordinate values of the roll maps of the preceding and following sub-processes or matches the coordinate values of the roll maps of each sub-process among the plurality of sub-processes, e.g., the sub-processes coating, roll pressing and notching, with the coordinate values of the roll map of a final process.

The matching of the coordinate values of the roll maps of the preceding and following sub-processes may be regarded as being included in a process of matching or linking the coordinate values of the roll maps of each sub-process with the coordinate values of the roll map of the final sub-process in a broad sense. Therefore, hereinafter, the process of matching the coordinate values of the roll maps will be described based on the latter.

A case in which a series of roll-to-roll processes are performed is assumed.

In this case, the roll maps of each sub-process are matched so that the electrode represented by the roll map of the final sub-process among the plurality of sub-processes correspond to each electrode represented by the roll maps of each sub-process carried out before the final sub-process. That is, the roll maps are matched so that the electrode (survival electrode) being output by the final sub-process corresponds to the electrode of each sub-process carried out before the final process. The matching of the roll maps is performed by matching the coordinate values of the roll maps of each sub-process with the coordinate values of the roll map of the final process. Matching the roll maps of the survival electrode with the roll maps of the respective sub-processes, generally, may include matching the visual imitation of the electrode of the respective sub-processes to the visual imitation of the electrode of the final sub-process, such that the visual imitations show identical electrode parts, sharing common coordinate values.

Referring to FIG. 76, the roll map matching unit 6200 may include a roll map length matching unit 6210, a coordinate axis matching unit 6220, and an electrode surface matching unit 6230.

FIG. 77 is a schematic diagram showing a roll map matching process.

FIG. 77 shows the absolute coordinate roll map R1 and the relative coordinate roll map r1 of the coating process, the absolute coordinate roll map R2 and the relative coordinate roll map r2 of the roll press process, and the absolute coordinate roll map R3 and the relative coordinate roll map r3 of the notching process sequentially from the top. Each of the roll maps is made up by the roll map make-up unit 6100 in FIG. 69.

As described above, the relative coordinate roll map represents the electrode resulting from the respective sub-process. That is, the relative coordinate roll map represents the survival electrode excluding the electrode parts removed during each sub-process or between the respective sub-processes. Therefore, the roll map matching operation performed by the roll map matching unit 6200 is to match the coordinate values of the relative coordinate roll maps of each sub-process carried out before the final process with the coordinate values of the relative coordinate roll map of the final process.

In the series of roll-to-roll processes, parts of the electrode are removed before or after each process or in the corresponding process for various reasons, such as defects or non-uniform quality. Therefore, the coordinate values of the roll map of the final sub-process and the coordinate values of the roll maps of the preceding sub-processes differ. The important thing is that the coordinate values of the roll maps of each sub-process should match the coordinate value of the roll map of the final process so that the electrode (survival electrode) represented by the roll map of the final sub-process matches each electrode represented by the roll maps of each sub-process. When the length of the electrode is not changed between the start and final processes of the roll-to-roll processes, the roll map length matching is not required to perform a matching operation. However, due to the characteristics of the mass production process, the start and end portions of the electrode often have non-uniform quality, and a test production part or the like before mass production is often removed. Therefore, the length of the electrode is usually changed between the start and final sub-processes for any reason. In consideration of this, the roll map matching unit 6200 includes the roll map length matching unit 6210 for taking into account the change in length of the electrode when generating a roll map.

In order to match the length of the visual imitation of the electrode in the respective the roll maps, it is necessary to remove all coordinate sections corresponding to electrode parts cumulatively removed in the series of roll-to-roll processes from the visual imitation of the electrode in the roll maps of each process. In addition, by correcting the coordinate values of the remaining coordinate sections left from the removal from the visual imitation of the electrode included in the roll maps of each sub-process to correspond to the coordinate values of the roll map of the final process, the length of the visual imitation of the electrode in the respective the roll maps of each sub-process may match the length of the roll map of the final sub-process. In general, if part of the electrode that was subject to one of the respective sub-processes has been removed before the subsequent sub-process starts, coordinate values corresponding to the removed electrode part may be removed from the roll map, optionally, prior to reversing the longitudinal coordinate values of the roll map.

In addition, when a start direction of a coordinate axis of a roll map of a specific sub-process before the final process is reversed from a start direction of the coordinate axis of the roll map of the final sub-process according to a winding direction of the electrode in the rewinder RW of the respective preceding sub-process and an unwinding direction of the electrode in the unwinder UW of the following sub-process, the roll map matching unit 6200 matches the start direction of the coordinate axis of the roll map of the specific sub-process with the start direction of the coordinate axis of the roll map of the final sub-process. To this end, the roll map matching unit 6200 may include the coordinate axis matching unit 6220 for matching coordinate axes.

As described above, due to the characteristics of the roll-to-roll processes, the start/end reversal in which the start and end portions are reversed inevitably occurs in the roll map of the preceding sub-process and the roll map of the following sub-process. Since the coordinate axis matching is to match the (start) direction of the coordinate axis of the roll map of the final process, it is sufficient to match only the start direction of the coordinate axis of the roll map of the specific sub-process, which is opposite to the start direction of the coordinate axis of the roll map of the final sub-process, among the preceding sub-processes before the final sub-process. For example, the roll map of the process, which coincides with the direction of the coordinate axis of the roll map of the final process, among the preceding processes does not need to perform such a coordinate axis matching operation.

Referring to FIG. 77, there were a total of four electrode removal operations in the entire roll-to-roll process as follows:
① Removal of the end portion by 100 meters when the coating process is ended;
② Removal of the defect section by 200 meters during the roll press process;
③ Removal of the end portion by 50 meters after the roll press process; and
④ Removal of the end portion by 100 meters after the notching process is ended.

In the relative coordinate roll map r3 of the notching process, which is the final sub-process, the visual imitation of the electrode represents a total of a length of 750 meters due to the removal of parts of the electrode four times. In addition, the coordinates in the longitudinal direction of the star point, which is the electrode part for comparison, are 600 meters, and the coordinates in the width direction are 40 cm (0.4 m) in the relative coordinate roll map r3 of the notching process.

In order to match the length of the roll map of the final process, all coordinate sections corresponding to the electrode parts removed (removal of parts four times in the example of Fig. 77) in the entire roll-to-roll process were removed from the representation of the electrode in the relative coordinate roll maps of each sub-process. In this case, portions indicated by dotted boxes in FIG. 77 become portions of the roll map representing the finally surviving actual electrode.

In this case, since the start direction of the coordinate axis of the roll map of the coating process is the same as the start direction of the coordinate axis of the roll map of the notching process, the coordinate axis matching is not required. However, since the start direction of the coordinate axis of the roll map of the roll press process is reversed and different from the start directions of the coordinate axes of the roll maps of the coating process and the notching process, the coordinate axis matching operation is required.

In FIG. 77, upper ends of the absolute coordinate roll map R2 and the relative coordinate roll map r2 of the roll press process displays coordinate values before the coordinate axes are matched. When these coordinate values are reversed (corrected), as indicated in the lower end of the corresponding roll map, the coordinate values become the same as the start direction of the coordinate axis of the roll map of the notching process. According to the matching of the coordinate axes of the roll maps, the coordinate values of the reference points, the coordinate value of the defect section, and the coordinate values of the star points of the absolute coordinate roll map and the relative coordinate roll map of the roll press process are all changed. Specifically, both the longitudinal axis and the transverse axis, which are the coordinate axes of the roll map of the roll press process, match the directions of the coordinate axes of the notching process. In FIG. 77, the symbols indicated by R2-1 and r2-1 indicate that the coordinate axes of the absolute coordinate roll map R2 and the relative coordinate roll map r2 of the roll press process are reversed. That is, R2-1 indicates the absolute coordinate roll map of the roll press process in which the coordinate axes are reversed, and r2-1 indicates the relative coordinate roll map of the roll press process in which the coordinate axes are reversed.

In FIG. 77, an odd number (three) of roll-to-roll processes are represented by the roll maps, and the directions of the coordinate axes of the roll maps of the first sub-process (coating process) and the final sub-process (notching process) are matched. Therefore, the coordinate axes of the roll map of the second sub-process (roll press process), which is performed after an even number of times in which the directions of the coordinate axes have been reversed, match the coordinate axes of the roll map of the final process. However, when the entire process includes an even number roll-to-roll processes, unlike FIG. 77, coordinate axes of a roll map of an odd-numbered process, such as a first process, need to match coordinate axes of a roll map of a final process, which is an even-numbered process.

As described above, the coordinate axis matching is performed relatively based on the final process.

At the lower end of FIG. 77, roll maps finally matched by the roll map matching operation are shown. The coordinate section corresponding to the removed electrode section was removed from the roll maps of the coating process and the roll press process, and the directions of the coordinate axes of the roll map were also matched with the directions of the coordinate axes of the roll map of the notching process. Therefore, the coordinate values of the roll map made up in the notching process, which is the final sub-process, are accurately matched with the coordinate values of the roll maps made up in the coating process and the roll press process, which are the preceding sup-processes. All of the coordinate values of the longitudinal and transverse axes of the star points are also matched in the three roll maps matched as 600 meters and 0.4 meters.

As described above, a roll map in which the coordinate values of the roll maps of each sub-process are arranged side by side to match the coordinate values of the roll map of the survival electrode of the final process and viewed at once is referred to as "overlay roll map." The roll map matching unit 6200 is configured for making up the overlay roll map. When the overlay roll map is displayed on the display unit, the quality history or manufacturing history of the final survival electrode may be identified at a glance. Referring to FIG. 77, it can be seen from the (overlay) roll map of the roll press process that the battery manufactured with the electrodes at the star points was derived from the electrode having the rolled thickness (e.g., the rolled thickness in a normal range) indicated by a specific hatching in the roll press process. In addition, it can be seen from the roll map of the coating process that the battery manufactured with the electrodes at the star points was derived from the electrode having an excessive loading amount coated more than the normal range in the coating process. For example, when ignition occurs in the battery manufactured with the electrodes including the star points, it can be determined that there is a problem with the corresponding electrode from the manufacturing history of the coating process. Alternatively, the star points may be exterior or other defect portions. That is, when a problem occurs in the electrode including the star point and this is caused by a poor exterior, it is possible to simply identify from the overlay roll map which electrode part caused the portion corresponding to the exterior defect in the electrode manufacturing process.

As described above, by making up the roll maps of each process and matching the roll maps of each process by the roll map matching unit 6200, it is possible to easily identify data on quality or defects of the survival electrode surviving in the final process.

In addition, it is possible to easily identify the inspection history in the electrode manufacturing process using the matched roll map (overlay roll map).

In addition, according to the present disclosure, even when the start and end portions of the electrode roll are reversed or the length of the electrode is changed through the series of roll-to-roll processes, by making up the overlay roll map through the above-described matching of the lengths of the roll maps and matching of the coordinate axes, it is possible to intuitively and quickly track a problem with the quality of the electrode when the problem occurs.

Meanwhile, when the top surface of the electrode in the preceding process is reversed to the bottom surface of the electrode in the following process according to the winding direction of the electrode in the rewinder RW of the preceding process and the unwinding direction of the electrode in the unwinder UW of the following process, the matching unit 6200 may match the roll map by reflecting the surface reversal.

As shown in FIG. 78, there is a case in which the top and back surfaces of the electrode may be reversed in the preceding and following processes according to the winding and unwinding directions of the electrode in the preceding and following processes.

In this case, information on the reversal of the surfaces of the electrode is stored in the roll map matching unit 6200. For example, the PLCs 30 of each process retains information on the winding and unwinding directions of the electrode because it controls the electrode movement and the winding and unwinding of the electrode. The roll map matching unit 6200 may receive the information on the surface reversal from the PLC and store the information in the electrode surface matching unit 6230.

The electrode surface matching unit 6230 of the roll map matching unit 6200 matches the roll map of the top surface of the electrode in the preceding process with the roll map of the back surface of the electrode in the following process according to the information on the surface reversal.

FIG. 78 shows an example of making up an overlay roll map by the surface matching.

Referring to FIG. 78, in the rewinder RW of the coating process, the electrode is wound in the upper winding direction and unwound in the lower unwinding direction in the roll press process. That is, the top surface of the electrode in the coating process is reversed to the bottom surface of the electrode in the roll press process. The electrode surface matching unit 6230 receives and records the information on the surface reversal from the controller 30. For example, a control logic value when the surface reversal (top/bottom reversal) does not occur between the preceding and following sub-processes may be set to zero, and a control logic value when the surface reversal occurs may be set to 1.

In addition, in the rewinder RW of the roll press process, the electrode is wound in the lower winding direction and unwound in the upper unwinding direction in the unwinder W of the notching process. In this case, the surface reversal of the electrode occurs again, and in this case, the control logic value of 1 is set again by the electrode surface matching unit 6230. However, since the roll map of the notching process is made up as only a roll map of a single planar surface regardless of the surface of the electrode, there is not a big problem even when the reversal information is not reflected at the time of making up the overlay map when there occurs the surface reversal between the roll press process and the notching process. Referring to FIG. 78, it can be seen that the start/end reversal has also occurred between the coating process and the roll press process and between the roll press process and the notching process.

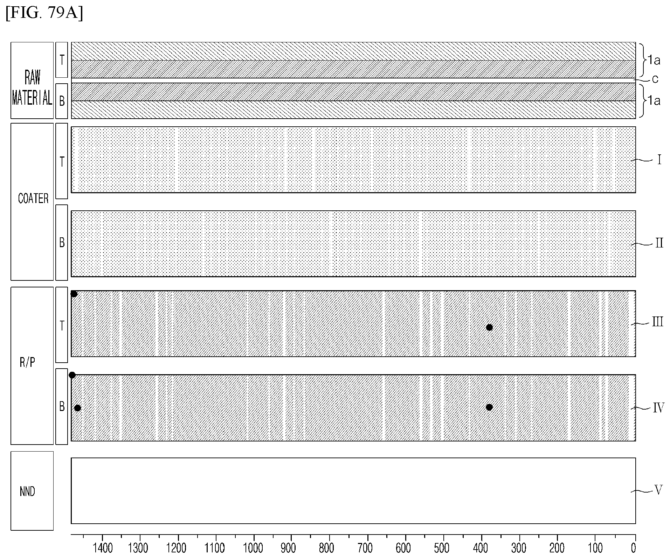

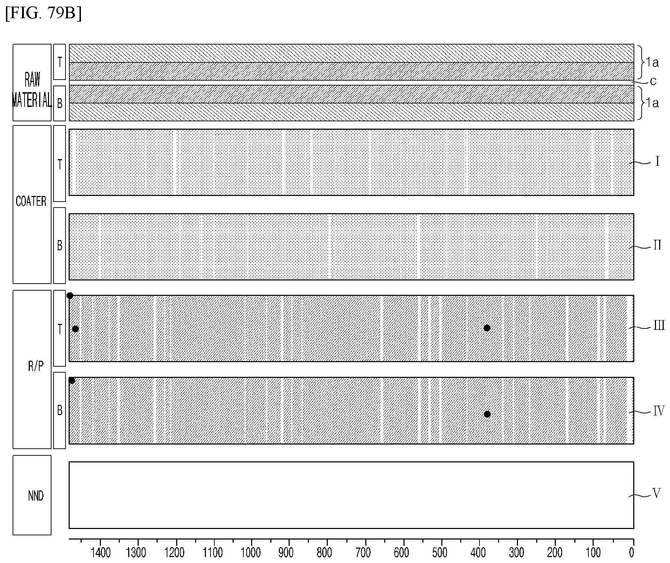

FIG. 79 shows one example of the overlay roll map in which the roll map length matching and the coordinate axis matching are performed by reflecting the change in length of the electrode and the change in coordinate axes.

FIG. 79A shows an overlay roll map when the surface reversal does not occur between the coating process and the roll press process, and FIG. 79B shows an overlay roll map when the surface reversal occurs.

Referring to FIG. 79A, since no surface reversal has occurred, a roll map I of the top surface T of the electrode of the coating process corresponds to a roll map III of the top surface T of the electrode of the roll press process.

In this case, control logic 0 is set in the electrode surface matching unit 6230. That is, the roll map I of the top surface of the electrode indicated by T in the coating process corresponds to the roll map III of the top surface of the electrode indicated by T in the roll press process. In this case, since the overlay roll maps of the top surfaces of the electrodes between the coating process and the notching process are formed of I, III, and V, it is possible to identify quality and product histories between the respective processes. Likewise, the overlay roll maps of the bottom surfaces B of the electrodes are formed of II, IV, and V.

Referring to FIG. 79B, since a surface reversal has occurred, the roll map I of the top surface T of the electrode of the coating process corresponds to the roll map IV of the back surface B of the electrode of the roll press process. In this case, control logic 1 is set in the electrode surface matching unit 6230. That is, the roll map I of the top surface of the electrode indicated by T in the coating process corresponds to the roll map IV of the back surface of the electrode indicated by B in the roll press process. In this case, since the overlay roll maps of the top surfaces of the electrodes between the coating process and the notching process are formed of I, IV, and V, it is possible to identify quality and product histories between the respective processes. Likewise, by also reflecting the surface reversal information to the bottom surface of the electrode, the roll map II of the bottom surface of the electrode of the coating process corresponds to the roll map III of the top surface T of the electrode of the roll press process. Therefore, the overlay roll map of the bottom surface of the electrode is formed of II, III, and V.

As described above, when the electrode surface matching unit 6230 provides the information on the surface reversal and does not match the surface reversal between the roll maps, there occurs a problem that roll maps representing surfaces of completely different actual electrodes are compared in the coating process and the roll press process. In this case, since the consistency of quality tracking using the overlay roll map is damaged, the quality tracking may be performed accurately.

The roll map matching unit 6200 may perform electrode surface matching in addition to the above-described roll map length matching and coordinate axis matching. Therefore, by making up the overlay roll map by the roll map matching of a predetermined logic even when the top and back surfaces of the electrode are reversed in the series of roll-to-roll processes, it is possible to quickly and intuitively track a problem with the quality of the electrode when the problem occurs.

The roll map matching unit 6200 may receive data from, for example, the first roll map make-up unit 6110 and match the coordinate values of the first roll map RI of the preceding sub-process and the first roll map RI of the following sub-process or match the coordinate values of the first roll maps RI of each process among the plurality of sub-processes with the coordinate values of the first roll map RI of the final process.

In addition, the roll map matching unit 6200 may receive data from, for example, the second roll map make-up unit 6120 and match the coordinate values of the second roll map RII of the preceding sub-process and the second roll map RII of the following sub-process or match the coordinate values of the second roll maps RII of each sub-process among the plurality of sub-processes with the coordinate values of the second roll map RII of the final process.

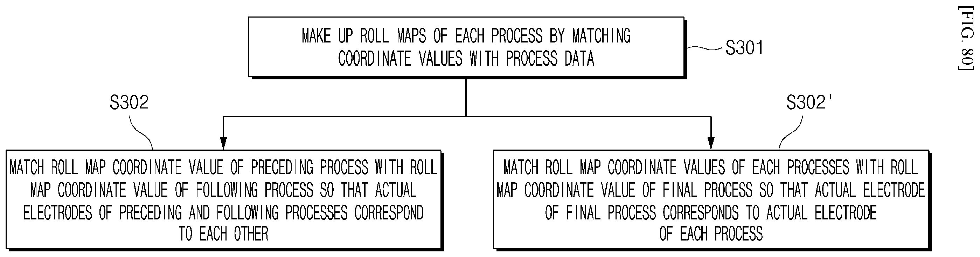

FIG. 80 shows a method of manufacturing a battery. The method of manufacturing a battery includes making up a roll map, which includes data of the coordinate values indicating a position of an electrode and process data generated according to a proceeding of a plurality of processes performed on the electrode and matching the coordinate value, for each process (S301), and
performing at least one of the following matchings:
I) Matching the coordinate values of the roll map of the preceding sub-process with the coordinate value of the roll map of the following sub-process so that the visual imitation of the electrode represented by the roll map of the preceding sub-process corresponds to the visual imitation of the electrode represented by the roll map of the following process (S302); and
ii) Matching the coordinate values of the roll maps of each sub-process with the coordinate values of the roll map of the final sub-process so that the visual imitation of the electrode represented by the roll map of the final process among the plurality of sub-processes corresponds to the visual imitation of the electrode represented by the roll maps of each sub-process carried out on the electrode before the final process (S301').

For example, the first roll map RI or the second roll map RII of each process may be made up by matching the data of the coordinate values of each process with the process data by the first roll map make-up unit 6110 and/or the second roll map make-up unit 6120 shown in FIGS. 69 and 72.

In addition, the roll map matching unit 6200 may match the coordinate values of the roll maps of the preceding and following sub-processes or match the coordinate values of the roll maps of each sub-process among the plurality of sub-processes with the coordinate values of the roll map of the final process. As described above, in the matching process, the lengths of the roll maps may be matched to match the following sub-process or the final sub-process. To this end, the roll map matching unit 6200 may include the roll map length matching unit 6210. In addition, when the coordinate axes of the roll map are reversed as the progress of the process, the coordinate axis matching considering this is performed together with the roll map length matching. To this end, the roll map matching unit 6200 may include the coordinate axis matching unit 6220. In addition, when the surfaces of the electrode are reversed between the preceding and following processes according to the progress of the process, the surface matching for matching the surface of the roll map with the reversed state is performed. To this end, the roll map matching unit 6200 may include the electrode surface matching unit 6230.

The roll map make-up unit 6100 and the roll map matching unit 6200 may be a data processing system (an MES, an SPC, or a DW) or one component of the corresponding system.

For example, the roll map make-up unit 6100 and the roll map matching unit may be one component of the MES. In this case, as shown in FIG. 69, the roll map make-up unit 6100 may be connected to the PLC, the position measurement device, and the inspection and/or measurement device in each process to exchange data for making up the roll map.

However, since the main purpose of the MES is production management, it is difficult to retain excessive data. Considering this point, the MES or the roll map make-up unit that is a component thereof, for example, the first roll map make-up unit 6110 may make up the first roll map to which only relatively small-size data is allocated. When the MES has a server with a large data processing capacity, the MES may include both the first roll map make-up unit 6110 and the second roll map make-up unit 6120. However, when it is difficult to install the server with the large data processing capacity due to the configuration of the MES, the second roll map make-up unit 6120 may be a separate upper level control system or one component of the upper level control system. Likewise, the roll map matching unit 6200 may also be a separate upper level control system or one component of the upper level control system when there is no appropriate server.

For example, the second roll map make-up unit 6120 and/or the roll map matching unit 6200 may be installed in the upper level control system, such as an SPC. That is, the second roll map make-up unit 6120 or the roll map matching unit 6200 may be the SPC or one component of the SPC. In this case, the second roll map RII may be made up by the second roll map make-up unit 6120 belonging to the upper level control system by adding data to the first roll map RI. In addition, the roll map matching unit 6200 in the SPC may receive necessary data from the first roll map make-up unit 6110 and the second roll map make-up unit 6120 and match the first roll map or the second roll map of the plurality of processes. Therefore, the coordinates of the roll maps between the plurality of processes may be corrected based on the same criterion and displayed in the form of, for example, an overlay roll map. Therefore, it is possible to easily identify the coordinate values of the plurality of processes and electrode corresponding parts in each process corresponding to the coordinate values. Furthermore, it is also possible to easily identify the process data of each process matched to each electrode corresponding part (coordinate values).

Meanwhile, the roll map matching unit 6200 may also be a control system higher than the SPC. For example, the roll map matching unit 6200 may be a data warehouse DW for converting and managing the data accumulated in the database in data in a common format. The data warehouse enables data-based decision-making and analysis by integrating data from multiple sources.

The roll map length matching unit 6210, the coordinate axis matching unit 6220, and the electrode surface matching unit 6230 may be software capable of performing predetermined calculation and matching operations or a computing system in which the software is embedded. For example, each matching unit may be a real-time system, such as an embedded computer system (ECS), and among them, a microcomputer may be adopted as each matching unit. The roll map length matching unit 6210, the coordinate axis matching unit 6220, and the electrode surface matching unit 6230 may mutually perform wired and wireless communication. In FIG. 76, the matching units are separately shown for functional classification. However, for efficient computing processing, one or more of the matching units may be integrated. For example, since both the roll map length matching and the coordinate axis matching are related to the conversion of the coordinate value, the roll map length matching and the coordinate axis matching may be integrally operated as one matching unit. Therefore, a detailed configuration of the roll map matching unit 6200 is not limited to the example of FIG. 76.

Meanwhile, FIGS. 69 and 72 show an electrode material that is input into an electrode coating process from a mixer. In this case, at least one of data on specifications of an input material for manufacturing the electrode, process data for a mixing process of the input material, and path data on a moving path or path of lines through which the mixed input material is moved or supplied to an electrode coater may match each matched coordinate value of the overlay roll map and the process data of each process matching the coordinate values and managed.

Since the data on the specifications, the process data for the mixing process of the input material, and the path data on the moving path have been described above with reference to FIG. 53, a detailed description thereof will be omitted.

The system for manufacturing a battery may be connected to the mixer controller and the slurry lot information detection controller to display the above-described data on the input material on the first roll map or the second roll map. In addition, the data may be displayed by matching the respective coordinate values and the process data of the overlay roll map displayed by matching the first and second roll maps.

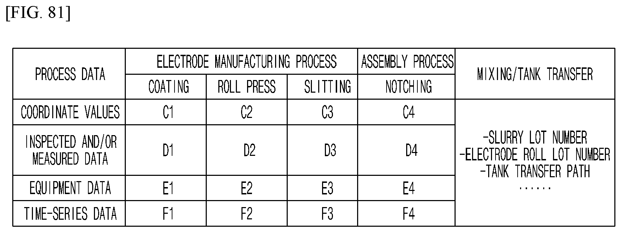

In FIG. 81, data acquired in the plurality of processes are displayed in association with each other (i.e., by matching each other). For reference, the data shown in FIG. 81 is displayed in alphabetical characters so that only the type of data may be distinct and is not displayed in specific numerical values or the like.

In FIG. 81, in mixing and tank movement, the data on the specifications (e.g., an electrode roll lot number and a slurry lot number), data on a tank movement path and the like are shown.

Data on each roll map of the electrode manufacturing process and the notching process is also displayed by being matched with the data on the mixing and tank movement processes. The data of the coordinate values may be coordinate values matched on, for example, the overlay roll map through the above-described roll map matching process.

The inspected and/or measured data may be inspected and/or measured data on the electrode parts of each process corresponding to the corresponding coordinate values. For example, in the coating process, D1 may be loading amount data at a coating process coordinate value C1, and in the roll press process, D2 may be electrode thickness data at a roll press coordinate value C2. In this case, C1 and C2 indicate positions of the same actual electrode.

The equipment data may be, for example, temperature data acquired from the electrode parts of each process corresponding to the corresponding coordinate values.

The time-series data may indicate a time point at which each data has been acquired. As described above, the equipment data and the time-series data may be acquired by the PLC of each process.

As described above, according to the system 6000 for manufacturing a battery and the method of manufacturing the same, process data matching the coordinate values of the roll map of a following sub-process and process data matching the coordinate values of a preceding sub-process matching the coordinate values of the roll map of the following process may be matched and/or managed.

Alternatively, process data matching the coordinate value of the roll map of the final sub-process and the process data of each sub-process matching the coordinate values of each sub-process matching the coordinate values of the roll map of the final sub-process may be matched and/or managed.

That is, when the plural sub-processes are performed, necessary data may be identified in connection with each other via the coordinate values of the electrode moving in each sub-process. Therefore, it is possible to easily perform quality control, analysis, monitoring, tracking, and the like in the electrode manufacturing process and the assembly process.

In addition, it is possible to overcome the limitations of a general PLC processing only time series data and other data in connection with each other. When the time-series data is used as a reference for comparison, it is not possible to specifically identify a change occurring between the preceding and following sub-processes. In addition, in many cases, the time series data and data generated by events of each process do not exactly correspond. In this case, a separate processing operation is required to match the time series data with each generated data. Such an operation is not only time-consuming, but also less accurate.

According to the present disclosure, by matching the coordinate values between the plurality of processes and matching the respective coordinate values with the respective process data and using matching results in manufacturing the battery, it is possible to manufacture the battery more comprehensively, intuitively, and efficiently throughout battery manufacturing.

The first roll map, the second roll map, and/or the overlay roll map may be stored in a storage medium.

The roll maps may be stored in the database of the roll map make-up unit 6100 or a separate storage medium. The database or the storage medium may be, for example, a memory. A plurality of memories may also be provided, as necessary. The memory may be a volatile memory or a non-volatile memory. As the memory of the volatile memory, a random access memory (RAM), a dynamic RAM (DRAM), a static RAM (SRAM), or the like may be used. As the memory of the non-volatile memory, a read only memory (ROM), a programmable ROM (PROM), an electrical alterable ROM (EAROM), an erasable programmable ROM (EPROM), an electrically erasable programmable ROM (EEPROM), a flash memory, or the like may be used. Examples of the above-listed memories are merely illustrative and are not limited to these examples. Alternatively, the storage medium may be a hard disk, a CD-ROM, a USB memory, a solid state drive (SSD), or the like.

The roll map and related data stored in the storage medium may be freely used in battery manufacturing, quality control, analysis, and problem tracking.

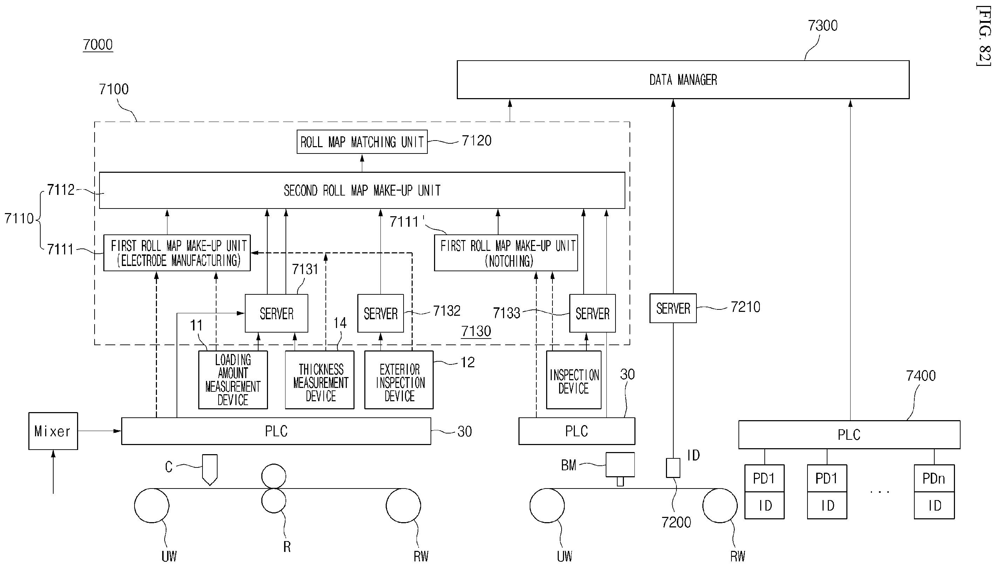

FIG. 82 is a configuration diagram of a further system 7000 for monitoring and/or supervising a manufacturing process a battery. The system 7000 for monitoring and/or supervising a manufacturing process a battery may also be referred to as system 7000 for manufacturing a battery or simply as system 7000, in the following.

The system 7000 for manufacturing a battery includes a coordinate data value server 7100 for storing coordinate values indicating a position of an electrode moving during a process performed on the electrode, an identification mark providing unit 7200 for providing an identification mark to the electrode at a predetermined interval, and a data manager 7300 for matching and/or managing a coordinate value of the coordinate value data server 7100 corresponding to the identification mark and the identification mark.

The system 7000 allows data associated with the roll map to be used in the following process after the identification mark is generated as well as a process of generating the identification mark by connecting the above-described coordinate values of the roll map and process data matching the coordinate values with the identification mark of the electrode. In addition, the system 7000 may monitor almost all production processes of the battery by matching or mapping the process data of a following process matching the identification mark with the process data of the process before the identification mark is generated based on the coordinate values of the roll map and the identification mark.

The coordinate values may be coordinate values indicating a position on the electrode and being reflected in a roll map on which the electrode 1 moving between the unwinder UW and the rewinder RW is imitated. For example, in the manufacturing process of the electrode, the coating process of coating the electrode with slurry, the roll press process of rolling the electrode, and the slitting process of cutting the rolled electrode, the roll map, on which the electrode 1 moving in a roll-to-roll manner is imitated, may be made up. Data of the coordinate values indicating a position on the electrode may be given in such a roll map. The coordinate values reflected in the roll map may be acquired by the position measurement device 20 (e.g., the rotary encoder) installed on the unwinder UW or the rewinder RW and the PLC 30 or the inspection and/or measurement device 10 installed in each process. For example, the coordinate values of the electrode in the longitudinal direction may be acquired by the rotary encoder. For example, the coordinate values of the electrode in the width direction may be acquired by the inspection and/or measurement device 10.

The coordinate value data server 7100 stores the coordinate values indicating the position of the moving electrode during the process performed on the electrode.

Referring to FIG. 82, the coordinate value data server 7100 may include a roll map make-up unit 7110, a roll map matching unit 7120, and/or optional servers 7130 for storing necessary data.

For example, the roll map make-up unit 7110 connected to various inspection and/or measurement devices 10 and position measurement devices 20 may receive and store the data of the coordinate values indicating the position of the electrode 1 moving between the unwinder UW and the rewinder RW. In this case, the coordinate values and the process data may be matched and displayed on the visualization region called the roll map. Generally, as already discussed in detail above, the roll map includes a visual imitation of the electrode being subject to a roll-to-roll process, wherein the roll map reflects at least part of the process data acquired, at least partially, by the inspection and/or measurement devices 10 for the respective roll-to-roll process and the corresponding coordinate values. A roll map which is made up based on only a subset of the process data is referred to as "the first roll map RI," as explained above, in particular, by reference to Figs. 69 to 75. Also in this context, the subset of the process data used for making up the first roll map RI may be referred to as sample process data. A roll map, which is made up based on the first roll map by adding and displaying additional data associated with the subset of data used to make up the first roll map and matching the coordinate values on the first roll map is referred to as "the second roll map RII", as also explained above. The roll map make-up unit 7110 may include a first roll map make-up unit 7111 and/or a second roll map make-up unit 7112. The first and second roll map make-up units may be implemented in one integrated data processing system. Alternatively, the first and second roll map make-up units 7111, 7112 may belong to separate data processing systems, respectively. For example, the first roll map make-up unit 7111 may be positioned in the manufacturing execution system (MES), and the second roll map make-up unit 7112 may be positioned in the statistical process control (SPC). That is, the first roll map make-up unit 7111 may be the MES or one component of the MES, and the second roll map make-up unit 7112 may be the SPC or one component of the SPC.

The process data includes at least one of equipment data acquired in the process equipment used in the respective roll-to-roll process, process-related inspected and/or measured data acquired in each process, and time-series data acquired in each process.

The equipment data may be acquired from the programmable logic controller (PLC) 30 for performing each process. Therefore, the equipment data may include all parameters managed by the PLC in each process.

The inspected and/or measured data includes data, preferably all data inspected or measured by a predetermined inspection device, measurement device, or inspection and measurement device in each process.

The process data may also include the time-series data acquired in each process. That is, the data (time-series data) on the data generation time point may be obtained from the all data acquired in each process. The PLC 30 for controlling and managing each process may acquire the time-series data.

The process data is generated according to the progress of the process performed on the electrode, and the process data is acquired for each individual roll-to-roll process or sub-process.

The roll map matches the process data with the data of the coordinate values indicating the position of the electrode and visualizes and displays a matching result.

As described above, the coordinate value data server 7100 may store the coordinate values of the roll map in each sub-process and the process data matched therewith.

In a series of roll-to-roll processes, as described above with reference to FIG. 70, the length of the electrode may be changed between the processes by the current process removal and the removal after process, the start and end portions of the electrode may be reversed, and the surfaces of the electrode may be reversed. Therefore, the coordinate value data server 7100 may include the roll map matching unit 7120 for matching the coordinate values of the roll maps of each process to be compared with each other based on the same criterion in consideration of the change in length, the start/end reversal, and the surface reversal.

The roll map matching unit 7120 includes a roll map length matching unit, a coordinate axis matching unit, and an electrode surface matching unit and matches the coordinate values of the roll maps of a preceding sub-process or a plurality of preceding sub-processes with an actual electrode of a following sub-process carried out subsequent to the preceding sub-process or a final sub-process.

Therefore, the coordinate value data server 7100 may store the coordinate values of the roll map of the preceding sub-process and the coordinate values of the roll map of the following sub-process matched by the roll map matching. Alternatively, the coordinate values of the roll map of each sub-process among the plurality of sub-processes may be matched with the coordinate values of the roll map of the final sub-process and stored.

Considering the data processing capacity, the roll map matching unit 7120 may be an upper level control system (e.g., the SPC) separate from the MES or one component of the upper level control system.

Both the second roll map make-up unit 7112 and the roll map matching unit 7120 may be installed in one integrated system (SPC). In this case, the second roll map RII may be made up by the second roll map make-up unit 7112 belonging to the upper level control system by adding additional data to the made-up first roll map RI. In addition, the roll map matching unit 7120 in the SPC may receive necessary data from the first roll map make-up unit 7111 and the second roll map make-up unit 7112 and match the first roll maps RI or the second roll maps RII of the plurality of processes. Therefore, the coordinate values of the roll maps between the plurality of processes may be corrected based on the same criterion, and for example, data may be expressed as an overlay roll map, as explained in detail above.

The server unit 7130 (e.g., an image data storage server 7132) is configured for storing data for making up the second roll map RII and may optionally include raw data storage servers 7131 and 7132. Therefore, the coordinate value data server 7100 may store one or more of the following roll maps:
a) the first roll map RI including the data of the coordinate values indicating the position of the electrode and the sample process data generated according to the progress of the process performed on the electrode and matching the coordinate value;
b) the second roll map including the data of the coordinate values and the sample data of the first roll map and further including additional data associated with the sample process data and matching the coordinate value;
c) the overlay roll map arranging the roll maps of preceding and following sub-processes in which the coordinate values of the roll maps are matched side by side; and
d) an overlay roll map in which the roll maps of each sub-process in which the coordinate values of the roll map of each sub-process match the coordinate value of the roll map of the final sub-process are arranged side by side.

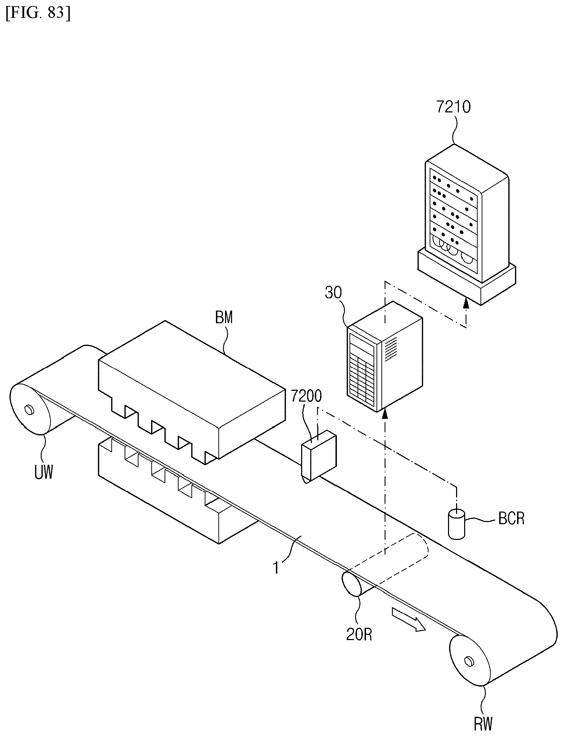

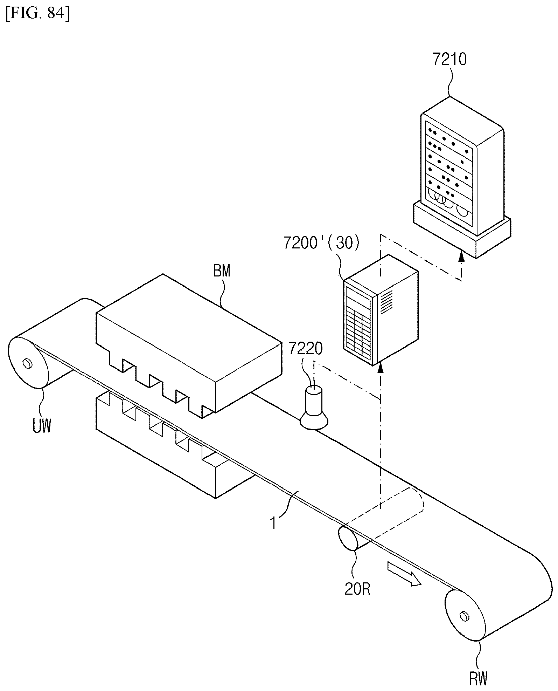

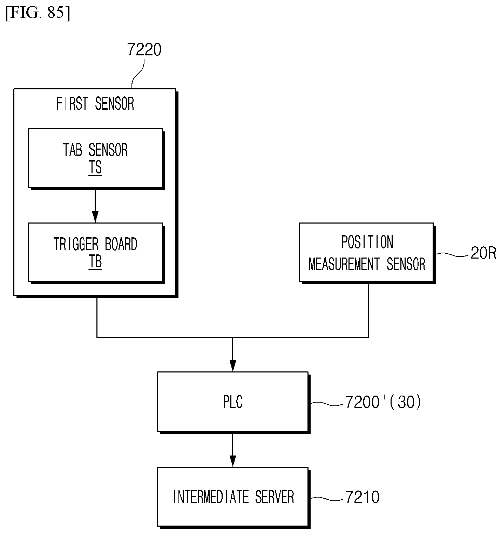

FIG. 83 is a schematic diagram showing a process of giving an identification mark to an electrode 1, and FIGS. 84 and 85 are schematic diagrams showing a process of giving a virtual identification mark to the electrode 1.

After a series of electrode manufacturing sub-processes, an identification mark may be given to or formed on a predetermined position on the electrode. For example, the identification mark may be given to or formed on an electrode tab part. The electrode tab may be formed by notching a portion of a current collector not coated with electrode slurry. The notching process may also be performed on the electrode moving between the unwinder UW and the rewinder RW. Therefore, the roll map (notching process roll map) may be made up in the process of giving the identification mark. Therefore, it is possible to acquire the coordinate values of the roll map not only in one preceding sub-process or the plurality of preceding sub-processes (e.g., coating, roll press, and slitting) performed before the sub-process of giving the identification mark but also in the notching process of giving the identification mark and match the coordinate values of each roll map with the process data of each sub-process. The coordinate value data server 7100 may also store a roll map of the electrode manufacturing process and a roll map of the notching process. In addition, an overlay roll map may be made up by correcting the coordinates of the roll map of the preceding process before the notching process to match the roll map of the notching process (see FIG. 79). Therefore, the coordinate value data server 7100 may store the coordinate values of the roll maps and the process data of the sup-process of giving or forming the identification mark and all sub-processes before the sub-process of giving or forming the identification mark, the coordinate values of the overlay roll map matched between the sub-processes, and the like.

In addition, the system 7000 includes an identification mark providing unit 7200 for providing the identification mark to the electrode 1 at predetermined intervals.

The identification mark may be an electrode ID actually marked on the electrode or a virtual electrode ID virtually provided every predetermined pitch or interval.

FIGS. 82 and 83 show the ID marker 7200 for marking the electrode ID on the electrode at predetermined pitches or intervals as the identification mark providing unit.

As the ID marker 7200, for example, an inkjet-type ink marker or a laser-type laser marker may be used, but the present disclosure is not limited thereto. An appropriate marker may be selected and used in the range of excellent visibility and no damage to the electrode.

A barcode may be provided as the electrode ID, which is the identification mark, but the present disclosure is not limited thereto, and other types of identification marks capable of identifying the electrode may be adopted, such as a QR code, an identification number, or similar.

Referring to FIG. 83, in the notching process, the electrode 1 moves between the unwinder UW and the rewinder RW and is punched by the puncher BM to form an electrode tab on the electrode 1. After the notching process, the ID marker 7200 may mark or generate the electrode ID on each electrode tab, for example, by a laser. In this case, the ID marker 7200 may be connected to a position measurement sensor (e.g., the rotary encoder 20R installed on the rewinder) to acquire the coordinate values of the electrode tab corresponding to the electrode ID to be marked. That is, the ID marker 7200 or the notching PLC 30 connected to the ID marker may receive an encoder value at the time of ID marking from the position measurement sensor, and the encoder value becomes a position coordinate value of the corresponding electrode ID. This is referred to as "a first position coordinate value" to be distinct from the coordinate values of the electrode of the preceding sub-process.

Alternatively, when the corresponding ID is recognized or read by an ID recognizer or reader, such as a barcode reader BCR, after the electrode ID is marked by the ID marker 7200, the first position coordinate value corresponding to the electrode ID may be acquired. In this case, the ID recognizer BCR and the position measurement sensor are connected, and the encoder value (first position coordinate value) at the time of ID marking may be acquired from the ID recognizer BCR or the position measurement sensor in the notching PLC 30 connected to the ID recognizer BCR.

Meanwhile, the ID marker 7200 or the ID recognizer BCR may be provided with a tab sensor and a trigger board to acquire sequence (count) information of the electrode ID.

The tab sensor may determine a length, that is, a pitch of each electrode tab. The trigger board may increase a count value based on the length of each electrode tab received from the tab sensor. The trigger board may convert the count value for each length of the electrode tab into a form of a binary coded decimal (BCD) code and send the converted count value to the ID marker 7200, the ID recognizer BCR, or the notching PLC 30.

As described above, the ID marker 7200 or the ID recognizer BCR may receive specification information (pitch information) of the electrode, acquire the count value (sequence information) for each corresponding pitch, and mark or recognize an ID for each electrode tab of the corresponding pitch. The pitch information is information on a width of the notched electrode.

The notching PLC 30 may connect or map the sequence of the electrode ID with the first position coordinate value. The connected electrode ID and first position coordinate value are transmitted to the data manager 7300 to be described below.

The electrode ID, the first position coordinate value, the pitch information, and the like may optionally be transmitted to a predetermined intermediate server 7210 before being transmitted to the data manager 7300. In the intermediate server 7210, the process data acquired in the notching process may be matched or mapped with at least one of the first position coordinate value, the electrode ID, and the like. Therefore, the electrode ID, the first position coordinate value, and the process data of the notching process may be transmitted from the intermediate server 7210 to the data manager 7300.

Alternatively, the matching of the process data of the notching process with the electrode ID and the first position coordinate value may be performed using the information stored in the coordinate value data server 7100. For example, the coordinate value data server in FIG. 82 stores the process data acquired in the notching process and the notching process roll map in which the data of the coordinate values are matched. Therefore, when the first position coordinate value corresponding to the electrode ID is identified, the process data corresponding to the first position coordinate value may be acquired from the roll map. In this case, the notching PLC 30 or the like may transmit only the electrode ID and the first position coordinate value to the data manager 7300 without going through the intermediate server 7210. The data manager 7300 may receive the data of the coordinate values and the process data from the coordinate value data server 7100 and may match the electrode ID with the first position coordinate value. At this time, an operation of matching the first position coordinate values with the coordinate values of the sub-process performed before the notching process stored in the coordinate value data server 7100 may be performed. The operation may be performed by the roll map matching unit 7120.

Therefore, the data manager 7300 may match and manage the first position coordinate value corresponding to the electrode ID and the coordinate value of the coordinate value data server 7100 corresponding to the first position coordinate value and/or the process data matching the coordinate values. In addition, the process data of the notching process may also be matched with the coordinate values of the preceding sub-process, the first position coordinate value, and the electrode ID using the notching process roll map or the intermediate server 7210. In addition, the process data of the preceding sub-process matching the coordinate values and the like and the process data of the notching process may be matched.

As described above, the data manager 7300 may match and manage or store the identification mark and the coordinate values of the coordinate value data server 7100 corresponding to the identification mark (electrode ID).

The data manager 7300 may be a data processing system, such as an MES, an SPC, or a data warehouse (DW), or a component thereof.

The coordinate value data server 7100 and the data manager 7300 may be implemented in one integrated data processing system. However, since the purposes and data processing capacities of each data processing system are different, the coordinate value data server 7100 and the data manager 7300 may also be positioned in separate data processing systems.

For example, the coordinate value data server 7100 may be installed in the MES or SPC system, and the data manager 7300 may be installed in the DW. In this case, the DW may be an upper level control system of the SPC.

As described above, the DW is a data warehouse for converting and managing data accumulated in a database into data in a common format and enables data-based decision-making and analysis by integrating data from multiple sources. Therefore, it is easy to match and manage the process data of the electrode manufacturing process and the assembly process and the coordinate values and the electrode IDs. As will be described below, the identification mark and the coordinate values may be associated with data of the following processes after the identification mark is generated. The data matching and management operation may require vast data processing and computing ability. From this point of view, it is preferable to adopt the DW, which is an upper level control system, or a component of the DW as the data manager 7300.

FIGS. 84 and 85 are schematic diagrams showing a process of providing a virtual identification mark to the electrode.

As described above, in the case of the negative electrode tab, by marking the electrode ID, it is possible to secure the traceability of the electrode ID based on the marked electrode ID. However, in the case of a positive electrode current collector made of, for example, aluminum, fire or soot may occur upon marking. As described above, when it is difficult to generate a physical ID, a virtual identification mark (virtual electrode ID) may be provided as follows.

A virtual identification mark providing unit 7200' may be, for example, the PLC 30 of the notching process. In the following, the PLC of each process, including the PLC of the notching process, is indicated by reference numeral 30. However, since the PLC in the present example also serves as the virtual identification mark providing unit 7200', the PLC will be described interchangeably using a reference number, such as 7200' or 30. In order to generate the virtual electrode ID, specification information, i.e. pitch information, and count information on each electrode tab are specified or recorded. To this end, the PLC 7200' or 30 may receive specification information on at least one electrode (e.g., a positive electrode) from a first sensor 7220.

The first sensor 7220 may include a tab sensor TS and a trigger board TB. First, the tab sensor TS may determine specification information on the positive electrode tab. Specifically, the tab sensor TS may determine a length, that is, a pitch of each positive electrode tab. The tab sensor TS may transmit the detected length of each positive electrode tab to the trigger board TB. The trigger board TB may generate count information on the positive electrode tab based on the length of each positive electrode tab received from the tab sensor TS. The trigger board TB may increase a BCD code by "1" whenever the count value for each length of the positive electrode tab increases. The trigger board TB may convert the generated count value for each length of the positive electrode tab into the form of a BCD code and transmit the converted count value to the PLC 7200' or 30.

In addition, the PLC 7200' or 30 may receive the coordinate values of the position of at least one electrode from a second sensor, which is the position measurement sensor (e.g., the rotary encoder 20R). The PLC 7200' or 30 may generate a virtual identification mark, that is, a virtual electrode ID, for each of the at least one positive electrode, based on the specification information and the position coordinate value. The virtual electrode ID and the position coordinate value of the corresponding ID may be transmitted to the data manager 7300 directly or through the intermediate server 7210 from the PLC 7200' or 30.

Therefore, the data manager 7300 may match and manage the position coordinate value corresponding to the virtual electrode ID and the coordinate value of the coordinate value data server 7100 corresponding to the position coordinate value and/or the process data matching the coordinate value. In addition, the current process data of the notching process may be matched with the coordinate values of the preceding sub-process performed before the notching process using the notching process roll map or the intermediate server 7210. In addition, the process data of the preceding sub-process matching the coordinate values and the like and the process data of the notching process may also be matched.

The data manager 7300 may match the data of the coordinate values and the process data of each sub-process of the electrode tracked based on the above-described electrode ID or virtual ID and manage the data through the quality, presence of defects, and inspection information on each electrode. The data manager 7300 may include, for example, a cloud computing technology and/or an artificial intelligence technology.

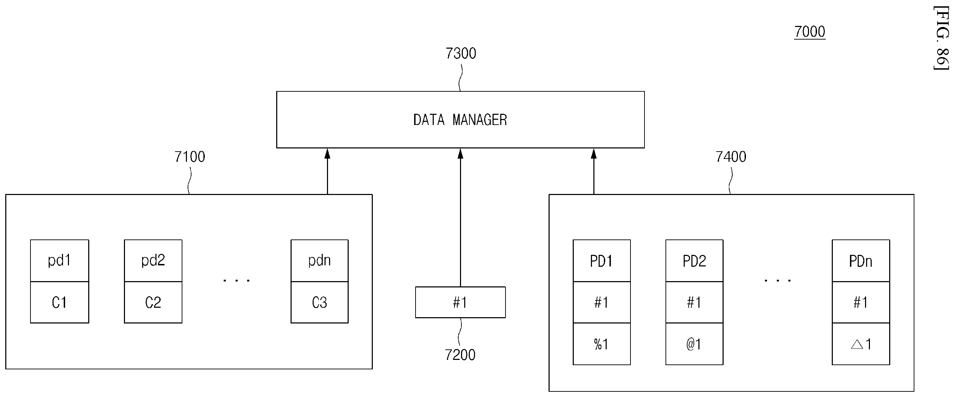

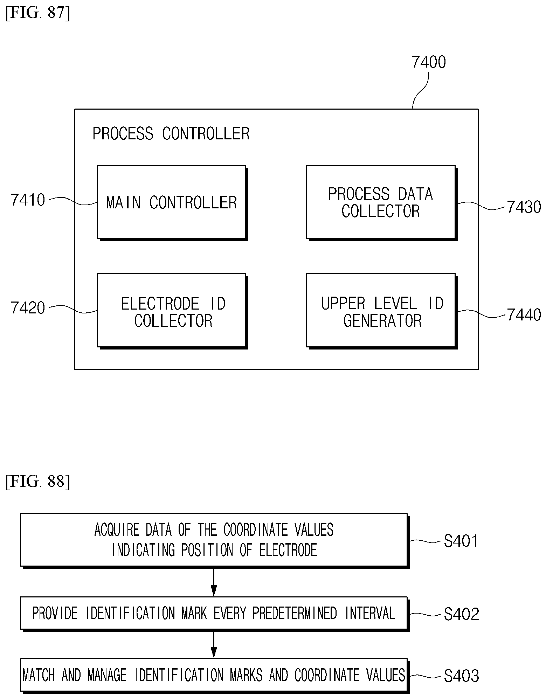

FIG. 86 is a data flowchart exemplarily illustrating a data flow in the system for manufacturing a battery and FIG. 87 is a schematic diagram of a process controller 7400 optionally forming part of the system 7000.

As described above, the system 7000 may generate the electrode ID (virtual ID or physical/actual ID) and integrally match and manage not only the process data of the electrode ID generation process but also the process data of the preceding sub-process before the electrode ID generation process. In this case, the coordinate values corresponding to the electrode ID may be acquired in each of the preceding sub-process and the electrode ID generation process. The coordinate values of each process may be matched to represent the same actual electrode parts by the roll map matching unit 7120.

Furthermore, it is possible to manage data acquired from the following sub-process performed after generating the identification mark (electrode ID) via the identification mark. Referring to FIG. 86, in a following sub-process after the electrode ID is generated, unit electrodes having the electrode ID are subject to predetermined processes. For example, an electrode having a specific actual electrode ID or a virtual electrode ID may be cut to become a unit electrode.

The unit electrodes (positive electrodes or negative electrodes) are stacked in a lamination process to become an electrode assembly.

Alternatively, the unit electrode may be wound to form the electrode assembly in the form of a jelly roll.

The electrode assembly is stored in an electrode case, and an electrolyte is injected to form a battery cell semi-finished product (e.g., a packaging cell). Such a battery cell semi-finished product finally becomes a battery cell after going through a predetermined process (e.g., formation processes, such as activation and aging) for providing the characteristics of the battery.

A laminate may be formed by stacking battery cells, and a battery module may be formed by accommodating the laminate in a module housing. By installing the battery module in a pack case, a battery pack that may be applied to an energy storage system (ESS) or a vehicle device may be manufactured.

As described above, even after the identification mark is provided, the electrode mainly passes a stack process, a formation process, and a module and pack process and passes detailed processes even in each process. The processes performed after providing the identification mark are referred to as assembly sub-processes in the following.

In the progress of these assembly sub-processes, since each electrode has an electrode ID, process data acquired from the corresponding assembly sub-processes and the electrode ID may be matched and stored.

The system for manufacturing a battery may include, for example, a process controller 7400 as shown in FIG. 87. The process controller 7400 may be a process controller configured to control and/or monitor each of the assembly sub-processes. Specifically, the process controller may be a PLC unit. The PLC may be defined as a control device used for maintaining, managing, automatically controlling, and monitoring a process system for manufacturing a battery. Such a process controller may include a main controller 7410 as shown in FIG. 87. The main controller 7410 may control the overall operation of the process controller and the flow of the entire process. In addition, the process controller 7400 may include an electrode ID collector 7420 and a process data collector 7430. In the case of a physical ID, the electrode ID collector 7420 may be, for example, the barcode reader (BCR). In the case of a virtual electrode ID, the electrode ID collector 7420 may be a process server connected to the virtual electrode ID storage device, such as the above-described PLC, the intermediate server, or the data manager of the notching process, to receive corresponding virtual electrode ID information for each assembly sub-processes. In addition, the process data collector 7430 may be a predetermined inspection and/or measurement device installed for each assembly sub-processes. For example, in the activation process, predetermined inspected and/or measured data may be acquired from a measurement device for measuring charge/discharge capacities, a temperature, and the like of an activation target cell. Alternatively, the PLC itself of each process may collect process data, such as equipment data and time-series data.

In the process controller 7400, the process data of the respective assembly sub-process may be matched with the electrode ID. The matched electrode ID and the process data of the respective assembly sub-process may be transmitted to the data manager 7300. The data manager 7300 may match the electrode ID and the process data of the respective assembly sub-process with the coordinate values stored in the coordinate value data server 7100 and/or the (preceding) process data matching the coordinate values.

The process data may of the respective assembly sub-process may also be transmitted to the data manager 7300 for each assembly sub-process and matched with the coordinate values and the process data matching the coordinate values. However, two or more process data may also be transmitted to the data manager 7300 in the form of a process information package combined for one electrode ID. For example, it is also possible to match one formation process data with the electrode ID in combination with the respective process data of a plurality of detailed processes in the formation process and transmit a matching result to the data manager 7300.

Meanwhile, as the assembly sub-processes are performed, a plurality of electrodes are combined to become an electrode assembly, or the electrode assembly is re-combined to become a larger unit (e.g., a battery cell, a battery cell laminate, a battery module, or a battery pack). These upper level units including the electrode with the identification mark may be referred to as "upper level assemblies." A plurality of electrodes are included in the upper level assembly. As necessary, a new identification mark may be provided by combining the plurality of electrodes together. That is, an upper level identification mark capable of identifying the upper level assembly may be provided. For example, the upper level identification marks, such as an assembly ID, a cell ID, a module ID, and a pack ID, may be respectively provided to the electrode assembly, the battery cell, the module, and the pack. Each of the upper level identification marks may match a lower identification mark. Ultimately, each of the upper level identification mark may match each electrode ID of the electrodes included in the corresponding upper level assembly. Generally, one upper level identification mark will match the plurality of electrode identification marks (the electrode IDs or the virtual electrode IDs). The process controller of the assembly sub-process may include an upper level identification mark generator, that is, an upper level ID generator 7440. The upper level ID generator 7440 may also generate an actual ID or a virtual ID. The upper level ID generator may be the above-described ID marker. Alternatively, another virtual ID generator capable of specifying an upper level assembly by generating predetermined count information using the tab sensor or the trigger board may be used as the upper level ID generator.

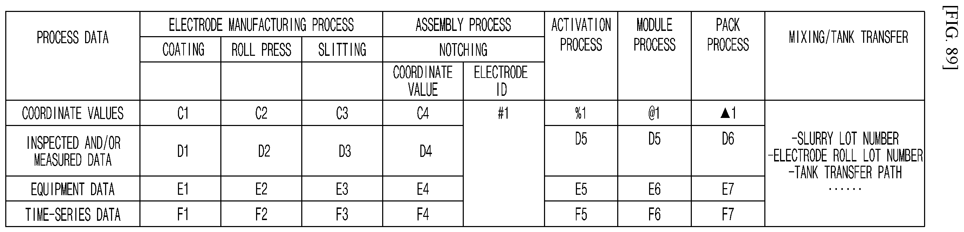

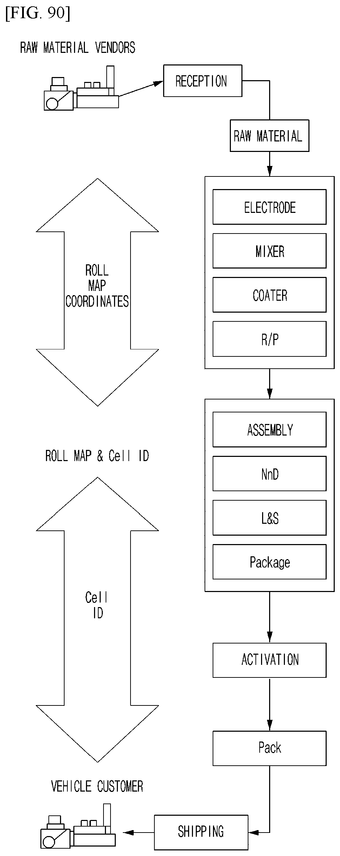

FIG. 88 is a flowchart of a method of manufacturing a battery. FIG. 89 is a schematic diagram showing an example of data matching by the system for manufacturing a battery, and FIG. 90 is a schematic diagram showing a data management process by the system for manufacturing a battery.

The method of manufacturing a battery according to the embodiment includes acquiring data of the coordinate values indicating a position of an electrode moving in a process, e.g., in a roll-to-roll process, (S401), providing an identification mark to the electrode every predetermined pitch or interval (S402), and matching and managing a coordinate value corresponding to the identification mark and the identification mark (S403).

The position of the electrode moving in the electrode manufacturing process, e.g., in the notching process, or the like may be acquired as an encoder value, such as a rotary encoder, and this may be acquired as, for example, coordinate values of a roll map. Such data of the coordinate values may be stored in the coordinate value data server 7100 provided with the roll map make-up unit 7110 and the roll map matching unit 7120.

In addition, identification marks may be provided to the electrode at predetermined intervals (e.g., pitch intervals). The identification mark may be an actual, physical ID generated by marking the electrode or a virtual ID providing a coordinate value to count information of the corresponding pitch. Any ID has a predetermined coordinate value.

The identification marks have coordinate values in the sub-process in which the identification marks are provided, and the coordinate values of this sub-process may be matched with coordinate values of a previous sub-process. For example, the roll map matching unit 7120 may match and manage the coordinate values of each sub-process.

In addition, the coordinate values of each sub-process be matched with the process data of each sub-process in a visual imitation of the electrode, such as a roll map. Therefore, the process data of each sub-process may be comprehensively matched using the identification mark and the coordinate values of each sub-process matching the identification mark.

The data manager 7300 may match the coordinate values, identification marks, and process data (preceding process, notching process, and following assembly sub-process) and further include a predetermined analysis program, visualization program, and statistical program. Therefore, it is possible to analyze or provide statistics on quality, defects, causes of problems, and the like based on the matched data. Therefore, according to the system and method for monitoring and/or supervising a manufacturing process of the battery, it is possible to provide a comprehensive production management and quality analysis tool throughout almost all production processes of the battery.

As described above, at least one of data on specifications of an input material for manufacturing the electrode, process data for a mixing process of the input material, and path data on a moving path or path of lines through which the mixed input material moves to or is supplied to an electrode coater may be matched with each matched coordinate value of the overlay roll map and the process data of each sub-process matching the coordinate values.

In addition, the data manager 7300 may also receive the data on the specifications, the process data for the mixing process of the input material, and the path data on the moving path and may match the identification mark and the coordinate values of the coordinate value data server 7100.

In FIG. 89, data acquired in the plurality of processes are displayed in association with each other (i.e., by matching each other). For reference, the data shown in FIG. 89 is displayed in alphabetical characters so that only the type of data may be distinct and is not displayed in specific numerical values or the like.

FIG. 89 shows the data on the mixing and tank movement (e.g., an electrode roll lot number and a slurry lot number), data on a tank movement path and the like.

Data (coordinate values and process data) on each roll map of the electrode manufacturing process and the notching process is also displayed by being matched with the data on the mixing and tank movement operations. The data of the coordinate values may be coordinate values matched on, for example, the overlay roll map through the above-described roll map matching process.

In addition, the electrode ID in the notching process matches the electrode coordinate values in the preceding process before notching. Therefore, it is possible to retrieve the process data in the coating, roll press, and slitting processes of the electrode part (coordinates of the electrode) corresponding to the electrode ID.

In addition, the electrode ID matches the process data of an activation process, a module process, and a pack process, which are assembly sub-processes following to the notching process. In addition, the electrode ID matches an ID (ID (%1) of the activation process, an upper level ID (@1) of the module process, and an upper level ID (▲1) of the pack process. The display of the IDs shown in FIG. 89 is only an exemplary display for distinguishing each ID, but the present disclosure is not limited thereto. As necessary, the IDs of each process may be differently displayed in a different format (e.g., a barcode, a QR code, or an identification number).

FIG. 90 is a schematic diagram showing an electrode management process by the system for manufacturing a battery according to the present disclosure. As shown, according to the system 7000 and method for monitoring and/or supervising a manufacturing process of the battery according to the embodiment, the process of manufacturing an electrode from the operation of inputting the electrode manufacturing material and the following processes thereafter may be managed by connecting the data of almost all processes based on the coordinate values of the roll map and the identification mark (electrode ID).

Therefore, it is possible to comprehensively perform quality control, analysis, monitoring, tracking, and the like in the electrode and battery manufacturing process.

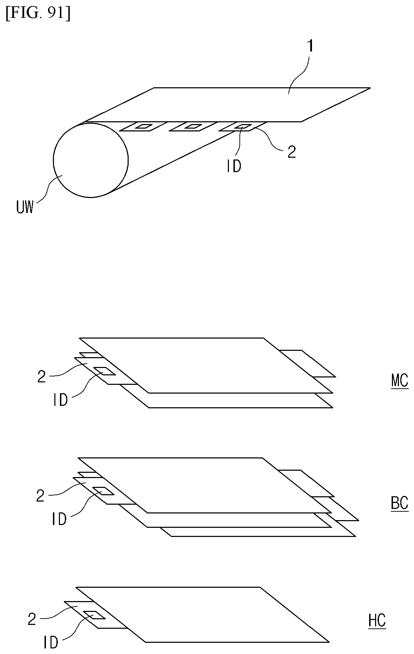

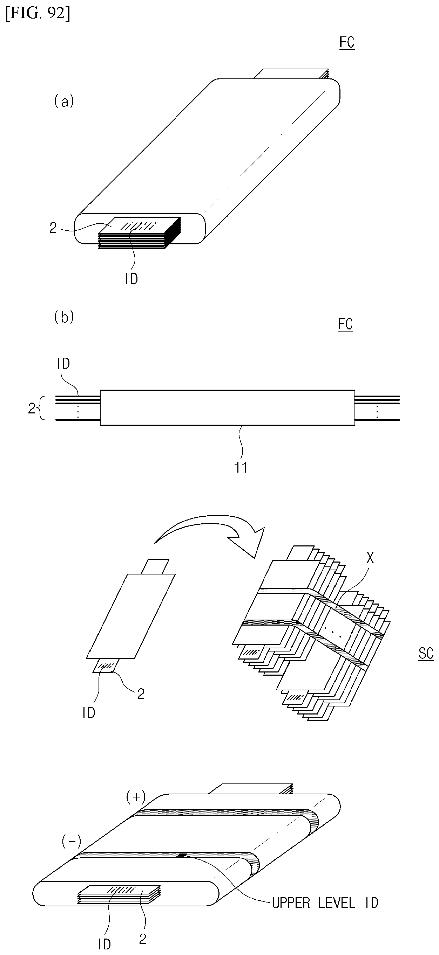

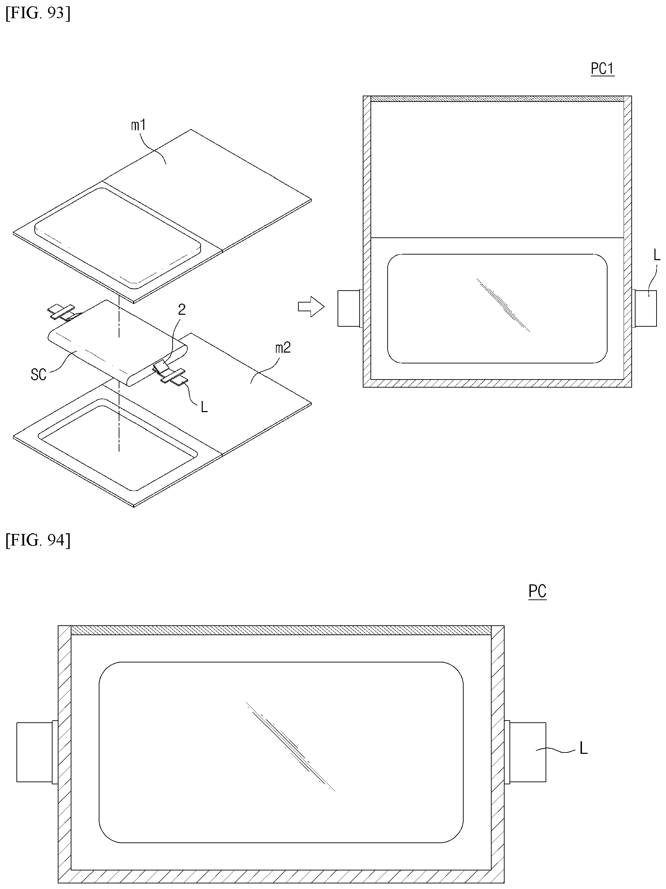

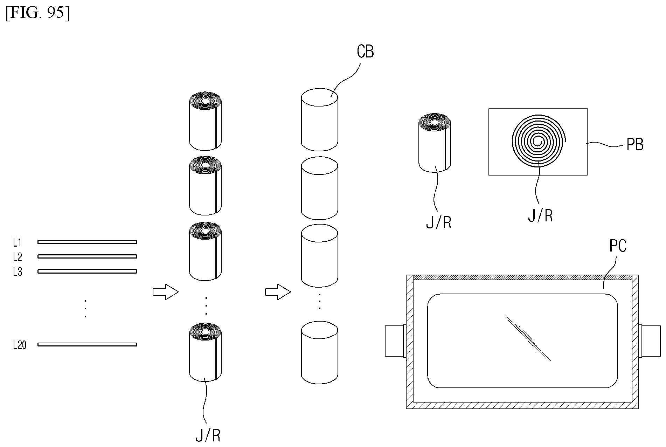

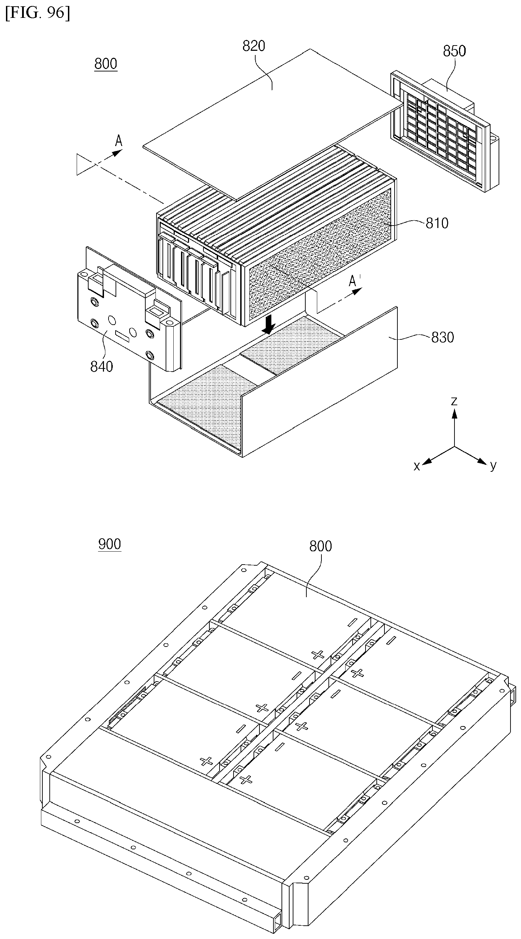

FIG. 91 is a schematic diagram of an electrode and an electrode assembly with an electrode identification mark, FIG. 92 is a schematic diagram of a folding cell and a stack cell with the electrode identification mark, FIG. 93 is a schematic diagram of a packaging cell with the electrode identification mark, FIG. 94 is a schematic diagram of a battery cell with the electrode identification mark, FIG. 95 is a schematic diagram of another type of battery cell with the electrode identification mark, and FIG. 96 is a schematic diagram of a battery module and a battery pack.

FIG. 91 shows an electrode ID marked on the tab 2 of the electrode 1 punched in the notching process. As described above, the electrode ID may not only include a physical ID actually marked, but also a virtual electrode ID provided by a notching PLC or the like.

The electrode ID is matched with coordinate values, for example, coordinate values of the roll map stored in the coordinate value data server 7100. In addition, the electrode ID may also be matched with the process data of each sub-process matching the respective coordinate values in the roll map. That is, the electrode ID may be matched with each process data of the electrode manufacturing process, the assembly process, and several following processes via the roll map coordinate value(s). Therefore, when an electrode having such an electrode ID or an upper level assembly including the electrode is obtained, by analyzing the electrode ID and subsequently analyzing the electrode parts (specified by the coordinate value) obtained in each process from which the electrode ID is derived and the process data of each process matching the electrode parts, it is possible to perform quality analysis or find out the cause of the occurrence of the problem.

The lower part of FIG. 91 shows a mono cell MC, a bi-cell BC, and a half cell HC having the electrode. The half-cell HC is a cell formed by stacking one electrode and a separator, the mono cell MC is a cell formed by stacking two electrodes of different polarity with the separator interposed therebetween, and the bi-cell BC is a cell formed by stacking two electrodes with the same polarity and one electrode with a different polarity with the separator interposed therebetween. The half-cell HC, the mono cell MC, and the bi-cell BC constitute an electrode assembly by itself. However, the half-cell HC, the mono cell MC, and the bi-cell BC are stacked together or stacked with other types of electrode assemblies to form an upper level-dimensional electrode assembly. In this sense, the half-cell HC, the mono cell MC, and the bi-cell BC may be referred to as "a unit electrode assembly."

FIG. 92 shows that the unit electrode assemblies are stacked together to form a new type of electrode assembly. The plurality of unit electrode assemblies positioned in a long separator and sequentially folded may be referred to as "a folding-type electrode assembly (folding cell FC), and the unit electrode assemblies stacked together and combined by a combining tape or the like. All of the unit electrode assemblies and the upper level electrode assemblies include the electrode tab 2 with the electrode ID. Since the electrode assembly includes a plurality of electrodes, each electrode ID may match an assembly ID provided to the electrode assembly as the upper level identification mark. For example, the upper level ID may be physically printed on the combining tape, or a virtual upper level ID may be provided thereon. Alternatively, an electrode ID of a tab part of an uppermost electrode among the stacked electrodes may also be defined as a representative electrode ID or an upper level ID. The upper level ID may also be added to an exterior material for carrying or including the electrode or the electrode assembly.

FIG. 93 shows the battery cell semi-finished product formed by storing the electrode assembly in the battery case.

In a pouch cell in which the electrode assembly is stored in a pouch-type case, the electrode assembly is stored in the cases m1 and m2, an electrolyte is injected, and then the periphery of the case is sealed. Such an upper assembly has not yet been provided with the characteristics of the battery and needs to go through a formation process, such as an activation process or an aging. Therefore, this may be referred to as "a battery cell semi-finished product." A battery cell before becoming a final product may be referred to as "a packaging cell PC1 or the like."

FIG. 94 shows a battery cell manufactured as the pouch cell PC, which is a final product, by removing and sealing a gas collector after the formation process.

In the battery cell semi-finished product or the battery cell, the upper level ID may be provided to, for example, the cell cases m1 and m2.

Meanwhile, the above-described unit electrode or electrode assembly may be wound to form a so-called jelly roll type electrode assembly. The electrode assembly in the form of the jelly roll becomes the target of the present disclosure because it also has an electrode ID. The electrode assembly in the form of the jelly roll may be accommodated in a cylindrical or prismatic battery can to form a cylindrical battery cell CB or a prismatic battery cell PB as shown in FIG. 95.

FIG. 96 shows that the battery cells are stacked together to form a battery cell stack 810, or the battery cell stack 810 is accommodated in module cases 820, 830, 840, and 850 to form a battery module 800. In addition, FIG. 96 shows that the battery module 800 is accommodated in the pack case to form a battery pack 900.

Even in this case, it is possible to match each electrode ID with the laminate ID, the module ID, or the pack ID provided as the upper level identification mark.

In FIGS. 91 to 96, each ID of the upper level assembly provided to the upper level assembly may be vertically and sequentially matched with an ID of a lower assembly. Finally, the upper level assembly may match the electrode ID, which is the lowest unit.

The electrode ID of the electrode provided in the upper level assembly may be matched with the process data of each manufacturing process of the upper level assembly by the process controller 7400 or the like. In addition, the electrode ID matches the coordinate values of the coordinate value data server 7100 and the process data of the preceding process.

Therefore, the process data matching the roll map coordinate value based on the above-described electrode identification mark and roll map coordinate value may match the process data of the following process matching the identification mark.

Accordingly, since data on quality or defects can be displayed on a roll map bar displaying an imitated electrode in a roll-to-roll state, it is possible to visually and easily identify the data on quality or defects of an electrode manufacturing process at a glance.

In addition, since the data on quality or defects is displayed on the roll map bar without being directly marked on an electrode or a secondary battery, it is possible to accurately display the data on quality or defects on a coating part as well as a non-coating part.

In addition, since the data is displayed on the roll map without being directly marked on the electrode or the battery, even when the electrode is assembled or the battery is manufactured with the electrode in a following process, it is possible to easily find the cause of a subsequent fault or defect from roll map data of the corresponding electrode as long as a lot number of the battery or electrode is known, thereby carrying out inter-process quality correlation analysis with high accuracy.

In an electrode manufacturing process according to the present disclosure, it is possible to accurately identify a loss amount and position of an electrode using a reference point. In addition, since the loss amount of the electrode is automatically and accurately measured without depending on the naked eye or feeling of an operator, it is possible to increase the reliability of loss amount data and effectively use such data information in the following process.

In addition, by displaying the reference point on a roll map on which the electrode is imitated and which also displays information on a loss amount of the electrode on the roll map, it is possible to visually and easily the data on quality or defects at a glance in relation to the reference point.

In addition, in each detailed sub-process of the electrode manufacturing process, since the roll map on which the reference points are displayed can be referred for quality, defect control, and performing the following process, it is possible to accurately perform processing, defect removal, or the like in the following process.

Further, it is possible to provide the roll map capable of visually identifying events on the quality or defects of each detailed process in the electrode manufacturing process in which the electrode moves in the roll-to-roll state and data on the events.

In addition, by correcting coordinates of the roll map of the preceding sub-process, it is possible to use the roll map of the preceding sub-process in the following sub-process without any mistake.

In addition, it is possible to reliably and easily remove the defects occurring in the preceding process without omission in the following process using the roll map information.

By matching coordinate values of roll maps of each process with coordinate value of a final process in a series of roll-to-roll processes, it is possible to easily identify the data on quality or defects of a survival electrode surviving in the final process.

In addition, it is possible to easily identify inspection history of the electrode manufacturing process using the matched roll map.

In addition, by making up an overlay roll map by the roll map matching of a predetermined logic even when start and end portions of an electrode roll are reversed or top and back surfaces of the electrode roll are reversed while undergoing the series of roll-to-roll processes, it is possible to quickly and intuitively track a problem with the quality of the electrode when the problem occurs.

Further, in the electrode manufacturing process before a notching process, it is possible to track a position of an electrode from which a unit electrode of the notching process is derived.

In addition, since it is possible to identify from which electrode the unit electrode manufactured in the notching process has been derived in the electrode manufacturing process, analysis of a cause of defects or quality tracking of semi-finished or finished battery cells in a following process can be performed in units of cells up to the electrode manufacturing process.

Moreover, it is possible to identify lot information of electrode slurry at a supply tank stage. Therefore, it is possible to track the quality of the electrode slurry produced from a corresponding supply tank.

In addition, when an electrode has a defect or a battery manufactured with the electrode fails, it is possible to easily identify the defect or the cause of the failure.

According to a system for manufacturing a battery and a method of operating the same described above, it is possible to generate a virtual ID based on specification information on a positive electrode, thereby securing the traceability of data on the positive electrode.

According to a method and system for manufacturing a battery described above, it is possible to increase the reliability of the quality analysis of the battery through the accurate matching between process data and the battery.

As further described above, by effectively distributing data required for making up the roll map, it is possible to reduce a load of the data applied to a roll map make-up unit. Therefore, it is possible to increase a data processing speed of a system for making up the roll map and more effectively manage data on the roll map.

In addition, by matching coordinate values of the roll maps made up in each process, it is possible to compare a change of an actual electrode when a plurality of processes are performed based on the same criterion. It is possible to easily identify the inspection history or a change in equipment data in the electrode manufacturing process using the matched roll map.

As also described above, it is possible to easily manage the quality of the electrode and an upper level assembly including the electrode based on an identification mark and coordinate values of the electrode in the following processes after assembly as well as in the electrode manufacturing process and the assembly process.

In addition, by connecting the identification marks to the coordinate values, it is possible to match and manage roll map data information and process data of the following process. Therefore, it is possible to track the quality of all processes from the electrode manufacturing process to a process before the final process.

In addition, various effects that may be directly or indirectly identified through this document can be provided.

The above description is merely the exemplary description, and those skilled in the art to which embodiments disclosed in this document pertain will be able to variously modify and change the present disclosure without departing from the scope of the invention defined in the appended claims.

## Claims

1. A system (500) for correcting a roll map comprising:
a roll map make-up unit (510) for making up a roll map of a first process, the roll map being expressed in a planar shape, imitating thereon an electrode moving between a first unwinder (UW1) and a first rewinder (RW1) while the first process is performed, wherein the roll map displays inspected and/or measured data of the electrode acquired during the first process and coordinate values indicating a position on the electrode in which the inspection/measurement has been carried out; and
a roll map corrector (520) for making up a roll map of a second process by converting coordinates of the roll map of the first process in a reverse order so that coordinate values of a start portion and an end portion of the roll map of the first process are reversed when the electrode moves between a second unwinder (UW2) and a second rewinder (RW2) while the second process is performed.

2. The system (500) according to claim 1, further comprising a rotary encoder for acquiring a longitudinal dimension of the electrode as the position on the electrode, based on an amount of rotation of a motor for driving the unwinder (UW 1) or the rewinder (RW1).

3. The system (500) according to claim 1 or 2, wherein the roll map make-up unit (510) is configured to make up the roll map displaying the inspected and/or measured data of the electrode (10) acquired in the first process at the coordinate value corresponding to the position of the electrode (10) for which the inspected and/or measured data has been acquired.

4. The system (500) of any one of claims 1 to 3, wherein the roll map corrector is configured to: when a part of an end of the electrode is removed before the second process starts after the first process is completed, remove coordinate values corresponding to the removed part of the end of the electrode from the roll map of the first process; convert the coordinate values of the roll map of the first process in the reverse order so that the coordinate values of the start portion of the roll map of the first process and the coordinate values of the end portion in which the part of the end of the electrode has been removed are reversed; and generates the roll map of the second process.

5. An apparatus (600) for removing a defect of an electrode in a secondary battery manufacturing process, wherein the apparatus includes the system for correcting a roll map according to any one of the preceding claims, the apparatus further comprising:
a defect removal port (610), positioned between the second unwinder (UW2) and the second rewinder (RW2), being configured to remove a defect section of the electrode having occurred in the first process; and
a second process controller (640) configured to control electrode movement between the second unwinder (UW2) and the second rewinder (RW2),
wherein second process controller (640) is configured to: calculate a time point at which the electrode having the defect section arrives at the defect removal port from the second unwinder (UW2), based on information on coordinates of the defect section displayed on the roll map of the first process; and stop the movement of the electrode, so that the defect section is removed at the defect removal port.

6. The apparatus (600) of claim 5, insofar as dependent upon claim 4, wherein the second process controller (640) is configured to, when a part of an end of the electrode is removed before the second process starts after the first process is completed, stop the movement of the electrode based on the coordinate value of the defect section displayed on the corrected roll map.

7. The apparatus (600) of claim 5 or 6, wherein the defect removal port (610) includes:
a worktable on which an operator removes and discards the defect section of the electrode; and
at least one of: i) a waste box to which the removed electrode part is discarded, and ii) a winder for winding the removed electrode part.

8. The apparatus (600) of any one of claims 5 to 7, wherein the electrode holds an identification information thereon, and the second unwinder is configured to scan and acquire the identification information on the electrode, wherein the second process controller (640) is configured to, when the identification information on the electrode is acquired, download the roll map of the electrode corresponding to the acquired identification information from a roll map storage (80).

9. The apparatus (600) of any one of claims 5 to 8, wherein the second process controller (640) is configured to control the electrode of the second process to slowly move for a predetermined time section before the defect section arrives at the defect removal port (610) until it actually arrives.

10. The apparatus (600) of any one of claims 5 to 9, further comprising: an alarm unit (660) for issuing an alarm in at least one of the following cases: i) the defect section arrives at the defect removal port (610); ii) the electrode stops in the second process; and iii) a predetermined time has elapsed since the electrode stopped in the second process.

11. The apparatus (600) of any one of claims 5 to 10, wherein the defect section is identified and removed with reference to the coordinate value thereof.

## Patentansprüche

1. System (500) zum Korrigieren einer Rollenkarte, umfassend:
eine Einheit zur Erstellung einer Rollenkarte (510) zum Erstellen einer Rollenkarte eines ersten Prozesses, wobei die Rollenkarte in einer planaren Form dargestellt ist und auf ihr eine Elektrode nachgebildet ist, die sich zwischen einem ersten Abwickler (UW1) und einem ersten Aufwickler (RW1) bewegt, während der erste Prozess durchgeführt wird, wobei die Rollenkarte während des ersten Prozesses erfasste Prüf- und/oder Messdaten der Elektrode und Koordinatenwerte anzeigt, die eine Position auf der Elektrode angeben, an der die Prüfung/Messung durchgeführt worden ist; und
eine Rollenkartenkorrektureinrichtung (520) zum Erstellen einer Rollenkarte eines zweiten Prozesses durch Umwandeln der Koordinaten der Rollenkarte des ersten Prozesses in umgekehrter Reihenfolge, sodass die Koordinatenwerte eines Anfangsabschnitts und eines Endabschnitts der Rollenkarte des ersten Prozesses umgekehrt werden, wenn sich die Elektrode zwischen einem zweiten Abwickler (UW2) und einem zweiten Aufwickler (RW2) bewegt, während der zweite Prozess durchgeführt wird.

2. System (500) nach Anspruch 1, ferner umfassend einen Drehgeber zum Erfassen einer Längsabmessung der Elektrode als die Position auf der Elektrode auf Grundlage des Ausmaßes der Drehung eines Motors zum Antreiben des Abwicklers (UW1) oder des Aufwicklers (RW1).

3. System (500) nach Anspruch 1 oder 2, wobei die Einheit zur Erstellung einer Rollenkarte (510) dazu eingerichtet ist, die Rollkarte zu erstellen, die die in dem ersten Prozess erfassten Prüf- und/oder Messdaten der Elektrode (10) bei dem Koordinatenwert anzeigt, der der Position der Elektrode (10) entspricht, an der die Prüf- und/oder Messdaten erfasst worden sind.

4. System (500) nach einem der Ansprüche 1 bis 3, wobei die Rollenkartekorrektor dazu eingerichtet ist:
wenn ein Teil eines Endes der Elektrode entfernt wird, bevor der zweite Prozess beginnt, nachdem der erste Prozess abgeschlossen ist, die Koordinatenwerte, die dem entfernten Teil des Endes der Elektrode entsprechen, aus der Rollkarte des ersten Prozesses zu entfernen;
die Koordinatenwerte der Rollenkarte des ersten Prozesses in umgekehrter Reihenfolge umzuwandeln, sodass die Koordinatenwerte des Anfangsabschnitts der Rollenkarte des ersten Prozesses und die Koordinatenwerte des Endabschnitts, in dem der Teil des Endes der Elektrode entfernt worden ist, umgekehrt werden; und
die Rollkarte des zweiten Prozesses zu erzeugen.

5. Vorrichtung (600) zum Entfernen eines Defekts einer Elektrode in einem Sekundärbatterieherstellungsprozess, wobei die Vorrichtung das System zum Korrigieren einer Rollenkarte nach einem der vorhergehenden Ansprüche umfasst, wobei die Vorrichtung ferner umfasst:
eine Defektentfernungsstelle (610), die zwischen dem zweiten Abwickler (UW2) und dem zweiten Aufwickler (RW2) angeordnet und dazu eingerichtet ist, einen Defektabschnitt der Elektrode zu entfernen, der in dem ersten Prozess aufgetreten ist; und
eine Steuerung des zweiten Prozesses (640), die dazu eingerichtet ist, die Bewegung der Elektrode zwischen dem zweiten Abwickler (UW2) und dem zweiten Aufwickler (RW2) zu steuern,
wobei die Steuerung des zweiten Prozesses (640) dazu eingerichtet ist, einen Zeitpunkt zu berechnen, zu dem die den Defektabschnitt aufweisende Elektrode vom zweiten Abwickler (UW2) aus an der Defektentfernungsstelle eintrifft, und zwar auf Grundlage von Informationen über Koordinaten des Defektabschnitts, die auf der Rollkarte des ersten Prozesses angezeigt werden; und die Bewegung der Elektrode anzuhalten, sodass der Defektabschnitt an der Defektentfernungsstelle entfernt wird.

6. Vorrichtung (600) nach Anspruch 5, soweit dieser von Anspruch 4 abhängig ist, wobei die Steuerung des zweiten Prozesses (640) dazu eingerichtet ist, wenn ein Teil eines Endes der Elektrode entfernt wird, bevor der zweite Prozess beginnt, nachdem der erste Prozess abgeschlossen ist, die Bewegung der Elektrode auf Grundlage des auf der korrigierten Rollkarte angezeigten Koordinatenwerts des Defektabschnitts anzuhalten.

7. Vorrichtung (600) nach Anspruch 5 oder 6, wobei die Defektentfernungsstelle (610) umfasst:
einen Arbeitstisch, auf dem ein Bediener den Defektabschnitt der Elektrode entfernt und entsorgt; und
mindestens eine der folgenden Komponenten: i) einen Abfallbehälter, in den der entfernte Elektrodenteil entsorgt wird, und ii) einen Wickler zum Aufwickeln des entfernten Elektrodenteils.

8. Vorrichtung (600) nach einem der Ansprüche 5 bis 7, wobei die Elektrode darauf eine Identifikationsinformation trägt und der zweite Abwickler dazu eingerichtet ist, die Identifikationsinformation auf der Elektrode zu scannen und zu erfassen, wobei die Steuerung des zweiten Prozesses (640) dazu eingerichtet ist, wenn die Identifikationsinformation auf der Elektrode erfasst wird, die Rollkarte der Elektrode, der der erfassten Identifikationsinformation entspricht, aus einem Rollkartenspeicher (80) herunterzuladen.

9. Vorrichtung (600) nach einem der Ansprüche 5 bis 8, wobei die Steuerung des zweiten Prozesses (640) dazu eingerichtet ist, die Elektrode des zweiten Prozesses so zu steuern, dass sie sich für einen vorbestimmten Zeitabschnitt, bevor der Defektabschnitt an der Defektentfernungsstelle (610) eintrifft, langsam bewegt, bis dieser tatsächlich eintrifft.

10. Vorrichtung (600) nach einem der Ansprüche 5 bis 9, ferner umfassend:
eine Alarmeinheit (660) zum Ausgeben eines Alarms in mindestens einem der folgenden Fälle: i) der Defektabschnitt trifft an der Defektentfernungsstelle (610) ein; ii) die Elektrode stoppt im zweiten Prozess; und iii) eine vorbestimmte Zeit ist verstrichen, seit die Elektrode im zweiten Prozess gestoppt hat.

11. Vorrichtung (600) nach einem der Ansprüche 5 bis 10, wobei der Defektabschnitt unter Bezugnahme auf dessen Koordinatenwert identifiziert und entfernt wird.

## Revendications

1. Système (500) pour corriger une carte de rouleau, comprenant :
une unité de génération de carte de rouleau (510) pour créer une carte de rouleau d'un premier processus, ladite carte de rouleau se présentant sous forme plane, sur laquelle est imitée une électrode se déplaçant entre un premier dérouleur (UW1) et un premier enrouleur (RW1) pendant l'exécution du premier processus, ladite carte de rouleau affichant des données d'inspection et/ou de mesure de l'électrode acquises pendant le premier processus et des valeurs de coordonnées indiquant une position sur l'électrode où l'inspection/la mesure a été exécutée ; et
un correcteur de carte de rouleau (520) pour élaborer une carte de rouleau d'un deuxième processus par conversion des coordonnées de la carte de rouleau du premier processus dans un ordre inverse de sorte que les valeurs de coordonnées d'une partie de début et d'une partie de fin de la carte de rouleau du premier processus sont inversées lorsque l'électrode se déplace entre un deuxième dérouleur (UW2) et un deuxième enrouleur (RW2) en cours d'exécution du deuxième processus.

2. Système (500) selon la revendication 1, comprenant en outre un codeur rotatif pour l'acquisition d'une dimension longitudinale de l'électrode en tant que position sur l'électrode, sur la base d'une valeur de rotation d'un moteur pour entraîner le dérouleur (UW1) ou l'enrouleur (RW1).

3. Système (500) selon la revendication 1 ou la revendication 2, où l'unité de génération de carte de rouleau (510) est prévue pour élaborer la carte de rouleau affichant les données d'inspection et/ou de mesure de l'électrode (10) acquises lors du premier processus à la valeur de coordonnées correspondant à la position de l'électrode (10) pour laquelle les données d'inspection et/ou de mesure ont été acquises.

4. Système (500) selon l'une des revendications 1 à 3, où le correcteur de carte de rouleau est prévu pour : si une partie d'une extrémité de l'électrode est retirée avant le début du deuxième processus à l'issue du premier processus, supprimer les valeurs de coordonnées correspondant à la partie retirée de l'extrémité de l'électrode de la carte de rouleau du premier processus ; convertir les valeurs de coordonnées de la carte de rouleau du premier processus dans un ordre inverse de sorte que les valeurs de coordonnées de la partie de début de la carte de rouleau du premier processus et les valeurs de coordonnées de la partie d'extrémité où la partie d'extrémité de l'électrode a été retirée sont inversées ; et générer la carte de rouleau du deuxième processus.

5. Dispositif (600) de suppression d'un défaut d'une électrode dans un procédé de fabrication de batterie secondaire, ledit dispositif comprenant le système pour corriger une carte de rouleau selon l'une des revendications précédentes, ledit dispositif comprenant en outre :
un orifice de retrait de défaut (610), positionné entre le deuxième dérouleur (UW2) et le deuxième enrouleur (RW2), prévu pour retirer une section défectueuse de l'électrode survenue lors du premier processus ; et
un deuxième contrôleur de processus (640) prévu pour commander le déplacement des électrodes entre le deuxième dérouleur (UW2) et le deuxième enrouleur (RW2),
ledit deuxième contrôleur de processus (640) étant prévu pour : calculer le point temporel où l'électrode présentant la section défectueuse arrive sur l'orifice de retrait de défaut du deuxième dérouleur (UW2), sur la base d'informations relatives aux coordonnées de la section défectueuse affichées sur la carte de rouleau du premier processus ; et arrêter le déplacement de l'électrode, de sorte que la section défectueuse est retirée au niveau de l'orifice de retrait de défaut.

6. Dispositif (600) selon la revendication 5, si dépendante de de la revendication 4, où le deuxième contrôleur de processus (640) est prévu pour, lorsqu'une partie d'une extrémité de l'électrode est retirée avant le début du deuxième processus à l'issue du premier processus, arrêter le mouvement de l'électrode sur la base de la valeur de coordonnées de la section défectueuse affichée sur la carte de rouleau corrigée.

7. Dispositif (600) selon la revendication 5 ou la revendication 6, où l'orifice de retrait de défaut (610) comprend :
une table de travail sur laquelle un opérateur retire et rejette la section défectueuse de l'électrode ; et
au moins l'un des éléments suivants : i) une boîte à déchets où la partie d'électrode retirée est rejetée, et ii) un enrouleur pour enrouler la partie d'électrode retirée.

8. Dispositif (600) selon l'une des revendications 5 à 7, où des informations d'identification sont présentées sur l'électrode et où le deuxième dérouleur est prévu pour scanner et acquérir les informations d'identification sur l'électrode, le deuxième contrôleur de processus (640) étant prévu pour, après acquisition des informations d'identification sur l'électrode, télécharger la carte de rouleau de l'électrode correspondant aux informations d'identification acquises à partir d'une mémoire de carte de rouleau (80).

9. Dispositif (600) selon l'une des revendications 5 à 8, où le deuxième contrôleur de processus (640) est prévu pour commander un déplacement lent de l'électrode du deuxième processus pendant un intervalle de temps prédéterminé avant l'arrivée de la section défectueuse sur l'orifice de retrait de défaut (610), jusqu'à son arrivée affective.

10. Dispositif (600) selon l'une des revendications 5 à 9, comprenant en outre : une unité d'alarme (660) pour émettre une alarme dans au moins un des cas suivants : i) la section de défaut arrive au port de retrait de défaut (610) ; ii) l'électrode s'arrête lors du deuxième processus ; et iii) un temps prédéterminé s'est écoulé depuis que l'électrode s'est arrêtée lors du deuxième processus.

11. Dispositif (600) selon l'une des revendications 5 à 10, où la section de défaut est identifiée et retirée en référence à sa valeur de coordonnées.
